(19) Europäisches Patentamt
European Patent Office
Office européen des brevets

(11) **EP 4 516 845 A1**

(12) **EUROPEAN PATENT APPLICATION**
published in accordance with Art. 153(4) EPC


(43) Date of publication:
**05.03.2025 Bulletin 2025/10**

(21) Application number: **23796516.5**

(22) Date of filing: **27.04.2023**

(51) International Patent Classification (IPC):
***C08J 5/22*** *(2006.01)* ***C08F 8/12*** *(2006.01)*
***C08F 14/26*** *(2006.01)* ***C08F 16/24*** *(2006.01)*
***C08L 27/14*** *(2006.01)* ***H01B 1/06*** *(2006.01)*
***H01M 4/96*** *(2006.01)* ***H01M 8/18*** *(2006.01)*

(52) Cooperative Patent Classification (CPC):
**C08F 8/12; C08F 14/26; C08F 16/24; C08J 5/22; C08L 27/14; H01B 1/06; H01M 4/96; H01M 8/18;** Y02E 60/50

(86) International application number:
**PCT/JP2023/016759**

(87) International publication number:
**WO 2023/210781 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2022 JP 2022073445**
**27.04.2022 JP 2022073554**
**27.04.2022 JP 2022073401**
**27.04.2022 JP 2022073566**



(71) Applicant: **Asahi Kasei Kabushiki Kaisha**
**Tokyo 1000006 (JP)**

(72) Inventors:
- **NAKAMURA, Akitake**
  **Tokyo 100-0006 (JP)**
- **SUZUKI, Atsushi**
  **Tokyo 100-0006 (JP)**
- **MATSUHISA, Masayuki**
  **Tokyo 100-0006 (JP)**
- **MORI, Hirotaka**
  **Tokyo 100-0006 (JP)**
- **KAI, Kazuya**
  **Tokyo 100-0006 (JP)**
- **HIGASHIMOTO, Naonori**
  **Tokyo 100-0006 (JP)**

(74) Representative: **Hoffmann Eitle**
**Patent- und Rechtsanwälte PartmbB**
**Arabellastraße 30**
**81925 München (DE)**


(54) **ION EXCHANGE MEMBRANE, MEMBRANE ELECTRODE ASSEMBLY, CELL FOR REDOX FLOW BATTERIES, AND REDOX FLOW BATTERY**


(57) An ion-exchange membrane comprising
a resin composition comprising
a side-chain heteroaromatic resin having a structural unit represented by the following general formula 1:

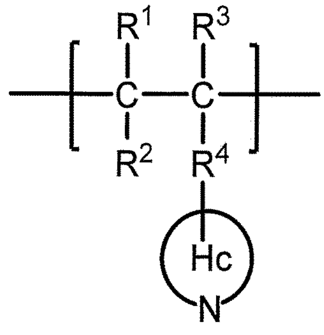

[1]

wherein,
$R^1$, $R^2$, and $R^3$ are each optionally the same or different, and are each a hydrogen atom, a substituted or unsub-


EP 4 516 845 A1

stituted aliphatic hydrocarbon group having 1 to 10 carbon atoms, or a substituted or unsubstituted aromatic hydrocarbon group having 6 to 10 carbon atoms,
$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms, and
Hc is a substituted or unsubstituted heteroaromatic group having 4 to 30 carbon atoms, the group having at least one nitrogen atom in a heteroaromatic ring structure and containing a five-membered ring and/or six-membered ring structure, and

a cation-exchangeable resin.

[Figure 1]

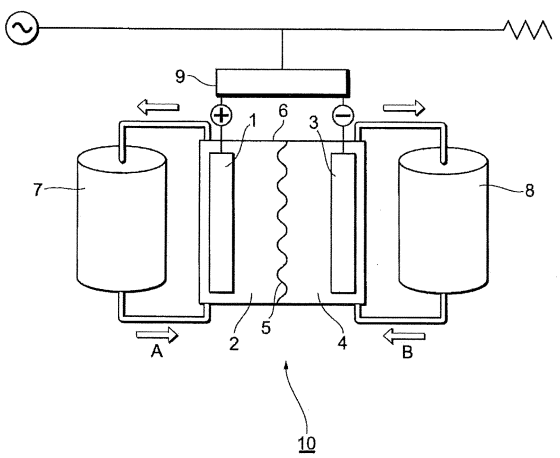

## Description

Technical Field

The present invention relates to an ion-exchange membrane, a membrane electrode assembly, a cell for a redox flow battery, and a redox flow battery.

Background Art

Redox flow batteries are secondary batteries storing and discharging electricity, and are suitable as large-scale stationary batteries used for equalization of electricity usage. Such a redox flow battery has a structure in which a positive electrode electrolyte solution (positive electrode cell) including a positive electrode and a positive electrode redox active material, and a negative electrode electrolyte solution (negative electrode cell) including a negative electrode and a negative electrode redox active material are partitioned by a separation membrane, and carries out charge and discharge by use of the oxidation-reduction reaction of both of these redox active materials. The respective electrolyte solutions including both of these redox active materials can be allowed to flow from storage tanks to an electrolyzer, resulting in an increase in capacity.

As the redox active materials included in the electrolyte solutions, for example, iron/chromium-based, chromium/bromine-based or zinc/bromine-based redox active materials, or vanadium-based redox active materials utilizing the difference in charge are used. In particular, a vanadium-based redox flow battery has the advantages of being high in electromotive force, providing a quick electrode reaction of a vanadium ion, being small in the amount of hydrogen generated in a side reaction, and being high in output, and therefore the development thereof is seriously advanced.

Such a vanadium-based redox flow battery utilizes oxidation-reduction reactions of bivalence ($V^{2+}$)/trivalence ($V^{3+}$) of vanadium in a negative electrode cell, and of tetravalence ($V^{4+}$)/pentavalence ($V^{5+}$) of vanadium in a positive electrode cell. Thus, redox active materials included in electrolyte solutions of the positive electrode cell and the negative electrode cell are the same type of vanadium ions, and therefore the electrolyte solutions can be reproduced by an electrical process even if mixed through a separation membrane and are excellent from the viewpoint of being usable for a long period. However, such a separation membrane is demanded to suppress permeation of the redox active materials as much as possible because permeation of the redox active materials leads to neutralization of any charge stored and thus a reduction in current efficiency. On the other hand, such a separation membrane is demanded not to prevent permeation of protons as much as possible because such protons included in the electrolyte solutions sufficiently easily permeate through such a separation membrane, allowing the battery to be reduced in resistance and enhanced in voltage efficiency. In other words, there is a demand for a separation membrane which has both a high current efficiency and a high voltage efficiency, namely, which can achieve a high power efficiency (the power efficiency is a product of the current efficiency and the voltage efficiency).

In order to suppress permeation of redox active materials and achieve a high power efficiency, application of processing to an ion-exchange membrane is disclosed (Patent Literatures 1 to 3).

Patent Literature 1 discloses an excellent initial power efficiency by alternately stacking of a cationexchange group layer and an anion-exchange group layer.

Patent Literature 2 discloses a low proton area resistivity and an excellent vanadium ion permeation selectivity by use of a membrane including a sulfonated polymer and a heterocyclic molecule having a plurality of nitrogen atoms.

Patent Literature 3 discloses at least one or more of discharge capacity, current efficiency, voltage efficiency, and power efficiency which are excellent by use of a polyelectrolyte membrane provided with a crossover prevention layer as a metal layer formed by reduction of a cationic metal, therein.

Patent Literature 4 discloses a suppressed curl and an excellent power efficiency by use of a separation membrane for a redox flow battery, including a first ion-exchange resin layer, an anion-exchangeable resin layer containing an anion-exchangeable compound, and a second ion-exchange resin layer in the listed order.

Patent Literature 5 discloses a 5% by mass solution in which a fluororesin having an acidic group is dissolved in a solvent of ethanol and water at a mass ratio of 50:50.

Patent Literature 6 discloses a thin membrane having high strength, favorable adhesiveness with a substrate, and favorable chemical resistance, obtained by use of a polyelectrolyte solution in which a fluororesin having an acidic group is dissolved in a solvent containing a polar solvent which is hydrophilic and which has a high boiling point.

Patent Literature 7 and Non Patent Literature 1 each indicate that, in a case where a polymer which has a high rate of sulfonic acid group in a fluororesin having a specified acidic group is tried to be produced, it is difficult to provide a sufficiently large molecular weight of the polymer and to produce a polyelectrolyte membrane having sufficient mechanical strength.

Patent Literature 8 discloses co-extrusion of a perfluorosulfonic acid polymer precursor together with an immiscible polymer, which thus allows for formation of a multi-layer film having a perfluorosulfonic acid polymer precursor

layer supported by an immiscible polymer layer and reduced in thickness and also provides a protonexchange membrane reduced in thickness.

Citation List

Patent Literatures

Patent Literature 1: Japanese Patent Laid-Open No. H11-260390
Patent Literature 2: International Publication No. WO 2017/155648
Patent Literature 3: International Publication No. WO 2016/163773
Patent Literature 4: International Publication No. WO 2021/215126
Patent Literature 5: Japanese Patent Laid-Open No. H07-296634
Patent Literature 6: Japanese Patent Laid-Open No. 2004-164854
Patent Literature 7: International Publication No. WO 2008/090990
Patent Literature 8: International Publication No. WO 2013/091073

Non Patent Literature

Non Patent Literature 1: W. Vielstich, H.A. Gasteiger, A. Lamm, "Handbook of Fuel Cells, vol.3", USA, John Wiley & Sons, Ltd., 2003, Chapter 30, p.351-352

Summary of Invention

Embodiments of the present invention are as follows.

<1> An ion-exchange membrane comprising

a resin composition comprising
a side-chain heteroaromatic resin having a structural unit represented by the following general formula 1:

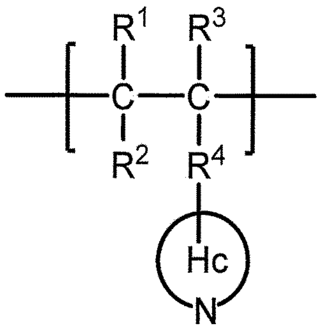

[1]

wherein,
$R^1$, $R^2$, and $R^3$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms,
$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms, and
Hc is a substituted or unsubstituted heteroaromatic group having 4 to 30 carbon atoms, the group having at least one nitrogen atom in a heteroaromatic ring structure and containing a five-membered ring and/or six-membered ring structure, and
a cation-exchangeable resin.

<2> The ion-exchange membrane according to <1>, wherein a weight ratio between the side-chain heteroaromatic resin and the cation-exchangeable resin is 1:100 to 100:1.
<3> The ion-exchange membrane according to <1> or <2>, wherein the cation-exchangeable resin is a fluororesin.

<4> The ion-exchange membrane according to <3>, wherein the fluororesin has a structural unit represented by the following general formula G1:

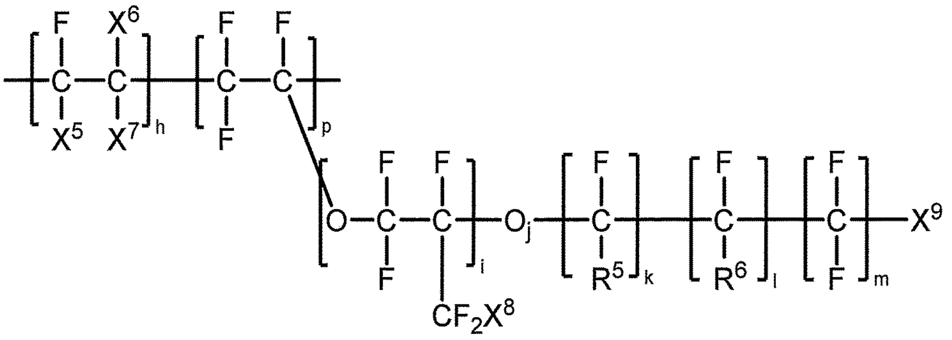

[G 1]

wherein,

$X^5$, $X^6$, $X^7$, and $X^8$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^5$ and $X^6$ or $X^5$ and $X^7$ are optionally bound to each other to form a cyclic structure,

$R^5$ and $R^6$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom,

$X^9$ is a group represented by $-COOZ$, $-SO_3Z$, $-PO_3Z_2$, or $-PO_3HZ$, Z is at least one selected from the group consisting of a hydrogen atom, an alkali metal atom, an alkaline earth metal atom, and an amine, and the fluororesin is optionally crosslinked to each other by ion crosslinking via $X^9$,

h and p each represent a molar ratio in the total constituent unit contained in the resin, and are numbers satisfying $0 \leq h < 1$, $0 < p \leq 1$, and $h + p = 1$,

i is an integer of 0 to 8,

j is 0 or 1, and

k, l, and m are each optionally the same or different, and are each an integer of 0 to 6, provided that, when k, l, and m are 0 at the same time, $X^9$ is $CF(CF_2X^{10})_2$, $X^{10}$ is a group represented by $-COOZ$, $-SO_3Z$, $- PO_3Z_2$, or $-PO_3HZ$, and Z is the same as described above.

<5> The ion-exchange membrane according to any one of <1> to <4>, alternately comprising

at least one layer (L) comprising the resin composition, and

at least one layer (M) comprising a fluororesin having a structural unit represented by the following general formula G1:

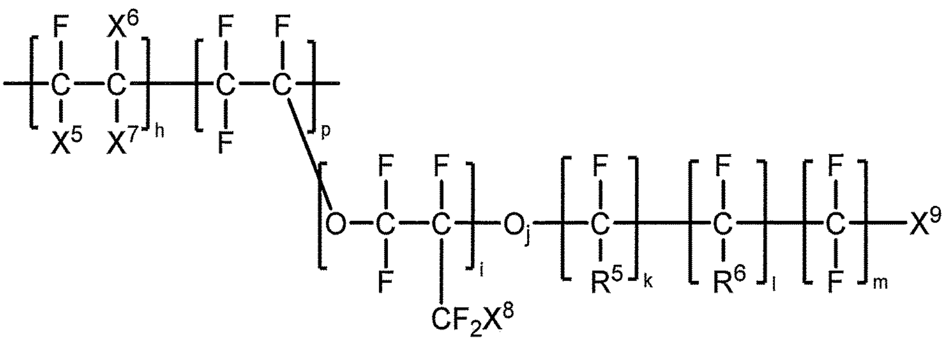

[G 1]

wherein the definition of each substituent has the same meaning as in the general formula G1 described above.

<6> The ion-exchange membrane according to <5>, comprising one layer (L) and one layer (M).

<7> The ion-exchange membrane according to <5> or <6>, comprising the layer (L), the layer (M), and the layer (L) in the listed order.
<8> An ion-exchange membrane comprising a side-chain heteroaromatic resin having a structural unit represented by the following general formula 2:

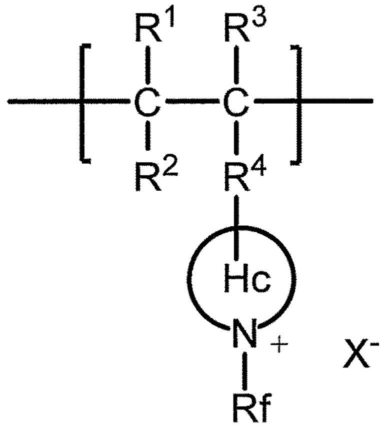

[2]

wherein,

$R^1$, $R^2$, and $R^3$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms,
$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms,
Hc is a substituted or unsubstituted heteroaromatic group having 4 to 30 carbon atoms, the group having at least one nitrogen atom in a heteroaromatic ring structure and containing a five-membered ring and/or six-membered ring structure,
Rf is an aliphatic hydrocarbon group substituted with at least one fluorine atom, and
$X^-$ is a counter anion.

<9> The ion-exchange membrane according to <8>, alternately comprising

at least one layer (L) comprising the side-chain heteroaromatic resin, and
at least one layer (M) comprising a fluororesin having a structural unit represented by the following general formula G1:

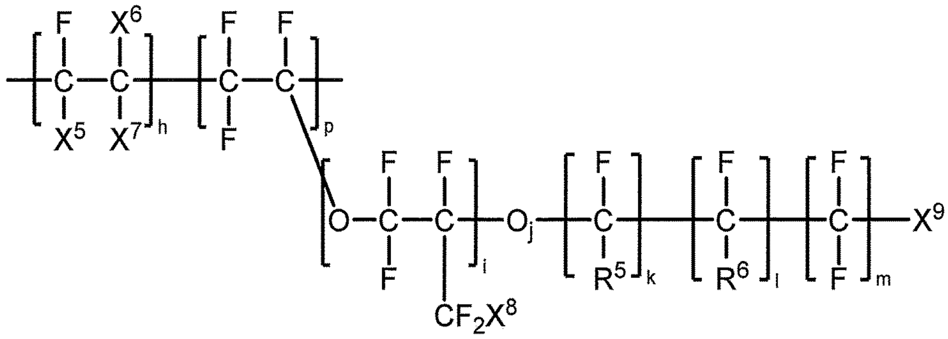

[G 1]

wherein the definition of each substituent has the same meaning as in the general formula G1 described above.

<10> The ion-exchange membrane according to <9>, comprising one layer (L) and one layer (M).
<11> The ion-exchange membrane according to <9>, comprising the layer (L), the layer (M), and the layer (L) in the listed order.
<12> The ion-exchange membrane according to any one of <9> to <11>, wherein the layer (L) further comprises a cation-exchangeable resin.

<13> The ion-exchange membrane according to <12>, wherein a weight ratio between the side-chain heteroaromatic resin and the cation-exchangeable resin is 1:100 to 100:1.
<14> The ion-exchange membrane according to <12> or <13>, wherein the cation-exchangeable resin is a fluororesin.
<15> The ion-exchange membrane according to <14>, wherein the fluororesin has a structural unit represented by the following general formula G1:

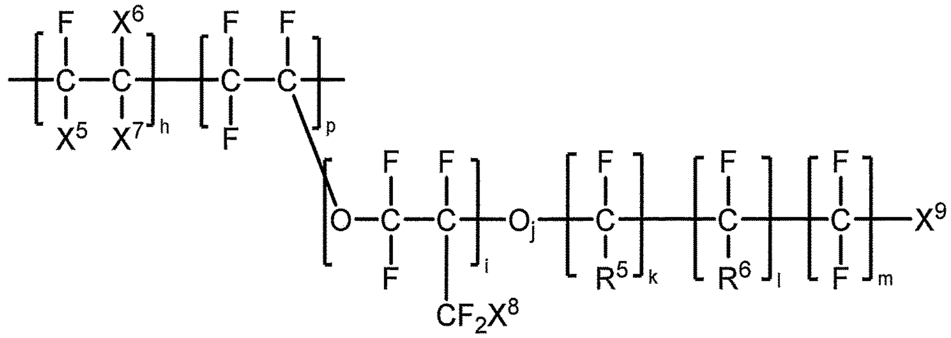

[G 1]

wherein the definition of each substituent has the same meaning as in the general formula G1 described above.
<16> The ion-exchange membrane according to <1>, wherein the side-chain heteroaromatic resin further has a structural unit represented by the following general formula 2:

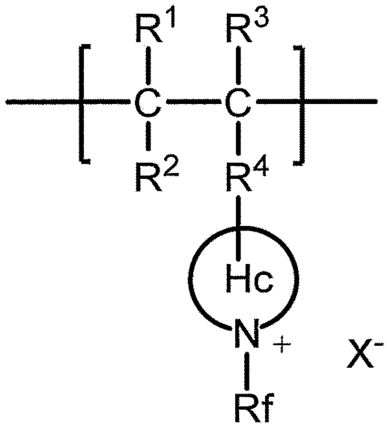

[2]

wherein,

$R^1$, $R^2$, and $R^3$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms,
$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms,
Hc is a substituted or unsubstituted heteroaromatic group having 4 to 30 carbon atoms, the group having at least one nitrogen atom in a heteroaromatic ring structure and containing a five-membered ring and/or six-membered ring structure,
Rf is an aliphatic hydrocarbon group substituted with at least one fluorine atom, and
$X^-$ is a counter anion.

<17> The ion-exchange membrane according to <16>, wherein a molar ratio between the structural unit represented by the general formula 1 and the structural unit represented by the general formula 2 is 1:100 to 100:1.
<18> The ion-exchange membrane according to <16> or <17>, wherein a weight ratio between the side-chain heteroaromatic resin and the cation-exchangeable resin is 1:100 to 100:1.
<19> The ion-exchange membrane according to any one of <16> to <18>, wherein the cation-exchangeable resin is a fluororesin.
<20> The ion-exchange membrane according to any one of <16> to <19>, wherein the fluororesin has a structural unit

represented by the following general formula G1:

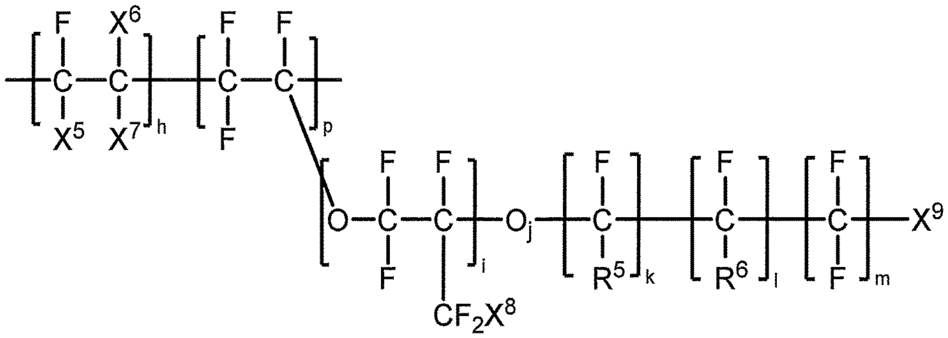

[G 1]

wherein the definition of each substituent has the same meaning as in the general formula G1 described above.

<21> The ion-exchange membrane according to <20>, alternately comprising

at least one layer (L) comprising the resin composition, and

at least one layer (M) comprising a fluororesin having a structural unit represented by the following general formula G1:

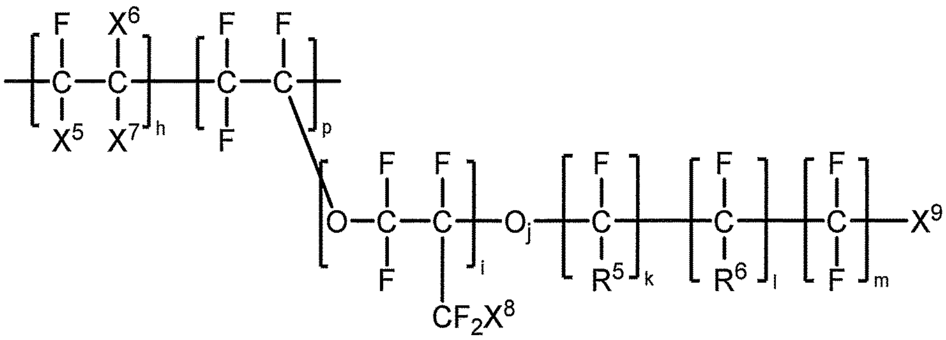

[G 1]

wherein the definition of each substituent has the same meaning as in the general formula G1 described above.

<22> The ion-exchange membrane according to <21>, comprising one layer (L) and one layer (M).

<23> The ion-exchange membrane according to <21>, comprising the layer (L), the layer (M), and the layer (L) in the listed order.

<24> An ion-exchange membrane comprising

a layer (L1) comprising a heteroaromatic structurecontaining fluororesin having a structural unit represented by the following general formula A1, a saponified product thereof or a salt thereof:

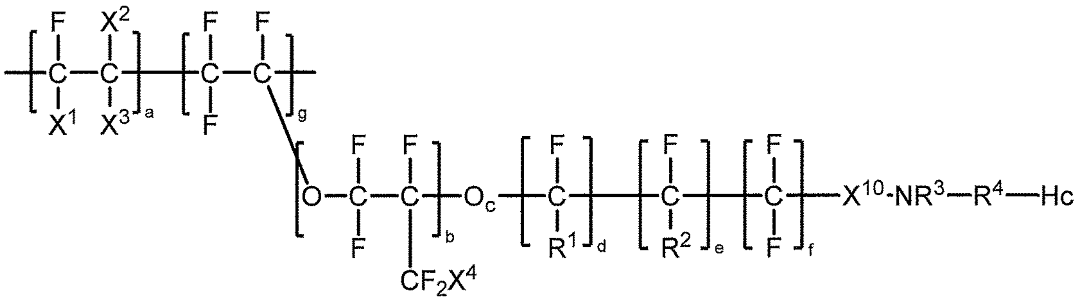

[A 1]

wherein,

$X^1$, $X^2$, $X^3$, and $X^4$ are each optionally the same or different, and are each a halogen atom, a substituted or unsubstituted perfluoroalkyl group having 1 to 10 carbon atoms, or a substituted or unsubstituted cyclic

perfluoroalkyl group having 5 to 10 carbon atoms, the halogen atom is a fluorine atom, a chlorine atom, a bromine atom, or an iodine atom, and $X^1$ and $X^2$ or $X^1$ and $X^3$ are optionally bound to each other to form a cyclic structure,
$R^1$ and $R^2$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom,
$R^3$ is a hydrogen atom, a substituted or unsubstituted aliphatic hydrocarbon group having 1 to 10 carbon atoms, or a substituted or unsubstituted aromatic hydrocarbon group having 6 to 10 carbon atoms,
$R^4$ is a linking group that links $NR^3$ and Hc, and is a substituted or unsubstituted divalent aliphatic hydrocarbon group having 1 to 10 carbon atoms, or a substituted or unsubstituted divalent aromatic hydrocarbon group having 6 to 10 carbon atoms,
$X^{10}$ is a divalent group represented by formula $-CO_2-$or $-SO_2-$,
Hc is a substituted or unsubstituted heteroaromatic group having 4 to 30 carbon atoms, the group containing at least one nitrogen atom and containing a five-membered ring and/or six-membered ring structure,
a and g each represent a molar ratio in the total constituent unit contained in the resin, and are numbers satisfying $0 \leq a < 1$, $0 < g \leq 1$, and $a + g = 1$,
b is an integer of 0 to 8,
c is 0 or 1, and
d, e, and f are each optionally the same or different, and are each an integer of 0 to 6, provided that d, e, and f are not 0 at the same time, and
a layer (M1) comprising a fluororesin (G1) having a structural unit represented by the following general formula G1:

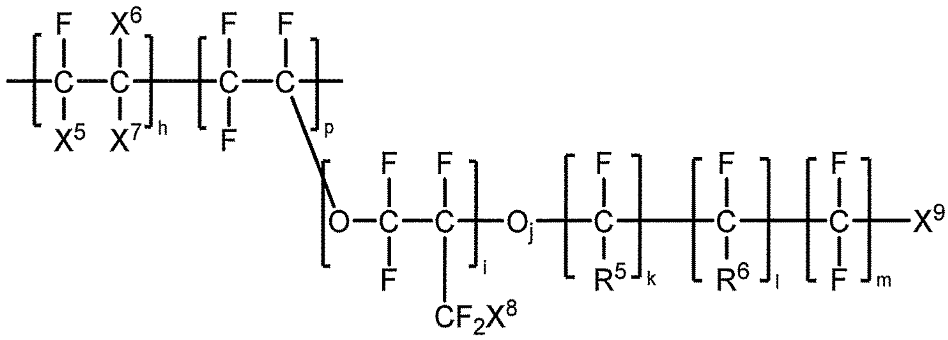

[G 1]

wherein the definition of each substituent has the same meaning as in the general formula G1 described above.

<25> The ion-exchange membrane according to <24>, comprising three or more layers, the three or more layers alternately comprising

the layer (L1), and
the layer (M1).

<26> The ion-exchange membrane according to <24> or <25>, wherein a thickness of the layer (L1) is 10 μm or less.
<27> The ion-exchange membrane according to any one of <24> to <26>, wherein a thickness of the ion-exchange membrane is 200 μm or less.
<28> An ion-exchange membrane comprising

a layer (L3) comprising a side-chain nitrogen atom-containing fluororesin having a structural unit represented by the following general formula A3, a saponified product thereof or a salt thereof:

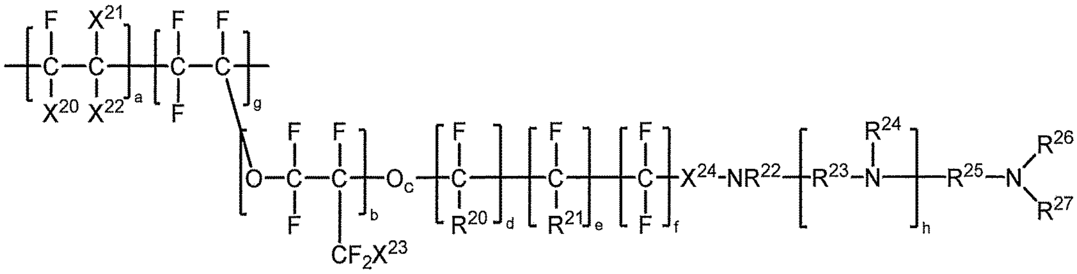

[A 3]

wherein,

$X^{20}$, $X^{21}$, $X^{22}$, and $X^{23}$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^{20}$ and $X^{21}$ or $X^{20}$ and $X^{22}$ optionally form a cyclic structure,

$R^{20}$ and $R^{21}$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom,

$R^{22}$ and $R^{24}$ are each a hydrogen atom, a substituted or unsubstituted aliphatic hydrocarbon group having 1 to 10 carbon atoms, or a substituted or unsubstituted aromatic hydrocarbon group having 6 to 10 carbon atoms,

$R^{26}$ and $R^{27}$ are each a hydrogen atom, or a substituted or unsubstituted aliphatic hydrocarbon group having 1 to 10 carbon atoms, and at least one of $R^{26}$ and $R^{27}$ is a substituted or unsubstituted aliphatic hydrocarbon group having 1 to 10 carbon atoms,

$R^{23}$ and $R^{25}$ are each optionally the same or different, and are each a substituted or unsubstituted divalent aliphatic hydrocarbon group having 1 to 10 carbon atoms, or a substituted or unsubstituted divalent aromatic hydrocarbon group having 6 to 10 carbon atoms, wherein, when h is 2 or more, $R^{23}$s repeated are each optionally the same or different,

$X^{24}$ is a divalent group represented by $-CO_2-$ or $-SO_2^-$,

a and g each represent a molar ratio in the total constituent unit contained in the resin, and are numbers satisfying $0 \leq a < 1$, $0 < g \leq 1$, and $a + g = 1$,

b is an integer of 0 to 8,

c is 0 or 1, and

d, e, f, and h are each optionally the same or different, and are each an integer of 0 to 6, provided that d, e, and f are not 0 at the same time, and

a layer (M3) comprising a fluororesin (G1) having a structural unit represented by the following general formula G1:

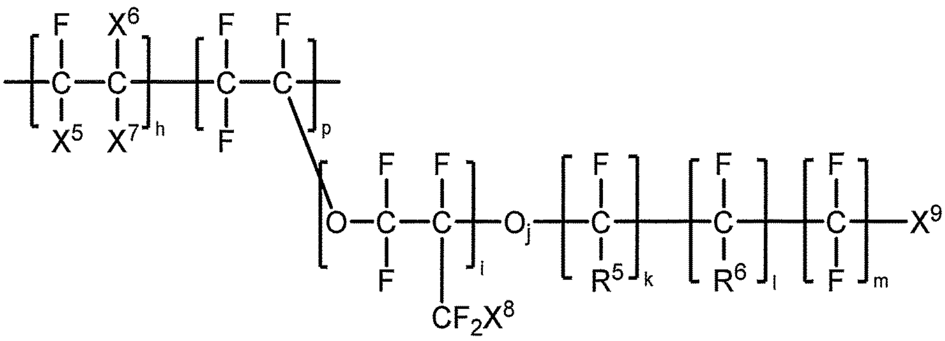

[G 1]

wherein the definition of each substituent has the same meaning as in the general formula G1 described above.

<29> The ion-exchange membrane according to <28>, comprising three or more layers, the three or more layers alternately comprising

the layer (L3), and
the layer (M3).

<30> The ion-exchange membrane according to <28> or <29>, wherein a thickness of the layer (L3) is 10 μm or less.
<31> The ion-exchange membrane according to any one of <28> to <30>, wherein a thickness of the ion-exchange membrane is 200 μm or less.
<32> The ion-exchange membrane according to any one of <1> to <31>, for a redox flow battery.
<33> A membrane electrode assembly, wherein the ion-exchange membrane according to any one of <1> to <31> and at least one electrode are bonded.
<34> The membrane electrode assembly according to <33>, for a redox flow battery.
<35> A cell for a redox flow battery, the cell comprising

a first electrolyte solution comprising a first redox active material,
a second electrolyte solution comprising a second redox active material,
a first electrode in contact with the first electrolyte solution,
a second electrode in contact with the second electrolyte solution, and
a separation membrane located between the first electrolyte solution and the second electrolyte solution, wherein the separation membrane is the ion-exchange membrane according to any one of <1> to <31>.

<36> The cell for a redox flow battery according to <35>, wherein the cell is a membrane electrode assembly in which the separation membrane and at least one electrode are bonded.
<37> The cell for a redox flow battery according to <35> or <36>, wherein at least one of the first electrode and the second electrode is a carbon electrode.
<38> The cell for a redox flow battery according to any one of <35> to <37>, wherein at least one of the first redox active material and the second redox active material is at least one selected from the group consisting of a metallic redox active material, a nonmetallic redox active material, and an organic redox active material.
<39> A redox flow battery, wherein the cell for a redox flow battery according to any one of <35> to <38> is stacked.
<40> A cell for a redox flow battery, the cell comprising

a first electrolyte solution comprising a first redox active material,
a second electrolyte solution comprising a second redox active material,
a first electrode in contact with the first electrolyte solution,
a second electrode in contact with the second electrolyte solution, and
a separation membrane located between the first electrolyte solution and the second electrolyte solution, wherein the separation membrane comprises at least

a first cation-exchangeable resin layer, and
an anion-exchangeable resin layer,

an equivalent weight of the separation membrane is 1150 g/eq or less,
a thickness of the anion-exchangeable resin layer is 0.001 μm or more and less than 5 μm, and
the anion-exchangeable resin layer of the separation membrane is located facing an electrode acting as a negative electrode.

<41> The cell for a redox flow battery according to <40>, wherein the first cation-exchangeable resin layer is located closer to an electrode acting as a positive electrode than the anion-exchangeable resin layer.
<42> The cell for a redox flow battery according to <40> or <41>, wherein a distance $D_{neg}$ between the anion-exchangeable resin layer of the separation membrane and the electrode acting as a negative electrode, and a distance $D_{pos}$ between the anion-exchangeable resin layer of the separation membrane and an electrode acting as a positive electrode exhibit the following relationship:

$$D_{neg}/D_{pos} < 1.$$

<43> The cell for a redox flow battery according to any one of <40> to <42>, wherein a thickness of the first cation-exchangeable resin layer is 1 μm or more and 150 μm or less.
<44> The cell for a redox flow battery according to any one of <40> to <43>, wherein the first cation-exchangeable resin layer comprises a fluororesin.
<45> The cell for a redox flow battery according to any one of <40> to <44>, wherein the first cation-exchangeable resin layer has at least one functional group selected from the group consisting of a sulfo group, a carboxyl group, and a phosphoric acid group.

<46> The cell for a redox flow battery according to any one of <40> to <45>, wherein the first cation-exchangeable resin layer comprises a fluororesin having a structural unit represented by the following general formula G1:

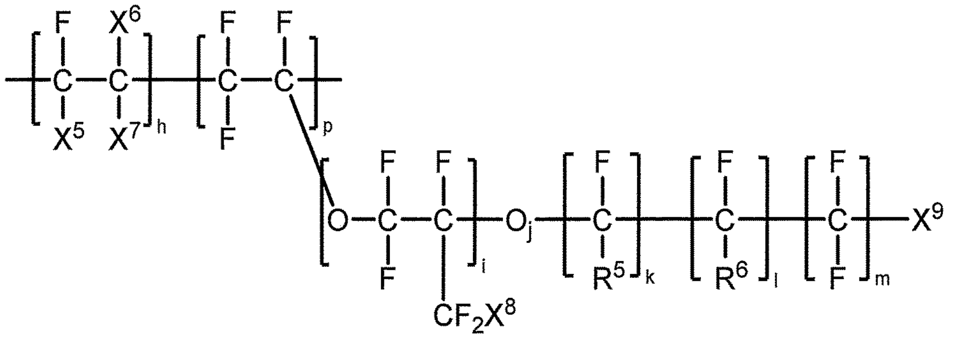

[G 1]

wherein the definition of each substituent has the same meaning as in the general formula G1 described above.

<47> The cell for a redox flow battery according to any one of <40> to <46>, wherein the anion-exchangeable resin layer comprises at least one selected from the group consisting of

a primary amino group,
a secondary amino group,
a tertiary amino group,
an amino salt structure as a reaction product of at least one amino group selected from the group consisting of a primary amino group, a secondary amino group, and a tertiary amino group, and at least one selected from the group consisting of an acidic substance and a halogen atom-containing aliphatic hydrocarbon compound,
a nitrogen atom-containing heterocyclic ring structure,
a salt structure of a nitrogen-containing heterocyclic ring as a reaction product of a nitrogen-containing heterocyclic ring structure and at least one selected from the group consisting of an acidic substance and a halogen atom-containing aliphatic hydrocarbon compound, and
a quaternary ammonium group.

<48> The cell for a redox flow battery according to any one of <40> to <47>, wherein the separation membrane comprises

the first cation-exchangeable resin layer,
the anion-exchangeable resin layer, and
a second cation-exchangeable resin layer, in the listed order, and a thickness of the first cation-exchangeable resin layer is larger than a thickness of the second cation-exchangeable resin layer.

<49> The cell for a redox flow battery according to <48>, wherein the first cation-exchangeable resin layer is located closer to an electrode acting as a positive electrode than the anion-exchangeable resin layer.

<50> The cell for a redox flow battery according to <48> or <49>, wherein a distance $D_{neg}$ between the anion-exchangeable resin layer of the separation membrane and the electrode acting as a negative electrode, and a distance $D_{pos}$ between the anion-exchangeable resin layer of the separation membrane and an electrode acting as a positive electrode exhibit the following relationship:

$$D_{neg}/D_{pos} < 1.$$

<51> The cell for a redox flow battery according to any one of <48> to <50>, wherein the second cation-exchangeable resin layer comprises a fluororesin.

<52> The cell for a redox flow battery according to any one of <48> to <51>, wherein a thickness of the second cation-exchangeable resin layer is 0.01 μm or more and less than 150 μm.

<53> The cell for a redox flow battery according to any one of <48> to <52>, wherein a value obtained by dividing the thickness of the second ion-exchangeable resin layer by the thickness of the first cation-exchangeable resin layer is less than 0.7.

<54> The cell for a redox flow battery according to any one of <40> to <53>, wherein at least one of the first electrode and the second electrode is a carbon electrode.

<55> The cell for a redox flow battery according to any one of <40> to <54>, wherein at least one of the first redox active material and the second redox active material is at least one selected from the group consisting of a metallic redox active material, a nonmetallic redox active material, and an organic redox active material.
<56> The cell for a redox flow battery according to any one of <40> to <55>, wherein at least one of the first electrode and the second electrode is a separation membrane electrode assembly bonded with the separation membrane.
<57> A redox flow battery, wherein the cell for a redox flow battery according to any one of <40> to <56> is stacked.
<58> A method for producing a separation membrane, the separation membrane comprising at least

a first cation-exchangeable resin layer, and
an anion-exchangeable resin layer, in which

an equivalent weight of the separation membrane is 1150 g/eq or less, and
a thickness of the anion-exchangeable resin layer is 0.001 μm or more and less than 5 μm, wherein

the method comprises

a step of forming the first cation-exchangeable resin layer, and
a step of forming the anion-exchangeable resin layer.

<59> The method for producing a separation membrane according to <58>, wherein the method comprises

a step of reacting

a fluororesin precursor layer serving as a precursor of the first cation-exchangeable resin layer, and containing at least one selected from the group consisting of a sulfonyl halide group, an acyl halide group, and a halogenated phosphoric acid group, with
a modification compound having at least two nitrogen atom-containing groups, in which the nitrogen atom-containing groups comprise at least one selected from the group consisting of

a primary amino group,
a secondary amino group,
a tertiary amino group,
an amino salt structure as a reaction product of at least one amino group selected from the group consisting of a primary amino group, a secondary amino group, and a tertiary amino group, and at least one selected from the group consisting of an acidic substance and a halogen atom-containing aliphatic hydrocarbon compound,
a nitrogen atom-containing heterocyclic ring structure,
a salt structure of a nitrogen-containing heterocyclic ring as a reaction product of a nitrogen-containing heterocyclic ring structure and at least one selected from the group consisting of an acidic substance and a halogen atom-containing aliphatic hydrocarbon compound, and
a quaternary ammonium group, and

a step of converting at least one selected from the group consisting of the sulfonyl halide group, the acyl halide group, and the halogenated phosphoric acid group contained in the fluororesin precursor layer, into at least one selected from the group consisting of a sulfo group, a carboxyl group, and a phosphoric acid group, after the above step.

<60> The method for producing a separation membrane according to <58>, the separation membrane comprising

the first cation-exchangeable resin layer,
the anion-exchangeable resin layer, and
a second cation-exchangeable resin layer, in the listed order, in which a thickness of the first cation-exchangeable resin layer is larger than a thickness of the second cation-exchangeable resin layer, wherein
the method comprises

a step of forming the first cation-exchangeable resin layer,
a step of forming the anion-exchangeable resin layer, and
a step of forming the second cation-exchangeable resin layer.

<61> The method for producing a separation membrane according to <60>, comprising a step of overlapping the anion-exchangeable resin layers of membranes each having the first cation-exchangeable resin layer and the anion-exchangeable resin layer.
<62> A polyelectrolyte solution comprising

a fluororesin having an equivalent weight of 500 g/eq or more and less than 1,000 g/eq and having a structural unit represented by the following general formula G1, and
a solvent containing water, an aliphatic alcohol, and an aliphatic carboxylic acid, wherein
a ratio of a total mass of the aliphatic carboxylic acid and a reaction product thereof to a total mass of the solvent is 100:1 to 100:50:

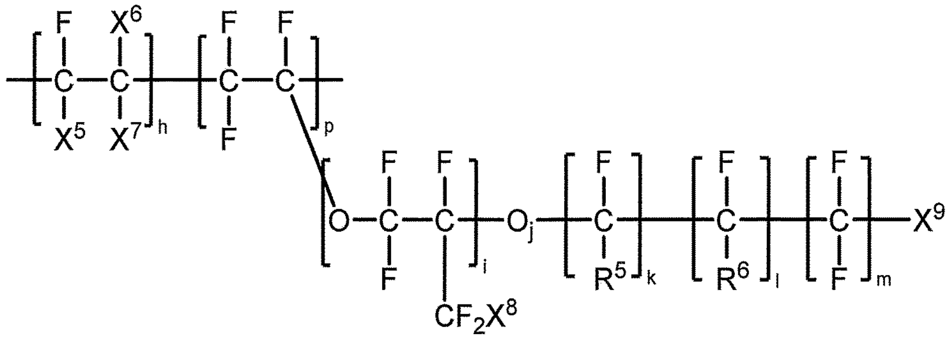

[G 1]

wherein the definition of each substituent has the same meaning as in the general formula G1 described above.

<63> The polyelectrolyte solution according to <62>, wherein a mass ratio between the aliphatic carboxylic acid and the aliphatic alcohol is 100:1 to 1:100.
<64> An ion-exchange membrane comprising a fluororesin having an equivalent weight of 500 g/eq or more and less than 1,000 g/eq and having a structural unit represented by the following general formula G1, wherein the number of crack defects per unit area of the ion-exchange membrane is less than $10/m^2$:

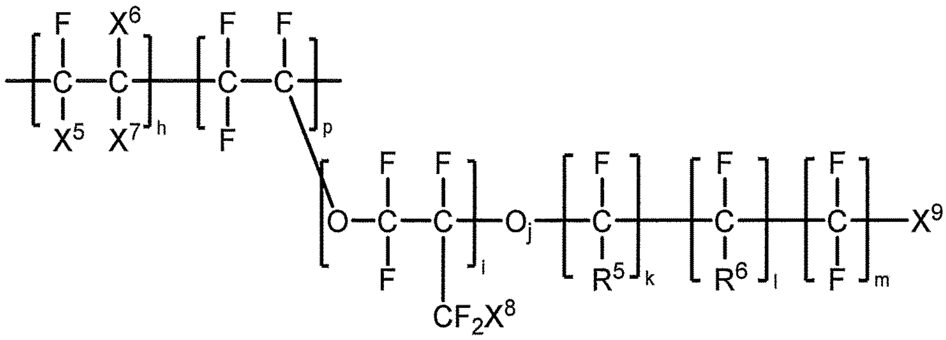

[G 1]

wherein the definition of each substituent has the same meaning as in the general formula G1 described above.
<65> The ion-exchange membrane according to <64>, wherein an orientation ratio OR in a membrane surface direction, as determined by X-ray scattering measurement, is 1.0 or more and less than 1.1.
<66> The ion-exchange membrane according to <64> or <65>, wherein an average membrane thickness is 75 μm or less.
<67> The ion-exchange membrane according to any one of <64> to <66>, wherein an average membrane thickness is 25 μm or more.
<68> The ion-exchange membrane according to any one of <64> to <67>, wherein a minimum membrane thickness is 90% or more of an average membrane thickness, and a maximum membrane thickness is 110% or less of an average membrane thickness.
<69> A wound body configured by winding the ion-exchange membrane according to any one of <64> to <68>.
<70> The wound body according to <68>, wherein a width of the ion-exchange membrane is 50 mm or more and 5,000 mm or less.
<71> The wound body according to <69> or <70>, wherein a length of the ion-exchange membrane is 100 mm or more.

<72> A membrane electrode assembly, wherein the ion-exchange membrane according to any one of <64> to <68> and at least one electrode are bonded.
<73> The ion-exchange membrane according to any one of <64> to <68>, for a redox flow battery.
<74> The membrane electrode assembly according to <72>, for a redox flow battery.
<75> A cell for a redox flow battery, the cell comprising

a first electrolyte solution comprising a first redox active material,
a second electrolyte solution comprising a second redox active material,
a first electrode in contact with the first electrolyte solution,
a second electrode in contact with the second electrolyte solution, and
a separation membrane located between the first electrolyte solution and the second electrolyte solution, wherein the separation membrane is the ion-exchange membrane according to any one of <64> to <68>.

<76> The cell for a redox flow battery according to <75>, wherein the separation membrane and at least one electrode are bonded.
<77> The cell for a redox flow battery according to <75> or <76>, wherein at least one of the first electrode and the second electrode is a carbon electrode.
<78> The cell for a redox flow battery according to any one of <75> to <77>, wherein at least one of the first redox active material and the second redox active material is at least one selected from the group consisting of a metallic redox active material, a nonmetallic redox active material, and an organic redox active material.
<79> A redox flow battery, wherein the cell for a redox flow battery according to any one of <75> to <78> is stacked.
<80> A method for producing an ion-exchange membrane, the method comprising

a step of applying and drying the polyelectrolyte solution according to <62> or <63>, wherein
the ion-exchange membrane comprises a fluororesin having an equivalent weight of 500 g/eq or more and less than 1,000 g/eq and having a structural unit represented by the following general formula G1, and the number of crack defects per unit area of the ion-exchange membrane is less than $10/m^2$:

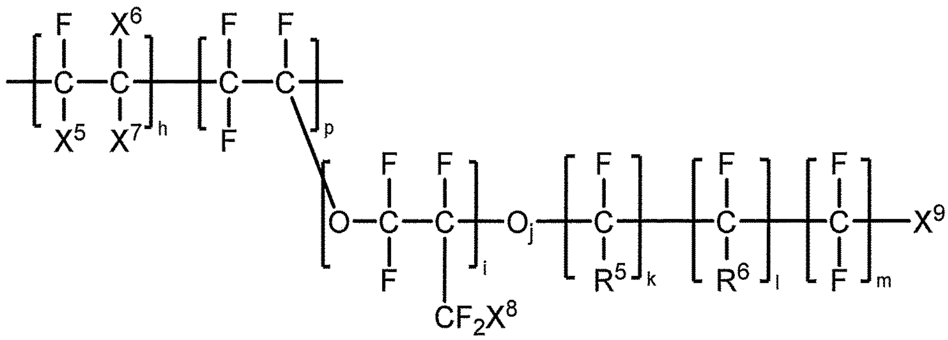

[G 1]

wherein the definition of each substituent has the same meaning as in the general formula G1 described above.

Brief Description of Drawing

[Figure 1] Figure 1 illustrates one example of a schematic view of a redox flow battery in which a separation membrane for a redox flow battery in the present embodiment is used.

Description of Embodiments

Hereinafter, modes for carrying out the present invention (hereinafter, referred to as "the present embodiment".) are described in detail, and the present invention is not limited to the following description and can be variously modified and carried out within the gist thereof.

[First embodiment]

First, a first embodiment is described.
Patent Literature 1 discloses use of an aromatic polysulfone-based polymer in an anion-exchange group layer, for enhancements in current efficiency and power efficiency, and indicates that, although an excellent current efficiency is

achieved, an increase in cell resistance and a reduction in voltage efficiency are caused. Therefore, there is a demand for an anion-exchange group layer excellent in current efficiency, voltage efficiency, and current efficiency in a well-balanced manner.

Patent Literature 2 discloses Nafion (registered trademark) 117 reacted with several heterocyclic molecules, for not only suppression of an increase in proton surface resistance, but also an enhancement in vanadium ion permeation selectivity, in which, if a reduction in proton surface resistance is tried, a reduction in vanadium ion permeation selectivity is caused, and on the other hand, if an enhancement in vanadium ion permeation selectivity is tried, an enhancement in proton surface resistance is caused, and there is still a challenge for satisfaction of both thereof. In addition, no redox flow battery has been evaluated in Examples, and current efficiency, voltage efficiency, and power efficiency are unclear. A high numerical value of the proton surface resistance has been exhibited as compared with Nafion (registered trademark) 117 in Examples, and it can be thus presumed that a lowered voltage efficiency has been exhibited as compared with Nafion (registered trademark) 117. From the foregoing, there is a demand for a material excellent in current efficiency, voltage efficiency, and current efficiency in a well-balanced manner.

Patent Literature 3 discloses a polyelectrolyte membrane which is provided with a crossover prevention layer as a metal layer formed by reduction of a cationic metal, therein, for enhancements in at least one or more characteristics of discharge capacity, current efficiency, voltage efficiency, and power efficiency, but such characteristics are demanded to be higher.

Patent Literature 4 discloses use of several polymer compounds in an anion-exchangeable resin layer, for a high power efficiency. However, it is indicated that, in a case where the anion-exchangeable resin layer is not located between ion-exchange resin layers, a high power efficiency may be obtained as the initial characteristic, but a high power efficiency is not obtained after 100 cycles. The anion-exchangeable compounds included in the anion-exchangeable resin layer used in Patent Literature 4 are thus demanded to be higher in characteristics.

An object of the present invention relates to a side-chain heteroaromatic resin, a resin composition, an ion-exchange membrane, a membrane electrode assembly, a cell for a redox flow battery using them, and a redox flow battery, in which a cell for a redox battery, having excellent current efficiency and voltage efficiency in a well-balanced manner and having a high power efficiency, is obtained.

The present inventors have made intensive studies about the above object, and as a result, have found that excellent current efficiency and voltage efficiency in a well-balanced manner and a high power efficiency are obtained by use of a side-chain heteroaromatic resin having a specified structural unit, in a separation membrane of a cell for a redox flow battery.

The ion-exchange membrane according to the first embodiment includes the following resin composition. In other words, the resin composition includes

a side-chain heteroaromatic resin having a structural unit represented by the following general formula 1:

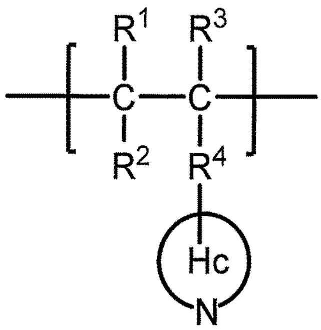

[1]

wherein,

$R^1$, $R^2$, and $R^3$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms,

$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms, and

Hc is a substituted or unsubstituted heteroaromatic group having 4 to 30 carbon atoms, the group having at least one nitrogen atom in a heteroaromatic ring structure and containing a five-membered ring and/or six-membered ring structure, and

a cation-exchangeable resin.

According to the present embodiment, it is possible to provide a novel side-chain heteroaromatic resin having a specified structural unit. According to the present embodiment, it is also possible to provide a side-chain heteroaromatic resin, a resin composition, an ion-exchange membrane, a membrane electrode assembly, a cell for a redox flow battery using them, and a redox flow battery, in which a cell for a redox battery, having excellent current efficiency and voltage efficiency in a well-balanced manner and exhibiting a high power efficiency, is obtained.

The ion-exchange membrane according to the first embodiment includes a side-chain heteroaromatic resin having a structural unit represented by the following general formula 2:

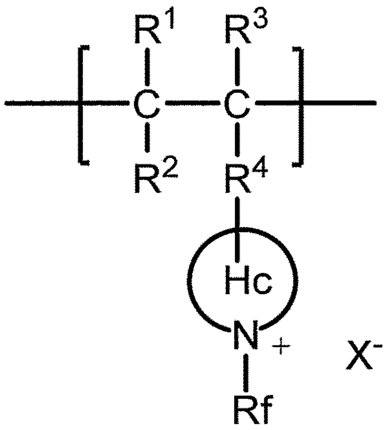

[2]

wherein,

$R^1$, $R^2$, and $R^3$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms,
$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms,
Hc is a substituted or unsubstituted heteroaromatic group having 4 to 30 carbon atoms, the group having at least one nitrogen atom in a heteroaromatic ring structure and containing a five-membered ring and/or six-membered ring structure,
Rf is an aliphatic hydrocarbon group substituted with at least one fluorine atom, and
$X^-$ is a counter anion.

<Side-chain heteroaromatic resin>

The side-chain heteroaromatic resin in the first embodiment has a structural unit represented by the following general formula 1:

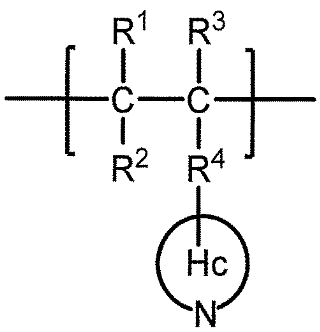

[1]

wherein,

$R^1$, $R^2$, and $R^3$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms,

$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms, and
Hc is a substituted or unsubstituted heteroaromatic group having 4 to 30 carbon atoms, the group having at least one nitrogen atom in a heteroaromatic ring structure and containing a five-membered ring and/or six-membered ring structure.

$R^1$, $R^2$, and $R^3$ in the general formula 1 are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms.

In the case of the substituted aliphatic hydrocarbon group or the substituted aromatic hydrocarbon group, the substituent is not particularly limited, and examples thereof include halogen atoms such as a fluorine atom, a chlorine atom, and a bromine atom, a nitrile group (-CN), an alkoxy group ($-OR^a$), an alkyl carbonate group ($-OCO_2R^a$), an alkyl ester group ($-CO_2R^a$), an acyl group ($-COR^a$), a sulfide group ($-SR^a$), a sulfoxide group ($-SOR^a$), a sulfone group ($-SO_2R^a$), and an urethane group ($-NHCO_2R^a$). $R^a$ is an aliphatic hydrocarbon group having 1 to 10 carbon atoms or an aromatic hydrocarbon group having 6 to 10 carbon atoms. In the case of such an aliphatic hydrocarbon group, the substituent may be an aromatic hydrocarbon group having 6 to 10 carbon atoms, and in the case of such an aromatic hydrocarbon group, the substituent may be an aliphatic hydrocarbon group having 1 to 10 carbon atoms. In a case where the substituent is contained, the substituent may be adopted singly or in combinations of a plurality thereof.

$R^1$, $R^2$, and $R^3$ are each preferably a hydrogen atom, or a substituted or unsubstituted aliphatic hydrocarbon group, more preferably a hydrogen atom, or an unsubstituted aliphatic hydrocarbon group because a starting material compound in production of the side-chain heteroaromatic resin is easily available, and further preferably a hydrogen atom because a starting material compound in production of the side-chain heteroaromatic resin is high in reactivity and the production cost tends to be able to be suppressed.

The number of carbon atoms in the substituted or unsubstituted aliphatic hydrocarbon group is 1 to 10. The number of carbon atoms is preferably 1 to 6, more preferably 1 to 4, further preferably 1, or 2, further preferably 1 because a starting material compound in production of the side-chain heteroaromatic resin is easily available.

The number of carbon atoms in the substituted or unsubstituted aromatic hydrocarbon group is 6 to 10. The number of carbon atoms is preferably 6 to 10, more preferably 6 to 8, further preferably 6 because a starting material compound in production of the side-chain heteroaromatic resin is easily available.

$R^4$ in the general formula 1 is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms. The substituent here is the same as the above-mentioned substituent.

The "direct bond" here refers to direct binding between Hc in the structural unit represented by the general formula 1 and a carbon atom constituting a main chain bound with $R^3$. (Hereinafter, the same meaning is indicated in the description for $R^4$.)

The number of carbon atoms in the substituted or unsubstituted divalent aliphatic hydrocarbon group is 1 to 10. The number of carbon atoms is preferably 1 to 6, more preferably 1 to 4, further preferably 1, or 2, further preferably 1 because a starting material compound in production of the side-chain heteroaromatic resin is easily available.

The number of carbon atoms in the substituted or unsubstituted divalent aromatic hydrocarbon group is 6 to 10. The number of carbon atoms is preferably 6 to 10, more preferably 6 to 8, further preferably 6 because a starting material compound in production of the side-chain heteroaromatic resin is easily available.

$R^4$ in the general formula 1 is preferably a direct bond, or a substituted or unsubstituted aliphatic hydrocarbon group, more preferably a direct bond, or an unsubstituted aliphatic hydrocarbon group because a starting material compound in production of the side-chain heteroaromatic resin is easily available, and further preferably a direct bond because a starting material compound in production of the side-chain heteroaromatic resin is high in reactivity and the production cost tends to be able to be suppressed. In a case where $R^4$ is a direct bond, the structural unit represented by the general formula 1 is represented by the following general formula 1-2. The substituent here is the same as the above-mentioned substituent.

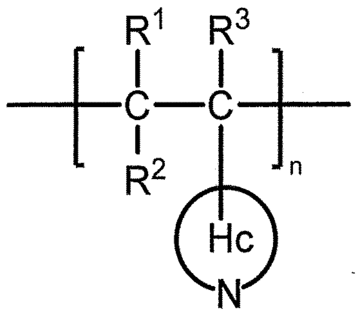

[1 − 2]

In the formula, the definition of the substituent is as defined in the above general formula 1.

Hc in the general formula 1 is a substituted or unsubstituted heteroaromatic group having 4 to 30 carbon atoms, the group having at least one nitrogen atom in a heteroaromatic ring structure and containing a five-membered ring and/or six-membered ring structure.

The five-membered ring and/or six-membered ring structure in Hc in the general formula 1 is not particularly limited, and examples thereof include an imidazole structure, a benzimidazole structure, an imidazopyridine structure, a pyridine structure, an oxazole structure, a thiazole structure, a pyridazine structure, a pyrimidine structure, a cinnoline structure, a quinazoline structure, a phthalazine structure, a quinoxaline structure, a pteridine structure, a purine structure, a 2,2'-bipyridyl structure, a 2,3'-bipyridyl structure, a 2,4'-bipyridyl structure, a 1,7-phenanthroline structure, a 1,10-phenanthroline structure, and a 2,2':6',2"-terpyridinestructure. The structure of Hc exemplified above may have such a structure singly, or a plurality of such structures.

Hc has at least one nitrogen atom in the heteroaromatic ring structure, and therefore preferably has, among the above-mentioned five-membered ring and/or six-membered ring structure, an imidazole structure, a benzimidazole structure, an imidazopyridine structure, a pyridine structure, an oxazole structure, a thiazole structure, a 2,2'-bipyridyl structure, a 2,3'-bipyridyl structure, a 2,4'-bipyridyl structure, a 1,7-phenanthroline structure, or a 1,10-phenanthroline structure, more preferably has an imidazole structure, a benzimidazole structure, an imidazopyridine structure, a pyridine structure, an oxazole structure, a thiazole structure, a 2,2'-bipyridyl structure, or a 1,10-phenanthroline structure, and further preferably has an imidazole structure, a benzimidazole structure, an imidazopyridine structure, or a pyridine structure, particularly preferably an imidazole structure or a pyridine structure because, in a case where the side-chain heteroaromatic resin is used in a cell for a redox flow battery, durability tends to be enhanced.

The substituent in $H_C$ is the same as the above-mentioned substituent.

Examples of Hc include an imidazolyl group, a benzimidazolyl group, an imidazopyridinyl group, a pyridinyl group, an oxazonyl group, a thiazolyl group, a pyridazinyl group, a pyrimidinyl group, a cinnolinyl group, a quinazolinyl group, a phthalazinyl group, a quinoxalinyl group, a pteridinyl group, a purinyl group, a 2,2'-bipyridinyl, a 2,3'-bipyridinyl group, a 2,4'-bipyridinyl group, a 1,7-phenanthrolinyl group, a 1,10-phenanthrolinyl group, and a 2,2':6',2"-terpyridinyl group. In particular, an imidazolyl group or a pyridinyl group is preferred.

In a case where Hc is an imidazolyl group, the structural unit represented by the general formula 1 is a structural unit represented by the following general formula 1-3.

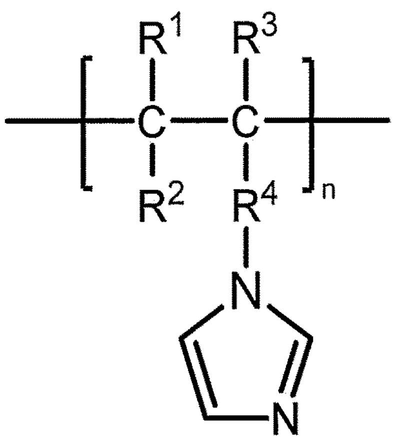

[1 − 3]

In a case where Hc is a pyridinyl group, the structural unit represented by the general formula 1 is a structural unit represented by the following general formula 1-4.

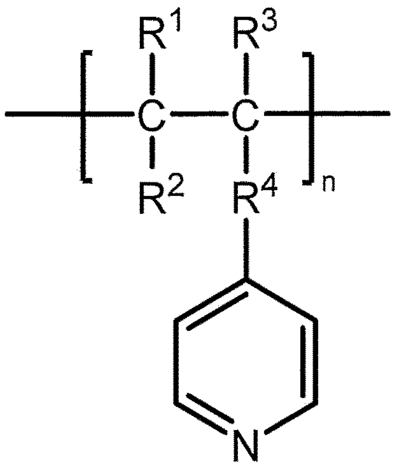

[1 − 4]

The structural unit represented by the general formula 1 is preferably a structural unit represented by the following general formula 1-5 or the following general formula 1-6.

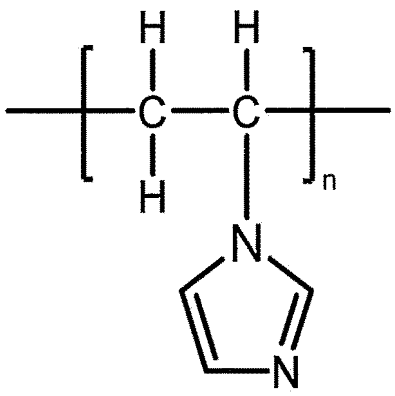

[1 − 5]

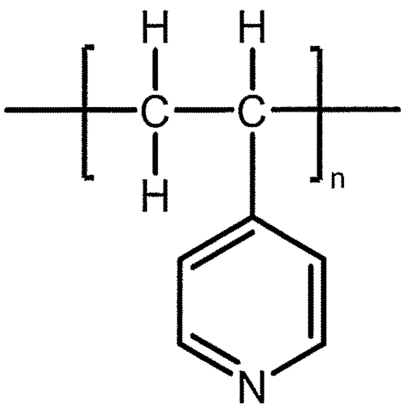

[1 − 6]

The side-chain heteroaromatic resin preferably further has a structural unit represented by the following general formula 2:

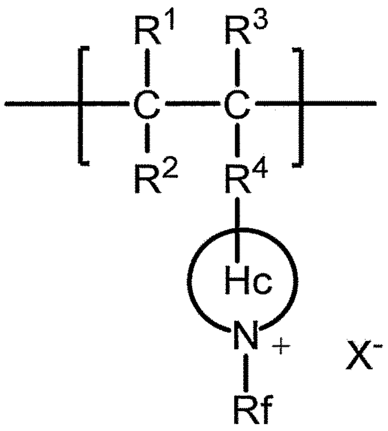

[2]

wherein $R^1$, $R^2$, $R^3$, $R^4$, Hc, and n each have the same meaning as in the general formula 1,

Rf is an aliphatic hydrocarbon group substituted with at least one fluorine atom, and
$X^-$ is a counter anion.

The side-chain heteroaromatic resin, when further having the structural unit represented by the general formula 2, tends to have enhanced water resistance, chemical resistance, acid resistance, and alkali resistance.

The number of carbon atoms in the aliphatic hydrocarbon group in Rf is preferably 1 to 20, more preferably 3 to 16, further preferably 3 to 11, further preferably 3 to 9.

The number of fluorine atoms for substitution in the aliphatic hydrocarbon group in Rf is preferably 1 to 41, more preferably 3 to 25, further preferably 5 to 18.

Rf is preferably a group represented by formula: $-(CH_2)_o-(CF_2)_p-CF_3$ (wherein o + p is 1 to 19, and o is 0 to 19.). o and p are each optionally an integer. o + p is preferably 1 to 19, more preferably 2 to 15, further preferably 2 to 10, further preferably 2 to 8. o is preferably 0 to 19, more preferably 1 to 10 from the same viewpoint, and is further preferably 2 to 4, further preferably 2 from the viewpoint of more enhancements in water resistance and chemical resistance of the side-chain heteroaromatic resin. p is preferably 0 to 19, more preferably 2 to 10, further preferably 3 to 7, further preferably 4 to 6 from the viewpoint that a compound serving as a precursor of Rf is easily available and the production cost of the side-chain heteroaromatic resin can be suppressed.

More specific examples of Rf include $-(CH_2)_2(CF_2)_3CF_3$, $-(CH_2)_2(CF_2)_4CF_3$, and $-(CH_2)_2(CF_2)_6CF_3$.

Examples of $X^-$ include $F^-$, $Cl^-$, $Br^-$, $I^-$, $HSO4^-$, $(SO_4^{2-})_{1/2}$, $NO_3^-$, and $OH^-$.

The structural unit represented by the general formula 2 is preferably a structural unit represented by the following general formula 2-2.

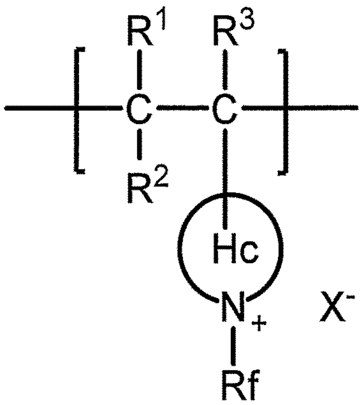

[2 − 2]

The structural unit represented by the general formula 2 is preferably a structural unit represented by the following general formula 2-3 or the following general formula 2-4.

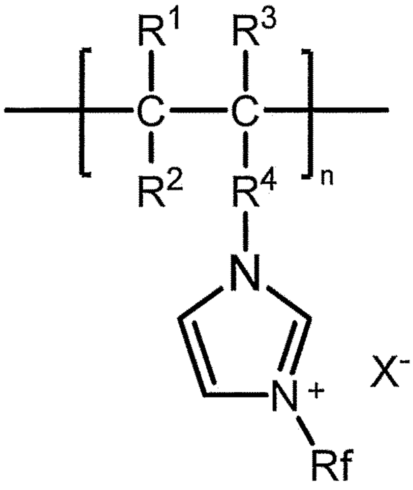

[2-3]

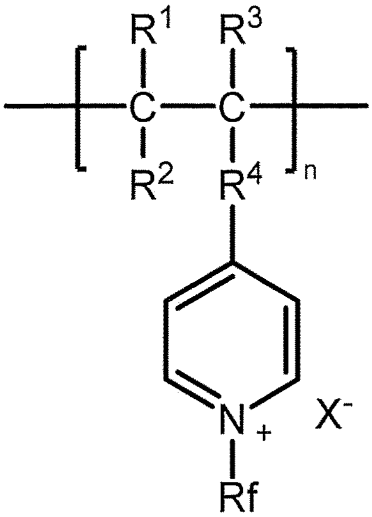

[2-4]

Examples of the structural unit represented by the general formula 2 more preferably include a structure represented by the following general formula 2-5 or the following general formula 2-6.

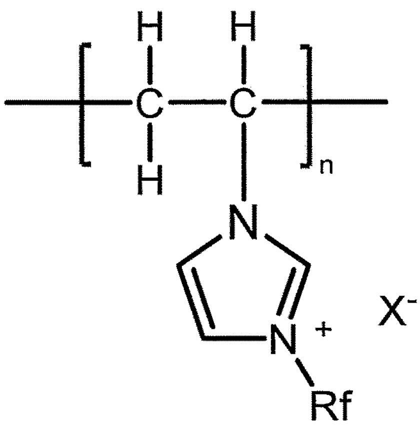

[2-5]

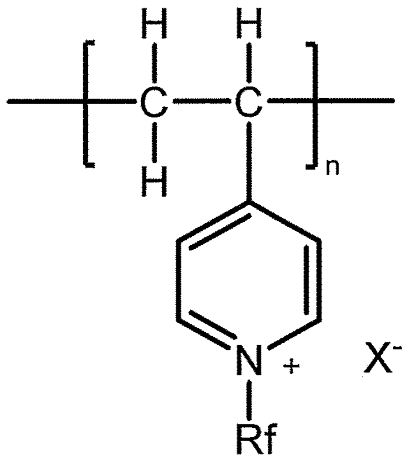

[2－6]

The side-chain heteroaromatic resin preferably has the structural unit represented by the general formula 2, more preferably has the structural unit represented by the general formula 1 and the structural unit represented by the general formula 2.

<Cation-exchangeable resin>

The resin composition in the present embodiment preferably includes a cation-exchangeable resin.

The cation-exchangeable resin is a resin having ion-exchange ability of a cation (hereinafter, also referred to as "positive ion").

The cation-exchangeable resin is not particularly limited, and may be any of a hydrocarbon-based resin and a fluororesin. A hydrocarbon-based resin is preferred in an application in which suppression in production cost is demanded, and a fluororesin is preferred in an application in which durability for a long period is demanded. Such hydrocarbon resin and fluororesin may be each used singly or in combinations of two or more kinds thereof.

The cation-exchangeable resin preferably contains a functional group having ion-exchange ability. The functional group having ion-exchange ability is not particularly limited, and examples thereof include a sulfo group ($SO_3H$), a carboxyl group ($CO_2H$), a phenolic hydroxyl group (OH), a phosphoric acid group ($PO_3H_2$), a thiol group (SH), and any alkali metal salt, any alkaline earth metal salt or any transition metal salt of such a functional group. The functional group having ion-exchange ability may be such a functional group singly, or a plurality of such functional groups.

Among such functional groups having ion-exchange ability, at least one selected from a sulfo group, a carboxyl group, and a phosphoric acid group is preferred, at least one selected from a sulfo group and a carboxyl group is more preferred, and a sulfo group is particularly preferred because the ion-exchange ability tends to be excellent.

The hydrocarbon-based resin is not particularly limited, and examples thereof include a resin which is, for example, polystyrene, polyphenylene ether, polybenzimidazole, polyetheretherketone, polyimide, polyetherimide, polyaryletherketone, polysulfone, polyether sulfone, polyphenylene sulfide, or polyphenylsulfone, and which has the functional group having ion-exchange ability. The hydrocarbon-based cation-exchangeable resin may be crosslinked, may be a copolymer, or may have various substituents (for example, halogen atoms such as a fluorine atom, a chlorine atom, and a bromine atom; a nitrile group, aliphatic hydrocarbon groups such as a methyl group, an ethyl group, a vinyl group, an allyl group, a 1-methylvinyl group, a n-propyl group, an iso-propyl group, a n-butyl group, an iso-butyl group, a sec-butyl group, and a tert-butyl group; aromatic hydrocarbon groups such as a benzyl group, a phenyl group, and a nitrile-substituted phenyl group; an amino group; a nitro group; a hydroxyl group; and a silyl group). The hydrocarbon resin may be used singly or in combinations of a plurality thereof.

The fluororesin is not particularly limited, and examples thereof include a partially fluorinated resin and a fully fluorinated resin each having the functional group having ion-exchange ability. A resin in which not all hydrogen atoms, but at least one hydrogen atom, among hydrogen atoms on carbon atoms contained in the hydrocarbon-based cation-exchangeable resin is replaced with a fluorine atom, and a resin in which all such hydrogen atoms on carbon atoms are replaced with fluorine atoms are respectively exemplified as the partially fluorinated resin and the fully fluorinated resin.

The fluororesin is preferably a fluororesin having a structural unit represented by the following general formula G1 (hereinafter, also referred to as "fluororesin G1"):

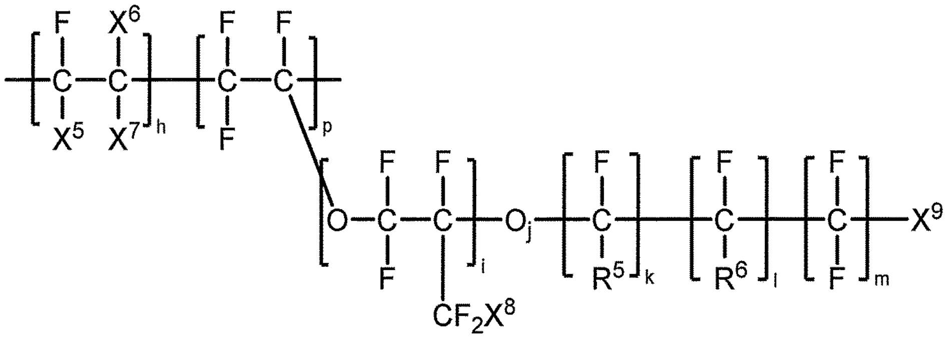

[G 1]

wherein,

$X^5$, $X^6$, $X^7$, and $X^8$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^5$ and $X^6$ or $X^5$ and $X^7$ are optionally bound to each other to form a cyclic structure,

$R^5$ and $R^6$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom,

$X^9$ is a group represented by $-COOZ$, $-SO_3Z$, $-PO_3Z_2$, or $-PO_3HZ$, Z is at least one selected from the group consisting of a hydrogen atom, an alkali metal atom, an alkaline earth metal atom, and an amine, and the fluororesin is optionally crosslinked to each other by ion crosslinking via $X^9$,

h and p each represent a molar ratio in the total constituent unit contained in the resin, and are numbers satisfying $0 \leq h < 1$, $0 < p \leq 1$, and $h + p = 1$,

i is an integer of 0 to 8,

j is 0 or 1, and

k, l, and m are each optionally the same or different, and are each an integer of 0 to 6, provided that, when k, l, and m are 0 at the same time, $X^9$ is $CF(CF_2X^{10})_2$, $X^{10}$ is a group represented by $-COOZ$, $-SO_3Z$, $- PO_3Z_2$, or $-PO_3HZ$, and Z is the same as described above.

$X^5$, $X^6$, $X^7$, and $X^8$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^5$ and $X^6$ or $X^5$ and $X^7$ are optionally bound to each other to form a cyclic structure.

The number of carbon atoms in the perfluoroalkyl group is preferably 1 to 8, more preferably 1 to 6, further preferably 1 to 3. The perfluoroalkyl group may be linear or branched. Examples of the perfluoroalkyl group include a trimethylfluoromethyl group and a pentafluoroethyl group.

The number of carbon atoms in the cyclic perfluoroalkyl group is preferably 6 to 8. Examples of the cyclic perfluoroalkyl group include a perfluorocyclohexyl group.

$X^5$, $X^6$, $X^7$, and $X^8$ are each preferably a fluorine atom, or an unsubstituted perfluoroalkyl group having 1 to 3 carbon atoms from the viewpoint that a starting material is easily available and the production cost of the fluororesin tends to be able to be suppressed. Furthermore, a fluorine atom or a trifluoromethyl group is more preferred and a fluorine atom is further preferred from the viewpoint that the fluororesin tends to be enhanced in chemical stability such as oxidation degradation resistance.

In a case where $X^5$ and $X^6$, or $X^5$ and $X^7$ are bound to each other to form a cyclic structure, the cyclic structure may be, for example, a substituted or unsubstituted cyclic perfluoroalkyl structure having 5 to 10 carbon atoms, and a substituted or unsubstituted cyclic perfluoroether structure having 4 to 9 carbon atoms.

$R^5$ and $R^6$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom. $R^5$ and $R^6$ are each preferably a fluorine atom or an unsubstituted perfluoroalkyl group having 1 to 3 carbon atoms from the viewpoint that a starting material is easily available and the production cost of the fluororesin tends to be able to be suppressed. Furthermore, a fluorine atom and a trifluoromethyl group are more preferred and a fluorine atom is particularly preferred from the viewpoint that the fluororesin tends to be enhanced in chemical stability such as oxidation degradation resistance.

$X^9$ is a group represented by -COOZ, $-SO_3Z$, $-PO_3Z_2$, or $-PO_3HZ$, Z is at least one selected from the group consisting of a hydrogen atom, an alkali metal atom, an alkaline earth metal atom, and an amine, and the fluororesin is optionally crosslinked to each other by ion crosslinking via $X^9$.

The alkali metal atom is not particularly limited, and examples thereof include a lithium atom, a sodium atom, a potassium atom, a rubidium atom, a cesium atom, and a francium atom. In particular, a lithium atom, a sodium atom, or a potassium atom is preferred from the viewpoint that a starting material is easily available and the production cost of the fluororesin tends to be able to be suppressed, and a sodium atom or a potassium atom is more preferred from the same viewpoint.

The alkaline earth metal atom is not particularly limited, and examples thereof include a beryllium atom, a magnesium atom, a calcium atom, a strontium atom, a barium atom, and a radium atom. In particular, a magnesium atom or a calcium atom is preferred from the viewpoint that a starting material is easily available and the production cost of the fluororesin G1 tends to be able to be suppressed.

The amine is not particularly limited, and examples thereof include structures of $NH_4$, $NH_3R^{30}$, $NH_2R^{30}R^{31}$, $NHR^{30}R^{31}R^{32}$, and $NR^{30}R^{31}R^{32}R^{33}$. $R^{30}$, $R^{31}$, $R^{32}$, and $R^{33}$ are each optionally the same or different, and are each a substituted or unsubstituted aliphatic hydrocarbon group having 1 to 10 carbon atoms, or a substituted or unsubstituted aromatic hydrocarbon group having 6 to 10 carbon atoms. In particular, an unsubstituted aliphatic hydrocarbon group having 1 to 6 carbon atoms, and a phenyl group are preferred, an unsubstituted aliphatic hydrocarbon group having 1 to 4 carbon atoms is more preferred, and a methyl group or an ethyl group is further preferred from the viewpoint that a starting material is easily available and the production cost of the fluororesin tends to be able to be suppressed. In a case where the fluororesin is crosslinked to each other by ion crosslinking via $X^9$, Z is an alkaline earth metal atom.

h and p are numbers satisfying $0 \leq h < 1$, $0 < p \leq 1$, and $h + p = 1$. i is an integer of 0 to 8. j is 0 or 1. k, l, and m are each optionally the same or different, and are each an integer of 0 to 6 (provided that, when k, l, and m are 0 at the same time, $X^9$ is $CF(CF_2X^{10})_2$, $X^{10}$ is a monovalent group represented by formula of -COOZ, $-SO_3Z$, $-PO_3Z_2$, or $-PO_3HZ$, and Z is the same as described above. The substituent in the case of "substituted" is the same as the substituent exemplified with respect to the general formula 1.

The fluororesin G1 preferably contains a structural unit represented by the following general formula G2, and at least one selected from a structural unit represented by the following general formula G3, a structural unit represented by the following general formula G4 and a structural unit represented by the following general formula G5, from the viewpoint that the fluororesin tends to be enhanced in chemical stability such as oxidation degradation resistance, and from the viewpoint that the production cost of the fluororesin tends to be able to be suppressed:

$$-(CF_2-CF_2)- \qquad [G2]$$

$$-(CF_2-CF(-O-(CF_2CFXO)_N-A))- \qquad [G3]$$

wherein X is F, or a perfluoroalkyl group having 1 to 3 carbon atoms, N is an integer of 0 to 5, and A represents $(CF_2)_M-SO_3H$ (M represents an integer of 0 to 6, provided that N and M are not 0 at the same time.);

$$-(CF_2-CF(-O-(CF_2)_P-CFX(-O-(CF_2)_K-SO_3H)))- \qquad [G4]$$

wherein X represents a perfluoroalkyl group having 1 to 3 carbon atoms, P represents an integer of 0 to 12, and K represents an integer of 1 to 5, provided that P and K are not 0 at the same time;

$$-(CF_2-CF(-O-(CF_2)_Q-CFX(-(CF_2)_L-O-(CF_2)_o-SO_3H)))- \qquad [G5]$$

wherein X represents a perfluoroalkyl group having 1 to 3 carbon atoms, Q represents an integer of 0 to 12, L represents an integer of 1 to 5, and o represents an integer of 0 to 6, provided that Q and O are not 0 at the same time.

The fluororesin G1 more preferably contains the structural unit represented by the general formula G2, and at least one selected from the structural unit represented by the general formula G3, the structural unit represented by the general formula G4 and the structural unit represented by the general formula G5, further preferably contains the structural unit represented by the general formula G2 and the structural unit represented by the general formula G3 (provided that X is F, or a trifluoromethyl group, N is an integer of 0 to 2, and M is an integer of 1 to 4.), further preferably contains the structural unit represented by the general formula G2 and the structural unit represented by the general formula G3 (provided that X is F, or a trifluoromethyl group, N is 0 or 1, and M is an integer of 2 to 4.).

The structural unit represented by the general formula G1 in the fluororesin G1 is preferably a structural unit represented by the following general formula G1-2, more preferably a structural unit represented by the following general formula G1-3.

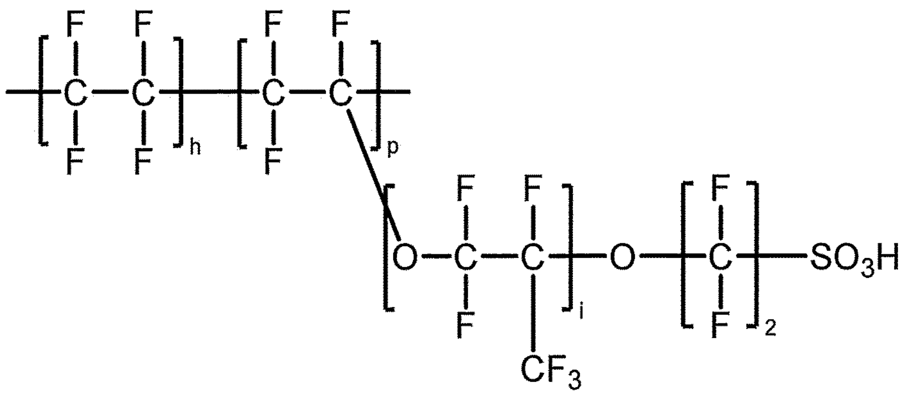

[G 1 − 2]

In the formula, h and p each represent the molar ratio in the total constituent unit contained in the resin, and are numbers satisfying $0 \leq h < 1$, $0 < p \leq 1$, and $h + p = 1$, and i is 0 or 1.

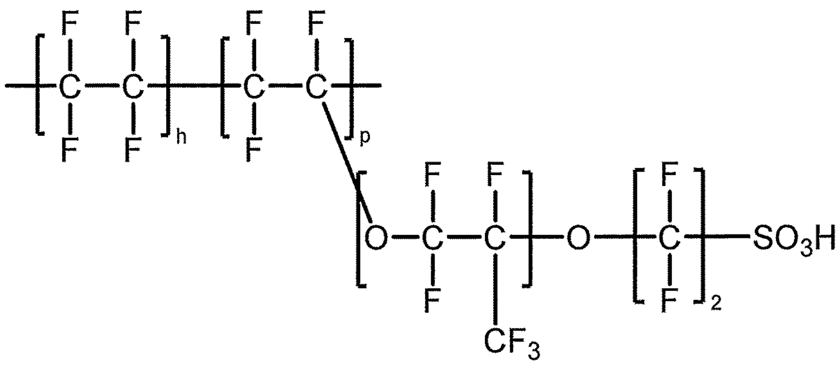

[G 1 − 3]

In the formula, h and p each represent the molar ratio in the total constituent unit contained in the resin, and are numbers satisfying $0 \leq h < 1$, $0 < p \leq 1$, and $h + p = 1$.

Some functional groups having ion-exchange ability contained in the fluororesin G1 may be intermolecularly directly or indirectly partially crosslinked. The partial crosslinking may be preferred because solubility in an electrolyte solution tends to be able to be suppressed and excess swellability tends to be able to be suppressed.

Evan in a case where the fluororesin G1 has a high melt flow index (hereinafter also referred to as "MFI", measured according to ASTM: D1238 (measurement conditions: temperature 270°C, load 2160 g)) (in a case where the fluororesin has a low molecular weight), the partial crosslinking can increase intermolecular entanglement and reduce solubility and/or excess swellability.

The partial crosslinking reaction is, for example, a reaction of the functional group having ion-exchange ability and a functional group or a main chain of other molecule, a reaction of such functional groups having ion-exchange ability, or a crosslinking reaction (covalent bond) via, for example, a low-molecular compound, oligomer or polymer substance excellent in oxidation resistance, and may be optionally a reaction with a substance forming a salt (including an ionic bond with the functional group having ion-exchange ability). Examples of the low-molecular compound, oligomer or polymer substance excellent in oxidation resistance include a polyhydric alcohol compound and an organic diamine.

The equivalent weight of the fluororesin G1 is not particularly limited, and is preferably 2000 g/eq or less, more preferably 1500 g/eq or less, further preferably 1100 or less from the viewpoint that ion-exchange ability tends to be excellent, and is still further preferably 1050 g/eq or less, still further preferably 1000 or less in an application in which the fluororesin G1 is adopted in the form of a membrane and the property of a cation to be moved in the membrane is utilized, because movement resistance of a cation tends to be reduced. The equivalent weight of the fluororesin G1 is further preferably 500 g/eq or more, still further preferably 700 g/eq or more because the fluororesin tends to be more enhanced in water resistance and chemical resistance, and is preferably 800 g/eq or more, more preferably 880 g/eq or more in an application in which the fluororesin is utilized in the form of a membrane, because the membrane tends to be enhanced in mechanical strength.

The equivalent weight refers to a dry mass in grams of an ion-exchangeable resin as a resin having ion-exchange ability, per equivalent of an ion-exchange group having ion-exchange ability in the ion-exchangeable resin, and the equivalent weight of the fluororesin is a dry mass in grams of the fluororesin, per equivalent of an ion-exchange group in the fluororesin. Hereinafter, the expression "equivalent weight" is appropriately used in the present embodiment. A method

used in measurement of the equivalent weight can be a method in which the fluororesin is substituted with a salt and its solution is back titrated with an alkaline solution. The equivalent weight can be appropriately adjusted by selecting the ratio of copolymerization of a monomer as a starting material of the fluororesin G1, the type of the monomer, and the like.

<Method for producing fluororesin G1>

The method for producing the fluororesin G1 is not particularly limited, and is, for example, a method in which a copolymer containing a fluorinated olefin monomer represented by the following general formula G8, and a fluorinated vinyl ether compound represented by at least one selected from the following general formula G9, the following general formula G10, and the following general formula G11 is adopted as a fluororesin G1 precursor and subjected to hydrolysis treatment and acid treatment described below:

$CFZ^1=CZ^2Z^3$ [G8]

wherein $Z^1$, $Z^2$, and $Z^3$ are each optionally the same or different, and are each a halogen atom, a substituted or unsubstituted perfluoroalkyl group having 1 to 10 carbon atoms, or a cyclic perfluoroalkyl group, and the halogen atom is a fluorine atom, a chlorine atom, a bromine atom, or an iodine atom;

$CF_2=CF-O-(CF_2CFXO)_N-A$ [G9]

wherein X is F, or a perfluoroalkyl group having 1 to 3 carbon atoms, N is an integer of 0 to 5, A is $(CF_2)_M-W$ (M is an integer of 0 to 6, and N and M are not 0 at the same time.), and W is a functional group which can be converted into a $-SO_3H$ group by hydrolysis treatment and acid treatment;

$CF_2=CF-O-(CF_2)_P-CFX(-O-(CF_2)_K-W)$ [G10]

wherein X represents a perfluoroalkyl group having 1 to 3 carbon atoms, P represents an integer of 0 to 12, K is an integer of 1 to 5 (provided that P and K are not 0 at the same time.), and W is a functional group which can be converted into a $-SO_3H$ group by hydrolysis treatment and acid treatment;

$CF_2=CF-O-(CF_2)_Q-CFX(-(CF_2)_L-O-(CF_2)_m-W)$ [11]

wherein X is a perfluoroalkyl group having 1 to 3 carbon atoms, Q is an integer of 0 to 12, L is an integer of 1 to 5 (provided that Q and L are not 0 at the same time.), m is an integer of 0 to 6 (Q, L, and m are not 0 at the same time.), and W is a functional group which can be converted into a $-SO_3H$ group by hydrolysis treatment and acid treatment.

The method for producing the fluororesin G1 is preferably a method in which a copolymer including the fluorinated olefin monomer represented by the general formula G8, and the fluorinated vinyl ether compound represented by at least one selected from the group consisting of the general formula G9, the general formula G10, and the general formula G11 is adopted as a fluororesin G1 precursor and subjected to hydrolysis treatment and acid treatment. The precursor further preferably includes the fluorinated olefin monomer represented by the general formula G8 (provided that $Z^1$, $Z^2$, and $Z^3$ are each F), and the fluorinated vinyl ether compound represented by the general formula G9 (provided that X is F, or a trifluoromethyl group, N is an integer of 0 to 2, and M is an integer of 1 to 4.), particularly preferably includes the fluorinated olefin monomer represented by the general formula G8 (provided that $Z^1$, $Z^2$, and $Z^3$ are each F), and the fluorinated vinyl ether compound represented by the general formula G9 (provided that X is F, or a trifluoromethyl group, N is 0 or 1, and M is an integer of 2 to 4.) from the viewpoint that the fluororesin G1 tends to be enhanced in chemical stability such as oxidation degradation resistance and from the viewpoint that the production cost of the fluororesin G1 tends to be able to be suppressed. The fluororesin G1 precursor further particularly preferably includes the fluorinated olefin monomer represented by the general formula G8 (provided that $Z^1$, $Z^2$, and $Z^3$ are each F.), and the fluorinated vinyl ether compound represented by the general formula G9 (provided that X is a trifluoromethyl group, N is 1, and M is 2.).

The fluorinated olefin monomer represented by the general formula G8 is preferably a fluorinated olefin monomer represented by the following general formula G12, more preferably a fluorinated olefin monomer represented by the following general formula G13, further preferably a fluorinated olefin monomer represented by the following general formula G14:

$CF_2=CFZ$ [G12]

wherein Z is H, Cl, F, a perfluoroalkyl group having 1 to 10 carbon atoms, or a cyclic perfluoroalkyl group optionally having oxygen as a ring-constituting atom;

$CF_2=CFZ$ [G13]

wherein Z is F, or a perfluoroalkyl group having 1 to 3 carbon atoms;

$CF_2=CF_2$ [G14].

The fluorinated vinyl ether compound represented by at least one selected from the group consisting of the general formula G9, the general formula G10, and the general formula G11 is preferably a fluorinated vinyl ether compound represented by the following general formula G15, more preferably a fluorinated vinyl ether compound represented by the following general formula G16:

$CF_2=CF-O-(CF_2CFXO)_n-A$ [G15]

wherein X is F, or a trifluoromethyl group, n is 0 or 1, A is $(CF_2)_m$-W (m is an integer of 2 to 4, and n and m are not 0 at the same time.), and W is a functional group which can be converted into a $-SO_3H$ group by hydrolysis treatment and acid treatment;

$CF_2=CF-O-(CF_2CFXO)_n-A$ [G16]

wherein X is a trifluoromethyl group, n is 1, A is $(CF_2)_m$-W (m is 2.), and W is a functional group which can be converted into a $-SO_3H$ group by hydrolysis treatment and acid treatment.

In the general formulae G9 to G11, G15, and G16, W which is a functional group which can be converted into a $-SO_3H$ group by hydrolysis treatment and acid treatment is not particularly limited, examples include $SO_2F$, $SO_2Cl$, and $SO_2Br$, $SO_2F$ and $SO_2Cl$ are preferred, and $SO_2F$ is more preferred.

The fluororesin G1 precursor in the present embodiment can be produced by a known procedure. For example, the precursor can be produced by polymerizing a mixture including the fluorinated olefin monomer represented by the general formula G8, and the fluorinated vinyl ether compound represented by at least one selected from the group consisting of the general formula G9, the general formula G10, and the general formula G11, in the presence of a radical generator such as peroxide. The polymerization method is not particularly limited, and there can be used, for example, a polymerization method (solution polymerization) by packing and dissolving a gas of the fluorinated olefin monomer, the fluorinated vinyl ether compound, and the like in a polymerization solvent such as a fluorine-containing hydrocarbon, and reacting them, a polymerization method (bulk polymerization) with the fluorinated vinyl ether compound as a polymerization solvent without a solvent such as a fluorine-containing hydrocarbon, a polymerization method (emulsification polymerization) of a gas of the fluorinated olefin monomer, the fluorinated vinyl ether compound, and the like with, as a medium, an aqueous solution of a surfactant, a polymerization method (emulsion polymerization) by emulsification of a gas of the fluorinated olefin monomer, the fluorinated vinyl ether compound, and the like with, as a medium, an aqueous solution of an emulsification aid such as a surfactant and an alcohol, and a polymerization method (suspension polymerization) by suspending a gas of the fluorinated olefin monomer, the fluorinated vinyl ether compound, and the like with, as a medium, an aqueous solution of a suspension stabilizer, and reacting them.

The fluororesin G1 precursor used in the present embodiment can also be one prepared by any polymerization method described above. A block-shaped or taper-shaped polymer obtained by adjustment of polymerization conditions, for example, the amount of the fluorinated olefin monomer supplied, can also be used as the fluororesin G1 precursor.

The fluororesin G1 precursor may be obtained by treating an impure end, and/or a portion (CO group, H-binding portion, or the like) structurally easily oxidized, which are/is generated in a resin molecule structure during a polymerization reaction, under a fluorine gas by a known method, to fluorinate such a portion.

In the fluororesin G1 precursor, some of the ion-exchange group precursor groups (for example, $-SO_2F$ group) may be partially imidated (may be intermolecularly imidated) (for example, alkylimidated).

The molecular weight of the fluororesin G1 precursor is not particularly limited, and the value of the melt flow index (MFI) measured according to ASTM: D1238 (measurement conditions: temperature 270°C, load 2160 g) is preferably 0.05 g/10 min or more, more preferably 0.1 g/10 min or more, further preferably 0.5 g/10 min or more. The value of MFI is preferably 100 g/10 min or less, more preferably 80 g/10 min or less, further preferably 60 g/10 min or less.

The shape of the fluororesin G1 precursor is not particularly limited, and is, for example, a shape of a pellet of 0.5 $cm^3$ or less, a dispersion, or a powdery particle from the viewpoint of increases in treatment rates in hydrolysis treatment and acid treatment described below. In particular, a powder after polymerization is more preferably used. The fluororesin G1 precursor, which is in the form of a membrane formed by extrusion, may be used from the viewpoint of the cost.

The method for producing the fluororesin G1 in the present embodiment from the fluororesin G1 precursor is not particularly limited, and is, for example, a method in which the fluororesin G1 precursor is melt-kneaded, then extruded by a

nozzle, a die, or the like with an extruder, and thereafter subjected to hydrolysis treatment described below, or a method in which the fluororesin G1 precursor is directly taken as a product in polymerization, namely, as a dispersion, or a powder obtained by precipitation and filtration, and then subjected to hydrolysis treatment described below. Such hydrolysis treatment provides a fluororesin G1 in which Z in the general formula G1 is an alkali metal atom or an alkaline earth metal atom. The fluororesin G1 (Z = alkali metal atom or alkaline earth metal atom) is subjected to acid treatment, to obtain a fluororesin G1 in which Z in the general formula G1 is a hydrogen atom. Furthermore, the fluororesin G1 (Z = hydrogen atom) is reacted with an amine, to obtain a fluororesin G1 in which Z in the general formula G1 is the amine.

Specifically, the fluororesin G1 precursor obtained as described above and, if necessary, molded, can be subsequently immersed in a basic reaction liquid, and subjected to hydrolysis treatment. The basic reaction liquid used in such hydrolysis treatment is not particularly limited, and examples thereof include an aqueous solution of any amine compound such as dimethylamine, diethylamine, monomethylamine and monoethylamine, and an aqueous solution of an alkali metal or alkaline earth metal hydroxide. In particular, an aqueous solution of sodium hydroxide or potassium hydroxide is preferred. In a case where an alkali metal or alkaline earth metal hydroxide is used, the content thereof is not particularly limited, and is preferably 10% by mass or more and 30% by mass or less relative to the entire basic reaction liquid. The basic reaction liquid more preferably further contains a swellable organic compound such as methyl alcohol, ethyl alcohol, acetone, and dimethylsulfoxide. The content of the swellable organic compound is preferably 1% by mass or more and 60% by mass or less relative to the entire basic reaction liquid.

The fluororesin G1 precursor can be subjected to hydrolysis treatment in the basic reaction liquid, then, if necessary, sufficiently washed with warm water or the like, thereafter subjected to acid treatment, and thus obtained as a fluororesin having a structural unit in which Z in the general formula G1 is a hydrogen atom. The acid used in the acid treatment is not particularly limited, examples include mineral acids such as hydrochloric acid, sulfuric acid and nitric acid, and organic acids such as oxalic acid, acetic acid, formic acid and trifluoroacetic acid, and a mixture of the acid with water is preferred. The acid may be used singly or in combinations of a plurality thereof. The basic reaction liquid used in the hydrolysis treatment may be treated with a cation-exchange resin and thus removed in advance before the acid treatment.

The fluororesin G1 subjected to the hydrolysis treatment and the acid treatment may be dispersible or soluble in a protonic organic solvent, water, or a mixed solvent thereof, and can be in the form of a suspension or a solution.

The fluororesin G1 may be able to be enhanced in mechanical strength, and may be preferably of two or more fluororesin compositions different in structure of a starting material constituting the fluororesin G1. When two or more such fluororesins are mixed, excellent properties in which respective functions of these fluororesins are fused may be able to be exhibited. When two or more such fluororesins are mixed, the ratio of a fluororesin having a larger equivalent weight is preferably more than 50% by mass, more preferably more than 55% by mass, further preferably more than 60% by mass from the viewpoint of an increase in crystallinity and an enhancement in mechanical strength.

<Resin composition>

The resin composition according to the present embodiment includes a side-chain heteroaromatic resin and a cation-exchangeable resin.

The weight ratio between the side-chain heteroaromatic resin and the cation-exchangeable resin in the resin composition is not particularly limited, and is preferably 1:100 to 100:1. While it differs depending on the application of the resin composition according to the present embodiment, the weight ratio between the side-chain heteroaromatic resin and the cation-exchangeable resin is preferably 10:90 or more, more preferably 20:80 or more, further preferably 30:70 or more in the case of use as a separation membrane for a redox flow battery, from the viewpoint of suppression of elution of the side-chain heteroaromatic resin into the electrolyte solution. While it differs depending on the application in which the mixture is utilized, the weight ratio of the side-chain heteroaromatic resin is preferably 90:10 or less, more preferably 80:20 or less, further preferably 70:30 or less in the case of use as a separation membrane for a redox flow battery, because the side-chain heteroaromatic resin tends to result in an enhancement in power efficiency.

The resin composition according to the present embodiment is preferably a styrene resin, a vinyl chloride resin, chlorinated polyethylene, a polyamide resin, a polyphenylene ether/polystyrene resin, a polyetheretherketone resin, a polysulfone resin, a polyether sulfone resin, a high-density polyethylene resin, a low-density polyethylene resin, a linear low-density polyethylene resin, a polyphenylene ether resin, a polyphenylene sulfide resin, a syndiotactic polystyrene resin, polyetherimide, a siloxane-modified polyetherimide resin, a polyamide imide resin, a cycloolefin-based resin, a cycloolefin copolymer, a polyetherketoneetherketoneketone resin, a polyaryletherketone resin, or a perfluororesin, and may further include a styrene resin, a vinyl chloride resin, chlorinated polyethylene, a polyamide resin, a polyphenylene ether/polystyrene resin, a high-density polyethylene resin, a low-density polyethylene resin, a linear low-density polyethylene resin, a syndiotactic polystyrene resin, a cycloolefin-based resin, or a cycloolefin copolymer. The resin which may be included in the resin composition according to the present embodiment may be used singly or in combinations of a plurality thereof.

<Ion-exchange membrane>

The ion-exchange membrane according to the present embodiment includes the side-chain heteroaromatic resin having the structural unit represented by the general formula 1, the side-chain heteroaromatic resin having the structural unit represented by the general formula 2, or the resin composition according to the present embodiment.

In a case where the side-chain heteroaromatic resin having the structural unit represented by the general formula 1, the side-chain heteroaromatic resin having the structural unit represented by the general formula 2, or the resin composition according to the present embodiment is molded into a membrane, the molding method is not particularly limited, and examples include a method in which a substance including the side-chain heteroaromatic resin or the resin composition according to the present embodiment is formed into a molten state, and extruded by a nozzle, a die, or the like with an extruder and thus processed into a film, and a method in which the side-chain heteroaromatic resin or the resin composition according to the present embodiment is formed into a solution state, applied to a substrate by a die, a gravure roll, a knife or spraying and dried, and thus processed into a film. The resulting membrane of the side-chain heteroaromatic resin or the resin composition according to the present embodiment is hereinafter also referred to as "side-chain heteroaromatic resin membrane".

The solvent usable in formation of the side-chain heteroaromatic resin or the resin composition into a solution is not particularly limited, and examples include saturated hydrocarbon compounds such as n-pentane, n-hexane, n-octane, n-decane, cyclopentane, cyclohexane and cyclooctane; aromatic hydrocarbon compounds such as benzene, toluene, xylene and ethylbenzene; halogenated hydrocarbon compounds such as methylene chloride, chloroform, carbon tetrachloride, chlorobenzene and dichlorobenzene; alcohols such as methanol, ethanol, propanol, isopropanol, butanol, hexanol, cyclohexanol and benzyl alcohol; ketones such as acetone, ethyl methyl ketone, methyl butyl ketone, methyl isobutyl ketone and cyclohexanone; as well as esters such as ethyl acetate, butyl acetate and methyl benzoate; ethers such as diethyl ether, dibutyl ether, tetrahydrofuran, methyltetrahydrofuran and dioxane; polyols such as ethylene glycol, propylene glycol and glycerin, and multimers and polyols of compounds each having two hydroxyl groups, among these polyols; and esterified compounds of these multimers, and nitriles such as acrylonitrile and benzonitrile; nitromethane; N,N-dimethylformamide; dimethylsulfoxide; hexamethylphosphoric triamide; carbon disulfide; and fluorine-based compounds (for example, Novec (trademark) manufactured by 3M, and Asahiklin manufactured by AGC Inc.). Such a solvent may be adopted singly or in combinations of a plurality thereof.

When the side-chain heteroaromatic resin according to the present embodiment or the resin composition according to the present embodiment is molded into a membrane, a substrate can also be used. The substrate can be used to sometimes more stably produce such a membrane of the side-chain heteroaromatic resin according to the present embodiment or the resin composition according to the present embodiment.

The material used in the substrate is not particularly limited, and examples include polyethylene, polypropylene, polyethylene terephthalate, polybutylene terephthalate, a cycloolefin polymer, polycarbonate, polyamide, polyimide, polyamide imide, polyvinyl chloride, polystyrene, polyphenylene ether, polyetheretherketone, polysulfone, polyether sulfone, polyphenylene ether, polyphenylene sulfide, polyetherimide, a polyimide resin, polyetherketoneetherketoneketone, and polyaryletherketone. The material may be modified, and may be used singly or in combinations of a plurality thereof.

The ion-exchange membrane according to the present embodiment alternately includes at least one layer (L) including the resin composition, and at least one layer (M) including a fluororesin having a structural unit represented by the following general formula G1:

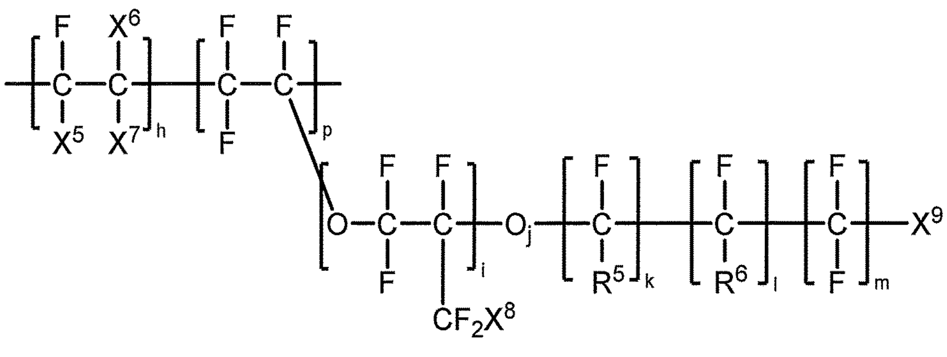

[G 1]

wherein the definition of each substituent has the same meaning as in the general formula G1 described above.

A fluororesin-containing membrane (hereinafter, also referred to as "fluororesin membrane") can be used as a substrate in the layer (M), thereby providing an ion-exchange membrane having the fluororesin membrane (layer (M)) and the side-chain heteroaromatic resin membrane (layer (L)). The layer (M) may include no side-chain heteroaromatic resin.

The ion-exchange resin in the present embodiment may include one layer (L) and one layer (M) (a membrane including one layer as the layer (M) and one layer as the layer (L) is also referred to as "bipolar membrane"). A membrane by stacking can provide an ion-exchange membrane having both respective characteristics of the fluororesin membrane and the side-chain heteroaromatic resin membrane. Hereinafter, when they are in the state of being stacked, the fluororesin membrane and the side-chain heteroaromatic resin membrane are also respectively referred to as "fluororesin layer" and "side-chain heteroaromatic resin layer".

The interface between the layer (L) including the side-chain heteroaromatic resin and the layer (M) including the fluororesin having the structural unit represented by the general formula G1 included in the ion-exchange membrane is specified with respect to the presence thereof, from a numerical value at which the maximum signal strength of a peak assigned to the side-chain heteroaromatic resin reaches 1/10, as measured with a time-of-flight secondary ion mass spectrometry apparatus with reference to JIS K 0146:2002. The region in which the maximum signal strength of a peak assigned to the side-chain heteroaromatic resin shows 1/10 or more is defined as the layer (L), and the region in which the maximum signal strength of a peak assigned to the side-chain heteroaromatic resin shows less than 1/10 is defined as the layer (M).

The method for producing the fluororesin membrane (layer (M)) is not particularly limited, and the fluororesin membrane can be obtained by processing the resin composition including the fluororesin G1, into a film, or by processing a resin composition including a fluororesin G1 precursor having a functional group having ion-exchange ability, into a film, by hydrolysis, and performing the above hydrolysis treatment and acid treatment. Examples include a method in which the resin composition including the fluororesin is melt-kneaded, then extruded with an extruder by a nozzle, a die, or the like, and thus processed into a film. Examples include a method in which the resin composition including the fluororesin G1 precursor is melt-kneaded and then extruded with an extruder by a nozzle, a die, or the like, to form a film, and then the hydrolysis treatment and acid treatment are performed to form an ion-exchange group. A substance including the fluororesin may be dispersed in a solvent and then cast on the substrate, and thus processed into a film.

The method for forming the layer (L) can be a molding method including molding the side-chain heteroaromatic resin having the structural unit represented by the general formula 1, the side-chain heteroaromatic resin having the structural unit represented by the general formula 2, or the resin composition according to the present embodiment, into a membrane.

The method for producing the side-chain heteroaromatic resin membrane and the method for producing the fluororesin membrane can be repeatedly used for the membrane by stacking, thereby producing a membrane in which the side-chain heteroaromatic resin membrane and the fluororesin membrane are stacked in a multi-layer manner.

The side-chain heteroaromatic resin membrane and the fluororesin membrane of the bipolar membrane can be stacked so as to be alternate, and these membranes can be pressure-bonded by pressing, thereby producing a membrane by multi-layer stacking. Such side-chain heteroaromatic resin membranes or such fluororesin membranes of two such bipolar membranes can be mutually laminated, and these membranes can be pressure-bonded by pressing, thereby producing a membrane of three layers stacked.

The side-chain heteroaromatic resin membrane of the present embodiment, and an ion-exchange membrane (the ion-exchange membrane is not particularly limited as long as it includes two or more layers, the same also applies to the following description) including the side-chain heteroaromatic resin membrane and the fluororesin membrane can be each used in various applications. Examples of such an application include a redox flow battery, a fuel cell, salt electrolysis, alkaline water electrolysis, and carbon dioxide reduction electrolysis, and, in particular, use in a cell for a redox flow battery, and a redox flow battery is suitably exemplified. Use in a cell for a redox flow battery, and a redox flow battery tends to lead to an excellent power efficiency as compared with conventional use in a separation membrane.

The total thickness of the ion-exchange membrane of the present embodiment is not particularly limited, and is preferably 0.01 μm or more and 200 μm or less in a cell for a redox flow battery, and a redox flow battery exemplified as a suitable application, more preferably 1 μm or more because the membrane tends to be enhanced in handleability and mechanical strength, and is further preferably 10 μm or more, particularly preferably 20 μm or more particularly in a case where pulsation of the membrane is large and high mechanical strength is demanded. The total thickness of the ion-exchange membrane of the present embodiment is more preferably 150 μ or less, further preferably 130 μm or less, particularly preferably 100 μm or less because electrical resistance during operating of a cell for a redox flow battery, and a redox flow battery tends to be suppressed to result in an enhancement in power efficiency.

The thickness of the layer (L) (side-chain heteroaromatic resin membrane) in the ion-exchange membrane of the present embodiment is not particularly limited, is preferably 0.01 μm or more and 10 μm or less in a cell for a redox flow battery, and a redox flow battery exemplified as a suitable application, and is more preferably 0.1 μm or more, further preferably 0.2 μm or more because permeation of a redox active material through the membrane tends to be able to be more suppressed in use for a cell for a redox flow battery, and a redox flow battery. The thickness of the layer (L) (side-chain heteroaromatic resin membrane) is particularly preferably 0.3 μm or more, further particularly preferably 0.4 μm or more in a case where pulsation of the side-chain heteroaromatic resin membrane is large and high mechanical strength is demanded, and is more preferably 7 μm or less, further preferably 5 μm or less, particularly preferably 3 μm or less, further

particularly preferably 2 μm or less because electrical resistance during operating of a cell for a redox flow battery, and a redox flow battery tends to be suppressed to result in an enhancement in power efficiency.

The equivalent weight of the ion-exchange membrane is not particularly limited, is preferably 500 g/eq or more and 2000 g/eq or less, is more preferably 700 g/eq or more, further preferably 800 g/eq or more, because the membrane tends to be enhanced in handleability and mechanical strength, and is particularly preferably 880 g/eq or more, further particularly preferably 900 g/eq or more particularly in a case where pulsation of the membrane is large and high mechanical strength is demanded. The equivalent weight of the ion-exchange membrane is more preferably 1500 g/eq or less, further preferably 1400 g/eq or less, particularly preferably 1200 g/eq or less, further particularly preferably 1150 g/eq or less, because electrical resistance during operating of a cell for a redox flow battery, and a redox flow battery tends to be suppressed to result in an enhancement in power efficiency.

[Second embodiment]

Subsequently, a second embodiment is described.

Patent Literature 1 discloses use of an aromatic polysulfone-based polymer in an anion-exchange group layer, for enhancements in current efficiency and power efficiency, and indicates that, although an excellent current efficiency is achieved, an increase in cell resistance and a reduction in voltage efficiency are caused. Therefore, there is a demand for an anion-exchange group layer excellent in current efficiency, voltage efficiency, and current efficiency in a well-balanced manner.

Patent Literature 2 discloses Nafion (registered trademark) 117 reacted with several heterocyclic molecules, for not only suppression of an increase in proton surface resistance, but also an enhancement in vanadium ion permeation selectivity, in which, if a reduction in proton surface resistance is tried, a reduction in vanadium ion permeation selectivity is caused, and on the other hand, if an enhancement in vanadium ion permeation selectivity is tried, an enhancement in proton surface resistance is caused, and there is still a challenge for satisfaction of both thereof. In addition, no redox flow battery has been evaluated in Examples, and current efficiency, voltage efficiency, and power efficiency are unclear. Here, a high numerical value of the proton surface resistance has been exhibited as compared with Nafion (registered trademark) 117 in Examples, and it can be thus presumed that a lowered voltage efficiency has been exhibited as compared with Nafion (registered trademark) 117. From the foregoing, there is a demand for a material excellent in current efficiency, voltage efficiency, and current efficiency in a well-balanced manner.

Patent Literature 3 discloses a polyelectrolyte membrane which is provided with a crossover prevention layer as a metal layer formed by reduction of a cationic metal, therein, for enhancements in at least one or more characteristics of discharge capacity, current efficiency, voltage efficiency, and power efficiency, but such characteristics are demanded to be higher.

Patent Literature 4 discloses use of several polymer compounds in an anion-exchangeable resin layer, for a high power efficiency. However, it is indicated that, in a case where the anion-exchangeable resin layer is not located between ion-exchange resin layers, a high power efficiency may be obtained as the initial characteristic, but a high power efficiency is not obtained after 100 cycles. The anion-exchangeable compounds included in the anion-exchangeable resin layer used in Patent Literature 4 are thus demanded to be higher in characteristics.

An object of the present embodiment relates to an ion-exchange membrane, a membrane electrode assembly, a cell for a redox flow battery, and a redox flow battery, in which a cell for a redox battery, having excellent current efficiency and voltage efficiency in a well-balanced manner and having a high power efficiency, is obtained.

The present inventors have made intensive studies about the above object, and as a result, have found that a heteroaromatic structure-containing fluororesin having a specified structural unit, a saponified product thereof or a salt thereof can be utilized in an ion-exchange membrane, to provide a cell for a redox battery, having excellent current efficiency and voltage efficiency in a well-balanced manner and imparting a high power efficiency.

<Ion-exchange membrane according to second embodiment>

An ion-exchange membrane according to the second embodiment includes

a layer (L1) including a heteroaromatic structure-containing fluororesin having a structural unit represented by the following general formula A1, a saponified product thereof or a salt thereof:

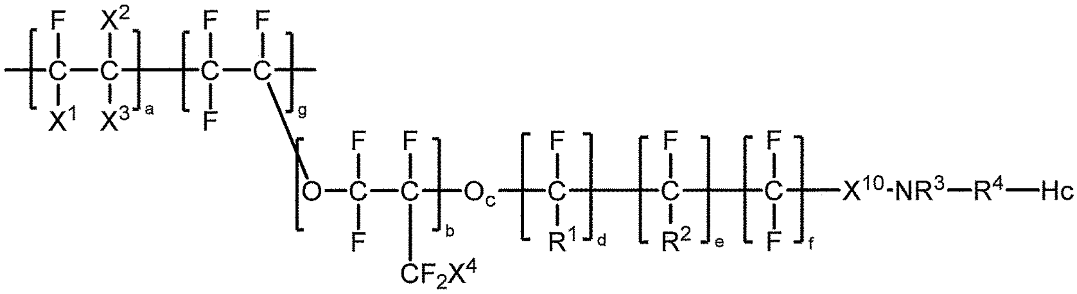

［A 1］

wherein,

$X^1$, $X^2$, $X^3$, and $X^4$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^1$ and $X^2$ or $X^1$ and $X^3$ are optionally bound to each other to form a cyclic structure,
$R^1$ and $R^2$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom,
$R^3$ is a hydrogen atom, a substituted or unsubstituted aliphatic hydrocarbon group having 1 to 10 carbon atoms, or a substituted or unsubstituted aromatic hydrocarbon group having 1 to 10 carbon atoms,
$R^4$ is a linking group that links $NR^3$ and Hc, and is a substituted or unsubstituted divalent aliphatic hydrocarbon group having 1 to 10 carbon atoms, or a substituted or unsubstituted divalent aromatic hydrocarbon group having 6 to 10 carbon atoms,
$X^{10}$ is a divalent group represented by formula $-CO_2-$ or $-SO_2-$,
Hc is a substituted or unsubstituted heteroaromatic group having 4 to 30 carbon atoms, the group containing at least one nitrogen atom and containing a five-membered ring and/or six-membered ring structure,
a and g each represent a molar ratio in the total constituent unit contained in the resin, and are numbers satisfying $0 \leq a < 1$, $0 < g \leq 1$, and $a + g = 1$,
b is an integer of 0 to 8,
c is 0 or 1, and
d, e, and f are each optionally the same or different, and are each an integer of 0 to 6, provided that d, e, and f are not 0 at the same time, and

a layer (M1) including a fluororesin (G1) having the structural unit represented by the general formula G1.

According to the present embodiment, it is possible to provide an ion-exchange membrane, a membrane electrode assembly, a cell for a redox flow battery, and a redox flow battery, in which a cell for a redox battery, having excellent current efficiency and voltage efficiency in a well-balanced manner and having a high power efficiency, is obtained.

<Heteroaromatic structure-containing fluororesin>

The heteroaromatic structure-containing fluororesin according to the present embodiment has a structural unit represented by the following general formula A1.

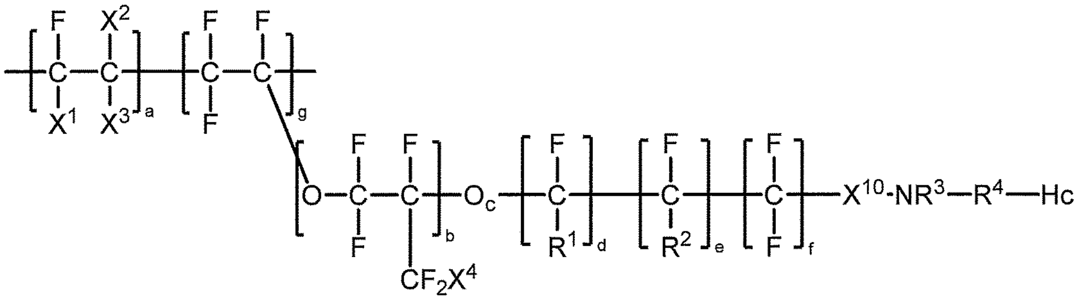

[A 1]

$X^1$, $X^2$, $X^3$, and $X^4$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^1$ and $X^2$ or $X^1$ and $X^3$ are optionally bound to each other to form a cyclic structure. $X^1$, $X^2$, $X^3$ and $X^4$ are each preferably a fluorine atom, or an unsubstituted perfluoroalkyl group having 1 to 3 carbon atoms from the viewpoint that a starting material is easily available and the production cost of the heteroaromatic structure-containing fluororesin tends to be able to be suppressed. Furthermore, a fluorine atom or a trifluoromethyl group is more preferred and a fluorine atom is particularly preferred from the viewpoint that the heteroaromatic structure-containing fluororesin tends to be enhanced in chemical stability such as oxidation degradation resistance.

$R^1$ and $R^2$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom. $R^1$ and $R^2$ are each preferably a fluorine atom, or an unsubstituted perfluoroalkyl group having 1 to 3 carbon atoms from the viewpoint that a starting material is easily available and the production cost of the heteroaromatic structure-containing fluororesin tends to be able to be suppressed. Furthermore, a fluorine atom or a trifluoromethyl group is more preferred and a fluorine atom is particularly preferred from the viewpoint that the heteroaromatic structure-containing fluororesin tends to be enhanced in chemical stability such as oxidation degradation resistance.

The substituent in the case of "substituted" is the same as the substituent exemplified with respect to the general formula 1.

$R^3$ is a hydrogen atom, a substituted or unsubstituted aliphatic hydrocarbon group having 1 to 10 carbon atoms, or a substituted or unsubstituted aromatic hydrocarbon group having 6 to 10 carbon atoms. $R^3$ is preferably a hydrogen atom, or an aliphatic hydrocarbon group having 1 to 10 carbon atoms, more preferably a hydrogen atom, or an unsubstituted aliphatic hydrocarbon group having 1 to 4 carbon atoms, from the viewpoint that a starting material is easily available and the production cost of the heteroaromatic structure-containing fluororesin tends to be able to be suppressed. A hydrogen atom is further preferred from the viewpoint that the production cost of the heteroaromatic structure-containing fluororesin can be more suppressed, and an unsubstituted aliphatic hydrocarbon group having 1 to 2 carbon atoms is further preferred from the viewpoint of an enhancement in stability of the heteroaromatic structure-containing fluororesin under an alkaline condition. The substituent in the case of "substituted" is the same as the substituent exemplified with respect to the general formula 1.

$R^4$ is a linking group that links $NR^3$ and Hc, and is a substituted or unsubstituted divalent aliphatic hydrocarbon group having 1 to 10 carbon atoms, or a substituted or unsubstituted divalent aromatic hydrocarbon group having 6 to 10 carbon atoms. $R^4$ is preferably an unsubstituted aliphatic hydrocarbon group having 1 to 10 carbon atoms, more preferably an unsubstituted aliphatic hydrocarbon group having 1 to 6 carbon atoms, further preferably an unsubstituted aliphatic hydrocarbon group having 1 to 4 carbon atoms, from the viewpoint that a starting material is easily available and the production cost of the heteroaromatic structure-containing fluororesin tends to be able to be suppressed. An unsubstituted aliphatic hydrocarbon group having 1 to 2 carbon atoms is particularly preferred, and an unsubstituted aliphatic hydrocarbon group having 1 carbon atom is further particularly preferred, from the viewpoint that the heteroaromatic structure-containing fluororesin tends to be enhanced in chemical stability such as oxidation degradation resistance. The substituent in the case of "substituted" is the same as the substituent exemplified with respect to the general formula 1.

$X^{10}$ is a divalent group represented by formula $-CO_2-$ or $-SO_2-$. The divalent group represented by formula $-SO_2-$ is preferred from the viewpoint that the heteroaromatic structure-containing fluororesin tends to be enhanced in chemical stability such as oxidation degradation resistance.

Hc is a substituted or unsubstituted heteroaromatic group having 4 to 30 carbon atoms, the group containing at least one nitrogen atom and containing a five-membered ring and/or six-membered ring structure.

The five-membered ring and/or six-membered ring structure in Hc is not particularly limited, and examples thereof include an imidazole structure, a benzimidazole structure, an imidazopyridine structure, a pyridine structure, an

oxazole structure, a thiazole structure, a pyridazine structure, a pyrimidine structure, a cinnoline structure, a quinazoline structure, a phthalazine structure, a quinoxaline structure, a pteridine structure, a purine structure, a 2,2'-bipyridyl structure, a 2,3'-bipyridyl structure, a 2,4'-bipyridyl structure, a 1,7-phenanthroline structure, a 1,10-phenanthroline structure, and a 2,2':6',2"-terpyridine structure. The structure of Hc exemplified above may have such a structure singly, or a plurality of such structures. The structure of Hc exemplified above may be used singly or in combinations of a plurality of such structures.

Hc has at least one nitrogen atom in the heteroaromatic ring structure, and therefore is preferably, among the above-mentioned five-membered ring and/or six-membered ring structure, an imidazole structure, a benzimidazole structure, an imidazopyridine structure, a pyridine structure, an oxazole structure, a thiazole structure, a 2,2'-bipyridyl structure, a 2,3'-bipyridyl structure, a 2,4'-bipyridyl structure, a 1,7-phenanthroline structure, or a 1,10-phenanthroline structure, more preferably has an imidazole structure, a benzimidazole structure, an imidazopyridine structure, a pyridine structure, an oxazole structure, a thiazole structure, a 2,2'-bipyridyl structure, or a 1,10-phenanthroline structure, and is further preferably an imidazole structure, a benzimidazole structure, an imidazopyridine structure, or a pyridine structure, particularly preferably an imidazole structure or a pyridine structure because, in a case where the heteroaromatic structure-containing fluororesin is utilized in a cell for a redox flow battery, durability tends to be enhanced.

The substituent in $H_C$ is the same as the substituent exemplified with respect to the general formula 1.

Examples of Hc include an imidazolyl group, a benzimidazolyl group, an imidazopyridinyl group, a pyridinyl group, an oxazonyl group, a thiazolyl group, a pyridazinyl group, a pyrimidinyl group, a cinnolinyl group, a quinazolinyl group, a phthalazinyl group, a quinoxalinyl group, a pteridinyl group, a purinyl group, 2,2'-bipyridinyl, a 2,3'-bipyridinyl group, a 2,4'-bipyridinyl group, a 1,7-phenanthrolinyl group, a 1,10-phenanthrolinyl group, and a 2,2':6',2"-terpyridinyl group. In particular, an imidazolyl group or a pyridinyl group is preferred.

The heteroaromatic structure-containing fluororesin preferably includes the structural unit represented by the general formula A2, and at least one selected from the group consisting of a structural unit represented by the following general formula A4, a structural unit represented by the following general formula A5, and a structural unit represented by the following general formula A6, from the viewpoint that the heteroaromatic structure-containing fluororesin tends to be enhanced in chemical stability such as oxidation degradation resistance and from the viewpoint that the production cost of the heteroaromatic structure-containing fluororesin tends to be able to be suppressed and the production cost of a cell for a redox flow battery tends to be able to be suppressed:

$$-(CF_2\text{-}CF_2)\text{-} \qquad [A2]$$

$$-(CF_2\text{-}CF(\text{-}O\text{-}(CF_2CFXO)_N\text{-}Ag))\text{-} \qquad [A4]$$

wherein X represents F, or a perfluoroalkyl group having 1 to 3 carbon atoms, Ag represents $(CF_2)_f$-$X^{10}$-$NR^3$-$R^4$-Hc in the general formula A1, and N represents an integer of 0 to 5,

$$-(CF_2\text{-}CF(\text{-}O\text{-}(CF_2)_P\text{-}CFX(\text{-}O\text{-}(CF_2)_K\text{-}SO_2NX^{41}Ax)))\text{-} \qquad [A5]$$

wherein X represents a perfluoroalkyl group having 1 to 3 carbon atoms, $X^{41}$ is a hydrogen atom, an alkali metal atom, an alkaline earth metal atom, a substituted or unsubstituted aliphatic hydrocarbon group having 1 to 10 carbon atoms, or an aromatic hydrocarbon group and Ax represents -$R^4$-Hc in the general formula A1, P represents an integer of 0 to 12, and K represents an integer of 1 to 5, provided that P and K are not 0 at the same time,

$$-(CF_2\text{-}CF(\text{-}O\text{-}(CF_2)_Q\text{-}CFX(\text{-}(CF_2)_L\text{-}O\text{-}(CF_2)_o\text{-}SO_2NX^{41}Ax)))\text{-} \qquad [A6]$$

wherein X represents a perfluoroalkyl group having 1 to 3 carbon atoms, $X^{41}$ is a hydrogen atom, an alkali metal atom, an alkaline earth metal atom, a substituted or unsubstituted aliphatic hydrocarbon group having 1 to 10 carbon atoms, or an aromatic hydrocarbon group and Ax represents -$R^4$-Hc in the general formula A1, Q represents an integer of 0 to 12, L represents an integer of 1 to 5, and o represents an integer of 0 to 6, provided that Q and O are not 0 at the same time.

The heteroaromatic structure-containing fluororesin more preferably includes the structural unit represented by the general formula A2, and at least one selected from the group consisting of the structural unit represented by the general formula A4, the structural unit represented by the general formula A5, and the structural unit represented by the general formula A6, further preferably includes the structural unit represented by the general formula A2 and the structural unit represented by the general formula A4 (provided that X is F, or a trifluoromethyl group, N is an integer of 0 to 2, and f is an integer of 1 to 4.), particularly preferably contains the structural unit represented by the general formula A2 and the structural unit represented by the general formula A4 (provided that X is F, or a trifluoromethyl group, N is 0 or 1, and f is an integer of 2 to 4.).

The heteroaromatic structure-containing fluororesin more preferably includes a structural unit represented by

the following general formula A1-1, further preferably includes a structural unit represented by the following general formula A1-2:

$$-[CF_2CF_2]_a-[CF_2-CF((-O-CF_2-(CF(CF_3)))_b-O-(CF_2)_2-SO_2NX^{41}Ax)]_g- \quad [A1-1]$$

wherein $X^{41}$ is a hydrogen atom, an alkali metal atom, an alkaline earth metal atom, a substituted or unsubstituted aliphatic hydrocarbon group having 1 to 10 carbon atoms, or an aromatic hydrocarbon group and Ax represents $-R^4-Hc$ in the general formula A1, a and g each represent a molar ratio in the total constituent unit contained in the resin, and are numbers satisfying $0 \leq a < 1$, $0 < g \leq 1$, and $a + g = 1$, and b is 0, or 1,

$$-[CF_2CF_2]_a-[CF_2-CF((-O-CF_2-(CF\ (CF_3)))-O-(CF_2)_2-SO_2NX^{41}Ax)]_g- \quad [A1-2]$$

wherein $X^{41}$ is a hydrogen atom, an alkali metal atom, an alkaline earth metal atom, a substituted or unsubstituted aliphatic hydrocarbon group having 1 to 10 carbon atoms, or an aromatic hydrocarbon group and Ax represents $-R^4-Hc$ in the general formula A1, a and g each represent a molar ratio in the total constituent unit contained in the resin, and are numbers satisfying $0 \leq a < 1$, $0 < g \leq 1$, and $a + g = 1$.

$X^{41}$ in the general formulae A5, A6, A1-1, and A1-2 is preferably a hydrogen atom, or an aliphatic hydrocarbon group having 1 to 10 carbon atoms, more preferably a hydrogen atom, or an unsubstituted aliphatic hydrocarbon group having 1 to 4 carbon atoms, from the viewpoint that a starting material is easily available and the production cost of the heteroaromatic structure-containing fluororesin tends to be able to be suppressed. A hydrogen atom is further preferred from the viewpoint that the production cost of the heteroaromatic structure-containing fluororesin can be more suppressed, and an unsubstituted aliphatic hydrocarbon group having 1 to 2 carbon atoms is further preferred from the viewpoint of an enhancement in stability of the heteroaromatic structure-containing fluororesin under an alkaline condition.

The method for producing the heteroaromatic structure-containing fluororesin is not particularly limited, and examples include a method in which a fluororesin precursor and a modification compound described below are reacted.

The modification compound has at least two nitrogen atom-containing groups. At least one nitrogen atom-containing group of these nitrogen atom-containing groups is a substituted or unsubstituted heteroaromatic group (corresponding to Hc) having 4 to 30 carbon atoms, the group containing at least one nitrogen atom and containing a five-membered ring and/or six-membered ring structure. At least one nitrogen atom-containing group of these nitrogen atom-containing groups is a primary amino group or a secondary amino group, and is preferably a primary amino group from the viewpoint of an enhancement in reactivity between the modification compound and the fluororesin precursor and is preferably a secondary amino group from the viewpoint of an enhancement in stability of the heteroaromatic structure-containing fluororesin. In addition, examples of the nitrogen atom-containing group which may be contained in the modification compound include

an amino salt structure of at least one amino group selected from the group consisting of a primary amino group, a secondary amino group, and a tertiary amino group, and at least one selected from the group consisting of an acidic substance and a halogen atom-containing aliphatic hydrocarbon compound,

a salt structure of a nitrogen atom-containing heterocyclic ring structure, and at least one selected from the group consisting of an acidic substance and a halogen atom-containing aliphatic hydrocarbon compound, and

a quaternary ammonium group. Herein, the quaternary ammonium group is a quaternary ammonium group different from the amino salt structure and the salt structure.

More specific examples of the modification compound include 1-(3-aminopropyl)imidazole, 4-(2-aminoethyl) pyridine, 4-picolylamine, isonicotinamide, 4-(ethylaminomethyl)pyridine, 4-(4-piperidyl)pyridine, 2-methyltryptamine, 5-methoxytryptamine, 6-methoxytryptamine, necrostatin-1, alosetron, sulfamethoxypyridazine, 1-(3-chloroanilino)-4-phenylphthalazine, 4-amino-5-aminomethyl-2-methylpyrimidine, 2-(aminomethyl)-5-methylpyrazine, 2-(4-piperidinyl) benzimidazole, 2-(4-aminophenyl)benzimidazole, 5-amino-2-(4-aminophenyl)benzimidazole, 6-(aminomethyl)quinoline, 2-methyl-7-[phenyl(phenylamino)methyl]-8-quinolinol, and 1-(2-amino-1-naphthyl)isoquinoline. Such a modification compound may be used singly or in combinations of a plurality thereof.

At least one selected from the group consisting of 1-(3-aminopropyl)imidazole, 4-(2-aminoethyl)pyridine, 4-picolylamine, isonicotinamide, 4-(ethylaminomethyl)pyridine, 4-(2-aminoethyl)pyridine, 4-(4-piperidyl)pyridine, 2-(4-piperidinyl)benzimidazole, 2-(4-aminophenyl)benzimidazole, and 5-amino-2-(4-aminophenyl)benzimidazole is preferred, at least one selected from the group consisting of 1-(3-aminopropyl)imidazole, 4-(2-aminoethyl)pyridine, 4-picolylamine, isonicotinamide, 4-(4-piperidyl)pyridine, and 2-(4-aminophenyl)benzimidazole is more preferred, and at least one selected from the group consisting of 1-(3-aminopropyl)imidazole, 4-picolylamine, and 4-(2-aminoethyl)pyridine is further preferred, from the viewpoint that the modification compound is easily available and the production cost of the heteroaromatic structure-containing fluororesin tends to be able to be suppressed.

The heteroaromatic structure-containing fluororesin in the present embodiment has a sulfonamide bond ($-SO_2NR-$) (R in the formula representing sulfonamide is not particularly limited). The heteroaromatic structure-containing fluororesin having the sulfonamide bond can be analyzed by a common analysis method, and the analyzer here used can be, for example, FT-IR or TOF-SIMS.

The heteroaromatic structure-containing fluororesin in the present embodiment may be a saponified product thereof or a salt thereof.

The saponified product of the heteroaromatic structure-containing fluororesin is a saponified product obtained by reaction of the heteroaromatic structure-containing fluororesin and an alkaline substance. Examples of such a basic substance include amine compounds such as dimethylamine, diethylamine, monomethylamine and monoethylamine, and alkali metal hydroxides and alkaline earth metal hydroxides, such as sodium hydroxide and potassium hydroxide. In particular, sodium hydroxide or potassium hydroxide is preferred.

The salt of the heteroaromatic structure-containing fluororesin is a salt of the heteroaromatic structure-containing fluororesin and an acidic substance. Examples of the acidic substance include mineral acids such as hydrochloric acid, sulfuric acid and nitric acid, and organic acids such as oxalic acid, acetic acid, formic acid and trifluoroacetic acid.

<Fluororesin G1>

The heteroaromatic structure-containing fluororesin in the present embodiment may be used as a resin composition in which other resin is mixed.

The resin composition can include the heteroaromatic structure-containing fluororesin in the present embodiment, and the fluororesin G1.

In the present embodiment, a fluororesin mixture such as a composition including the heteroaromatic structure-containing fluororesin and the fluororesin G1 is referred to as "resin composition".

The fluororesin G1 is a fluororesin having ion-exchange ability with a cation (hereinafter, also referred to as "positive ion").

The fluororesin G1 has a structural unit represented by the following general formula G1:

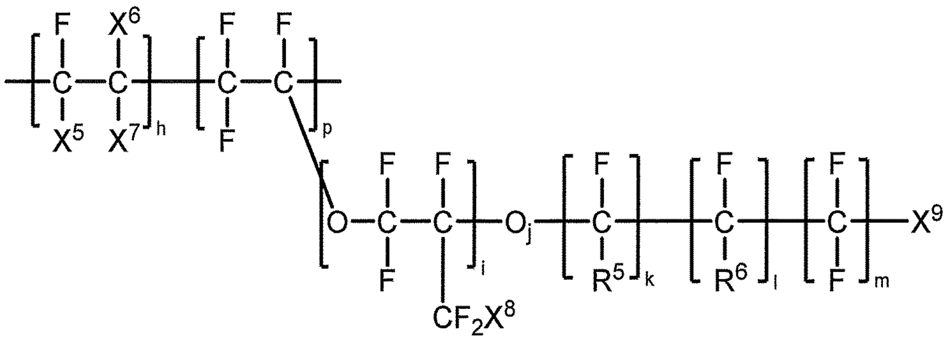

[G 1]

wherein the definition of each substituent has the same meaning as in the general formula G1 described above.

A preferred fluororesin G1 is also as described above.

The weight ratio between the heteroaromatic structure-containing fluororesin and the fluororesin G1 in the resin composition is not particularly limited, and is preferably 1:100 to 100:1. While it differs depending on the application of the resin composition according to the present embodiment, the weight ratio between the heteroaromatic structure-containing fluororesin and the fluororesin G1 is preferably 5:95 or more, more preferably 10:90 or more, further preferably 15:85 or more, from the viewpoint of suppression of elution of the heteroaromatic structure-containing fluororesin into the electrolyte solution in the case of use as a separation membrane for a redox flow battery. While it differs depending on the application in which the mixture is utilized, the weight ratio of the heteroaromatic structure-containing fluororesin is preferably 90:10 or less, more preferably 80:20 or less, further preferably 70:30 or less because the heteroaromatic structure-containing fluororesin tends to result in an enhancement in power efficiency in the case of use as a separation membrane for a redox flow battery.

The content of the heteroaromatic structure-containing fluororesin in the resin composition is preferably 5% by mass or more, more preferably 10% by mass or more, further preferably 15% by mass or more. While it differs depending on the application in which the mixture is utilized, the content of the heteroaromatic structure-containing fluororesin in the resin composition is preferably 90% by mass or less, more preferably 80% by mass or less, further preferably 70% by mass or less because the heteroaromatic structure-containing fluororesin tends to result in an enhancement in power efficiency in the case of use as a separation membrane for a redox flow battery.

In the case of use of the heteroaromatic structure-containing fluororesin having the structural unit represented by

the general formula A1, the ratio of each resin is exemplified as follows.

The weight ratio between a side-chain nitrogen atom-containing fluororesin and the fluororesin G1 in the resin composition is not particularly limited, and is preferably 1:100 to 100:1. While it differs depending on the application of the resin composition according to the present embodiment, the weight ratio between the side-chain nitrogen atom-containing fluororesin and the fluororesin G1 is preferably 10:90 or more, more preferably 20:80 or more, further preferably 30:70 or more, from the viewpoint of suppression of elution of the heteroaromatic structure-containing fluororesin into the electrolyte solution in the case of use as a separation membrane for a redox flow battery. While it differs depending on the application in which the mixture is utilized, the weight ratio of the side-chain nitrogen atom-containing fluororesin is preferably 90:10 or less, more preferably 80:20 or less, further preferably 70:30 or less because the side-chain nitrogen atom-containing fluororesin tends to result in an enhancement in power efficiency in the case of use as a separation membrane for a redox flow battery.

The content of the side-chain nitrogen atom-containing fluororesin in the resin composition is preferably 10% by mass or more, more preferably 20% by mass or more, further preferably 30% by mass or more. While it differs depending on the application in which the mixture is utilized, the content of the side-chain nitrogen atom-containing fluororesin in the resin composition is preferably 90% by mass or less, more preferably 80% by mass or less, further preferably 70% by mass or less in the case of use as a separation membrane for a redox flow battery, because the side-chain nitrogen atom-containing fluororesin tends to result in an enhancement in power efficiency.

The resin composition according to the present embodiment is preferably a styrene resin, a vinyl chloride resin, chlorinated polyethylene, a polyamide resin, a polyphenylene ether/polystyrene resin, a polyetheretherketone resin, a polysulfone resin, a polyether sulfone resin, a high-density polyethylene resin, a low-density polyethylene resin, a linear low-density polyethylene resin, a polyphenylene ether resin, a polyphenylene sulfide resin, a syndiotactic polystyrene resin, polyetherimide, a siloxane-modified polyetherimide resin, a polyamide imide resin, a cycloolefin-based resin, a cycloolefin copolymer, a polyetherketoneetherketoneketone resin, a polyaryletherketone resin, or a fluororesin, and may further include a styrene resin, a vinyl chloride resin, chlorinated polyethylene, a polyamide resin, a polyphenylene ether/polystyrene resin, a high-density polyethylene resin, a low-density polyethylene resin, a linear low-density polyethylene resin, a syndiotactic polystyrene resin, a cycloolefin-based resin, or a cycloolefin copolymer. The resin which may be included in the resin composition according to the present embodiment may be used singly or in combinations of a plurality thereof.

<Ion-exchange membrane>

The ion-exchange membrane according to the present embodiment includes the heteroaromatic structure-containing fluororesin, or the resin composition according to the present embodiment.

In a case where the resin composition including the heteroaromatic structure-containing fluororesin is molded into a membrane, the molding method is not particularly limited, and examples thereof include a method in which the resin composition including the heteroaromatic structure-containing fluororesin is formed into a molten state, and extruded by a nozzle, a die, or the like with an extruder and thus processed into a film, and a method in which the resin composition including the heteroaromatic structure-containing fluororesin is formed into a solution state, applied to a substrate by a die, a gravure roll, a knife or spraying and dried, and thus processed into a film. The resulting membrane of the heteroaromatic structure-containing fluororesin is hereinafter also referred to as "heteroaromatic structure-containing fluororesin membrane".

The solvent usable in formation of the heteroaromatic structure-containing fluororesin into a solution is not particularly limited, and examples include saturated hydrocarbon compounds such as n-pentane, n-hexane, n-octane, n-decane, cyclopentane, cyclohexane and cyclooctane; aromatic hydrocarbon compounds such as benzene, toluene, xylene and ethylbenzene; halogenated hydrocarbon compounds such as methylene chloride, chloroform, carbon tetrachloride, chlorobenzene and dichlorobenzene; alcohols such as methanol, ethanol, propanol, isopropanol, butanol, hexanol, cyclohexanol and benzyl alcohol; ketones such as acetone, ethyl methyl ketone, methyl butyl ketone, methyl isobutyl ketone and cyclohexanone; as well as esters such as ethyl acetate, butyl acetate and methyl benzoate; ethers such as diethyl ether, dibutyl ether, tetrahydrofuran, methyltetrahydrofuran and dioxane; polyols such as ethylene glycol, propylene glycol and glycerin, and multimers and polyols of compounds each having two hydroxyl groups, among these polyols; and esterified compounds of these multimers, and nitriles such as acrylonitrile and benzonitrile; nitromethane; N,N-dimethylformamide; dimethylsulfoxide; hexamethylphosphoric triamide; carbon disulfide; and fluorine-based compounds (for example, Novec (trademark) manufactured by 3M, and Asahiklin manufactured by AGC Inc.). Such a solvent may be adopted singly or in combinations of a plurality thereof.

When the composition including the heteroaromatic structure-containing fluororesin is molded into a membrane, a substrate can also be used. The substrate can be used to sometimes more stably produce such a membrane of the composition including the heteroaromatic structure-containing fluororesin.

The material used in the substrate is not particularly limited, and examples include polyethylene, polypropylene,

polyethylene terephthalate, polybutylene terephthalate, a cycloolefin polymer, polycarbonate, polyamide, polyimide, polyamide imide, polyvinyl chloride, polystyrene, polyphenylene ether, polyetheretherketone, polysulfone, polyether sulfone, polyphenylene ether, polyphenylene sulfide, polyetherimide, a polyimide resin, polyetherketoneetherketoneketone, and polyaryletherketone. The material used in the substrate may be modified, and may be used singly or in combinations of a plurality thereof.

The ion-exchange membrane according to the present embodiment alternately includes at least one layer (L1) including the heteroaromatic structure-containing fluororesin, and at least one layer (M1) including the fluororesin having a structural unit represented by the following general formula G1:

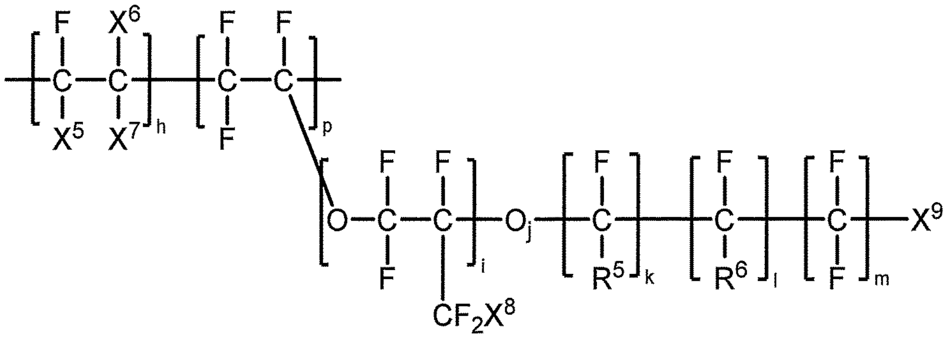

[G 1]

wherein the definition of each substituent has the same meaning as in the general formula G1 described above.

A membrane (hereinafter, also referred to as "fluororesin membrane") containing the fluororesin G1 can be used as a substrate in the layer (M1), thereby providing an ion-exchange membrane having the fluororesin membrane (M1) and the heteroaromatic structure-containing fluororesin membrane (L1). The layer (M1) may include no heteroaromatic structure-containing fluororesin.

The ion-exchange resin in the present embodiment may include one layer (L1) and one layer (M1) (an ion-exchange membrane including one layer as the layer (L1) and one layer as the layer (M1) is also referred to as "bipolar membrane"). A membrane by stacking can provide an ion-exchange membrane having both respective characteristics of the fluororesin G1 and the heteroaromatic structure-containing fluororesin. Hereinafter, when they are in the state of being stacked, the fluororesin membrane and the heteroaromatic structure-containing fluororesin membrane are also respectively referred to as "fluororesin layer" and "heteroaromatic structure-containing fluororesin layer".

The interface between the layer (L1) including the heteroaromatic structure-containing fluororesin and the layer (M1) including the fluororesin having the structural unit represented by the general formula G1 included in the ion-exchange membrane is specified with respect to the presence thereof, from a numerical value at which the maximum signal strength of $NSO_2$ (m/z 78, two peaks are detected, and the peak located at the smaller mass is used) reaches 1/10, as measured with a time-of-flight secondary ion mass spectrometry apparatus with reference to JIS K 0146:2002. The region in which the maximum signal strength of the peak assigned to $NSO_2$ shows 1/10 or more is defined as the layer (L), and the region in which the maximum signal strength of the peak assigned to $NSO_2$ shows less than 1/10 is defined as the layer (M).

The method for producing the fluororesin membrane is as described above.

The method for molding the heteroaromatic structure-containing fluororesin into a membrane can also be made by reacting the fluororesin G1 precursor membrane with the modification compound and then performing hydrolysis treatment, to produce the heteroaromatic structure-containing fluororesin membrane. Furthermore, acid treatment can also be performed. In other words, the hydrolysis treatment can provide a saponified product of the heteroaromatic structure-containing fluororesin membrane, and furthermore the acid treatment can provide a salt of the heteroaromatic structure-containing fluororesin membrane. The hydrolysis treatment and the acid treatment are performed in the same manner as in the general formula G1. In the case of use of the present method, the reaction between the fluororesin G1 precursor and the modification compound can be controlled to provide a membrane in which the heteroaromatic structure-containing fluororesin membrane and the fluororesin membrane are integrated, and such a membrane is a suitable membrane if adhesiveness between the heteroaromatic structure-containing fluororesin membrane and the fluororesin membrane is desired to be increased. Such a membrane obtained by the present method can also be controlled in distribution of the heteroaromatic structure-containing fluororesin in the membrane by control of the reaction between the fluororesin precursor and the modification compound. Specifically, for example, the reaction progresses from a location in which the fluororesin G1 precursor membrane and the modification compound are contacted, and thus a membrane can be provided in which the concentration of the heteroaromatic structure-containing fluororesin has a gradient from such a location of contact.

The ion-exchange membrane containing the heteroaromatic structure-containing fluororesin membrane of the

present embodiment, and an ion-exchange membrane (the ion-exchange membrane is not particularly limited as long as it has two or more layers, and the same also applies to the following description) containing the heteroaromatic structure-containing fluororesin membrane and the fluororesin membrane can be each used in various applications. Examples of such an application include a redox flow battery, a fuel cell, salt electrolysis, alkaline water electrolysis, and carbon dioxide reduction electrolysis, and, in particular, use in a cell for a redox flow battery, and a redox flow battery is suitably exemplified. Use in a cell for a redox flow battery, and a redox flow battery tends to lead to an excellent power efficiency as compared with conventional use in a separation membrane.

The total thickness of the ion-exchange membrane according to the present embodiment is not particularly limited, is preferably 0.01 μm or more and 200 μm or less in a cell for a redox flow battery, and a redox flow battery exemplified as a suitable application, is more preferably 1 μm or more because the membrane tends to be enhanced in handleability and mechanical strength, and is further preferably 10 μm or more, particularly preferably 20 μm or more particularly in a case where the pulsation of the membrane is large and high mechanical strength is demanded. The thickness is more preferably 150 μ or less, further preferably 130 μm or less, particularly preferably 100 μm or less because electrical resistance during operating of a cell for a redox flow battery, and a redox flow battery tends to be suppressed to result in an enhancement in power efficiency.

The thickness of the layer (L1) (heteroaromatic structure-containing fluororesin membrane) in the ion-exchange membrane according to the present embodiment is not particularly limited, and is preferably 0.001 μm or more and 10 μm or less in a cell for a redox flow battery, and a redox flow battery exemplified as a suitable application. The thickness of the layer (L1) is more preferably 0.01 μm or more, further preferably 0.1 μm or more because permeation of a redox active material through the membrane tends to be able to be more suppressed in use for a cell for a redox flow battery, and a redox flow battery, and is particularly preferably 0.2 μm or more, further particularly preferably 0.3 μm or more in a case where the pulsation of the heteroaromatic structure-containing fluororesin membrane is large and high mechanical strength is demanded. The thickness of the layer (L1) is more preferably 7 μm or less, further preferably 5 μm or less, particularly preferably 3 μm or less, further particularly preferably 1 μm or less because electrical resistance during operating of a cell for a redox flow battery, and a redox flow battery tends to be suppressed to result in an enhancement in power efficiency.

The equivalent weight of the ion-exchange membrane according to the present embodiment is not particularly limited, is preferably 500 g/eq or more and 2000 g/eq or less, is more preferably 700 g/eq or more, further preferably 800 g/eq or more because the membrane tends to be enhanced in handleability and mechanical strength, and is particularly preferably 880 g/eq or more, further particularly preferably 900 g/eq or more particularly in a case where the pulsation of the membrane is large and high mechanical strength is demanded. The equivalent weight of the ion-exchange membrane according to the present embodiment is more preferably 1500 g/eq or less, further preferably 1400 g/eq or less, particularly preferably 1200 g/eq or less, further particularly preferably 1150 g/eq or less because electrical resistance during operating of a cell for a redox flow battery, and a redox flow battery tends to be suppressed to result in an enhancement in power efficiency.

An ion-exchange membrane of the second embodiment according to another embodiment includes

a layer (L3) including a side-chain nitrogen atom-containing fluororesin having a structural unit represented by the following general formula A3, a saponified product thereof or a salt thereof:

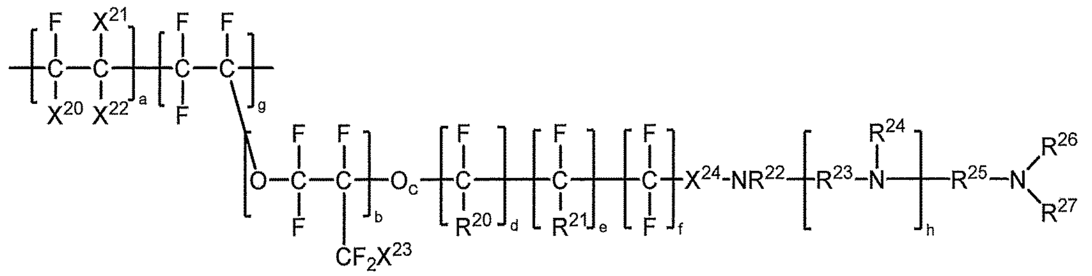

[A 3]

wherein,

$X^{20}$, $X^{21}$, $X^{22}$, and $X^{23}$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^{20}$ and $X^{21}$ or $X^{20}$ and $X^{22}$ optionally form a cyclic structure,

$R^{20}$ and $R^{21}$ are each optionally the same or different, and are each a hydrogen atom, a halogen atom, a substituted or unsubstituted perfluoroalkyl group having 1 to 10 carbon atoms, or a substituted or unsubstituted

fluorochloroalkyl group having 1 to 10 carbon atoms, and the halogen atom is a fluorine atom, a chlorine atom, a bromine atom, or an iodine atom,

$R^{22}$ and $R^{24}$ are each a hydrogen atom, a substituted or unsubstituted aliphatic hydrocarbon group having 1 to 10 carbon atoms, or a substituted or unsubstituted aromatic hydrocarbon group having 6 to 10 carbon atoms,

$R^{26}$ and $R^{27}$ are each a hydrogen atom, or a substituted or unsubstituted aliphatic hydrocarbon group having 1 to 10 carbon atoms, and at least one of $R^{26}$ and $R^{27}$ is a substituted or unsubstituted aliphatic hydrocarbon group having 1 to 10 carbon atoms,

$R^{23}$ and $R^{25}$ are each optionally the same or different, and are each a substituted or unsubstituted divalent aliphatic hydrocarbon group having 1 to 10 carbon atoms, or a substituted or unsubstituted divalent aromatic hydrocarbon group having 6 to 10 carbon atoms, wherein, when h is 2 or more, $R^{23}$s repeated are each optionally the same or different,

$X^{24}$ is a divalent group represented by $-CO_2-$ or $-SO_2-$,

a and g each represent a molar ratio in the total constituent unit contained in the resin, and are numbers satisfying $0 \leq a < 1$, $0 < g \leq 1$, and $a + g = 1$,

b is an integer of 0 to 8,

c is 0 or 1, and

d, e, f, and h are each optionally the same or different, and are each an integer of 0 to 6, provided that d, e, and f are not 0 at the same time, and

a layer (M3) including a fluororesin (G1) having a structural unit represented by the following general formula G1:

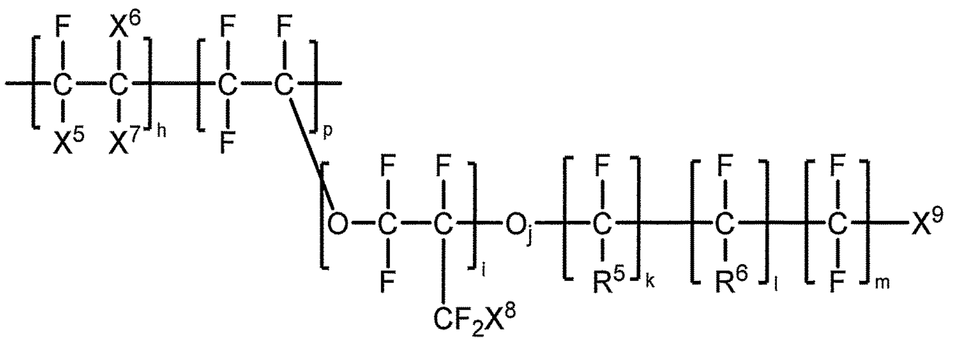

[G 1]

wherein the definition of each substituent has the same meaning as in the general formula G1 described above.

<Side-chain nitrogen atom-containing fluororesin A3>

A side-chain nitrogen atom-containing fluororesin A3 has a structural unit represented by the following general formula A3. Hereinafter, the side-chain nitrogen atom-containing fluororesin having the structural unit represented by the general formula A3 is also referred to as "side-chain nitrogen atom-containing fluororesin A3".

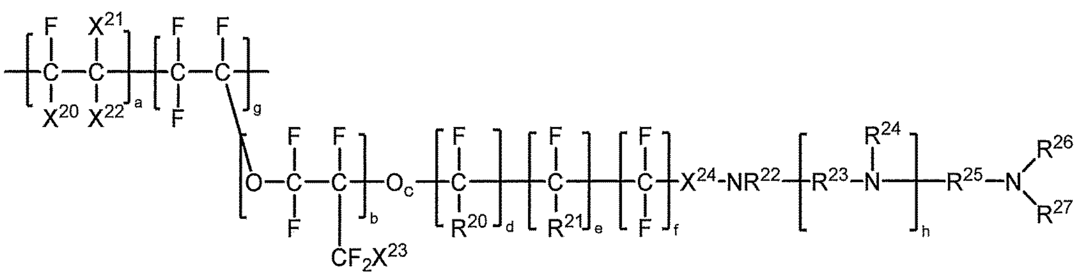

[A 3]

$X^{20}$, $X^{21}$, $X^{22}$, and $X^{23}$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^{20}$ and $X^{21}$ or $X^{20}$ and $X^{22}$ optionally form a cyclic structure. $X^{20}$, $X^{21}$, $X^{22}$, and $X^{23}$ are each preferably a fluorine atom, or an unsubstituted perfluoroalkyl group having 1 to 3 carbon atoms from the viewpoint that a starting material is easily available and the production cost of the side-chain nitrogen atom-containing fluororesin tends to be able to be suppressed.

Furthermore, a fluorine atom or a trifluoromethyl group is more preferred and a fluorine atom is particularly preferred from the viewpoint that the side-chain nitrogen atom-containing fluororesin tends to be enhanced in chemical stability such as oxidation degradation resistance.

$R^{20}$ and $R^{21}$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom. $R^{20}$ and $R^{21}$ are each preferably a fluorine atom, or an unsubstituted perfluoroalkyl group having 1 to 3 carbon atoms from the viewpoint that a starting material is easily available and the production cost of the side-chain nitrogen atom-containing fluororesin tends to be able to be suppressed. Furthermore, a fluorine atom or a trifluoromethyl group is more preferred and a fluorine atom is particularly preferred from the viewpoint that the side-chain nitrogen atom-containing fluororesin tends to be enhanced in chemical stability such as oxidation degradation resistance.

$R^{22}$ and $R^{24}$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms. $R^{22}$ and $R^{24}$ are each preferably a hydrogen atom, or an unsubstituted aliphatic hydrocarbon group having 1 to 10 carbon atoms, more preferably a hydrogen atom, or an unsubstituted aliphatic hydrocarbon group having 1 to 4 carbon atoms, from the viewpoint that a starting material is easily available and the production cost of the side-chain nitrogen atom-containing fluororesin tends to be able to be suppressed, and, from the same viewpoint, $R^{24}$ is further preferably a hydrogen atom, or an unsubstituted aliphatic hydrocarbon group having 1 to 2 carbon atoms, particularly preferably a hydrogen atom. $R^{22}$ is further preferably a hydrogen atom from the viewpoint that the production cost of the side-chain nitrogen atom-containing fluororesin can be more suppressed, and further preferably an unsubstituted aliphatic hydrocarbon group having 1 to 2 carbon atoms from the viewpoint of an enhancement in stability of the side-chain nitrogen atom-containing fluororesin under an alkaline condition.

$R^{26}$ and $R^{27}$ are each a hydrogen atom, or a substituted or unsubstituted aliphatic hydrocarbon group having 1 to 10 carbon atoms. At least one of $R^{26}$ and $R^{27}$ is a substituted or unsubstituted aliphatic hydrocarbon group having 1 to 10 carbon atoms, and thus excellent current efficiency, voltage efficiency and power efficiency tend to be achieved in a well-balanced manner in use for a cell for a redox flow battery, and a redox flow battery. Both $R^{26}$ and $R^{27}$ are each more preferably a substituted or unsubstituted aliphatic hydrocarbon group having 1 to 10 carbon atoms from the same viewpoint. $R^{26}$ and $R^{27}$ are each preferably an unsubstituted aliphatic hydrocarbon group having 1 to 10 carbon atoms, more preferably an unsubstituted aliphatic hydrocarbon group having 1 to 6 carbon atoms, further preferably an unsubstituted aliphatic hydrocarbon group having 1 to 4 carbon atoms because excellent current efficiency, voltage efficiency and power efficiency tend to be achieved in a well-balanced manner in use for a cell for a redox flow battery, and a redox flow battery.

$R^{23}$ and $R^{25}$ are each optionally the same or different, and are each a substituted or unsubstituted divalent aliphatic hydrocarbon group having 1 to 10 carbon atoms, or a substituted or unsubstituted divalent aromatic hydrocarbon group having 6 to 10 carbon atoms. When h is 2 or more, $R^{23}$s repeated are each optionally the same or different. $R^{23}$ and $R^{25}$ are each preferably an unsubstituted aliphatic hydrocarbon group having 1 to 10 carbon atoms, more preferably an unsubstituted aliphatic hydrocarbon group having 2 to 6 carbon atoms, further preferably an unsubstituted aliphatic hydrocarbon group having 2 to 4 carbon atoms, particularly preferably an unsubstituted aliphatic hydrocarbon group having 2 to 3 carbon atoms, from the viewpoint that a starting material is easily available and the production cost of the side-chain nitrogen atom-containing fluororesin tends to be able to be suppressed.

The substituent in the case of "substituted" is the same as the substituent exemplified with respect to the general formula 1.

$X^{24}$ is a divalent group represented by formula $-CO_2-$ or $-SO_2-$. The divalent group represented by formula $-SO_2-$ is preferred from the viewpoint that the side-chain nitrogen atom-containing fluororesin tends to be enhanced in chemical stability such as oxidation degradation resistance.

The side-chain nitrogen atom-containing fluororesin preferably includes a structural unit represented by the following general formula A2, and at least one selected from the group consisting of a structural unit represented by the following general formula A17, a structural unit represented by the following general formula A18, and a structural unit represented by the following general formula A19, from the viewpoint that the side-chain nitrogen atom-containing fluororesin tends to be enhanced in chemical stability such as oxidation degradation resistance and from the viewpoint that the production cost of the side-chain nitrogen atom-containing fluororesin tends to be able to be suppressed and the production cost of a cell for a redox flow battery tends to be able to be suppressed:

$-(CF_2-CF_2)-$ [A2]

$-(CF_2-CF(-O-(CF_2CFXO)_N-Bg))-$ [A17]

wherein X represents F, or a perfluoroalkyl group having 1 to 3 carbon atoms, Ag represents

$((CF_2)_f$-$X^{24}$-$NR^{22}$-$(R^{23}$-$NR^{24})_h$-$R^{25}$-$NR^{26}R^{27})$ in the general formula A3, and N represents an integer of 0 to 5,

$$-(CF_2\text{-}CF(\text{-}O\text{-}(CF_2)_P\text{-}CFX(\text{-}O\text{-}(CF_2)_K\text{-}SO_2NX^{51}Bx)))\text{-} \quad [A18]$$

wherein X represents a perfluoroalkyl group having 1 to 3 carbon atoms, $X^{51}$ is a hydrogen atom, an alkali metal atom, an alkaline earth metal atom, a substituted or unsubstituted aliphatic hydrocarbon group having 1 to 10 carbon atoms, or an aromatic hydrocarbon group and Bx represents - $(R^{23}$-$NR^{24})_h$-$R^{25}$-$NR^{26}R^{27})$ in the general formula A3, P represents an integer of 0 to 12, and K represents an integer of 1 to 5, provided that P and K are not 0 at the same time,

$$-(CF_2\text{-}CF(\text{-}O\text{-}(CF_2)_Q\text{-}CFX(\text{-}(CF_2)_L\text{-}O\text{-}(CF_2)_o\text{-}SO_2NX^{51}Bx)))\text{-} \quad [A19]$$

wherein X represents a perfluoroalkyl group having 1 to 3 carbon atoms, $X^{41}$ is a hydrogen atom, an alkali metal atom, an alkaline earth metal atom, a substituted or unsubstituted aliphatic hydrocarbon group having 1 to 10 carbon atoms, or an aromatic hydrocarbon group and Ax represents -$(R^{23}$-$NR^{24})_h$-$R^{25}$-$NR^{26}R^{27})$ in the general formula A3, Q represents an integer of 0 to 12, L represents an integer of 1 to 5, and o represents an integer of 0 to 6, provided that Q and O are not 0 at the same time.

The side-chain nitrogen atom-containing fluororesin more preferably includes the structural unit represented by the general formula A2, and at least one selected from the group consisting of the structural unit represented by the general formula A17, the structural unit represented by the general formula A18, and the structural unit represented by the general formula A19, and, from the same viewpoint, further preferably contains the structural unit represented by the general formula A2 and the structural unit represented by the general formula A17 (provided that X is F, or a trifluoromethyl group, n is an integer of 0 to 2, and m is an integer of 1 to 4.), particularly preferably includes the structural unit represented by the general formula A2 and the structural unit represented by the general formula A17 (provided that X is F, or a trifluoromethyl group, n is 0 or 1, and m is an integer of 2 to 4.).

The side-chain nitrogen atom-containing fluororesin more preferably has a structural unit represented by the following general formula A20, further preferably has a structural unit represented by the following general formula A21:

$$-[CF_2CF_2]_a\text{-}[CF_2\text{-}CF((\text{-}O\text{-}CF_2\text{-}(CF(CF_3)))_b\text{-}O\text{-}(CF_2)_2\text{-}SO_2NX^{51}Bx)]_g\text{-} \quad [A20]$$

wherein $X^{51}$ is a hydrogen atom, an alkali metal atom, an alkaline earth metal atom, a substituted or unsubstituted aliphatic hydrocarbon group having 1 to 10 carbon atoms, or an aromatic hydrocarbon group and Ax represents -$(R^{23}$-$NR^{24})_h$-$R^{25}$-$NR^{26}R^{27})$ in the general formula A3, a and g each represent a molar ratio in the total constituent unit contained in the resin, and are numbers satisfying $0 \leq a < 1$, $0 < g \leq 1$, and $a + g = 1$, and b is 0 or 1,

$$-[CF_2CF_2]_a\text{-}[CF_2\text{-}CF((\text{-}O\text{-}CF_2\text{-}(CF(CF_3)))\text{-}O\text{-}(CF_2)_2\text{-}SO_2NX^{51}Bx)]_g\text{-} \quad [A21]$$

wherein $X^{51}$ is a hydrogen atom, an alkali metal atom, an alkaline earth metal atom, a substituted or unsubstituted aliphatic hydrocarbon group having 1 to 10 carbon atoms, or an aromatic hydrocarbon group and Ax represents -$(R^{23}$-$NR^{24})_h$-$R^{25}$-$NR^{26}R^{27})$ in the general formula A3, a and g each represent a molar ratio in the total constituent unit contained in the resin, and are numbers satisfying $0 \leq a < 1$, $0 < g \leq 1$, and $a + g = 1$.

The method for producing the side-chain nitrogen atom-containing fluororesin is not particularly limited, and examples include a method in which the above fluororesin G1 precursor and a reforming compound described below are reacted.

The reforming compound has at least two nitrogen atoms. A functional group containing a first nitrogen atom of such nitrogen atoms is a primary amino group or a secondary amino group, and is preferably a primary amino group from the viewpoint of an enhancement in reactivity between the reforming compound and the side-chain nitrogen atom-containing fluororesin precursor and is preferably a secondary amino group from the viewpoint of an enhancement in stability of the side-chain nitrogen atom-containing fluororesin. A functional group containing a second nitrogen atom of such at least two nitrogen atoms contained in the reforming compound is at least one functional group selected from the group consisting of a secondary amino group, a tertiary amino group, and the above amino group and acidic substance. In a case where suppression of side reaction is demanded in reaction of an acidic fluororesin precursor and the reforming compound, a secondary amino group or a tertiary amino group is preferred, and a tertiary amino group is more preferred.

Examples of the reforming compound include N-methylethylenediamine, N-ethylethylenediamine, N,N-dimethylethylenediamine, N,N'-dimethylethylenediamine, N,N,N'-trimethylethylenediamine, N,N-diethylethylenediamine, N-benzylethylenediamine, N,N-dibutylethylenediamine, 1,2-diphenylethylenediamine, N,N-dicyclohexyl-1,2-ethylenediamine, N,N-dimethyl-1,3-propanediamine, N,N-dimethyldipropylenetriamine, N,N-dibutyldipropylenetriamine, N,N-diethyl-1,3-propanediamine, N,N-dimethyl-1,4-butanediamine, N,N-diethyl-1,4-butanediamine, N,N-dimethyl-1,6-hexanediamine, N,N-dimethyl-1,4-cyclohexanediamine, 3-aminopiperidine, isophoronediamine, 4-(aminomethyl)piperidine,

3-aminopyrrolidine, 4-aminopiperidine, 3-aminopyrrolidine, N,N-dimethyltrimethylenediamine, and N,N-dibutyltrimethylenediamine. The reforming compound may be used singly or in combinations of a plurality thereof.

Among such reforming compounds, N-methylethylenediamine, N-ethylethylenediamine, N,N-dimethylethylenediamine, N,N-diethylethylenediamine, N,N-dibutylethylenediamine, N,N-dimethyl-1,3-propanediamine, N,N-dimethyldipropylenetriamine, N,N-dibutyldipropylenetriamine, N,N-diethyl-1,3-propanediamine, N,N-dimethyl-1,4-butanediamine, N,N-diethyl-1,4-butanediamine, N,N-dimethyl-1,6-hexanediamine, N,N-dimethyl-1,4-cyclohexanediamine, N,N-dimethyltrimethylenediamine, or N,N-dibutyltrimethylenediamine is more preferred because the reforming compound is easily available and the production cost of the ion-exchange membrane for a redox flow battery, the membrane including the side-chain nitrogen atom-containing fluororesin, tends to be able to be suppressed.

Among such reforming compounds, N,N-dimethylethylenediamine, N,N-diethylethylenediamine, N,N-dibutylethylenediamine, N,N-dimethyl-1,3-propanediamine, N,N-dimethyldipropylenetriamine, N,N-dibutyldipropylenetriamine, N,N-dimethyl-1,4-butanediamine, N,N-dimethyl-1,6-hexanediamine, or N,N-dimethyltrimethylenediamine is particularly preferred, because excellent current efficiency, voltage efficiency and power efficiency tend to be achieved in a well-balanced manner in use of the ion-exchange membrane for a redox flow battery, the membrane including the side-chain nitrogen atom-containing fluororesin, as a separation membrane for a cell for a redox flow battery, and a redox flow battery, and in use thereof for a cell for a redox flow battery, and redox flow battery.

N,N-dimethylethylenediamine, N,N-dibutylethylenediamine, N,N-dimethyldipropylenetriamine, or N,N-dimethyltrimethylenediamine is further particularly preferred from the same viewpoint.

The side-chain nitrogen atom-containing fluororesin in the present embodiment has a sulfonamide bond ($-SO_2NR-$) (R in the formula representing sulfonamide is not particularly limited). The heteroaromatic structure-containing fluororesin having the sulfonamide bond can be analyzed by a common analysis method, and the analyzer here used can be, for example, FT-IR or TOF-SIMS.

The side-chain nitrogen atom-containing fluororesin in the present embodiment may be a saponified product thereof or a salt thereof.

The saponified product of the side-chain nitrogen atom-containing fluororesin is a saponified product obtained by reaction of the side-chain nitrogen atom-containing fluororesin and an alkaline substance. Examples of a basic substance include amine compounds such as dimethylamine, diethylamine, monomethylamine and monoethylamine, and alkali metal hydroxides and alkaline earth metal hydroxides, such as sodium hydroxide and potassium hydroxide. In particular, sodium hydroxide or potassium hydroxide is preferred.

The salt of the side-chain nitrogen atom-containing fluororesin is a salt of the side-chain nitrogen atom-containing fluororesin and an acidic substance. Examples of the acidic substance include mineral acids such as hydrochloric acid, sulfuric acid and nitric acid, and organic acids such as oxalic acid, acetic acid, formic acid and trifluoroacetic acid.

<Fluororesin G1>

The side-chain nitrogen atom-containing fluororesin in the present embodiment may be used as a resin composition in which other resin is mixed.

The resin composition can include the side-chain nitrogen atom-containing fluororesin in the present embodiment, and the fluororesin G1.

In the present embodiment, a fluororesin mixture such as a composition including the side-chain nitrogen atom-containing fluororesin and the fluororesin G1 is referred to as "fluororesin composition".

The fluororesin G1 is a fluororesin having ion-exchange ability with a cation (hereinafter, also referred to as "positive ion").

The fluororesin G1 has a structural unit represented by the following general formula G1:

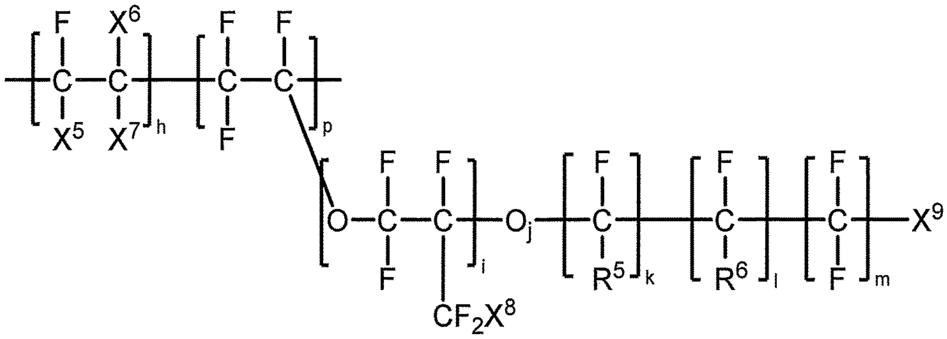

[G 1]

wherein the definition of each substituent has the same meaning as in the general formula G1 described above.

A preferred fluororesin G1 is also as described above.

In the case of use of the side-chain nitrogen atom-containing fluororesin having the structural unit represented by the general formula A3, the ratio of each resin is exemplified as follows.

The weight ratio between the side-chain nitrogen atom-containing fluororesin and the fluororesin G1 in the resin composition is not particularly limited, and is preferably 1:100 to 100:1. While it differs depending on the application of the resin composition according to the present embodiment, the weight ratio between the side-chain nitrogen atom-containing fluororesin and the fluororesin G1 is preferably 5:95 or more, more preferably 10:90 or more, further preferably 15:85 or more in the case of use as a separation membrane for a redox flow battery, from the viewpoint of suppression of elution of the side-chain nitrogen atom-containing fluororesin into the electrolyte solution. While it differs depending on the application in which the mixture is utilized, the weight ratio of the side-chain nitrogen atom-containing fluororesin is preferably 90:10 or less, more preferably 70:30 or less, further preferably 60:40 or less in the case of use as a separation membrane for a redox flow battery, because the side-chain nitrogen atom-containing fluororesin tends to result in an enhancement in power efficiency.

The content of the side-chain nitrogen atom-containing fluororesin in the resin composition is preferably 5% by mass or more, more preferably 10% by mass or more, further preferably 15% by mass or more. While it differs depending on the application in which the mixture is utilized, the content of the side-chain nitrogen atom-containing fluororesin in the resin composition is preferably 90% by mass or less, more preferably 70% by mass or less, further preferably 60% by mass or less in the case of use as a separation membrane for a redox flow battery, because the side-chain nitrogen atom-containing fluororesin tends to result in an enhancement in power efficiency.

The resin composition according to the present embodiment is preferably a styrene resin, a vinyl chloride resin, chlorinated polyethylene, a polyamide resin, a polyphenylene ether/polystyrene resin, a polyetheretherketone resin, a polysulfone resin, a polyether sulfone resin, a high-density polyethylene resin, a low-density polyethylene resin, a linear low-density polyethylene resin, a polyphenylene ether resin, a polyphenylene sulfide resin, a syndiotactic polystyrene resin, polyetherimide, a siloxane-modified polyetherimide resin, a polyamide imide resin, a cycloolefin-based resin, a cycloolefin copolymer, a polyetherketoneetherketoneketone resin, a polyaryletherketone resin, or a fluororesin, and may further include a styrene resin, a vinyl chloride resin, chlorinated polyethylene, a polyamide resin, a polyphenylene ether/polystyrene resin, a high-density polyethylene resin, a low-density polyethylene resin, a linear low-density polyethylene resin, a syndiotactic polystyrene resin, a cycloolefin-based resin, or a cycloolefin copolymer. The resin which may be included in the resin composition according to the present embodiment may be used singly or in combinations of a plurality thereof.

<Ion-exchange membrane>

The ion-exchange membrane according to the present embodiment includes the side-chain nitrogen atom-containing fluororesin, or the resin composition according to the present embodiment.

In a case where the resin composition including the side-chain nitrogen atom-containing fluororesin is molded into a membrane, the molding method is not particularly limited, and examples include a method in which the resin composition including the side-chain nitrogen atom-containing fluororesin is formed into a molten state, and extruded by a nozzle, a die, or the like with an extruder and thus processed into a film, and a method in which the resin composition including the side-chain nitrogen atom-containing fluororesin is formed into a solution state, applied to a substrate by a die, a gravure roll, a knife or spraying and dried, and thus processed into a film. The resulting membrane of the side-chain nitrogen atom-containing fluororesin is hereinafter also referred to as "side-chain nitrogen atom-containing fluororesin membrane".

The solvent usable in formation of the side-chain nitrogen atom-containing fluororesin into a solution is not particularly limited, and examples include saturated hydrocarbon compounds such as n-pentane, n-hexane, n-octane, n-decane, cyclopentane, cyclohexane and cyclooctane; aromatic hydrocarbon compounds such as benzene, toluene, xylene and ethylbenzene; halogenated hydrocarbon compounds such as methylene chloride, chloroform, carbon tetrachloride, chlorobenzene and dichlorobenzene; alcohols such as methanol, ethanol, propanol, isopropanol, butanol, hexanol, cyclohexanol and benzyl alcohol; ketones such as acetone, ethyl methyl ketone, methyl butyl ketone, methyl isobutyl ketone and cyclohexanone; as well as esters such as ethyl acetate, butyl acetate and methyl benzoate; ethers such as diethyl ether, dipropyl ether, dibutyl ether, tetrahydrofuran, methyltetrahydrofuran and dioxane; polyols such as ethylene glycol, propylene glycol and glycerin, and multimers and polyols of compounds each having two hydroxyl groups, among these polyols; and esterified compounds of these multimers, and nitriles such as acrylonitrile and benzonitrile; nitromethane; N,N-dimethylformamide; dimethylsulfoxide; hexamethylphosphoric triamide; carbon disulfide; and fluorine-based compounds (for example, Novec (trademark) manufactured by 3M, and Asahiklin manufactured by AGC Inc.). Such a solvent may be adopted singly or in combinations of a plurality thereof.

When the composition including the side-chain nitrogen atom-containing fluororesin is molded into a membrane, a substrate can also be used. The substrate can be used to sometimes more stably produce such a membrane of the

composition including the side-chain nitrogen atom-containing fluororesin.

The material used in the substrate is not particularly limited, and examples include polyethylene, polypropylene, polyethylene terephthalate, polybutylene terephthalate, a cycloolefin polymer, polycarbonate, polyamide, polyimide, polyamide imide, polyvinyl chloride, polystyrene, polyphenylene ether, polyetheretherketone, polysulfone, polyether sulfone, polyphenylene ether, polyphenylene sulfide, polyetherimide, a polyimide resin, polyetherketoneetherketoneketone, and polyaryletherketone. The material used in the substrate may be modified, and may be used singly or in combinations of a plurality thereof.

The ion-exchange membrane according to the present embodiment alternately includes at least one layer (L3) including the side-chain nitrogen atom-containing fluororesin, and at least one layer (M3) including a fluororesin having a structural unit represented by the following general formula G1:

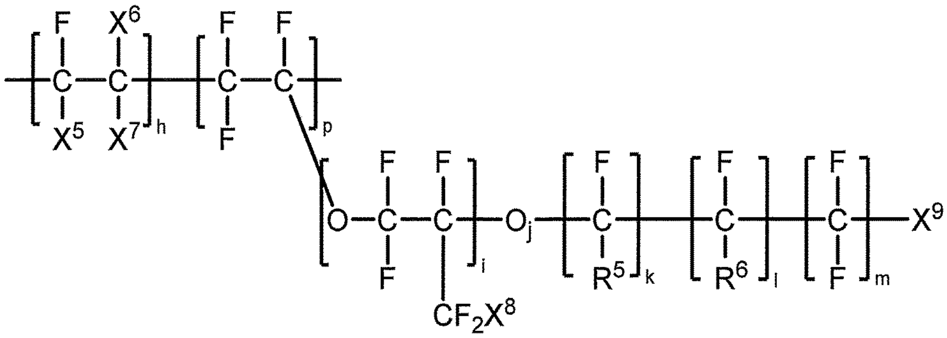

[G 1]

wherein the definition of each substituent has the same meaning as in the general formula G1 described above.

A membrane (hereinafter, also referred to as "fluororesin membrane") containing the fluororesin G1 can be used as a substrate in the layer (M3), thereby providing an ion-exchange membrane having the fluororesin membrane (M3) and the side-chain nitrogen atom-containing fluororesin membrane (L3). The layer (M3) may include no heteroaromatic structure-containing fluororesin.

The ion-exchange resin in the present embodiment may include one layer (L3) and one layer (M3) (an ion-exchange membrane including one layer as the layer (L3) and one layer as the layer (M3) is also referred to as "bipolar membrane"). A membrane by stacking can provide an ion-exchange membrane having both respective characteristics of the fluororesin G1 and the heteroaromatic structure-containing fluororesin. Hereinafter, when they are in the state of being stacked, the fluororesin membrane and the side-chain nitrogen atom-containing fluororesin membrane are also respectively referred to as "fluororesin layer" and "side-chain nitrogen atom-containing fluororesin layer".

The interface between the layer (L3) including the side-chain nitrogen atom-containing fluororesin and the layer (M3) including the fluororesin having the structural unit represented by the general formula G1 included in the ion membrane is specified with respect to the presence thereof, from a numerical value at which the maximum signal strength of $NSO_2$ (m/z 78, two peaks are detected, and the peak located at the smaller mass is used) reaches 1/10, as measured with a time-of-flight secondary ion mass spectrometry apparatus with reference to JIS K 0146:2002. The region in which the maximum signal strength of the peak assigned to $NSO_2$ shows 1/10 or more is defined as the layer (L), and the region in which the maximum signal strength of the peak assigned to $NSO_2$ shows less than 1/10 is defined as the layer (M).

The method for producing the fluororesin membrane is as described above.

The method for molding the side-chain nitrogen atom-containing fluororesin into a membrane can also be made by reacting the fluororesin G1 precursor membrane with the modification compound and then performing hydrolysis treatment, to produce the side-chain nitrogen atom-containing fluororesin membrane. Furthermore, acid treatment can also be performed. In other words, the hydrolysis treatment can provide a saponified product of the heteroaromatic structure-containing fluororesin membrane, and furthermore the acid treatment can provide a salt of the heteroaromatic structure-containing fluororesin membrane. The hydrolysis treatment and the acid treatment are performed in the same manner as in the general formula G1. In the case of use of the present method, the reaction between the fluororesin G1 precursor and the modification compound can be controlled to provide a membrane in which the side-chain nitrogen atom-containing fluororesin membrane and the fluororesin membrane are integrated, and such a membrane is a suitable membrane if adhesiveness between the side-chain nitrogen atom-containing fluororesin membrane and the fluororesin membrane is desired to be increased. Such a membrane obtained by the present method can also be controlled in distribution of the side-chain nitrogen atom-containing fluororesin in the membrane by control of the reaction between the fluororesin G1 precursor and the modification compound. Specifically, for example, the reaction progresses from a location in which the fluororesin G1 precursor membrane and the modification compound are contacted, and thus a membrane can be provided in which the concentration of the side-chain nitrogen atom-containing fluororesin has a gradient from such a location of contact.

The ion-exchange membrane including the chain nitrogen atom-containing fluororesin in the present embodiment, and an ion-exchange membrane (the ion-exchange membrane is not particularly limited as long as it includes two or more layers, the same also applies to the following description) containing the side-chain nitrogen atom-containing fluororesin membrane and the fluororesin membrane can be each used in various applications. Examples of such an application include a redox flow battery, a fuel cell, salt electrolysis, alkaline water electrolysis, and carbon dioxide reduction electrolysis, and, in particular, use in a cell for a redox flow battery, and a redox flow battery is suitably exemplified. Use in a cell for a redox flow battery, and a redox flow battery tends to lead to an excellent power efficiency as compared with conventional use in a separation membrane.

The total thickness of the ion-exchange membrane according to the present embodiment is not particularly limited, is preferably 0.01 μm or more and 200 μm or less in a cell for a redox flow battery, and a redox flow battery exemplified as a suitable application, is more preferably 1 μm or more because the membrane tends to be enhanced in handleability and mechanical strength, and is further preferably 10 μm or more, particularly preferably 20 μm or more particularly in a case where the pulsation of the membrane is large and high mechanical strength is demanded. The thickness is more preferably 150 μ or less, further preferably 130 μm or less, particularly preferably 100 μm or less because electrical resistance during operating of a cell for a redox flow battery, and a redox flow battery tends to be suppressed to result in an enhancement in power efficiency.

The thickness of the layer (L3) (side-chain nitrogen atom-containing fluororesin membrane) in the ion-exchange membrane according to the present embodiment is not particularly limited, and is preferably 0.001 μm or more and 10 μm or less in a cell for a redox flow battery, and a redox flow battery exemplified as a suitable application. The thickness of the layer (L3) is more preferably 0.003 μm or more, further preferably 0.005 μm or more, because permeation of a redox active material through the membrane tends to be able to be more suppressed in use for a cell for a redox flow battery, and a redox flow battery, and is particularly preferably 0.01 μm or more, further particularly preferably 0.04 μm or more in a case where pulsation of the heteroaromatic structure-containing fluororesin membrane is large and high mechanical strength is demanded. The thickness of the layer (L3) is more preferably 7 μm or less, further preferably 5 μm or less, particularly preferably 3 μm or less, further particularly preferably 1.5 μm or less, because electrical resistance during operating of a cell for a redox flow battery, and a redox flow battery tends to be suppressed to result in an enhancement in power efficiency.

The equivalent weight of the ion-exchange membrane according to the present embodiment is not particularly limited, is preferably 500 g/eq or more and 2000 g/eq or less, is more preferably 700 g/eq or more, further preferably 800 g/eq or more because the membrane tends to be enhanced in handleability and mechanical strength, and is particularly preferably 880 g/eq or more, further particularly preferably 900 g/eq or more particularly in a case where the pulsation of the membrane is large and high mechanical strength is demanded. The equivalent weight of the ion-exchange membrane according to the present embodiment is more preferably 1500 g/eq or less, further preferably 1400 g/eq or less, particularly preferably 1200 g/eq or less, further particularly preferably 1150 g/eq or less because electrical resistance during operating of a cell for a redox flow battery, and a redox flow battery tends to be suppressed to result in an enhancement in power efficiency.

<Cell for redox flow battery>

A cell for a redox flow battery, exemplified as a suitable application of the ion-exchange membrane of the present embodiment, is configured to include a first electrolyte solution including a first redox active material, a second electrolyte solution including a second redox active material, a first electrode in contact with the first electrolyte solution, a second electrode in contact with the second electrolyte solution, and a separation membrane located between the first electrolyte solution and the second electrolyte solution. Any component other than the constituent components, which is commonly utilized by those skilled in the art, and/or any component which can be known from known information, for example, known literatures and patents each relating to a cell for a redox flow battery, may be included. Examples of such components include a bipolar plate, a frame, a compressible seal, a conductive additive, and a balancing cell.

Figure 1 illustrates one example of a schematic view of the cell for a redox flow battery. A cell 10 for a redox flow battery has an electrolyzer 6 including a cell chamber 2 including an electrode 1 (in Figure 1, positive electrode) composed of a first electrode, a cell chamber 4 including an electrode 3 (in Figure 1, negative electrode) composed of a second electrode, and a separation membrane 5 as a separation membrane which separates the cell chamber 2 and the cell chamber 4. The cell chamber 2 and the cell chamber 4 include electrolyte solutions containing redox active materials. Such electrolyte solutions containing redox active materials are respectively stored in, for example, electrolyte solution tanks 7 and 8, and are supplied to the cell chambers by pumps or the like. The current generated by the cell for a redox flow battery may be converted from DC to AC through an AC/DC converter 9 or may be converted from AC to DC through the AC/DC converter 9, and the cell for a redox flow battery may be packed. The cell for a redox flow battery of the present embodiment is preferably a cell for a redox flow secondary battery.

<Redox flow battery>

The cell for a redox flow battery can be stacked to provide a redox flow battery. When stacked, such cells for redox flow batteries can be electrically conducted through a bipolar plate.
The material of the bipolar plate is not particularly limited, and examples include carbon, graphite, and a metal. A carbon particle, a carbon fiber, a metal particle, a metal fiber, graphene, and a carbon nanotube may be dispersed in the material.
The material may be used singly or in combinations of a plurality thereof.
The bipolar plate can sometimes enhance the contact between an electrode and an electrolyte solution, and thus may have various flow channels. Such a flow channel is not particularly limited, and examples can include Serpentine, Interdigitated, Pararell, Multi-parallel, Discontinuous, and any combination of such flow channels.

<Electrolyte solution>

The electrolyte solution in the present embodiment is a liquid containing a redox active material and a solvent.
The redox active material is a substance having redox activity directly involving in an electromotive force in the cell for a redox flow battery. The redox active material used in the present embodiment is not particularly limited, and examples thereof include a metallic redox active material, a non-metallic redox active material, and an organic redox active material, and such each redox active material may be a neutral compound or an ionic compound.
The metallic redox active material is a substance containing at least one metal atom, and may contain a plurality of the same type of metal atoms or a plurality of different types of metals. The metal atom used in the metallic redox active material is not particularly limited, examples thereof include aluminum, titanium, vanadium, chromium, manganese, iron, cobalt, nickel, copper, zinc, tin, lead, and cerium, and in particular, titanium, vanadium, chromium, manganese, iron, and cerium are preferred. Vanadium, iron, copper, and tin are preferred, vanadium and iron are further preferred, and vanadium is particularly preferred from the viewpoint that the first redox active material and the second redox active material can be the same in type.
The metallic redox active material may have a ligand for active materials, commonly used, and examples of the ligand include a cyanated product ion, acetylacetone, ethylenediamine, ethylenediaminetetraacetic acid, diethylenetriaminepentaacetic acid, carbon monoxide, bipyridine, bipyrazine, ethylene glycol, propylene glycol, ethanedithiol, butanedithiol, terpyridine, diethylenetriamine, triazacyclononane, tris(hydroxymethyl)aminomethane, ascorbic acid, citric acid, glycolic acid, gluconic acid, acetic acid, formic acid, benzoic acid, malic acid, maleic acid, phthalic acid, sarcosine acid, salicylic acid, oxalic acid, urea, aminophenolate, and lactic acid.
Such a ligand for active material ligands may be adopted singly or in combinations of a plurality thereof.
The material used in the non-metallic redox active material is not particularly limited, and examples thereof include chlorine, bromine, sulfur, and polysulfide.
The organic redox active material is not particularly limited, and examples thereof include viologen, a derivative thereof, and a compound having a viologen structure in a polymer side chain, a 2,2,6,6-tetramethyl-1-piperidinyloxy radical, a derivative thereof, and a compound having a 2,2,6,6-tetramethyl-1-piperidinyloxy radical structure in a polymer side chain, ferrocene, a derivative thereof, and a compound having a ferrocene structure in a polymer side chain, quinone, a derivative thereof, and a compound having a quinone structure in a polymer side chain, anthraquinone, a derivative thereof, and a compound having an anthraquinone structure in a polymer side chain, and quinoxaline, a derivative thereof, and a compound having a quinoxaline structure in a polymer side chain.
The redox active material may be adopted singly or in combinations of a plurality thereof.
When the redox active material is used in the cell for a redox flow battery, the redox active material used in the electrolyte solution of the positive electrode and the redox active material used in the electrolyte solution of the negative electrode can be used in combination depending on desired characteristics. The combination of such redox active materials is not particularly limited, and examples thereof include respective combinations of vanadium/vanadium, iron/iron, lead/lead, copper/copper, iron/chromium, chromium/bromine, zinc/bromine, polysulfide/bromine, zinc/cerium, zinc/nickel, zinc/cerium, zinc/iodine, titanium/manganese, vanadium/cerium, and vanadium/manganese. In particular, vanadium/vanadium, iron/iron, iron/chromium, chromium/bromine, zinc/bromine, and titanium/manganese are preferred, vanadium/vanadium, iron/iron, and zinc/bromine are more preferred, and vanadium/vanadium is particularly preferred because a high electromotive force is obtained and stability in charge and discharge is excellent.
In a case where the redox active materials of the positive electrode and the negative electrode are each vanadium, the cell for a redox flow battery, and the redox flow battery are also designated respectively as "cell for a vanadium redox flow battery", and "vanadium redox flow battery". In addition, in a case where the redox active materials of the positive electrode and the negative electrode are each vanadium, charge and discharge are performed by utilizing an oxidation-reduction reaction, by use of each redox coupling of $VO^{2+}/VO_2^{+}$ in the positive electrode and $V^{2+}/V^{3+}$ in the negative electrode. When charge is performed, protons (H+) are excess in the cell chamber of the positive electrode and,

on the other hand, protons (H+) are deficient in the cell chamber of the negative electrode, along with the oxidation-reduction reaction. The separation membrane allows excess protons in the cell chamber of the positive electrode to be selectively moved to the chamber of the negative electrode, and electrical neutrality is kept. When discharge is performed, its opposite reaction progresses and electrical neutrality is kept.

The solvent used in the electrolyte solution is not particularly limited, and examples thereof include water, alcohols, nitriles, esters, ketones, ethers, aliphatic hydrocarbons, and aromatic hydrocarbons. In particular, water is preferred from the viewpoint of an enhancement in stability in operating of the cell for a redox flow battery.

Specific examples of the solvent include alcohols such as methanol, ethanol, propanol, butanol, hexanol, cyclohexanol, ethylene glycol, diethylene glycol, and glycerol, nitriles such as acetonitrile, propionitrile, and benzonitrile, esters such as ethyl acetate and butyl acetate, ketones such as acetone, methyl ethyl ketone, methyl isobutyl ketone, and cyclohexanone, ethers such as diethyl ether, tetrahydrofuran, methyltetrahydrofuran, dioxane, ethylene glycoldiethyl ether, and diethylene glycol dimethyl ether, aliphatic hydrocarbons such as pentane, hexane, cyclohexane, heptane, octane, chloroform, dichloromethane, and tetrachloromethane, and aromatic hydrocarbons such as benzene, toluene, xylene, chlorobenzene, dichlorobenzene, phenol, and cresol.

The solvent used in the electrolyte solution may be adopted singly or in combinations of a plurality thereof.

An electrolyte may be further used in the electrolyte solution. The electrolyte is a substance which releases ions in the electrolyte solution to enhance electrical conductivity of the electrolyte solution. The electrolyte is not particularly limited, and examples thereof include sulfuric acid, hydrochloric acid, nitric acid, acetic acid, phosphoric acid, sodium hydroxide, potassium hydroxide, calcium hydroxide, and sodium acetate.

The electrolyte used in the electrolyte solution may be adopted singly or in combinations of a plurality thereof.

An additive may be added to the electrolyte solution depending on desired characteristics of the electrolyte solution. The additive is not particularly limited, and examples thereof include ethylene glycol, diethylene glycol, polyethylene glycol, glycerol, mannitol, sorbitol, pentaerythritol, tris(hydroxymethyl)aminomethane, cornstarch, corn syrup, gelatin, glycerol, guar gum, pectin, and a surfactant.

The additive used in the electrolyte solution may be adopted singly or in combinations of a plurality thereof.

<Electrode>

The electrode of the present embodiment is not particularly limited. Examples of the electrode include a metal electrode and a carbon electrode.

The material of the metal electrode is not particularly limited, and examples thereof include aluminum, gold, silver, copper, chromium, molybdenum, nickel, thallium, titanium, iridium, zinc, tin, and any composite of such metals. The shape of the metal electrode is not particularly limited, and examples thereof include a plate shape, a lattice shape, a network shape (rhombic shape, testudinal shape), a linear shape, and a rod shape.

The carbon electrode is not particularly limited, and examples thereof include a glassy carbon electrode, a pyrolytic carbon electrode, a carbon felt electrode, a carbon paper electrode, a carbon foam electrode, a carbon cloth electrode, a carbon knit electrode, a carbon nanofiber sheet electrode, and an activated carbon fiber sheet electrode. The electrode preferably has continuous voids and is more preferably a porous body having continuous voids in an application in which a liquid and a gas are allowed to flow in the electrode. Examples of such a carbon electrode having continuous voids include a carbon felt electrode, a carbon paper electrode, a carbon foam electrode, a carbon cloth electrode, a carbon knit electrode, a carbon nanofiber sheet electrode, and an activated carbon fiber sheet electrode. In particular, carbon felt, carbon paper, and carbon foam are preferred, and carbon foam is more preferred, from the viewpoint that high flexibility and a large surface area can result in a reduction in resistance. The carbon foam preferably has a structure in which a carbon portion is three-dimensionally continuous. The carbon foam can have high flexibility and a high surface area, and therefore preferably has a linear portion and a binding portion which binds the linear portion.

Specific examples of the carbon felt and the carbon paper include SIGRACELL (registered trademark) KFD series, GFA series, GFD series, SGL series, and SIGRACET (registered trademark) series manufactured by SGL CARBON, carbon felt (for example, XF30A, BW-309) manufactured by Toyobo Co., Ltd., CARBORON (registered trademark) GF series (for example, GF-20, GF-3F) manufactured by Nippon Carbon Co., Ltd., Torayca (trademark) TGP series manufactured by Toray Industries, Inc., PYROFIL (trademark) series and GRAFIL (trademark) series manufactured by Mitsubishi Chemical Corporation, VGCF (registered trademark) sheet manufactured by Showa Denko K.K., and carbon felt and graphite felt manufactured by MERSEN. These may be each, if necessary, subjected to activation treatment such as oxidation.

The carbon foam can be produced by any known method (International Publication No. WO 2018/096895, International Publication No. WO 2018/168741, International Publication No. WO 2020/045645).

The electrode may be used singly or in combinations of a plurality thereof.

<Membrane electrode assembly>

The membrane electrode assembly in the present embodiment has a structure in which the ion-exchange membrane (hereinafter, ion-exchange membrane is also referred to as "membrane for an assembly") and at least one electrode are bonded. The bonding means that the membrane for an assembly and at least one electrode are joined, and the bonding can allow the membrane for an assembly and at least one electrode to be integrated. For example, the bonding may be preferably used in a separation membrane electrode assembly including the membrane for an assembly and two electrodes because assembling of the cell for a redox flow battery does not require a step of sequentially applying an electrode, the membrane for an assembly and an electrode and can be made as one step and the production cost tends to be able to be suppressed.

The method for bonding the membrane for an assembly and at least one electrode is not particularly limited, and examples thereof include a method with heat press and/or heat roll press.

The temperature in the bonding is not particularly limited, and is preferably equal to or more than room temperature in a case in which the bonding between the membrane for an assembly and the electrode is insufficient, because the membrane for an assembly tends to be reduced in elastic modulus to enhance the bonding between the membrane for an assembly and the electrode. The temperature in the bonding is preferably 250°C or less, more preferably 200°C or less, further preferably 170°C or less, particularly preferably 150°C or less because the change in quality of the membrane for an assembly tends to be able to be suppressed.

The pressure in the bonding is not particularly limited, and is a pressure of more than 0 MPa. The pressure is preferably 0.01 MPa or more, more preferably 0.05 MPa or more, further preferably 0.08 MPa or more, particularly preferably 0.1 MPa or more, because the bonding between the membrane for an assembly and the electrode tends to be enhanced. The pressure is preferably 100 MPa or less, more preferably 50 MPa or less, further preferably 20 MPa or less, particularly preferably 10 MPa or less, because the change in quality of the electrode tends to be able to be suppressed.

The time in the bonding is not particularly limited, and is a time of more than 0 seconds. The time is preferably 0.01 seconds or more, more preferably 0.1 seconds or more, further preferably 0.5 seconds or more, particularly preferably 1 second or more, because the bonding between the membrane for an assembly and the electrode tends to be enhanced. The time is preferably 10 hours or less, more preferably 5 hours or less, further preferably 2 hours or less, particularly preferably 1 hour or less, because the cost in production of the membrane electrode assembly tends to be able to be reduced.

The atmosphere in the bonding is not particularly limited, and examples include air, nitrogen, and argon. Air or nitrogen is preferred and air is more preferred because the cost in production of the membrane electrode assembly tends to be able to be reduced.

The membrane electrode assembly of the present embodiment can be used in various applications, and use in a cell for a redox flow battery, and a redox flow battery is suitably exemplified. Use in a cell for a redox flow battery, and a redox flow battery tends to result in an excellent power efficiency as compared with conventional use in a combination of a separation membrane and an electrode.

In a case where the side-chain heteroaromatic resin membrane, the heteroaromatic structure-containing fluororesin membrane, and the side-chain nitrogen atom-containing fluororesin membrane are used in the separation membrane for a cell for a redox flow battery, and a redox flow battery of the present embodiment, the side-chain heteroaromatic resin layer, the heteroaromatic structure-containing fluororesin membrane, and the side-chain nitrogen atom-containing fluororesin membrane are preferably located facing the electrode acting as the negative electrode, preferably located closer to the electrode, when demanded are excellent current efficiency and voltage efficiency in a well-balanced manner and a high power efficiency. The "closer to" means that the distance of the side-chain heteroaromatic resin layer, the heteroaromatic structure-containing fluororesin membrane, and the side-chain nitrogen atom-containing fluororesin membrane, from the electrode acting as the negative electrode, is smaller than the distance of that from the electrode acting as the positive electrode. The reason why the above special effects are obtained by locating the side-chain heteroaromatic resin layer, the heteroaromatic structure-containing fluororesin membrane, and the side-chain nitrogen atom-containing fluororesin membrane, closer to the electrode acting as the negative electrode, although not clear, is presumed as follows: the amount of the redox active material moved from the positive electrode to the negative electrode and the amount of the redox active material moved from the negative electrode to the positive electrode are different, and thereby the side-chain heteroaromatic resin layer, the heteroaromatic structure-containing fluororesin layer, and the side-chain nitrogen atom-containing fluororesin layer more effectively function to any of the redox active materials that moved more. In a case where a higher current efficiency is demanded, the side-chain heteroaromatic resin layer is preferably disposed on each of both surfaces of the separation membrane.

The cell for a redox flow battery, and the redox flow battery of the present embodiment can be used to provide a mechanism which smooths the amount of supply and demand of power and stabilizes the varying power obtained from a renewable energy source such as solar energy or wind energy. More specifically, it is possible to provide, for example, integration of the power obtained from a renewable energy source, power peak load shifting, stabilization of a transmission

and distribution grid, base load power, energy arbitrage, supporting of a weak transmission and distribution grid, frequency adjustment, and any combination thereof. The cell for a redox flow battery, and the redox flow battery can also be used as a power supply of a remote camping, a forward operating base, transmission and distribution communication, a remote sensor, or the like utilizing no transmission and distribution grid.

The cell for a redox flow battery, and the redox flow battery of the present embodiment can include a control system and a power regulation unit.

The control system can be used to control operating of various valves, pumps, circulation circuits, sensors, relaxation equipment, other electronic/hardware controllers, safeguard apparatuses, and the like.

The power adjustment unit can be used to convert the voltage of the input power, and the current into optimal modes for the cell for a redox flow battery, and/or the redox flow battery, and convert the voltage of the output power, and the current into optimal modes for any application. For example, in a case where the cell for a redox flow battery, and/or the redox flow battery are/is connected to a transmission and distribution grid, the power regulation unit can convert the input AC power into the DC power of suited voltage and current in a charge cycle. The cell for a redox flow battery, and/or the redox flow battery can generate the DC power and the power regulation unit can convert the DC power to the AC power of suitable voltage and frequency for sending to the transmission and distribution grid in a discharge cycle.

[Third embodiment]

Subsequently, a third embodiment is described.

Patent Literature 1 discloses alternate stacking of a cation-exchange group layer and an anion-exchange group layer, for an increase in initial power efficiency, but does not indicate the thicknesses of the cation-exchange group layer and the anion-exchange group layer anywhere except for Examples. The Literature, although discloses a preferred range of the ion-exchange capacity of an ion-exchange membrane configured from an ion-exchanger layer having an ion-exchange group and a porous support layer having no ion-exchange group, does not describe any reason why such a range is preferred, and any Examples indicating that such a range is preferred, at all. Examples do not indicate any ion exchange capacity of a copolymer having a structural formula (1) in Patent Literature 1. The Literature, although discloses the cation-exchange group layer in an ion-exchange group layer, capable of being arranged facing a positive electrode liquid to allow for an increase in lifetime of the ion-exchange group layer, does not indicate any arrangement of the anion-exchange group layer.

Patent Literature 2 discloses reformation of Nafion (registered trademark) 117 with a heterocyclic molecule having a plurality of nitrogen atoms, but Nafion (registered trademark) 117 is large in membrane thickness, and thus is demanded to be lower in proton area resistivity when actually used in a redox flow battery, even if it has a comparable proton area resistivity. Although also disclosed is thinning by use of a support, Nafion (registered trademark) 117 itself is large in proton area resistivity, and is demanded as described above to be lower in proton area resistivity when actually used in a redox flow battery. Not indicated is any operation of a redox flow battery with a membrane disclosed. Although the heterocyclic molecule having a plurality of nitrogen atoms, which is optionally bound with being located closer to the negative half-cell of the battery in order to improve performance of the membrane, is disclosed, there is not any description about which performance is improved and there is also not such any description in Examples. The degree of thickness of the heterocyclic molecule having a plurality of nitrogen atoms, in the membrane, is not indicated at all.

Patent Literature 3 discloses a polyelectrolyte membrane including a crossover prevention layer as a metal layer formed by reduction of a cationic metal, therein, for an enhancement in at least one or more characteristics of discharge capacity, current efficiency, voltage efficiency, and power efficiency, but such characteristics are demanded to be higher. A preferred range of the thickness of the metal layer formed is indicated to be as relatively large as 10 $\mu$m or more and 50 $\mu$m or less. A preferred range of the equivalent weight (Equivalent Weight, hereinafter, also referred to as "EW") of the polyelectrolyte membrane is not indicated at all. The location of the crossover prevention layer in the polyelectrolyte membrane is indicated to be at a position corresponding to 10% or more and 90% or less of the thickness of the electrolyte membrane, from the surface of the polyelectrolyte membrane. However, whether the crossover prevention layer faces either the positive electrode or the negative electrode in the case of a flow battery is not indicated at all.

Patent Literature 4 discloses setting of the value obtained by dividing the thickness of a first ion-exchange resin layer by the thickness of a second ion-exchange resin layer, to 0.7 or more and 1.3 or less, for curl suppression, and indicates that the thickness of the first ion-exchange resin layer and the thickness of the second ion-exchange resin layer are equal to each other, namely, an anion-exchange resin layer is located at the center in the thickness direction of the entire membrane. There is not any indication about whether the anion-exchange resin layer is placed facing either the positive electrode or the negative electrode in a redox flow battery cell even if the thickness of the first ion-exchange resin layer and the thickness of the second ion-exchange resin layer are not equal to each other.

An object of the present embodiment relates to methods for producing a cell for a redox battery, a redox flow battery, and a separation membrane each having a high power efficiency.

The present inventors have made intensive studies about the above object, and as a result, have found that, in a

case where a separation membrane constituting a cell for a redox flow battery includes at least a first cation-exchangeable resin layer and an anion-exchangeable resin layer and the anion-exchangeable resin layer is located facing the electrode acting as the negative electrode, surprisingly a high power efficiency is obtained as compared with a case where the anion-exchangeable resin layer is located facing the electrode acting as the positive electrode. Furthermore, it has been found that a particularly high power efficiency is obtained by setting the equivalent weight of the separation membrane and the thickness of the anion-exchangeable resin layer within specified ranges.

The cell for a redox flow battery according to the present embodiment includes

a first electrolyte solution including a first redox active material,
a second electrolyte solution including a second redox active material,
a first electrode in contact with the first electrolyte solution,
a second electrode in contact with the second electrolyte solution, and
a separation membrane located between the first electrolyte solution and the second electrolyte solution, wherein the separation membrane includes at least

a first cation-exchangeable resin layer, and
an anion-exchangeable resin layer,

the equivalent weight of the separation membrane is 1150 g/eq or less,
the thickness of the anion-exchangeable resin layer is 0.001 μm or more and less than 5 μm, and
the anion-exchangeable resin layer of the separation membrane is located facing the electrode acting as the negative electrode.

According to the present embodiment, it is possible to provide methods for producing a cell for a redox battery, a redox flow battery, and a separation membrane each having a high power efficiency.

<Cell for redox flow battery>

A cell for a redox flow battery of the present embodiment is configured to include a first electrolyte solution including a first redox active material, a second electrolyte solution including a second redox active material, a first electrode in contact with the first electrolyte solution, a second electrode in contact with the second electrolyte solution, and a separation membrane located between the first electrolyte solution and the second electrolyte solution. Any component other than the constituent components, which is commonly utilized by those skilled in the art, and/or any component which can be known from known information, for example, known literatures and patents each relating to a cell for a redox flow battery, may be included. Examples of such components include a bipolar plate, a frame, a compressible seal, a conductive additive, and a balancing cell.

Figure 1 illustrates one example of a schematic view of the cell for a redox flow battery of the present embodiment. A cell 10 for a redox flow battery of the present embodiment has an electrolyzer 6 including a cell chamber 2 including an electrode 1 (in Figure 1, positive electrode) composed of a first electrode, a cell chamber 4 including an electrode 3 (in Figure 1, negative electrode) composed of a second electrode, and a separation membrane 5 as a separation membrane which separates the cell chamber 2 and the cell chamber 4. The cell chamber 2 and the cell chamber 4 include electrolyte solutions containing redox active materials. Such electrolyte solutions containing redox active materials are respectively stored in, for example, electrolyte solution tanks 7 and 8, and are supplied to the cell chambers by pumps or the like. The current generated by the cell for a redox flow battery may be converted from DC to AC through an AC/DC converter 9 or may be converted from AC to DC through the AC/DC converter 9, to pack the cell for a redox flow battery. The cell for a redox flow battery of the present embodiment is preferably a cell for a redox flow secondary battery.

<Electrolyte solution>

The electrolyte solution in the present embodiment is a liquid containing a redox active material and a solvent.

The redox active material is a substance having redox activity directly involving in an electromotive force in the cell for a redox flow battery. The redox active material used in the present embodiment is not particularly limited, and examples thereof include a metallic redox active material, a non-metallic redox active material, and an organic redox active material, and such each redox active material may be a neutral compound or an ionic compound.

The metallic redox active material is a substance containing at least one metal atom, and may contain a plurality of the same type of metal atoms or a plurality of different types of metals. The metal atom used in the metallic redox active material is not particularly limited, examples thereof include aluminum, titanium, vanadium, chromium, manganese, iron, cobalt, nickel, copper, zinc, tin, lead, and cerium, and in particular, titanium, vanadium, chromium, manganese, iron, and

cerium are preferred. Vanadium, iron, copper, and tin are preferred, vanadium and iron are further preferred, and vanadium is particularly preferred, from the viewpoint that the first redox active material and the second redox active material can be the same in type.

The metallic redox active material may have a ligand for active materials, commonly used, and examples of the ligand include a cyanated product ion, acetylacetone, ethylenediamine, ethylenediaminetetraacetic acid, diethylenetriaminepentaacetic acid, carbon monoxide, bipyridine, bipyrazine, ethylene glycol, propylene glycol, ethanedithiol, butanedithiol, terpyridine, diethylenetriamine, triazacyclononane, tris(hydroxymethyl)aminomethane, ascorbic acid, citric acid, glycolic acid, gluconic acid, acetic acid, formic acid, benzoic acid, malic acid, maleic acid, phthalic acid, sarcosine acid, salicylic acid, oxalic acid, urea, aminophenolate, and lactic acid. Such a ligand for active materials may be adopted singly or in combinations of a plurality thereof.

The material used in the non-metallic redox active material is not particularly limited, and examples thereof include chlorine, bromine, sulfur, and polysulfide.

The organic redox active material is not particularly limited, and examples thereof include viologen, a derivative thereof, and a compound having a viologen structure in a polymer side chain, a 2,2,6,6-tetramethyl-1-piperidinyloxy radical, a derivative thereof, and a compound having a 2,2,6,6-tetramethyl-1-piperidinyloxy radical structure in a polymer side chain, ferrocene, a derivative thereof, and a compound having a ferrocene structure in a polymer side chain, quinone, a derivative thereof, and a compound having a quinone structure in a polymer side chain, anthraquinone, a derivative thereof, and a compound having an anthraquinone structure in a polymer side chain, and quinoxaline, a derivative thereof, and a compound having a quinoxaline structure in a polymer side chain. The redox active material may be adopted singly or in combinations of a plurality thereof.

When the redox active material is used in the cell for a redox flow battery, the redox active material used in the electrolyte solution of the positive electrode and the redox active material used in the electrolyte solution of the negative electrode can be used in combination depending on desired characteristics. The combination of such redox active materials is not particularly limited, and examples thereof include respective combinations of vanadium/vanadium, iron/iron, lead/lead, copper/copper, iron/chromium, chromium/bromine, zinc/bromine, polysulfide/bromine, zinc/cerium, zinc/nickel, zinc/cerium, zinc/iodine, titanium/manganese, vanadium/cerium, and vanadium/manganese. In particular, vanadium/vanadium, iron/iron, iron/chromium, chromium/bromine, zinc/bromine, and titanium/manganese are preferred, vanadium/vanadium, iron/iron, and zinc/bromine are more preferred, and vanadium/vanadium is particularly preferred because a high electromotive force is obtained and stability in charge and discharge is excellent.

In a case where the redox active materials of the positive electrode and the negative electrode are each vanadium, the cell for a redox flow battery, and the redox flow battery are also designated respectively as "cell for a vanadium redox flow battery", and "vanadium redox flow battery". In addition, in a case where the redox active materials of the positive electrode and the negative electrode are each vanadium, charge and discharge are performed by utilizing an oxidation-reduction reaction, by use of each redox coupling of $VO^{2+}/VO_2^+$ in the positive electrode and $V^{2+}/V^{3+}$ in the negative electrode. When charge is performed, protons (H+) are excess in the cell chamber of the positive electrode and, on the other hand, protons (H+) are deficient in the cell chamber of the negative electrode, along with the oxidation-reduction reaction. The separation membrane allows excess protons in the cell chamber of the positive electrode to be selectively moved to the chamber of the negative electrode, and electrical neutrality is kept. When discharge is performed, its opposite reaction progresses and electrical neutrality is kept.

The solvent used in the electrolyte solution is not particularly limited, and examples thereof include water, alcohols, nitriles, esters, ketones, ethers, aliphatic hydrocarbons, and aromatic hydrocarbons. In particular, water is preferred from the viewpoint of an enhancement in stability in operating of the cell for a redox flow battery.

Specific examples of the solvent include alcohols such as methanol, ethanol, propanol, butanol, hexanol, cyclohexanol, ethylene glycol, diethylene glycol, and glycerol, nitriles such as acetonitrile, propionitrile, and benzonitrile, esters such as ethyl acetate and butyl acetate, ketones such as acetone, methyl ethyl ketone, methyl isobutyl ketone, and cyclohexanone, ethers such as diethyl ether, tetrahydrofuran, methyltetrahydrofuran, dioxane, ethylene glycoldiethyl ether, and diethylene glycol dimethyl ether, aliphatic hydrocarbons such as pentane, hexane, cyclohexane, heptane, octane, chloroform, dichloromethane, and tetrachloromethane, and aromatic hydrocarbons such as benzene, toluene, xylene, chlorobenzene, dichlorobenzene, phenol, and cresol.

The solvent used in the electrolyte solution may be adopted singly or in combinations of a plurality thereof.

An electrolyte may be further used in the electrolyte solution. The electrolyte is a substance which releases ions in the electrolyte solution to enhance electrical conductivity of the electrolyte solution. The electrolyte is not particularly limited, and examples thereof include sulfuric acid, hydrochloric acid, nitric acid, acetic acid, phosphoric acid, sodium hydroxide, potassium hydroxide, calcium hydroxide, and sodium acetate.

The electrolyte used in the electrolyte solution may be adopted singly or in combinations of a plurality thereof.

An additive may be added to the electrolyte solution depending on desired characteristics of the electrolyte solution. The additive is not particularly limited, and examples thereof include ethylene glycol, diethylene glycol, polyethylene glycol, glycerol, mannitol, sorbitol, pentaerythritol, tris(hydroxymethyl)aminomethane, cornstarch, corn

syrup, gelatin, glycerol, guar gum, pectin, and a surfactant.

The additive used in the electrolyte solution may be adopted singly or in combinations of a plurality thereof.

<Electrode>

The electrode used in the cell for a redox flow battery of the present embodiment is not particularly limited, and is preferably a carbon electrode. The carbon electrode preferably has continuous voids and is more preferably a porous body having continuous voids in order to allow the electrolyte solution to flow through. Examples of such a carbon electrode having continuous voids include carbon felt, carbon paper, carbon foam, a carbon cloth, a carbon knit, a carbon nanofiber sheet, and an activated carbon fiber sheet, preferably include carbon felt, carbon paper, and carbon foam. In particular, carbon foam is preferred from the viewpoint that high flexibility and a large surface area can result in a reduction in resistance. The carbon foam preferably has a structure in which a carbon portion is three-dimensionally continuous. The carbon foam can have high flexibility and a high surface area and thus obtain a high power efficiency, and therefore preferably has a linear portion and a binding portion which binds the linear portion.

Specific examples of the carbon felt and the carbon paper include SIGRACELL (registered trademark) KFD series, GFA series, GFD series, SGL series, and SIGRACET (registered trademark) series manufactured by SGL CARBON, carbon felt (for example, XF30A, BW-309) manufactured by Toyobo Co., Ltd., CARBORON (registered trademark) GF series (for example, GF-20, GF-3F) manufactured by Nippon Carbon Co., Ltd., Torayca (trademark) TGP series manufactured by Toray Industries, Inc., PYROFIL (trademark) series and GRAFIL (trademark) series manufactured by Mitsubishi Chemical Corporation, VGCF (registered trademark) sheet manufactured by Showa Denko K.K., and carbon felt and graphite felt manufactured by MERSEN. These may be each, if necessary, subjected to activation treatment such as oxidation.

The carbon foam can be produced by any known method (International Publication No. WO 2018/096895, International Publication No. WO 2018/168741, International Publication No. WO 2020/045645).

The first electrode and the second electrode may be each a single electrode, or may be different electrodes, and each single electrode or a combination of a plurality of electrodes may be used in the first electrode and/or the second electrode.

<Separation membrane>

In the present embodiment, the separation membrane is a membrane located between the first electrolyte solution and the second electrolyte solution, and includes at least a first cation-exchangeable resin layer and an anion-exchangeable resin layer, in which the equivalent weight of the separation membrane is 1150 g/eq or less, the thickness of the anion-exchangeable resin layer is 0.001 μm or more and less than 5 μm, and the anion-exchangeable resin layer of the separation membrane is located facing the electrode acting as the negative electrode in the cell for a redox flow battery.

The equivalent weight of the separation membrane is not particularly limited, and is preferably 1150 g/eq or less, more preferably 1100 g/eq or less because there is a tendency of a reduction in proton movement resistance and an enhancement in power efficiency. The equivalent weight is more preferably 1050 g/eq or less, particularly preferably 1030 g/eq or less, further particularly preferably 1000 g/eq or less because the separation membrane tends to be enhanced in affinity. The equivalent weight is preferably 500 g/eq or more, more preferably 700 g/eq or more because the separation membrane tends to be enhanced in solubility in the electrolyte solutions. The equivalent weight is further preferably 800 g/eq or more, particularly preferably 880 g/eq or more because the separation membrane tends to be enhanced in mechanical strength against pulsation of the electrolyte solutions, contact thereof with the electrodes, and/or the like.

The equivalent weight refers to a dry mass in grams of an ion-exchangeable resin as a resin having ion-exchange ability, per equivalent of an ion-exchange group having ion-exchange ability in the ion-exchangeable resin, and the equivalent weight of the first cation-exchangeable resin layer is a dry mass in grams of the first cation-exchangeable resin layer, per equivalent of an ion-exchange group in the first cation-exchangeable resin layer. Hereinafter, the expression "equivalent weight" is appropriately used in the present embodiment. A method used in measurement of the equivalent weight can be a method in which the ion-exchangeable resin is substituted with a salt and its solution is back titrated with an alkaline solution. The equivalent weight can be appropriately adjusted by selecting the ratio of copolymerization of a monomer as a starting material of the cation-exchangeable resin, the type of the monomer, and the like.

The anion-exchangeable resin layer included in the separation membrane in the present embodiment is preferably located facing the electrode acting as the negative electrode, preferably located closer to the electrode. The "closer to" means that the distance of the anion-exchangeable resin layer from the electrode acting as the negative electrode is smaller than the distance of that from the electrode acting as the positive electrode. The present inventors have found in the present application that the anion-exchangeable resin layer is located facing the electrode acting as the negative electrode to surprisingly result in an enhancement in power efficiency. The reason for an enhancement in power efficiency, although not clear, is presumed as follows: the amount of the redox active material moved from the positive

electrode to the negative electrode and the amount of the redox active material moved from the negative electrode to the positive electrode are different, and thereby the anion-exchangeable resin layer more effectively functions to any of the redox active materials that moved more. It is presumed that the influence by the anion-exchangeable resin layer located facing the electrode acting as the negative electrode is provided and therefore an effective action is made on the amount of the redox active material moved from the negative electrode to the positive electrode.

The distance $D_{neg}$ between the anion-exchangeable resin layer of the separation membrane and the electrode acting as the negative electrode, and the distance $D_{pos}$ between the anion-exchangeable resin layer of the separation membrane and the electrode acting as the positive electrode preferably exhibit the following relationship:

$$D_{neg}/D_{pos} < 1$$

wherein the distance $D_{neg}$ means the distance from a face of the anion-exchangeable resin layer, the face being closest to the negative electrode, toward the closest surface of the negative electrode. The distance $D_{pos}$ means the distance from a face of the anion-exchangeable resin layer, the face being closest to the positive electrode, toward the closest surface of the positive electrode.

The $D_{neg}/D_{pos}$ is preferably 0.8 or less, more preferably 0.7 or less, further preferably 0.6 or less, more preferably 0.5 or less, from the viewpoint of a more enhancement in power efficiency. The lower limit of the $D_{neg}/D_{pos}$ is not particularly limited, and may be, for example, 0 or more. In other words, the anion-exchangeable resin layer and the negative electrode may be contacted.

The first cation-exchangeable resin layer is preferably located closer to the electrode acting as the positive electrode than the anion-exchangeable resin layer from the viewpoint of a more enhancement in power efficiency.

<First cation-exchangeable resin layer>

The first cation-exchangeable resin layer is a layer formed with a substance containing a resin (hereinafter, also referred to as "cation-exchangeable resin") having ion-exchange ability with a cation (hereinafter, also referred to as "positive ion").

The cation-exchangeable resin is not particularly limited, and examples thereof include a hydrocarbon-based resin and a fluororesin. A hydrocarbon-based resin is preferred from the viewpoint of suppression of the production cost of the cell for a redox flow battery, and a fluororesin is preferred from the viewpoint of an enhancement in durability of the cell for a redox flow battery.

The hydrocarbon-based resin and the fluororesin may be each used singly or in combinations of two or more kinds thereof.

The functional group having ion-exchange ability contained in the cation-exchangeable resin is not particularly limited, and examples thereof include a sulfo group ($SO_3H$), a carboxyl group ($CO_2H$), a phenolic hydroxyl group (OH), a phosphoric acid group ($PO_3H_2$), a thiol group (SH), and such a functional group in which hydrogen is an alkali metal, an alkaline earth metal, or an transition metal.

The functional group having ion-exchange ability may be used singly, or in combinations of a plurality of such functional groups.

Among such functional groups having ion-exchange ability, a sulfo group, a carboxyl group, and/or a phosphoric acid group are/is preferred, a sulfo group and/or a carboxyl group are/is more preferred, and a sulfo group is particularly preferred, because the ion-exchange ability tends to be excellent.

The hydrocarbon-based resin is not particularly limited, and examples thereof include a resin which is, for example, polystyrene, polyphenylene ether, polybenzimidazole, polyetheretherketone, polyimide, polyetherimide, polyaryletherketone, polysulfone, polyether sulfone, polyphenylene sulfide, or polyphenylsulfone, and which has the functional group having ion-exchange ability. The resin, which depends on required physical properties, may be crosslinked, may be a copolymer, or may have various substituents (for example, halogen atoms such as a fluorine atom, a chlorine atom, and a bromine atom; nitrile groups, aliphatic hydrocarbon groups such as a methyl group, an ethyl group, a vinyl group, an allyl group, a 1-methylvinyl group, a n-propyl group, an iso-propyl group, a n-butyl group, an iso-butyl group, a sec-butyl group, and a tert-butyl group; aromatic hydrocarbon groups such as a benzyl group, a phenyl group, and a nitrile-substituted phenyl group; an amino group; a nitro group; a hydroxyl group; and a silyl group).

The hydrocarbon-based resin may be used singly or in combinations of a plurality thereof.

The fluororesin is not particularly limited, and examples thereof include a partially fluorinated resin and a fully fluorinated resin each having the functional group having ion-exchange ability. A resin in which not all hydrogen atoms, but at least one hydrogen atom, among hydrogen atoms on carbon atoms contained in the hydrocarbon-based cation-exchangeable resin is replaced with a fluorine atom, and a resin in which all such hydrogen atoms on carbon atoms are replaced with fluorine atoms are respectively exemplified as the partially fluorinated resin and the fully fluorinated resin.

The fluororesin is preferably a fluororesin (hereinafter, also referred to as "fluororesin G1") having the structural unit represented by the general formula G1, from the viewpoint that the cell for a redox flow battery tends to be enhanced in durability:

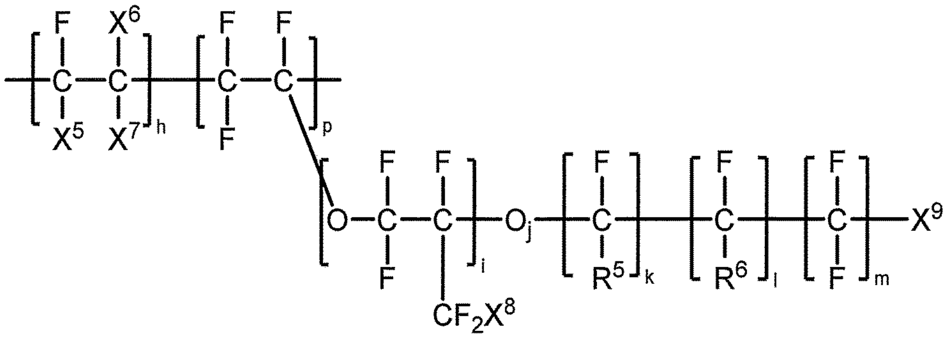

[G 1]

wherein the definition of each substituent has the same meaning as in the general formula G1 described above.

The equivalent weight of the first cation-exchangeable resin layer is not particularly limited, and is preferably less than 1100 g/eq, more preferably 1050 g/eq or less, because there is a tendency of a reduction in proton movement resistance and an enhancement in power efficiency. Furthermore, the equivalent weight is more preferably 1030 g/eq or less, particularly preferably 1000 or less because the first cation-exchangeable resin layer tends to be enhanced in affinity. The equivalent weight is preferably 500 g/eq or more, more preferably 700 g/eq or more, because there is a tendency of an enhancement in solubility in the electrolyte solutions. Furthermore, the equivalent weight is further preferably 800 g/eq or more, particularly preferably 880 g/eq or more because enhancement in mechanical strength against pulsation of the electrolyte solutions, contact thereof with the electrodes, and/or the like is likely to be achieved.

The thickness of the first cation-exchangeable resin layer is not particularly limited, and is preferably 1 μm or more and 150 μm or less. The thickness is more preferably 100 μm or less, further preferably 80 μm or less, particularly preferably 60 μm or less, because there is a tendency of a reduction in proton movement resistance and an enhancement in power efficiency. The thickness is more preferably 5 μm or more, further preferably 10 μm or more, particularly preferably 20 μm or more, further particularly preferably 25 μm or more, because enhancement in mechanical strength against pulsation of the electrolyte solutions, contact thereof with the electrodes, and/or the like is likely to be achieved.

The content of the cation-exchangeable resin in the first ion-exchangeable resin layer is preferably 70% by mass or more, more preferably 80% by mass or more, further preferably 90% by mass or more. The upper limit of the content of a positive ion-exchange resin is not particularly restricted, and is preferably 100% by mass or less in the first ion-exchangeable resin layer. The content is more preferably 99.5% by mass or less, further preferably 99% by mass or less because the cost for removal of a substance different from the cation-exchangeable resin in the first ion-exchangeable resin layer tends to be able to be suppressed and the cost for a cell for a battery for redox flow tends to be able to be suppressed.

The method for producing the first cation-exchangeable resin layer used in the separation membrane of the present embodiment is not particularly limited, and the first cation-exchangeable resin layer can be obtained by processing the cation-exchangeable resin into a film, or by processing a cation-exchangeable resin precursor having the functional group having ion-exchange ability, into a film, by hydrolysis, and performing the above hydrolysis treatment and acid treatment. Examples include a method in which the cation-exchangeable resin is melt-kneaded and then extruded with an extruder by a nozzle, a die, or the like, and thus processed into a film. Examples also include a method in which the cation-exchangeable resin precursor is melt-kneaded and then extruded with an extruder by a nozzle, a die, or the like, to form a film, and then the hydrolysis treatment and acid treatment are performed to form an ion-exchange group. The cation-exchangeable resin may be dispersed in a solvent and then cast on the substrate, and thus processed into a film.

The method for producing the fluororesin G1 is as described above.

<Anion-exchangeable resin layer>

The anion-exchangeable resin layer is a layer including an anion-exchangeable compound. The anion-exchangeable compound is a compound having a functional group and a molecule structure each containing a nitrogen atom, such as a primary amino group, a secondary amino group, a tertiary amino group, a quaternary ammonium group, a pyridine ring structure, and a derivative structure thereof, a pyridinium group, an imidazole ring structure, and a derivative structure thereof, an imidazolium group, a pyrrole ring structure, and a derivative structure thereof, and is a compound which is positively charged at least under an acidic condition.

The separation membrane of the present embodiment has the anion-exchangeable resin layer, and thus not only

electrostatic repulsion against a cation in the electrolyte solution can be imparted to the separation membrane and a redox active material high in charge density can be inhibited from permeating through the separation membrane, but also a proton low in charge density can be allowed to permeate through the separation membrane and the power efficiency can be enhanced.

The anion-exchangeable compound is not particularly limited, and examples thereof include anion-exchangeable polymers such as a polyvinylpyridine polymer, and a salt thereof, a vinylpyridine/divinylbenzene copolymer, and a salt thereof, a vinylpyridine/styrene copolymer, and a salt thereof, polyethyleneimine, and a salt thereof, a vinylbenzyltrimethylammonium chloride polymer, a polyvinylimidazole polymer, and a salt thereof, a vinylimidazole/divinylbenzene copolymer, and a salt thereof, a vinylimidazole/styrene copolymer, and a salt thereof, a polyvinylpyrrolidone polymer, and a salt thereof, polybenzimidazole, and a salt thereof, a polymer having a benzimidazole structure, and a salt thereof, polypyrrole, and a salt thereof, polyaniline, poly(4-aminostyrene), and a salt thereof, and poly(vinylcarbazole), and a salt thereof, quaternary ammonium compounds each having a quaternary ammonium group, such as tetrabutylammonium and octyltrimethylammonium, a pyridinium compound having a pyridinium structure such as butylpyridinium, and a derivative thereof, trimethylamine, and a salt thereof, triethylamine, and a salt thereof, tributylamine, and a salt thereof, triethanolamine, and a salt thereof, pyrrole, and a salt thereof, a pyrrole derivative, and a salt thereof, 1,8-diazabicyclo[5.4.0]undecene-7, and a salt thereof, 1,5-diazabicyclo[4.3.0]nonene-5, and a salt thereof, 1,4-diazabicyclo[2.2.2]octane, and a salt thereof, 1-azabicyclo[2.2.2.]octane, and a salt thereof, N,N,N',N'-tetramethylbutanediamine, and a salt thereof, ethylenediamine, N,N-dimethylethylenediamine, N-methylethylenediamine, N,N-dibutylethylenediamine, N,N-dimethyldipropylenetriamine, 1-(3-aminopropyl)imidazole, 4-(2-aminoethyl)pyridine, 4-picolylamine, 4-aminopyridine, 1,2,3-triaminobenzene, hexamethylenetetramine, imidazole, oxazole, thiazole, pyrazole, aminobenzimidazole, 4-aminopiperidine, tetrafluoro-p-phenylenediamine, hexamethylenediamine, 4,4'-diaminodiphenyl ether, and 4-benzylpyridine.

The anion-exchangeable compound may be an anion-exchangeable fluororesin represented by the following general formula B17, and a saponified product thereof, or a salt thereof:

$$-[CFX^1CX^2X^3]_a-[CF_2-CF((-O-CF_2-(CF(CF_2X^4)))_b-O_c-(CFR^1)_d-(CFR^2)_e-(CF_2)_f-Ae)]_g- \quad [B17]$$

wherein $X^1$, $X^2$, $X^3$ and $X^4$ are each optionally the same or different, and are each a halogen atom, or a perfluoroalkyl group having 1 to 10 carbon atoms or a cyclic perfluoroalkyl group, the group being optionally substituted or unsubstituted, the halogen atom is a fluorine atom, a chlorine atom, a bromine atom, or an iodine atom, and $X^1$ and $X^2$ or $X^1$ and $X^3$ optionally form a cyclic structure; $R^1$ and $R^2$ are each optionally the same or different and are each a hydrogen atom, a halogen atom, or a perfluoroalkyl group having 1 to 10 carbon atoms or a fluorochloroalkyl group, the group being optionally substituted or unsubstituted, the halogen atom is a fluorine atom, a chlorine atom, a bromine atom, or an iodine atom; Ae is a monovalent group represented by formula $-CONX^6Ax$ or $-SO_2NX^6Ax$, $X^6$ is a hydrogen atom, an alkali metal atom, an alkaline earth metal atom, or an aliphatic hydrocarbon group having 1 to 10 carbon atoms or an aromatic hydrocarbon group, the group being optionally substituted or unsubstituted, Ax is an aliphatic hydrocarbon group having 1 to 20 carbon atoms, an aromatic hydrocarbon group, or a heteroaromatic group, the group containing at least one nitrogen atom and being optionally substituted or unsubstituted; a and g each represent a molar ratio in the total constituent unit contained in the resin, and are numbers satisfying $0 \leq a < 1$, $0 < g \leq 1$, and $a + g = 1$; b is an integer of 0 to 8; c is 0 or 1; and d, e, and f are each optionally the same or different and are each an integer of 0 to 6 (provided that, when d, e, and f are 0 at the same time, Ae is $-CF(CF_2Az)_2$, Az is a monovalent group represented by formula $-CONX^6Ax$ or $-SO_2NX^6Ax$, and Ax and $X^6$ have the same meanings as described above).

The anion-exchangeable compound may be used singly or in combinations of a plurality thereof.

The substituent in the case of "substituted" is the same as the substituent exemplified with respect to the general formula 1.

The anion-exchangeable compound is preferably at least one anion-exchangeable compound selected from the group consisting of a polyvinylpyridine polymer, and a salt thereof, a vinylpyridine/divinylbenzene copolymer, and a salt thereof, a vinylpyridine/styrene copolymer, and a salt thereof, polyethyleneimine, and a salt thereof, a vinylbenzyltrimethylammonium chloride polymer, a polyvinylimidazole polymer, and a salt thereof, a vinylimidazole/divinylbenzene copolymer, and a salt thereof, a vinylimidazole/styrene copolymer, and a salt thereof, a polyvinylpyrrolidone polymer, and a salt thereof, polybenzimidazole, and a salt thereof, a polymer having a benzimidazole structure, and a salt thereof, polypyrrole, and a salt thereof, polyaniline, poly(4-aminostyrene), and a salt thereof, poly(vinylcarbazole), and a salt thereof, and the anion-exchangeable fluororesin represented by the general formula B17, and a saponified product thereof, or a salt thereof, more preferably at least one anion-exchangeable compound selected from the group consisting of a polyvinylpyridine polymer, and a salt thereof, a vinylpyridine/divinylbenzene copolymer, and a salt thereof, a vinylpyridine/styrene copolymer, and a salt thereof, a polyvinylimidazole polymer, and a salt thereof, a vinylimidazole/divinylbenzene copolymer, and a salt thereof, a vinylimidazole/styrene copolymer, and a salt thereof, polybenzimidazole, and a salt thereof, a polymer having a benzimidazole structure, and a salt thereof, and the anion-exchangeable fluororesin

represented by the general formula B17, because there is a tendency of suppression of dissolution in the electrolyte solution and an enhancement in durability of the cell for a redox flow battery. The anion-exchangeable compound is further preferably at least one anion-exchangeable compound selected from the group consisting of a polyvinylpyridine polymer, and a salt thereof, a polyvinylimidazole polymer, and a salt thereof, polybenzimidazole, and a salt thereof, a polymer having a benzimidazole structure, and a salt thereof, and the anion-exchangeable fluororesin represented by the general formula B17, particularly preferably at least one anion-exchangeable compound selected from the group consisting of a polyvinylpyridine polymer, and a salt thereof, a polyvinylimidazole polymer, and a salt thereof, and the anion-exchangeable fluororesin represented by the general formula B17, because there is a tendency of an increase in electrostatic repulsion of the anion-exchangeable resin layer against a cation and an enhancement in power efficiency of the cell for a redox flow battery.

The saponified product of the anion-exchangeable fluororesin represented by the general formula B17 is a saponified product obtained by reaction of the anion-exchangeable fluororesin and an alkaline substance. Examples of a basic substance include amine compounds such as dimethylamine, diethylamine, monomethylamine and monoethylamine, and alkali metal hydroxides and alkaline earth metal hydroxides, such as sodium hydroxide and potassium hydroxide. In particular, sodium hydroxide or potassium hydroxide is preferred.

The salt of the anion-exchangeable fluororesin is a salt of the anion-exchangeable fluororesin and an acidic substance. Examples of the acidic substance include mineral acids such as hydrochloric acid, sulfuric acid and nitric acid, and organic acids such as oxalic acid, acetic acid, formic acid and trifluoroacetic acid.

The anion-exchangeable fluororesin represented by the general formula B17, which can be utilized in the anion-exchangeable compound, preferably includes a constituent unit represented by the following general formula B16, and at least one selected from the group consisting of a constituent unit represented by the following general formula B18, a constituent unit represented by the following general formula B19, and a constituent unit represented by the following general formula B20, from the viewpoint that the anion-exchangeable fluororesin tends to be enhanced in chemical stability such as oxidation degradation resistance and from the viewpoint that the production cost of the anion-exchangeable fluororesin tends to be able to be suppressed and the production cost of the cell for a redox flow battery tends to be able to be suppressed:

$$-(CF_2\text{-}CF_2)- \qquad [B16]$$

$$-(CF_2\text{-}CF(\text{-}O\text{-}(CF_2CFXO)_N\text{-}Ag))- \qquad [B18]$$

wherein X represents F, or a perfluoroalkyl group having 1 to 3 carbon atoms, and Ag represents $(CF_2)_M\text{-}SO_2NX^6Ax$ ($X^6$ is a hydrogen atom, an alkali metal atom, an alkaline earth metal atom, or an aliphatic hydrocarbon group having 1 to 10 carbon atoms or an aromatic hydrocarbon group, the group being optionally substituted or unsubstituted, and Ax is an aliphatic hydrocarbon group having 1 to 20 carbon atoms, an aromatic hydrocarbon group, or a heteroaromatic group, the group having at least one nitrogen atom and being optionally substituted or unsubstituted, N represents an integer of 0 to 5, and M represents an integer of 0 to 6, provided that N and M are not 0 at the same time.),

$$-(CF_2\text{-}CF(\text{-}O\text{-}(CF_2)_P\text{-}CFX(\text{-}O\text{-}(CF_2)_K\text{-}SO_2NX^6Ax)))- \qquad [B19]$$

wherein X represents a perfluoroalkyl group having 1 to 3 carbon atoms, $X^6$ is a hydrogen atom, an alkali metal atom, an alkaline earth metal atom, or an aliphatic hydrocarbon group having 1 to 10 carbon atoms or an aromatic hydrocarbon group, the group being optionally substituted or unsubstituted, and Ax is an aliphatic hydrocarbon group having 1 to 20 carbon atoms, an aromatic hydrocarbon group, or a heteroaromatic group, the group having at least one nitrogen atom and being optionally substituted or unsubstituted; and P represents an integer of 0 to 12, and K represents an integer of 1 to 5, provided that P and K are not 0 at the same time,

$$-(CF_2\text{-}CF(\text{-}O\text{-}(CF_2)_Q\text{-}CFX(\text{-}(CF_2)_L\text{-}O\text{-}(CF_2)_O\text{-}SO_2NX^6Ax)))- \qquad [B20]$$

wherein X represents a perfluoroalkyl group having 1 to 3 carbon atoms, $X^6$ is a hydrogen atom, an alkali metal atom, an alkaline earth metal atom, or an aliphatic hydrocarbon group having 1 to 10 carbon atoms or an aromatic hydrocarbon group, the group being optionally substituted or unsubstituted, and Ax is an aliphatic hydrocarbon group having 1 to 20 carbon atoms, an aromatic hydrocarbon group, or a heteroaromatic group, the group having at least one nitrogen atom and being optionally substituted or unsubstituted; and Q represents an integer of 0 to 12, L represents an integer of 1 to 5, and o represents an integer of 0 to 6, provided that Q and O are not 0 at the same time.

The anion-exchangeable fluororesin more preferably includes the constituent unit represented by the general formula B16, and at least one selected from the group consisting of the constituent unit represented by the general formula B18, the constituent unit represented by the general formula B19, and the constituent unit represented by the general

formula B20, further preferably contains the constituent unit represented by the general formula B16 and the constituent unit represented by the general formula B18 (provided that X is F, or a trifluoromethyl group, n is an integer of 0 to 2, and m is an integer of 1 to 4.) from the same viewpoint, particularly preferably includes the constituent unit represented by the general formula B16 and the constituent unit represented by the general formula B18 (provided that X is F, or a trifluoromethyl group, n is 0 or 1, and m is an integer of 2 to 4.).

The anion-exchangeable fluororesin more preferably has a structural unit represented by the following general formula B21, further preferably has a structural unit represented by the following general formula B22:

$$-[CF_2CF_2]_a-[CF_2-CF((-O-CF_2-(CF(CF_3)))_b-O-(CF_2)_2-SO_2NX^6Ax)]_g- \quad [B21]$$

wherein $X^6$ is a hydrogen atom, an alkali metal atom, an alkaline earth metal atom, a substituted or unsubstituted aliphatic hydrocarbon group having 1 to 10 carbon atoms, or a substituted or unsubstituted aromatic hydrocarbon group having 6 to 10 carbon atoms, Ax is an aliphatic hydrocarbon group having 1 to 20 carbon atoms, an aromatic hydrocarbon group, or a heteroaromatic group, the group having at least one nitrogen atom and being optionally substituted or unsubstituted, a and g each represent a molar ratio in the total constituent unit contained in the resin, and are numbers satisfying $0 \leq a$ **< 1,** $0 < g \leq 1$, and a + g = 1, and b is 0 or 1,

$$-[CF_2CF_2]_a-[CF_2-CF((-O-CF_2-(CF(CF_3)))-O-(CF_2)_2-SO_2NX^6Ax)]_g- \quad [B22]$$

wherein $X^6$ is a hydrogen atom, an alkali metal atom, an alkaline earth metal atom, or an aliphatic hydrocarbon group having 1 to 10 carbon atoms or an aromatic hydrocarbon group, the group being optionally substituted or unsubstituted, Ax is an aliphatic hydrocarbon group having 1 to 20 carbon atoms, an aromatic hydrocarbon group, or a heteroaromatic group, the group having at least one nitrogen atom and being optionally substituted or unsubstituted, and a and g each represent a molar ratio in the total constituent unit contained in the resin, and are numbers satisfying $0 \leq a < 1$, $0 < g \leq 1$, and a + g = 1.

In the general formulae B17 to B22, $X^6$ is preferably a hydrogen atom, or an aliphatic hydrocarbon group having 1 to 10 carbon atoms, the group being optionally substituted or unsubstituted, because production of the anion-exchangeable fluororesin tends to be simplified and the production cost of the cell for a redox flow battery tends to be able to be suppressed. A hydrogen atom is further preferred from the viewpoint that the production cost of the anion-exchangeable fluororesin can be more suppressed, and an unsubstituted aliphatic hydrocarbon group having 1 to 2 carbon atoms is further preferred from the viewpoint of an enhancement in stability of the anion-exchangeable fluororesin under an alkaline condition.

In the general formulae B17 to B22, Ax is preferably an unsubstituted aliphatic hydrocarbon group having 1 to 20 carbon atoms, an aromatic hydrocarbon group or a heteroaromatic group, the group containing at least one nitrogen atom, more preferably an unsubstituted aliphatic hydrocarbon group having 1 to 10 carbon atoms, or a heteroaromatic group, the group containing at least one nitrogen atom, because the cost of a starting material tends to be reduced and the production cost of the cell for a redox flow battery tends to be able to be suppressed. More specific examples of the nitrogen atom structure contained in Ax preferably include a primary amino group, a secondary amino group, a tertiary amino group, a pyridine ring structure, and a derivative structure thereof, a pyridinium group, an imidazole ring structure, and a derivative structure thereof, an imidazolium group, a pyrrole ring structure, and a derivative structure thereof, and more preferred is a tertiary amino group, a pyridine ring structure, and a derivative structure thereof, an imidazole ring structure, and a derivative structure thereof.

The method for producing the anion-exchangeable fluororesin is not particularly limited, and examples include a method in which the fluororesin precursor, and the anion-exchangeable compound (hereinafter, also referred to as "modification compound".) except for the anion-exchangeable fluororesin are reacted.

Examples of the modification compound include a modification compound having at least two nitrogen atom-containing groups, in which the nitrogen atom-containing groups include at least one selected from the group consisting of

a primary amino group,
a secondary amino group,
a tertiary amino group,
an amino salt structure as a reaction product of at least one amino group selected from the group consisting of a primary amino group, a secondary amino group, and a tertiary amino group, and at least one selected from the group consisting of an acidic substance and a halogen atom-containing aliphatic hydrocarbon compound,
a nitrogen atom-containing heterocyclic ring structure,
a salt structure of a nitrogen-containing heterocyclic ring as a reaction product of a nitrogen-containing heterocyclic ring structure and at least one selected from the group consisting of an acidic substance and a halogen atom-containing aliphatic hydrocarbon compound, and
a quaternary ammonium group.

In particular, at least one nitrogen atom-containing group is preferably a primary amino group or a secondary amino group, more preferably a primary amino group because reactivity with the fluororesin precursor tends to be enhanced. Herein, the quaternary ammonium group is a quaternary ammonium group different from the amino salt structure and the salt structure.

More specific examples of the modification compound include ethylenediamine, N-methylethylenediamine, N-ethylethylenediamine, N,N-dimethylethylenediamine, N,N'-dimethylethylenediamine, N,N,N'-trimethylethylenediamine, N-benzylethylenediamine, N,N-dibutylethylenediamine, 1,2-diphenylethylenediamine, N,N'-dicyclohexyl-1,2-ethylenediamine, N,N-dimethyl-1,3-propanediamine, N,N-dimethyldipropylenetriamine, N,N-dibutyldipropylenetriamine, N,N-diethyl-1,3-propanediamine, N,N-dimethyl-1,4-butanediamine, N,N-diethyl-1,4-butanediamine, N,N-dimethyl-1,6-hexanediamine, N,N-dimethyl-1,4-cyclohexanediamine, 3-aminopiperidine, isophoronediamine, 4-(aminomethyl)piperidine, 3-aminopyrrolidine, 4-aminopiperidine, 3-aminopyrrolidine, N,N-dimethyltrimethylenediamine, N,N-dibutyltrimethylenediamine, 1-(3-aminopropyl)imidazole, 4-(2-aminoethyl)pyridine, 4-picolylamine, isonicotinamide, 4-(ethylaminomethyl) pyridine, 4-(4-piperidyl)pyridine, 2-methyltryptamine, 5-methoxytryptamine, 6-methoxytryptamine, necrostatin-1, alosetron, sulfamethoxypyridazine, 1-(3-chloroanilino)-4-phenylphthalazine, 4-amino-5-aminomethyl-2-methylpyrimidine, 2-(aminomethyl)-5-methylpyrazine, 2-(4-piperidinyl) benzimidazole, 2-(4-aminophenyl)benzimidazole, 5-amino-2-(4-aminophenyl)benzimidazole, 6-(aminomethyl)quinoline, 2-methyl-7-[phenyl(phenylamino)methyl]-8-quinolinol, and 1-(2-amino-1-naphthyl)isoquinoline.

The modification compound may be used singly or in combinations of a plurality thereof.

The modification compound is preferably ethylenediamine, N-methylethylenediamine, N,N-dimethylethylenediamine, N,N-diethylethylenediamine, N,N-dibutylethylenediamine, N,N-dimethyl-1,3-propanediamine, N,N-dimethyldipropylenetriamine, N,N-dibutyldipropylenetriamine, N,N-dimethyl-1,4-butanediamine, N,N-dimethyl-1,6-hexanediamine, N,N-dimethyltrimethylenediamine, N,N-dibutyltrimethylenediamine, 1-(3-aminopropyl)imidazole, 4-(2-aminoethyl)pyridine, 4-picolylamine, isonicotinamide, 4-(ethylaminomethyl)pyridine, 4-(2-aminoethyl)pyridine, 4-(4-piperidyl)pyridine, 2-(4-piperidinyl) benzimidazole, 2-(4-aminophenyl)benzimidazole, or 5-amino-2-(4-aminophenyl)benzimidazole because a starting material is easily available and the production cost of the anion-exchangeable fluororesin tends to be suppressed, more preferably N,N-dimethylethylenediamine, N,N-diethylethylenediamine, N,N-dibutylethylenediamine, N,N-dimethyl-1,3-propanediamine, N,N-dimethyldipropylenetriamine, N,N-dibutyldipropylenetriamine, N,N-dimethyl-1,4-butanediamine, N,N-dimethyl-1,6-hexanediamine, N,N-dimethyltrimethylenediamine, 1-(3-aminopropyl)imidazole, 4-(2-aminoethyl)pyridine, 4-picolylamine, isonicotinamide, 4-(4-piperidyl)pyridine, or 2-(4-aminophenyl)benzimidazole because excellent current efficiency, voltage efficiency and power efficiency tend to be achieved in a well-balanced manner in use for the cell for a redox flow battery, and the redox flow battery, and is further preferably N,N-dimethylethylenediamine, N,N-dibutylethylenediamine, N,N-dimethyldipropylenetriamine, N,N-dimethyltrimethylenediamine, 1-(3-aminopropyl)imidazole, 4-picolylamine, or 4-(2-aminoethyl)pyridine from the same viewpoint.

The anion-exchangeable resin layer is preferably a styrene resin, a vinyl chloride resin, chlorinated polyethylene, a polyamide resin, a polyphenylene ether/polystyrene resin, a polyetheretherketone resin, a polysulfone resin, a polyether sulfone resin, a high-density polyethylene resin, a low-density polyethylene resin, a linear low-density polyethylene resin, a polyphenylene ether resin, a polyphenylene sulfide resin, a syndiotactic polystyrene resin, polyetherimide, a siloxane-modified polyetherimide resin, a polyamide imide resin, a cycloolefin-based resin, a cycloolefin copolymer, a polyetherketoneetherketoneketone resin, a polyaryletherketone resin, or a fluororesin, and may further include a styrene resin, a vinyl chloride resin, chlorinated polyethylene, a polyamide resin, a polyphenylene ether/polystyrene resin, a high-density polyethylene resin, a low-density polyethylene resin, a linear low-density polyethylene resin, a syndiotactic polystyrene resin, a cycloolefin-based resin, a cycloolefin copolymer, and a fluororesin represented by the general formula G1.

The resin which may be included in the anion-exchangeable resin layer may be used singly or in combinations of a plurality thereof.

A fluororesin is preferred from the viewpoint that the cell for a redox flow battery tends to be enhanced in durability.

The content of the anion-exchangeable compound included in the anion-exchangeable resin layer is not particularly limited, and is preferably 70% by mass or more, more preferably 80% by mass or more, further preferably 90% by mass or more, from the viewpoint that there is an increased tendency of suppression of permeation of the redox active material through the separation membrane. The upper limit of the content of the anion-exchangeable compound included in the anion-exchangeable resin layer is not particularly set, and is preferably 100% by mass or less. The upper limit is more preferably 99.9% by mass or less, more preferably 99.5% by mass or less, further preferably 99% by mass or less in a case where availability is increased and the cost of formation of the anion-exchangeable resin layer is reduced.

In a case where the anion-exchangeable resin layer includes the anion-exchangeable compound and a fluororesin, the content of the anion-exchangeable compound included in the anion-exchangeable resin layer is not particularly limited, and is preferably 1% by mass or more, more preferably 5% by mass or more, further preferably 10% by mass or more, particularly preferably 15% by mass or more, from the viewpoint that there is an increased tendency of suppression of permeation of the redox active material through the separation membrane. The content is preferably 99% by mass or less, more preferably 90% by mass or less, further preferably 80% by mass or less, particularly preferably 70%

by mass or less from the viewpoint that the anion-exchangeable resin layer tends to be enhanced in durability.

The thickness of the anion-exchangeable resin layer is 0.001 μm or more and less than 5 μm. The thickness is preferably 4 μm or less, more preferably 3 μm or less, further particularly preferably 1.5 μm or less because there is a tendency of a reduction in proton movement resistance and an enhancement in power efficiency. The thickness is preferably 0.01 μm or more, more preferably 0.02 μm or more, particularly preferably 0.04 μm or more because there is a tendency of suppression of permeation of the redox active material through the separation membrane and an enhancement in power efficiency. The thickness is further preferably 0.1 μm or more, particularly preferably 0.3 μm or more, further particularly preferably 0.4 μm or more, because enhancement in mechanical strength against pulsation of the electrolyte solutions, contact thereof with the electrodes, and/or the like is likely to be achieved.

In the method for producing the separation membrane including at least the first cation-exchangeable resin layer and the anion-exchangeable resin layer of the present embodiment, the separation membrane can be produced by a process including a step of forming the first cation-exchangeable resin layer and a step of forming the anion-exchangeable resin layer.

The method for producing the separation membrane of the present embodiment preferably includes

- a step of reacting
    - a fluororesin precursor layer serving as a precursor of the first cation-exchangeable resin layer, and containing at least one selected from the group consisting of a sulfonyl halide group, an acyl halide group, and a halogenated phosphoric acid group, with
    - a modification compound having at least two nitrogen atom-containing groups, in which the nitrogen atom-containing groups include at least one selected from the group consisting of
        - a primary amino group,
        - a secondary amino group,
        - a tertiary amino group,
        - an amino salt structure as a reaction product of at least one amino group selected from the group consisting of a primary amino group, a secondary amino group, and a tertiary amino group, and at least one selected from the group consisting of an acidic substance and a halogen atom-containing aliphatic hydrocarbon compound,
        - a nitrogen atom-containing heterocyclic ring structure,
        - a salt structure of a nitrogen-containing heterocyclic ring as a reaction product of a nitrogen-containing heterocyclic ring structure and at least one selected from the group consisting of an acidic substance and a halogen atom-containing aliphatic hydrocarbon compound, and
        - a quaternary ammonium group, and
- a step of converting at least one selected from the group consisting of the sulfonyl halide group, the acyl halide group, and the halogenated phosphoric acid group contained in the fluororesin precursor layer, into at least one selected from the group consisting of a sulfo group, a carboxyl group, and a phosphoric acid group, after the above step. Herein, the quaternary ammonium group is a quaternary ammonium group different from the amino salt structure and the salt structure.

The fluororesin precursor layer is a layer serving as a precursor of the first cation-exchangeable resin layer, and is a layer containing at least one selected from the group consisting of a sulfonyl halide group, an acyl halide group, and a halogenated phosphoric acid group.

The method for producing the anion-exchangeable resin layer is not particularly limited, and examples include a method in which the anion-exchangeable compound or a mixture containing the anion-exchangeable compound is formed into a molten state, and extruded by a nozzle, a die, or the like with an extruder and thus processed into a film, and a method in which the anion-exchangeable compound or a mixture containing the anion-exchangeable compound is formed into a solution state, applied to a substrate by a die, a gravure roll, a knife or spraying and dried, and thus processed into a film.

The separation membrane can be produced by forming the anion-exchangeable resin layer and then stacking the anion-exchangeable resin layer and the first cation-exchangeable resin layer. The stacking method is not particularly limited, and examples include a stacking method with heat press and/or heat roll press.

The separation membrane can also be produced by melt-kneading the fluororesin precursor and extruding it with an extruder by a nozzle, a die, or the like, to process the resultant into a film, then contacting the film with a mixture containing the modification compound, to form a layer including the anion-exchangeable fluororesin, and thereafter performing hydrolysis to provide a fluororesin, thereby forming a layer including a fluororesin, serving as the first cation-exchangeable resin layer, and a layer including the anion-exchangeable fluororesin, serving as the anion-exchangeable

resin layer.

When the separation membrane is produced, a substrate can also be used. The substrate can be used to sometimes more stably produce the first cation-exchangeable resin layer and/or the anion-exchangeable resin layer.

The material used in the substrate is not particularly limited, and examples include polyethylene, polypropylene, polyethylene terephthalate, polybutylene terephthalate, a cycloolefin polymer, polycarbonate, polyamide, polyimide, polyamide imide, polyvinyl chloride, polystyrene, polyphenylene ether, polyetheretherketone, polysulfone, polyether sulfone, polyphenylene ether, polyphenylene sulfide, polyetherimide, a polyimide resin, polyetherketoneetherketoneketone, and polyaryletherketone.

The material may be, if necessary, modified, and may be used singly or in combinations of a plurality thereof.

The solvent used in formation of the mixture containing the anion-exchangeable compound into a solution is not particularly limited, and examples include saturated hydrocarbon compounds such as n-pentane, n-hexane, n-octane, n-decane, cyclopentane, cyclohexane and cyclooctane; aromatic hydrocarbon compounds such as benzene, toluene, xylene and ethylbenzene; halogenated hydrocarbon compounds such as methylene chloride, chloroform, carbon tetrachloride, chlorobenzene and dichlorobenzene; alcohols such as methanol, ethanol, propanol, isopropanol, butanol, hexanol, cyclohexanol and benzyl alcohol; ketones such as acetone, ethyl methyl ketone, methyl butyl ketone, methyl isobutyl ketone and cyclohexanone; as well as esters such as ethyl acetate, butyl acetate and methyl benzoate; ethers such as diethyl ether, dibutyl ether, tetrahydrofuran, methyltetrahydrofuran and dioxane; polyols such as ethylene glycol, propylene glycol and glycerin, and multimers and polyols of compounds each having two hydroxyl groups, among these polyols; and esterified compounds of these multimers, and nitriles such as acrylonitrile and benzonitrile; nitromethane; N,N-dimethylformamide; dimethylsulfoxide; hexamethylphosphoric triamide; carbon disulfide; and fluorine-based compounds (for example, Novec (trademark) manufactured by 3M, and Asahiklin manufactured by AGC Inc.).

Such a solvent may be adopted singly or in combinations of a plurality thereof.

<Second cation-exchangeable resin layer>

The separation membrane of the present embodiment may further include a second cation-exchangeable resin layer. The separation membrane may include the first cation-exchangeable resin layer, the anion-exchangeable resin layer, and the second cation-exchangeable resin layer in the listed order.

In the separation membrane with the second cation-exchangeable resin layer, the thickness of the first cation-exchangeable resin layer is larger than the thickness of the second cation-exchangeable resin layer. The thickness of the second cation-exchangeable resin layer is not particularly limited as long as it is a value smaller than the thickness of the first cation-exchange layer, and is preferably 0.01 μm or more and less than 150 μm. The thickness is more preferably 100 μm or less, further preferably 50 μm or less, particularly preferably 20 μm or less, because there is a tendency of a reduction in proton movement resistance and an enhancement in power efficiency. The thickness is more preferably 0.1 μm or more, further preferably 0.5 μm or more, particularly preferably 1 μm or more, because the enhancement in mechanical strength against pulsation of the electrolyte solutions, contact thereof with the electrodes, and/or the like is likely to be achieved.

The value obtained by dividing the thickness of the second ion-exchangeable resin layer by the thickness of the first cation-exchangeable resin layer is not particularly limited, and is preferably less than 0.7. The value is more preferably 0.6 or less, further preferably 0.5 or less because the anion-exchangeable resin layer can be located closer to the electrode acting as the negative electrode and there is a tendency of suppression of permeation of the redox active material through the separation membrane and an enhancement in power efficiency. The value obtained by dividing the thickness of the second ion-exchangeable resin layer by the thickness of the first cation-exchangeable resin layer is needed to be more than 0, and is preferably 0.0001 or more from the viewpoint of more simplification of production of the second ion-exchangeable resin layer. The value is more preferably 0.001 or more, particularly preferably 0.01 or more, because enhancement in mechanical strength against pulsation of the electrolyte solutions, contact thereof with the electrodes, and/or the like is likely to be achieved.

The second cation-exchangeable resin layer is a layer formed with a substance containing a cation-exchangeable resin, as in the first cation-exchangeable resin layer. The cation-exchangeable resin used in the second cation-exchangeable resin layer is not particularly limited, and a cation-exchangeable resin preferably used is the same as in the first cation-exchangeable resin layer. The second cation-exchangeable resin layer more preferably includes a fluorine-based cation-exchangeable resin from the viewpoint that the cell for a redox flow battery tends to be enhanced in durability.

The cation-exchangeable resin included in the first cation-exchangeable resin layer and the cation-exchangeable resin included in the second cation-exchangeable resin layer may be the same as or different from each other.

The method for producing the separation membrane including the first cation-exchangeable resin layer, the anion-exchangeable resin layer, and the second cation-exchangeable resin layer is not particularly limited, and examples include a production method in which a cation-exchangeable resin to be formed into the second cation-exchangeable resin layer is melt-kneaded, then extruded onto a two-layered membrane including the first cation-exchangeable resin layer and

the anion-exchangeable resin layer with an extruder by a nozzle, a die, or the like, and thus processed into a film, a production method in which a cation-exchangeable resin precursor to be formed into the second cation-exchangeable resin layer is melt-kneaded, then extruded with an extruder by a nozzle, a die, or the like, and thus processed into a film, and thereafter subjected to the above hydrolysis treatment and acid treatment, to form an ion-exchange group, and a production method in which a cation-exchangeable resin to be formed into the second cation-exchangeable resin layer is dispersed in a solvent and then cast, and thus processed into a film. The separation membrane can also be produced by overlapping the anion-exchangeable resin layers of two kinds of two-layered membranes each including the cation-exchangeable resin layer and the anion-exchangeable resin layer. When the overlapping is made, heat press and/or heat roll press can also be used because peeling of the anion-exchangeable resin layers tends to be able to be reduced.

A support can also be used in the separation membrane of the present embodiment. The support is not particularly limited, and examples thereof include a support made of polyethylene, polypropylene, polyethylene terephthalate, polybutylene terephthalate, a cycloolefin polymer, polyamide, polyimide, polyamide imide, polyvinyl chloride, polystyrene, polyphenylene ether, polyetheretherketone, polysulfone, polyether sulfone, polyphenylene ether, polyphenylene sulfide, polyetherimide, a polyimide resin, polyetherketoneetherketoneketone, polyaryletherketone, a fluororesin, or the like.

No support is preferably used because any gap generated between the cation-exchangeable resin layer and/or the anion-exchangeable resin layer, and the support may cause reductions in characteristics of the cell for a redox flow battery.

<Separation membrane electrode assembly>

The separation membrane electrode assembly of the present embodiment has a structure in which at least one of the first electrode and the second electrode, and the separation membrane are bonded. The bonding means that at least one of the first electrode and the second electrode, and the separation membrane are joined, and the bonding can allow at least one of the first electrode and the second electrode, and the separation membrane to be integrated. For example, the bonding may be preferably used in a separation membrane electrode assembly including the first electrode, the second electrode and the separation membrane because assembling of the cell for a redox flow battery does not require a step of sequentially applying the first electrode, the separation membrane and the second electrode and can be made as one step and the production cost tends to be able to be suppressed.

The method for bonding at least one of the first electrode and the second electrode, and the separation membrane is not particularly limited, and examples thereof include a method with heat press and/or heat roll press.

The temperature in the bonding is not particularly limited, and is preferably equal to or more than room temperature in a case in which the bonding between the separation membrane and the electrode is insufficient because the separation membrane tends to be reduced in elastic modulus to enhance the bonding between the separation membrane and the electrode. The temperature in the bonding is preferably 250°C or less, more preferably 200°C or less, further preferably 170°C or less, particularly preferably 150°C or less, because the change in quality of the separation membrane tends to be able to be suppressed.

The pressure in the bonding is not particularly limited, and is a pressure of more than 0 MPa. The pressure is preferably 0.01 MPa or more, more preferably 0.05 MPa or more, further preferably 0.08 MPa or more, particularly preferably 0.1 MPa or more, because the bonding between the separation membrane and the electrode tends to be enhanced. The pressure is preferably 100 MPa or less, more preferably 50 MPa or less, further preferably 20 MPa or less, particularly preferably 10 MPa or less, because the change in quality of the electrode tends to be able to be suppressed.

The time in the bonding is not particularly limited, and is a time of more than 0 seconds. The time in the bonding is preferably 0.01 seconds or more, more preferably 0.1 seconds or more, further preferably 0.5 seconds or more, particularly preferably 1 second or more, because the bonding between the separation membrane and the electrode tends to be enhanced. The time is preferably 10 hours or less, more preferably 5 hours or less, further preferably 2 hours or less, particularly preferably 1 hour or less, because the cost in production of the separation membrane electrode assembly tends to be able to be reduced.

The atmosphere in the bonding is not particularly limited, and examples include air, nitrogen, and argon. Air or nitrogen is preferred and air is more preferred because the cost in production of the separation membrane electrode assembly tends to be able to be reduced.

<Redox flow battery>

The cell for a redox flow battery of the present embodiment can be stacked to provide a redox flow battery. When stacked, such cells for redox flow batteries can be electrically conducted through a bipolar plate.

The material of the bipolar plate is not particularly limited, and examples include carbon, graphite, and a metal. A carbon particle, a carbon fiber, a metal particle, a metal fiber, graphene, and a carbon nanotube may be dispersed in the

material.

The material may be used singly or in combinations of a plurality thereof.

The bipolar plate can sometimes enhance the contact between an electrode and an electrolyte solution, and thus may have various flow channels. Such a flow channel is not particularly limited, and examples can include Serpentine, Interdigitated, Pararell, Multi-parallel, Discontinuous, and any combination of such flow channels.

The cell for a redox flow battery, and the redox flow battery of the present embodiment can be used to provide a mechanism which smooths the amount of supply and demand of power and stabilizes the varying power obtained from a renewable energy source such as solar energy or wind energy. More specifically, it is possible to provide, for example, integration of the power obtained from a renewable energy source, power peak load shifting, stabilization of a transmission and distribution grid, base load power, energy arbitrage, supporting of a weak transmission and distribution grid, frequency adjustment, and any combination thereof. The cell for a redox flow battery, and the redox flow battery can also be used as a power supply of a remote camping, a forward operating base, transmission and distribution communication, a remote sensor, or the like utilizing no transmission and distribution grid.

The cell for a redox flow battery, and the redox flow battery of the present embodiment can include a control system and a power regulation unit.

The control system can be used to control operating of various valves, pumps, circulation circuits, sensors, relaxation equipment, other electronic/hardware controllers, safeguard apparatuses, and the like.

The power adjustment unit can be used to convert the voltage of the input power, and the current into optimal modes for the cell for a redox flow battery, and/or the redox flow battery, and convert the voltage of the output power, and the current into optimal modes for any application. For example, in a case where the cell for a redox flow battery, and/or the redox flow battery are/is connected to a transmission and distribution grid, the power regulation unit can convert the input AC power into the DC power of suited voltage and current in a charge cycle. The cell for a redox flow battery, and/or the redox flow battery can generate the DC power and the power regulation unit can convert the DC power to the AC power of suitable voltage and frequency for sending to the transmission and distribution grid in a discharge cycle.

[Fourth embodiment]

Subsequently, a fourth embodiment is described.

In Patent Literature 5, a solvent (having a content of ethanol of 50% by mass in Examples in Patent Literature 1) containing a large amount of ethanol being a protonic solvent is used, there is a tendency of an increase in viscosity of a solution in the case of an increased content of a fluororesin in the solution, and a problem is that the solution is difficult to store in an optimal viscosity range in a membrane formation step with applying and drying. There is also a tendency of an increase in rate of change over time in solution viscosity of the solution, and a problem is that the solution is difficult to store in an optimal viscosity range in a membrane formation step with applying and drying.

In Patent Literature 6, N,N-dimethylformamide is used as a solvent having affinity and also having a high boiling point, and a problem is that, in the case of production of an ion-exchange membrane by applying and drying, and heat-treating a polyelectrolyte solution, N,N-dimethylformamide remaining in the ion-exchange membrane is decomposed to generate dimethylamine serving as an impurity, in the ion-exchange membrane, and thus the impurity causes deteriorated characteristics depending on the application.

In Patent Literature 7 and Non Patent Literature 1, a perfluorosulfonic acid polymer having a large ratio of a sulfonic acid group has a difficulty in having a sufficiently increased molecular weight, and in a case where an ion-exchange membrane is tried to be obtained by applying and drying with a solution of a perfluorosulfonic acid polymer having no sufficiently large molecular weight and having a large ratio of a sulfonic acid group, no membrane having sufficient mechanical strength can be obtained by a solvent composition according to a conventionally known technique. Therefore, there is a demand for a perfluorosulfonic acid polymer membrane having sufficient mechanical strength and having a large ratio of a sulfonic acid group.

In Patent Literature 8, an ion-exchange membrane having a membrane thickness of 25 μm or less, which is difficult to produce by extrusion according to a conventionally known technique, is obtained by coextrusion of a perfluorosulfonic acid polymer precursor with an immiscible polymer. However, the ion-exchange membrane produced by this invention, although is reduced in anisotropy as compared with a conventionally known ion-exchange membrane of a perfluorosulfonic acid polymer extruded, causes swelling of a polyelectrolyte membrane by an electrolyte solution due to in-plane anisotropy derived from a molding method, for example, in an application in which the ion-exchange membrane is used in the state of being immersed in the electrolyte solution or a solvent, such as a redox flow battery or water electrolysis, and thus the ion-exchange membrane can be changed in dimension anisotropically to a membrane surface, to have an adverse effect on characteristics. In other words, there is a demand for an ion-exchange membrane which is more reduced in anisotropy and which includes a perfluorosulfonic acid polymer.

As described above, a conventionally known technique has a difficulty in providing a polyelectrolyte solution in which the solution viscosity of a solution containing a fluororesin having a large ratio of sulfonic acid is less changed over

time and the solution viscosity of the solution can be in an optimal viscosity range in a membrane formation step with applying and drying, and an ion-exchange membrane obtained by applying and drying the solution, in which the ion-exchange membrane not only has sufficient mechanical strength, but also is small in number of crack defects per unit area and has an appropriate membrane thickness capable of achieving low electrical resistance, and exhibits decreased in-plane anisotropy in an electrolyte membrane.

An object of the present embodiment is to provide a novel polyelectrolyte solution or the like which forms a polymer membrane.

The polyelectrolyte solution according to the present embodiment is a polyelectrolyte solution including

a fluororesin having an equivalent weight of 500 g/eq or more and less than 1,000 g/eq and having a structural unit represented by the following general formula G1, and
a solvent containing water, an aliphatic alcohol, and an aliphatic carboxylic acid, wherein
the ratio of the total mass of the aliphatic carboxylic acid and a reaction product thereof to the total mass of the solvent is 100:1 to 100:50:

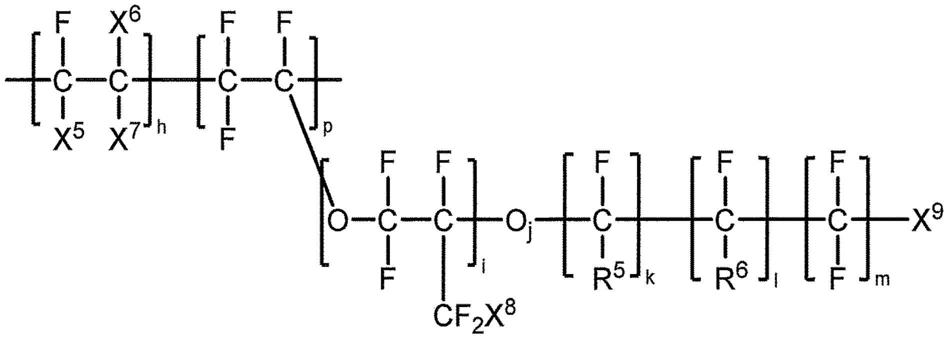

[G 1]

wherein the definition of each substituent has the same meaning as in the general formula G1 described above.

According to the present embodiment, it is possible to provide a novel polyelectrolyte solution or the like which forms a polymer membrane.

According to the foregoing embodiment, it is possible to provide a polyelectrolyte solution in which the solution viscosity is less changed over time, the solution viscosity of the solution can be in an optimal viscosity range in a membrane formation step with applying and drying, and a fluororesin having a large ratio of sulfonic acid is contained. It is also possible to provide an ion-exchange membrane which not only has sufficient mechanical strength, but also is small in number of crack defects per unit area and has an appropriate membrane thickness capable of achieving low electrical resistance, exhibits decreased in-plane anisotropy in an electrolyte membrane, has excellent membrane thickness uniformity, has a sufficiently large area, and includes a fluororesin having a large ratio of sulfonic acid. Furthermore, it is possible to provide a cell for a redox flow battery, and a redox flow battery, in which the ion-exchange membrane is used.

(Fluororesin G1)

The fluororesin (hereinafter, also referred to as "fluororesin G1") in the present embodiment has an equivalent weight of 500 g/eq or more and less than 1,000 g/eq and has a structural unit represented by the following general formula G1:

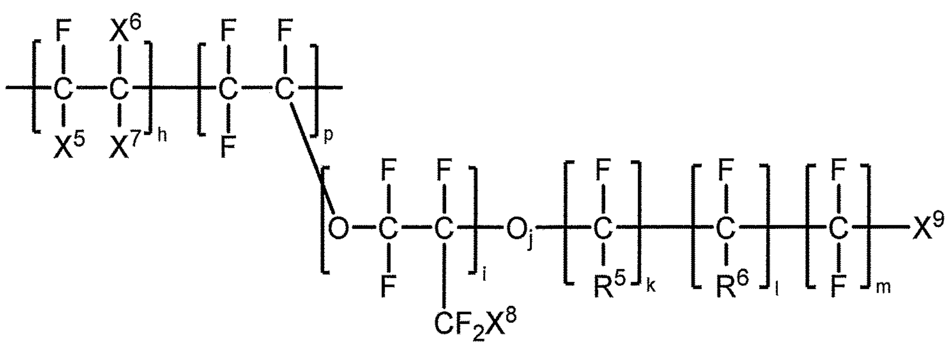

[G 1]

wherein the definition of each substituent has the same meaning as in the general formula G1 described above.

In the fourth embodiment, the fluororesin G1 preferably has a structural unit represented by the following general formula C3:

$$- [CF_2CX^1X^2]_a-[CF_2-CF((-O-CF_2-CF(CF_2X^3))_b-O_c-(CFR^1)_d-(CF_R{}^2)_e-(CF_2)_f-X^4)]_g- \quad [C3]$$

wherein $X^1$, $X^2$, and $X^3$ are each independently a halogen atom, or a perfluoroalkyl group having 1 to 3 carbon atoms, and the halogen atom is a fluorine atom, a chlorine atom, a bromine atom, or an iodine atom; $R^1$ and $R^2$ are each optionally the same or different, and are each a hydrogen atom, a halogen atom, a substituted or unsubstituted perfluoroalkyl group having 1 to 10 carbon atoms, or a fluorochloroalkyl group, and the halogen atom is a fluorine atom, a chlorine atom, a bromine atom, or an iodine atom; $X^4$ is a monovalent group represented by formula $-COOZ$, $-SO_3Z$, $-PO_3Z_2$ or $-PO_3HZ$, or a divalent group represented by formula $-COOMOOC-$, $-SO_3MO_3S-$, $- PO_3M_2O_3P-$ or $-PO_3HMHO_3P-$; when $X^4$ is a divalent group, such fluororesins G1 are optionally crosslinked each other via $X^4$; Z is a hydrogen atom, an alkali metal atom, or an amine; M is an alkaline earth metal atom; and when $X^4$ is $-PO_3Z_2$, two Zs are optionally the same or different.

$X^1$, $X^2$, and $X^3$ are each independently a halogen atom, or a perfluoroalkyl group having 1 to 3 carbon atoms, and the halogen atom is a fluorine atom, a chlorine atom, a bromine atom, or an iodine atom. $X^1$, $X^2$, and $X^3$ are each preferably a fluorine atom, a chlorine atom, or a perfluoroalkyl group having 1 to 3 carbon atoms, more preferably a fluorine atom, a chlorine atom, or a perfluoroalkyl group having 1 carbon atom, further preferably a fluorine atom or a chlorine atom, particularly preferably a fluorine atom, because a starting material is easily available and the production cost of the fluororesin G1 tends to be reduced.

$R^1$ and $R^2$ are each optionally the same or different, and are each a hydrogen atom, a halogen atom, a substituted or unsubstituted perfluoroalkyl group having 1 to 10 carbon atoms, or a fluorochloroalkyl group, and the halogen atom is a fluorine atom, a chlorine atom, a bromine atom, or an iodine atom. $R^1$ and $R^2$ are each preferably a fluorine atom, or an unsubstituted perfluoroalkyl group having 1 to 3 carbon atoms from the viewpoint that a starting material is easily available and the production cost of the fluororesin G1 tends to be able to be suppressed. Furthermore, a fluorine atom and a trifluoromethyl group are more preferred and a fluorine atom is particularly preferred from the viewpoint that the fluororesin G1 tends to be enhanced in chemical stability such as oxidation degradation resistance.

$X^4$ is a monovalent group represented by formula $- COOZ$, $-SO_3Z$, $-PO_3Z_2$ or $-PO_3HZ$, or a divalent group represented by formula $-COOMOOC-$, $-SO_3MO_3S-$, $-PO_3M_2O_3P-$ or $-PO_3HMHO_3P-$. When $X^4$ is a divalent group, such fluororesins G1 are optionally crosslinked each other via $X^4$. Z is a hydrogen atom, an alkali metal atom, or an amine. M is an alkaline earth metal atom. When $X^4$ is $- PO_3Z_2$, two Zs are optionally the same or different. The alkali metal is not particularly limited, and is preferably a lithium atom, a sodium atom, or a potassium atom, more preferably a sodium atom or a potassium atom. The amine is not particularly limited, and examples include structures of $NH_4$, $NH_{3R}{}^{10}$, $NH_2R^{10}R^{11}$, $NHR^{10}R^{11}R^{12}$, and $NR^{10}R^{11}R^{12}R^{13}$. $R^{10}$, $R^{11}$, $R^{12}$, and $R^{13}$ are each optionally the same or different, and are each not particularly limited as long as each thereof is a structure commonly used, and examples include an aliphatic hydrocarbon group and an aromatic hydrocarbon group. The aliphatic hydrocarbon group is preferably a monovalent group represented by $C_nH_{2n+1}$ (n represents an integer of 1 or more, preferably an integer of 1 to 20, more preferably an integer of 1 to 10.). The aromatic hydrocarbon group is preferably a phenyl group or a naphthyl group. M is an alkaline earth metal atom, is not particularly limited, and is preferably a magnesium atom or a calcium atom.

a and g are numbers satisfying $0 \leq a < 1$, $0 < g \leq 1$, and $a + g = 1$. b is an integer of 0 to 8. c is 0 or 1. d, e, and f are each independently an integer of 0 to 6 (provided that d, e and f are not 0 at the same time.).

The fluororesin G1 having the structural unit represented by the general formula C3 is preferably represented by the following general formula C1 or the following general formula C4, more preferably represented by the following general formula C4, from the viewpoint that both dispersibility and membrane strength are satisfied in a further well-balanced manner:

$$-[CF_2CF_2]_a-[CF_2-CF((-O-CF_2-CF(CF_3))_b-O-(CF_2)_c-SO_3X)]_d- \quad [C1]$$

wherein a and d satisfy $0 \leq a < 1$, $0 \leq d < 1$, and $a + d = 1$, b is an integer of 1 to 8, c is an integer of 0 to 10, and X is a hydrogen atom or an alkali metal atom;

$$- [CF_2CF_2]_e-[CF_2-CF((-O-(CF_2)_f-SO_3X)]_g- \quad [C4]$$

wherein e and g satisfy $0 \leq e < 1$, $0 \leq g < 1$, and $e + g = 1$, f is an integer of 0 to 10, and Y is a hydrogen atom or an alkali metal atom.

The fluororesin G1 here used can be a prepared product prepared by a known method, or a commercially available product.

(Polyelectrolyte)

The polyelectrolyte in the present embodiment includes the fluororesin G1 as one polyelectrolyte. The ratio of the fluororesin G1 to the polyelectrolyte is preferably 70% by mass or more, more preferably 90% by mass or more, further preferably 95% by mass or more, particularly preferably 98% by mass or more. When the ratio of the fluororesin G1 to the polyelectrolyte is 70% by mass or more, a fuel cell formed tends to be excellent in current efficiency.

The fluororesin G1 used in the polyelectrolyte may be used singly or in combinations of a plurality thereof.

The polyelectrolyte in the present embodiment may contain, as a different polyelectrolyte from the fluororesin G1, a perfluorocarboxylic acid polymer, a partially fluorinated sulfonic acid polymer or a partially fluorinated carboxylic acid polymer as an acidic polymer, an azole polymer (also including an imidazole polymer) or an amine polymer as a basic polymer, and the like.

The acidic polymer and the basic polymer may be each used singly or in combinations of a plurality thereof.

In a case where the polyelectrolyte is an electrolyte including the fluororesin G1 and the basic polymer, a fuel cell with the resulting ion-exchange membrane tends to be enhanced in chemical durability during running of the fuel cell.

The polyelectrolyte in the present embodiment may contain a polymer such as polyethylene glycol, polyphenylene ether, polyphenylene sulfide, polyetherimide, polysulfone, polyether ketone, polyetheretherketone, polyetheretherimide, polyamide, polyimide, or polyamide imide.

The polymer may be used singly or in combinations of a plurality thereof.

The polyelectrolyte preferably includes 5% by mass or less, more preferably 3% by mass or less, further preferably 1% by mass or less of the polymer optionally contained, because not only characteristics of the polymer optionally contained are imparted to the ion-exchange membrane, but also the ion-exchange membrane tends to be suppressed in deterioration in mechanical strength.

The equivalent weight (hereinafter, also referred to as "EW") of the fluororesin G1 having the structural unit represented by the general formula C1 is preferably 600 g/eq or more and less than 1,000 g/eq, more preferably 650 g/eq or more and 980 g/eq or less, further preferably 700 g/eq or more and 950 g/eq or less, from the view point that, when an ion-exchange membrane including the fluororesin G1 is used as a separation membrane for a redox flow battery, the separation membrane is reduced in electrical resistance and the separation membrane is enhanced in mechanical strength.

The "equivalent weight (EW) of the fluororesin G1" refers to a dry weight per equivalent of a sulfonic acid group.

The equivalent weight (EW) of the fluororesin G1 having the structural unit represented by the general formula C4 is preferably 400 g/eq or more and less than 1,000 g/eq, more preferably 450 g/eq or more and 980 g/eq or less, further preferably 500 g/eq or more and 950 g/eq or less, further preferably 600 g/eq or more and 950 g/eq or less, further preferably 700 g/eq or more and 950 g/eq or less, from the view point that, when an ion-exchange membrane including the fluororesin G1 is used as a separation membrane for a redox flow battery, the separation membrane is reduced in electrical resistance and the separation membrane is enhanced in mechanical strength.

The melt flow rate (hereinafter, also referred to as "MFR".) can be used as an indicator of the degree of polymerization of the fluororesin G1 precursor. The MFR of the fluororesin G1 precursor is not particularly limited, and is preferably 100 g/10 min or less, more preferably 50 g/10 min or less, further preferably 30 g/10 min or less. The MFR is 100 g/10 min or less, resulting in a tendency to enable an ion-exchange membrane excellent in mechanical strength to be obtained. The MFR is preferably 0.01 g/10 min or more, more preferably 0.1 g/10 min or more, further preferably 0.3 g/10 min or more. The MFR is 0.01 g/10 min or more, resulting in a tendency to enable the fluororesin G1 in the form of a solution to be more efficiently finely dispersed and dissolved. The MFR can be measured by a method described in Examples.

(Polyelectrolyte solution)

The polyelectrolyte solution in the present embodiment includes a fluororesin G1 having an equivalent weight of 500 g/eq or more and less than 1,000 g/eq, and a solvent containing water, an aliphatic alcohol, an aliphatic carboxylic acid, and an aliphatic ester.

A dissolution facility for providing a homogeneous, and clear and transparent polyelectrolyte solution from an emulsion containing the fluororesin G1 and the solvent is not particularly limited, and is preferably a facility which continuously dissolves the fluororesin G1 and the solvent. The facility for continuous dissolution is heated by a heating tool described below, and a perfluorosulfonic acid polymer in the emulsion passing through the dissolution facility can be dissolved in the solvent by conditions in the dissolution facility, to discharge a homogeneous polyelectrolyte solution from the dissolution facility.

The facility for continuous dissolution preferably has a pump for continuously supplying the emulsion including the fluororesin G1 and the solvent into the dissolution facility, the dissolution facility for continuously dissolving the fluororesin G1 in the solvent, a heating tool heating the dissolution facility, and a cooling tool.

The pump is used for continuously supplying the emulsion including the fluororesin G1 and the solvent to the

dissolution facility.

The type of the pump is not particularly limited, and examples include a turbo-type pump, a piston pump, a plunger pump, a diaphragm pump, a gear pump, a vane pump, and a screw pump. In particular, preferred are a plunger pump, a diaphragm pump, a multiple pump, and an accumulator with excellent pressure resistance in consideration of safety and with high quantitative performance and high ejection pressure in consideration of producibility. A multiple pump and an accumulator are more preferred from the viewpoint that pulsation can be suppressed.

The pump may be used singly or in combinations of a plurality thereof.

The dissolution facility is not particularly limited, and examples include an apparatus in which the flow of a fluid in the dissolution facility is of plug flow type.

The shape of the dissolution facility is not particularly limited, and is preferably, for example, a tube shape. The tube shape tends to more enhance producibility and dissolution efficiency. The tube shape is not particularly restricted, and examples include linear, coil, and rectangular shapes. In particular, a coil shape is preferred from the viewpoint of the installation area and stable running. The outer diameter of the tube is preferably 1/16 to 2 inches, more preferably 1/4 to 1/2 inches from the viewpoint of producibility and dissolution efficiency. A commonly commercially available pipe of 6 A to 500 A may be used. An in-line mixer, a wire mesh, a metal filling, and/or the like may be disposed in the tube from the viewpoint of producibility and dissolution efficiency.

The dissolution facility is not particularly restricted, and is preferably a metallic tubular dissolution facility. The material of the dissolution facility is not particularly limited, an optimal material may be selected from the viewpoint of corrosion resistance, and examples include a SUS-based material, a Hastelloy-based material, a titanium-based material, a zirconia-based material, and a tantalum-based material. In particular, a material having the same compositional ratio as in a SUS-based material and Hastelloy (registered trademark of Haynes International Inc., USA) is preferred, a material having the same compositional ratio as in SUS316 and Hastelloy C is more preferred, and a material having the same compositional ratio as in Hastelloy C276 is particularly preferred, because of being excellent in balance between corrosion resistance and cost. The same compositional ratio as in Hastelloy, Hastelloy C, and Hastelloy C276 means that the material has a compositional ratio of 56 to 60% by mass of Ni, 16 to 22% by mass of Cr, 13 to 16% by mass of Mo, 2 to 6% by mass of W, 3 to 8% by mass of Fe, and 2.5% by mass or less of Co. Such a metallic dissolution facility is used, and thus a dissolution step can be performed at a high temperature and a high pressure and a perfluorosulfonic acid polymer included in the resulting polyelectrolyte solution tends to be enhanced in stability of a main chain end of the perfluorosulfonic acid polymer. The inner wall of the tube may be lined. Such lining is not particularly limited, and examples thereof include fluorine lining and glass lining. Such a dissolution facility thus lined is used, and thus a dissolution step can be performed at a relatively low temperature and a low pressure and the concentrations of F and Fe ions in the resulting polyelectrolyte solution tend to be kept low.

The thickness of the tube is not particularly limited, and an optimal thickness may be selected from the viewpoint of pressure resistance. The inner diameter of the tube is not particularly limited, and is preferably 1 to 50 mm, more preferably 4 to 50 mm from the viewpoint of producibility and dissolution efficiency.

The inner wall of the tube is not particularly limited in terms of the surface roughness thereof, and may have irregularities or may be a mirror surface. The maximum height of the surface roughness of the inner wall of the tube is preferably 50 μm or less, more preferably 25 μm or less, further preferably 10 μm or less from the viewpoint of dissolution efficiency. The maximum height of the surface roughness of the inner wall of the tube is, for example, a value determined by using a laser microscope to sample only a reference length in a parallel line direction from a roughness curve and measure the interval between the peak line and the valley line of this portion sampled, in the longitudinal magnification direction of the roughness curve.

The length of the tube depends on the dissolution time (= retention time) determined. Specifically, the length of the tube can be calculated by a relationship with the inner diameter of the tube so that the product of the dissolution time (min) and the speed of supply (L/min) is equal to or less than the inner volume of the tube heated.

$$\text{Dissolution time (min)} \times \text{Speed of supply (L/min)} \leq \text{Inner volume of tube}$$

$$\text{Inner volume of tube} = (\text{Inner diameter of tube}/2)2 \times \pi \times \text{tube length}$$

In a case where a plurality of tube-shaped such dissolution facilities is used in series, an equiform union, a deformed union, a T-type union, a check valve, a safety valve, a back pressure valve, a pressure gauge, a thermometer, or the like for connection of one dissolution facility and another dissolution facility may be provided between such dissolution facilities. A plurality of such dissolution facilities can also be used in parallel to increase the inner volume, thereby allowing for an increase in producibility.

The heating tool of the dissolution facility is used for heating the dissolution facility. The heating method is not particularly limited, and examples thereof include a method for heating the dissolution facility with a heat medium such as

hot air, hot water, steam, or silicon oil.

The heat medium may be used singly or in combinations of a plurality thereof.

Among such heat mediums, hot air is preferred because of being simply usable, and the dissolution facility can be placed in a constant-temperature bath in an atmosphere set to a specified temperature by hot air.

The pressure in the dissolution facility in the facility for continuous dissolution is not particularly restricted, and a pressure adjustment tool which adjusts the pressure so as to exceed the vapor pressure of the solvent at the heating temperature of the dissolution facility is preferably further provided. Such a unit for adjusting the pressure may be installed downstream, upstream, or downstream and upstream in the supply direction in the dissolution facility, or may be provided inside the dissolution facility.

The pressure adjustment tool is not particularly limited, and examples thereof include a back pressure valve, an automatic pressure regulation valve (PIC), and the pump. A back pressure valve or an automatic pressure regulation valve (PIC) is used to result in a tendency to keep the pressure in the dissolution facility constant, namely, suppress the variation in pressure as much as possible and thus enhance the dispersibility of the polyelectrolyte solution and prevent clogging in the dissolution facility. The pump is used to enable the interior of the dissolution facility to be pressurized.

The zone from the pump to the pressure adjustment tool (back pressure valve) can be regarded as a closed container under a constant pressure. The facility for continuous dissolution tends to impart more enhanced dispersibility of polyelectrolyte in the polyelectrolyte solution and provide such an electrolyte solution enhanced in dispersibility, at a higher concentration in a shorter time.

The facility for continuous dissolution preferably includes a cooling tool located downstream of the dissolution facility, in which the cooling tool cools the polyelectrolyte solution in a state where a pressure exceeding the vapor pressure of the solvent at a heating temperature in the dissolution facility is kept. This cooling tool can be included to result in a tendency to more suppress clogging in the dissolution facility during discharge of the polyelectrolyte solution.

The cooling method is not particularly limited, and examples include a cooling method involving allowing the polyelectrolyte solution to pass through a cooling tube, and an air cooling method involving allowing the polyelectrolyte solution to pass not through a cooling tube, but in a tube at room temperature.

<Solvent>

The polyelectrolyte solution according to the present embodiment includes water, an aliphatic alcohol, and an aliphatic carboxylic acid. The polyelectrolyte solution according to the present embodiment may contain a reaction product of the aliphatic carboxylic acid. Examples of the reaction product of the aliphatic carboxylic acid include an aliphatic carboxylic acid ester obtained by condensation of the aliphatic carboxylic acid and the aliphatic alcohol.

The ratio of the total mass of the aliphatic carboxylic acid and the reaction product thereof to the total mass of the solvent is 100:1 to 100:50. The range enables crack defect generation in the resulting ion-exchange membrane to be suppressed. The mass ratio is preferably 100:3 to 100:40, more preferably 100:4 to 100:35, further preferably 100:5 to 100:30.

(Aliphatic carboxylic acid)

In the present embodiment, the aliphatic carboxylic acid is a compound having a carboxyl group (-COOH group), the number of carbon atoms in the aliphatic carboxylic acid is preferably 1 to 5, and example include formic acid, acetic acid, propionic acid, butyric acid, and isobutyric acid. The number of carbon atoms in the aliphatic carboxylic acid is more preferably 1 to 4, further preferably 1 to 3, and acetic acid is particularly preferred, because, when water co-exists in film formation with the polyelectrolyte solution, the balance between miscibility with water and solvation of a hydrophobic site of the polyelectrolyte tends to be excellent. The boiling point of the carboxylic acid is preferably 165°C or less, more preferably 150°C or less because drying ability during film formation tends to be enhanced.

The ratio of the aliphatic carboxylic acid relative to the amount of the solvent in the polyelectrolyte solution is preferably 1% by mass or more and 50% by mass or less, more preferably 1% by mass or more and 40% by mass or less, further preferably 3% by mass or more and 30% by mass or less, because, when water co-exists in film formation with the polyelectrolyte solution, the balance between miscibility with water and solvation of a hydrophobic site of the polyelectrolyte tends to be excellent. The ratio of the aliphatic carboxylic acid is 1% by mass or more, resulting in a tendency to decrease the rate of change over time in solution viscosity of the polyelectrolyte solution. The ratio of the aliphatic carboxylic acid is 30% by mass or less, resulting in a tendency to enhance drying ability during cast film formation of the polyelectrolyte solution.

(Aliphatic alcohol)

In the present embodiment, the aliphatic alcohol is a compound having a hydroxyl group (-OH group), and the

number of carbon atoms is preferably 1 to 10, more preferably 1 to 7, further preferably 1 to 4, from the viewpoint that, when water co-exists in film formation with the polyelectrolyte solution, the balance between miscibility with water and solvation of a hydrophobic site of the polyelectrolyte tends to be excellent. Specific examples of the aliphatic alcohol include methanol, ethanol, 1-propanol, 2-propanol, 1-butanol, 2-butanol, and isobutanol, and, in particular, methanol, ethanol, 1-propanol, and 1-butanol are preferred. The boiling point of the alcohol is preferably 165°C or less, more preferably 150°C or less because drying ability during film formation is enhanced.

The ratio of the aliphatic alcohol relative to the amount of the solvent in the polyelectrolyte solution is preferably 5% by mass or more and 70% by mass or less, more preferably 5% by mass or more and 60% by mass or less, further preferably 5% by mass or more and 50% by mass or less. The ratio of the alcohol is 5% by mass or more, resulting in a tendency to enhance puncture strength of the ion-exchange membrane. The ratio of the alcohol is 50% by mass or less, resulting in a tendency to decrease the rate of change over time in solution viscosity of the polyelectrolyte solution.

(Aliphatic ester)

In the present embodiment, the aliphatic ester is a compound having an ester group (-COOR group: R is a hydrocarbon group), and the number of carbon atoms is preferably 2 to 10, more preferably 2 to 8, further preferably 2 to 6, because, when water co-exists in film formation with the polyelectrolyte solution, the balance between miscibility with water and solvation of a hydrophobic site of the polyelectrolyte tends to be excellent. Specific examples of the aliphatic ester include methyl formate, ethyl formate, n-propyl formate, isopropyl formate, n-butyl formate, sec-butyl formate, isobutyl formate, methyl acetate, ethyl acetate, n-propyl acetate, isopropyl acetate, n-butyl acetate, sec-butyl acetate, isobutyl acetate, methyl butyrate, ethyl butyrate, n-propyl butyrate, isopropyl butyrate, n-butyl butyrate, sec-butyl butyrate, and isobutyl butyrate, and, in particular, methyl acetate, ethyl acetate, n-propyl acetate, and n-butyl acetate are preferred. The boiling point of the ester is preferably 160°C or less, more preferably 150°C or less because drying ability during film formation is enhanced.

The ratio of the aliphatic ester relative to the amount of the solvent in the polyelectrolyte solution is preferably 1% by mass or more and 40% by mass or less, more preferably 1% by mass or more and 35% by mass or less, further preferably 1% by mass or more and 30% by mass or less. The ratio of the amount of the ester is 1% by mass or more, resulting in a tendency to enhance puncture strength of the ion-exchange membrane. The ratio of the amount of the ester is 30% by mass or less, resulting in a tendency to decrease the rate of change over time in solution viscosity of the polyelectrolyte solution.

The solution viscosity (25°C) of the polyelectrolyte solution is 10 mPa·s or more and 2,000 mPa·s or less, preferably 50 mPa·s or more and 1,000 Pa·s or less, more preferably 100 mPa·s or more and 1,000 mPa·s or less. The initial solution viscosity (25°C) of the polyelectrolyte solution is 10 mPa·s or more, resulting in a tendency to allow for a uniform thickness of the polyelectrolyte solution in application. The solution viscosity is 2000 mPa·s or less, resulting in a tendency to cause less air bubbles and/or provide an ion-exchange membrane having a uniform thickness after application.

The pot life of the solution viscosity of the polyelectrolyte solution indicates the smaller number of days between the number of days necessary for increasing the viscosity (25°C) twofold or more compared with the viscosity (25°C) measured within 24 hours after adjustment of the viscosity of the polyelectrolyte solution in a range of 10 mPa·s or more and 2,000 mPa·s or less, and the number of days necessary for achieving a viscosity (25°C) of more than 2,000 mPa·s. In particular, in the case of perfluorocarbon sulfonic acid of the general formula C4, a problem in a conventionally known technique is that the pot life in the above appropriate viscosity range is short. The compositional ratio of the solvent in the present invention is used to allow for an enhancement in pot life.

The solid content in the polyelectrolyte solution is preferably 5% by mass or more and 40% by mass or less, more preferably 10% by mass or more and 35% by mass or less, further preferably 10% by mass or more and 30% by mass or less. The solid content in the polyelectrolyte solution is 10% by mass or more, resulting in a tendency to enable the time necessary for drying in application to be shortened. The solid content in the polyelectrolyte solution is 35% by mass or less, resulting in a tendency to decrease the solution viscosity of the polyelectrolyte solution and a tendency to decrease the rate of increase over time in solution viscosity.

(Ion-exchange membrane)

The ion-exchange membrane in the present embodiment can be obtained by, for example, applying the polyelectrolyte solution in the present embodiment to a known substrate (application step), and drying (drying step), if necessary, cooling (cooling step), and furthermore heat-treating (heat treatment step) the resultant. Such application and drying indicate a series of steps including at least the application step and the drying step.

The application method in the application step is not particularly limited, and a known application method is used. For example, application to a support can be made by an apparatus such as a blade coater, a roll coater, an air knife coater,

or a bar coater.

The drying temperature in the drying step is not particularly limited, and may be, for example, about room temperature to 200°C. In a case where the drying time is long, the drying temperature is preferably 150°C or less because pyrolysis of a perfluorocarbon sulfonic acid polymer tends to be suppressed. In the case of high-rate application having a shortened drying time, the drying temperature is 200°C or less, thereby enabling the ion-exchange membrane to be obtained even in a short drying time.

The drying time in the drying step is not particularly limited, and may be, for example, about 10 seconds to 120 minutes.

The drying temperature may be changed stepwise in the drying step.

The drying tool is not particularly limited, examples thereof can include hot air drying and electromagnetic-wave drying, and two or more such drying tools may be combined.

The cooling temperature in the cooling step may be, for example, about room temperature, and the cooling time in the cooling step may be, for example, about 30 to 90 minutes.

In a case where the heat treatment step is carried out after the drying step, the heat treatment temperature in the heat treatment step may be, for example, about 100 to 200°C and the heat treatment time in the heat treatment step may be about 5 to 15 minutes.

The scattering intensity ratio (A/B) between the scattering intensity (A) of a peak assigned to at least one particle size in a range of 0.1 μm or more and less than 5.0 μm and the scattering intensity (B) of a peak assigned to at least one particle size in a range of 5.0 μm or more and 50.0 μm or less in dynamic light scattering particle size measurement of the polyelectrolyte solution is not particularly limited, and is preferably $1.0 \times 10^{-2}$ or more and $1.0 \times 10$ or less. The scattering intensity ratio (A/B) is more preferably $1.0 \times 10^{-2}$ or more and $1.0 \times 10$ or less, further preferably $1.0 \times 10^{-1}$ or more and 5.0 or less, particularly preferably $5.0 \times 10^{-1}$ or more and 2.0 or less. The scattering intensity ratio (A/B) in dynamic light scattering particle size measurement is used for determining dispersibility of a polymer in the polyelectrolyte solution. In other words, the ratio can serve as an index of dissolution. The scattering intensity ratio (A/B) can be measured by a method described in Examples below. The ratio (A/B) between the scattering intensities (1/nm) is $1.0 \times 10$ or less, resulting in a tendency to more enhance dispersibility of the polyelectrolyte in the solvent. In other words, as the scattering intensity (B) is increased as compared with the scattering intensity (A), dispersibility of the polyelectrolyte in the solvent tends to be enhanced. The scattering intensity ratio (A/B) is $1.0 \times 10^{-2}$ or more, resulting in a tendency to enable the polyelectrolyte to be inhibited from being decomposed and then decreased in molecular weight. The scattering intensity ratio (A/B) can be a larger value by a shorter retention time or a lower temperature in dissolution and can be a smaller value by a longer retention time or a higher temperature in dissolution, and thus a desired scattering intensity ratio (A/B) can be achieved.

The rate of permeation at a wavelength of 800 nm in UV measurement of a polyelectrolyte solution having a solid content weight of 20% by mass can also be used in a measurement method of any other than the scattering intensity ratio (A/B) in the dynamic light scattering particle size measurement, used with respect to a criterion for determining dissolution of the polyelectrolyte in the solvent. The rate of permeation of the polyelectrolyte solution is not particularly limited, and is preferably 90% T or more, more preferably 95% T or more, further preferably 98% T or more. The rate of permeation of the polyelectrolyte solution is 90% T or more, resulting in a tendency to enhance dispersibility of the polyelectrolyte in the solvent. The UV measurement can be performed by a method described in Examples below.

The fluorine ion concentration in the polyelectrolyte is not particularly limited, and is preferably 0.1 ppm (ppm represents parts per million) or more and 500 ppm or less based on the solid content weight of the fluororesin G1. The fluorine ion concentration is 500 ppm or less, resulting in a tendency to enhance hot water dissolution resistance of the ion-exchange membrane, and enhance chemical durability of a fuel cell in the case of use of the ion-exchange membrane as an electrode catalyst layer for such a fuel cell.

The Fe concentration in the ion-exchange membrane is not particularly limited, and is preferably 0.010 ppm or more and 10 ppm or less, more preferably 0.050 ppm or more and 5 ppm or less, further preferably 0.10 ppm or more and 1 ppm or less based on the solid content weight of the fluororesin G1. The Fe concentration is 10 ppm or less, thereby resulting in a tendency to reduce the concentration of Fe triggering radical generation during fuel cell running, suppress degradation of the ion-exchange membrane and enhance chemical durability of a fuel cell in the case of use of the ion-exchange membrane in such a fuel cell. The Fe concentration is 0.010 ppm or more, resulting in a tendency to allow for production of the polyelectrolyte solution and the ion-exchange membrane through no step of removing Fe, and enhance producibility.

The polymer chain end structure of the fluororesin G1 included in the ion-exchange membrane is not particularly limited, and examples include a $-CF_2H$ group, a $-CF_3$ group, a -COOH group, and a -COONa group. In particular, a $-CF_2H$ group is preferred. The amount of a $-CF_2H$ group based on the total number of polymer chain ends of the fluororesin G1 is preferably 40% or more, more preferably 50% or more, further preferably 90% or more. The amount of a $-CF_2H$ group based on the total number of polymer chain ends of the fluororesin G1 is 40% or more, resulting in tendencies to enhance Fenton resistance as compared with a case of an ion-exchange membrane having a -COOH group or a -COONa group at an end, and to enhance chemical durability of a fuel cell in the case of the ion-exchange membrane for such a fuel cell.

There is also a tendency of an enhancement in producibility because it is not necessary to undergo any production process causing afterload, such as a fluorination step, as compared with a case of an ion-exchange membrane having a -$CF_3$ group at an end.

The converted puncture strength (value obtained by conversion of the puncture strength in a wet state, into that per 25 μm) of the ion-exchange membrane is preferably 30 gf/25 μm or more, more preferably 40 gf/25 μm or more, further preferably 50 gf/25 μm or more. The converted puncture strength is 30 gf/25 μm or more, resulting in a tendency to provide a required mechanical strength for production of a thin ion-exchange membrane. In the present embodiment, the upper limit of the converted puncture strength is not particularly set, and is preferably 100 gf/25 μm or less from the viewpoint that a proper water content is ensured.

(Wound body)

The wound body in the present embodiment refers to one obtained by winding a belt-like membrane around a cylindrical core. The material of the core is not particularly limited, and examples thereof include a resin and a metal. Examples of the resin include polyethylene, polypropylene, polystyrene, an ABS resin, an epoxy resin, polyester, polyvinyl chloride, polyvinylidene chloride, polyimide, polyamide, and polyamide imide.

(Width and length of ion-exchange membrane wound in wound body)

The width of the ion-exchange membrane in winding of the ion-exchange membrane continuously formed, as the wound body, is preferably 100 mm or more and 1,000 mm or less, more preferably 150 mm or more and 800 mm or less, further preferably 200 mm or more and 600 mm or less. The width of the ion-exchange membrane is 100 mm or more, and thus, when the ion-exchange membrane is used for, for example, a fuel cell and a redox flow battery, such fuel cell and redox flow battery can be large in cell area to achieve a large output. The width of the ion-exchange membrane is 600 mm or less, resulting in a tendency to allow for a reduction in variation in membrane thickness of the ion-exchange membrane.

The length of the ion-exchange membrane is preferably 0.1 m or more and 1,000 m or less, more preferably 0.5 m or more and 700 m or less, further preferably 1.0 m or more and 500 m or less. The length of the ion-exchange membrane is 1 m or more, resulting in a tendency to provide a uniform thickness of the coating membrane of the polyelectrolyte solution and enhance uniformity of the membrane thickness of the resulting ion-exchange membrane. The length of the ion-exchange membrane is 500 m or less, resulting in a tendency to reduce the weight with respect to one body of the resulting wound body and enhance handleability.

<Cell for redox flow battery>

Examples of the application of the ion-exchange membrane of the present embodiment include a cell for a redox flow battery, a redox flow battery, a solid polyelectrolyte fuel cell, salt electrolysis, alkaline water electrolysis, and carbon dioxide electroreduction, and examples of a suitable application include a cell for a redox flow battery, and a redox flow battery.

The cell for a redox flow battery is configured to include a first electrolyte solution including a first redox active material, a second electrolyte solution including a second redox active material, a first electrode in contact with the first electrolyte solution, a second electrode in contact with the second electrolyte solution, and a separation membrane located between the first electrolyte solution and the second electrolyte solution. Any component other than the constituent components, which is commonly utilized by those skilled in the art, and/or any component which can be known from known information, for example, known literatures and patents each relating to a cell for a redox flow battery, may be included. Examples of such components include a bipolar plate, a frame, a compressible seal, a conductive additive, and a balancing cell.

Figure 1 illustrates one example of a schematic view of the cell for a redox flow battery. A cell 10 for a redox flow battery has an electrolyzer 6 including a cell chamber 2 including an electrode 1 (in Figure 1, positive electrode) composed of a first electrode, a cell chamber 4 including an electrode 3 (in Figure 1, negative electrode) composed of a second electrode, and a separation membrane 5 as a separation membrane which separates the cell chamber 2 and the cell chamber 4. The cell chamber 2 and the cell chamber 4 include electrolyte solutions containing redox active materials. Such electrolyte solutions containing redox active materials are respectively stored in, for example, electrolyte solution tanks 7 and 8, and are supplied to the cell chambers by pumps or the like. The current generated by the cell for a redox flow battery may be converted from DC to AC through an AC/DC converter 9 or may be converted from AC to DC through the AC/DC converter 9, and the cell for a redox flow battery may be packed. The cell for a redox flow battery of the present embodiment is preferably a cell for a redox flow secondary battery.

<Redox flow battery>

The cell for a redox flow battery can be stacked to provide a redox flow battery. When stacked, such cells for redox flow batteries can be electrically conducted through a bipolar plate.
The material of the bipolar plate is not particularly limited, and examples include carbon, graphite, and a metal. A carbon particle, a carbon fiber, a metal particle, a metal fiber, graphene, and a carbon nanotube may be dispersed in the material.
The material may be used singly or in combinations of a plurality thereof.
The bipolar plate can sometimes enhance the contact between an electrode and an electrolyte solution, and thus may have various flow channels. Such a flow channel is not particularly limited, and examples can include Serpentine, Interdigitated, Pararell, Multi-parallel, Discontinuous, and any combination of such flow channels.

<Electrolyte solution>

The electrolyte solution in the present embodiment is a liquid containing a redox active material and an electrolytic solvent.
The redox active material is a substance having redox activity directly involving in an electromotive force in the cell for a redox flow battery. The redox active material used in the present embodiment is not particularly limited, and examples thereof include a metallic redox active material, a non-metallic redox active material, and an organic redox active material, and such each redox active material may be a neutral compound or an ionic compound.
The metallic redox active material is a substance containing at least one metal atom, and may contain a plurality of the same type of metal atoms or a plurality of different types of metals. The metal atom used in the metallic redox active material is not particularly limited, examples thereof include aluminum, titanium, vanadium, chromium, manganese, iron, cobalt, nickel, copper, zinc, tin, lead, and cerium, and in particular, titanium, vanadium, chromium, manganese, iron, and cerium are preferred. Vanadium, iron, copper, and tin are preferred, vanadium and iron are further preferred, and vanadium is particularly preferred from the viewpoint that the first redox active material and the second redox active material can be the same in type.
The metallic redox active material may have a ligand for active materials, commonly used, and examples of the ligand include a cyanated product ion, acetylacetone, ethylenediamine, ethylenediaminetetraacetic acid, diethylenetriaminepentaacetic acid, carbon monoxide, bipyridine, bipyrazine, ethylene glycol, propylene glycol, ethanedithiol, butanedithiol, terpyridine, diethylenetriamine, triazacyclononane, tris(hydroxymethyl)aminomethane, ascorbic acid, citric acid, glycolic acid, gluconic acid, acetic acid, formic acid, benzoic acid, malic acid, maleic acid, phthalic acid, sarcosine acid, salicylic acid, oxalic acid, urea, aminophenolate, and lactic acid.
Such a ligand for active materials may be adopted singly or in combinations of a plurality thereof.
The material used in the non-metallic redox active material is not particularly limited, and examples thereof include chlorine, bromine, sulfur, and polysulfide.
The organic redox active material is not particularly limited, and examples thereof include viologen, a derivative thereof, and a compound having a viologen structure in a polymer side chain, a 2,2,6,6-tetramethyl-1-piperidinyloxy radical, a derivative thereof, and a compound having a 2,2,6,6-tetramethyl-1-piperidinyloxy radical structure in a polymer side chain, ferrocene, a derivative thereof, and a compound having a ferrocene structure in a polymer side chain, quinone, a derivative thereof, and a compound having a quinone structure in a polymer side chain, anthraquinone, a derivative thereof, and a compound having an anthraquinone structure in a polymer side chain, and quinoxaline, a derivative thereof, and a compound having a quinoxaline structure in a polymer side chain.
The redox active material may be adopted singly or in combinations of a plurality thereof.
When the redox active material is used in the cell for a redox flow battery, the redox active material used in the electrolyte solution of the positive electrode and the redox active material used in the electrolyte solution of the negative electrode can be used in combination depending on desired characteristics. The combination of such redox active materials is not particularly limited, and examples thereof include respective combinations of vanadium/vanadium, iron/iron, lead/lead, copper/copper, iron/chromium, chromium/bromine, zinc/bromine, polysulfide/bromine, zinc/cerium, zinc/nickel, zinc/cerium, zinc/iodine, titanium/manganese, vanadium/cerium, and vanadium/manganese. In particular, vanadium/vanadium, iron/iron, iron/chromium, chromium/bromine, zinc/bromine, and titanium/manganese are preferred, vanadium/vanadium, iron/iron, and zinc/bromine are more preferred, and vanadium/vanadium is particularly preferred because a high electromotive force is obtained and stability in charge and discharge is excellent.
In a case where the redox active materials of the positive electrode and the negative electrode are each vanadium, the cell for a redox flow battery, and the redox flow battery are also designated respectively as "cell for a vanadium redox flow battery", and "vanadium redox flow battery". In addition, in a case where the redox active materials of the positive electrode and the negative electrode are each vanadium, charge and discharge are performed by utilizing an oxidation-reduction reaction, by use of each redox coupling of $VO^{2+}/VO_2^+$ in the positive electrode and $V^{2+}/V^{3+}$ in the

negative electrode. When charge is performed, protons (H+) are excess in the cell chamber of the positive electrode and, on the other hand, protons (H+) are deficient in the cell chamber of the negative electrode, along with the oxidation-reduction reaction. The separation membrane allows excess protons in the cell chamber of the positive electrode to be selectively moved to the chamber of the negative electrode, and electrical neutrality is kept. When discharge is performed, its opposite reaction progresses and electrical neutrality is kept.

The electrolytic solvent used in the electrolyte solution is not particularly limited, and examples thereof include water, alcohols, nitriles, esters, ketones, ethers, aliphatic hydrocarbons, and aromatic hydrocarbons. In particular, water is preferred from the viewpoint of an enhancement in stability in operating of the cell for a redox flow battery.

Specific examples of the electrolytic solvent include alcohols such as methanol, ethanol, propanol, butanol, hexanol, cyclohexanol, ethylene glycol, diethylene glycol, and glycerol, nitriles such as acetonitrile, propionitrile, and benzonitrile, esters such as ethyl acetate and butyl acetate, ketones such as acetone, methyl ethyl ketone, methyl isobutyl ketone, and cyclohexanone, ethers such as diethyl ether, tetrahydrofuran, methyltetrahydrofuran, dioxane, ethylene glycoldiethyl ether, and diethylene glycol dimethyl ether, aliphatic hydrocarbons such as pentane, hexane, cyclohexane, heptane, octane, chloroform, dichloromethane, and tetrachloromethane, and aromatic hydrocarbons such as benzene, toluene, xylene, chlorobenzene, dichlorobenzene, phenol, and cresol.

The electrolytic solvent used in the electrolyte solution may be adopted singly or in combinations of a plurality thereof.

An electrolyte may be further used in the electrolyte solution. The electrolyte is a substance which releases ions in the electrolyte solution to enhance electrical conductivity of the electrolyte solution. The electrolyte is not particularly limited, and examples thereof include sulfuric acid, hydrochloric acid, nitric acid, acetic acid, phosphoric acid, sodium hydroxide, potassium hydroxide, calcium hydroxide, and sodium acetate.

The electrolyte used in the electrolyte solution may be adopted singly or in combinations of a plurality thereof.

An additive may be added to the electrolyte solution depending on desired characteristics of the electrolyte solution. The additive is not particularly limited, and examples thereof include ethylene glycol, diethylene glycol, polyethylene glycol, glycerol, mannitol, sorbitol, pentaerythritol, tris(hydroxymethyl)aminomethane, cornstarch, corn syrup, gelatin, glycerol, guar gum, pectin, and a surfactant.

The additive used in the electrolyte solution may be adopted singly or in combinations of a plurality thereof.

<Electrode>

The electrode of the present embodiment is not particularly limited. Examples of the electrode include a metal electrode and a carbon electrode.

The material of the metal electrode is not particularly limited, and examples thereof include aluminum, gold, silver, copper, chromium, molybdenum, nickel, thallium, titanium, iridium, zinc, tin, and any composite of such metals. The shape of the metal electrode is not particularly limited, and examples thereof include a plate shape, a lattice shape, a network shape (rhombic shape, testudinal shape), a linear shape, and a rod shape.

The carbon electrode is not particularly limited, and examples thereof include a glassy carbon electrode, a pyrolytic carbon electrode, a carbon felt electrode, a carbon paper electrode, a carbon foam electrode, a carbon cloth electrode, a carbon knit electrode, a carbon nanofiber sheet electrode, and an activated carbon fiber sheet electrode. The electrode preferably has continuous voids and is more preferably a porous body having continuous voids in an application in which a liquid and a gas are allowed to flow in the electrode. Examples of such a carbon electrode having continuous voids include a carbon felt electrode, a carbon paper electrode, a carbon foam electrode, a carbon cloth electrode, a carbon knit electrode, a carbon nanofiber sheet electrode, and an activated carbon fiber sheet electrode. In particular, carbon felt, carbon paper, and carbon foam are preferred, and carbon foam is more preferred, from the viewpoint that high flexibility and a large surface area can result in a reduction in resistance. The carbon foam preferably has a structure in which a carbon portion is three-dimensionally continuous. The carbon foam can have high flexibility and a high surface area, and therefore preferably has a linear portion and a binding portion which binds the linear portion.

Specific examples of the carbon felt and the carbon paper include SIGRACELL (registered trademark) KFD series, GFA series, GFD series, SGL series, and SIGRACET (registered trademark) series manufactured by SGL CARBON, carbon felt (for example, XF30A, BW-309) manufactured by Toyobo Co., Ltd., CARBORON (registered trademark) GF series (for example, GF-20, GF-3F) manufactured by Nippon Carbon Co., Ltd., Torayca (trademark) TGP series manufactured by Toray Industries, Inc., PYROFIL (trademark) series and GRAFIL (trademark) series manufactured by Mitsubishi Chemical Corporation, VGCF (registered trademark) sheet manufactured by Showa Denko K.K., and carbon felt and graphite felt manufactured by MERSEN. These may be each, if necessary, subjected to activation treatment such as oxidation.

The carbon foam can be produced by any known method (International Publication No. WO 2018/096895, International Publication No. WO 2018/168741, International Publication No. WO 2020/045645).

The electrode may be used singly or in combinations of a plurality thereof.

<Membrane electrode assembly>

The membrane electrode assembly in the present embodiment has a structure in which the ion-exchange membrane and at least one electrode are bonded. The bonding means that the ion-exchange membrane and at least one electrode are joined, and the bonding can allow the ion-exchange membrane and at least one electrode to be integrated. For example, the bonding may be preferably used in a separation membrane electrode assembly including the ion-exchange membrane and two electrodes because assembling of the cell for a redox flow battery does not require a step of sequentially applying an electrode, the ion-exchange membrane and an electrode and can be made as one step and the production cost tends to be able to be suppressed.

The method for bonding the ion-exchange membrane and at least one electrode is not particularly limited, and examples thereof include a method with heat press and/or heat roll press.

The temperature in the bonding is not particularly limited, and is preferably equal to or more than room temperature in a case in which the bonding between the ion-exchange membrane and the electrode is insufficient, because the ion-exchange membrane tends to be reduced in elastic modulus to enhance the bonding between the ion-exchange membrane and the electrode. The temperature in the bonding is preferably 250°C or less, more preferably 200°C or less, further preferably 170°C or less, particularly preferably 150°C or less because alteration of the ion-exchange membrane tends to be able to be suppressed.

The pressure in the bonding is not particularly limited, and is a pressure of more than 0 MPa. The pressure is preferably 0.01 MPa or more, more preferably 0.05 MPa or more, further preferably 0.08 MPa or more, particularly preferably 0.1 MPa or more because the bonding between the ion-exchange membrane and the electrode tends to be enhanced. The pressure is preferably 100 MPa or less, more preferably 50 MPa or less, further preferably 20 MPa or less, particularly preferably 10 MPa or less because alteration of the electrode tends to be able to be suppressed.

The time in the bonding is not particularly limited, and is a time of more than 0 seconds. The time is preferably 0.01 seconds or more, more preferably 0.1 seconds or more, further preferably 0.5 seconds or more, particularly preferably 1 second or more because the bonding between the ion-exchange membrane and the electrode tends to be enhanced. The time is preferably 10 hours or less, more preferably 5 hours or less, further preferably 2 hours or less, particularly preferably 1 hour or less because the cost in production of the membrane electrode assembly tends to be able to be reduced.

The atmosphere in the bonding is not particularly limited, and examples include air, nitrogen, and argon. Air or nitrogen is preferred and air is more preferred because the cost in production of the membrane electrode assembly tends to be able to be reduced.

Examples of the application of the membrane electrode assembly of the present embodiment include a cell for a redox flow battery, a redox flow battery, a solid polyelectrolyte fuel cell, salt electrolysis, alkaline water electrolysis, and carbon dioxide electroreduction, and examples of a suitable application include a cell for a redox flow battery, and a redox flow battery.

The cell for a redox flow battery, and the redox flow battery of the present embodiment can be used to provide a mechanism which smooths the amount of supply and demand of power and stabilizes the varying power obtained from a renewable energy source such as solar energy or wind energy. More specifically, it is possible to provide, for example, integration of the power obtained from a renewable energy source, power peak load shifting, stabilization of a transmission and distribution grid, base load power, energy arbitrage, supporting of a weak transmission and distribution grid, frequency adjustment, and any combination thereof. The cell for a redox flow battery, and the redox flow battery can also be used as a power supply of a remote camping, a forward operating base, transmission and distribution communication, a remote sensor, or the like utilizing no transmission and distribution grid.

The cell for a redox flow battery, and the redox flow battery of the present embodiment can include a control system and a power regulation unit.

The control system can be used to control operating of various valves, pumps, circulation circuits, sensors, relaxation equipment, other electronic/hardware controllers, safeguard apparatuses, and the like.

The power adjustment unit can be used to convert the voltage of the input power, and the current into optimal modes for the cell for a redox flow battery, and/or the redox flow battery, and convert the voltage of the output power, and the current into optimal modes for any application. For example, in a case where the cell for a redox flow battery, and/or the redox flow battery are/is connected to a transmission and distribution grid, the power regulation unit can convert the input AC power into the DC power of suited voltage and current in a charge cycle. The cell for a redox flow battery, and/or the redox flow battery can generate the DC power and the power regulation unit can convert the DC power to the AC power of suitable voltage and frequency for sending to the transmission and distribution grid in a discharge cycle.

Hereinafter, the present embodiment is more specifically described with reference to Examples, but is not limited to the following Examples.

<Membrane thickness measurement A>

The membrane thickness of the separation membrane was measured with a membrane thickness meter "543-551-1/215-151" (manufactured by Mitutoyo Corporation). The membrane thickness was here the average value of the results measured at five positions.

<Membrane thickness measurement B>

The membrane thickness of the anion-exchangeable resin layer was determined by observing a cross section of the separation membrane with a scanning electron microscope (SEM). Specifically, the membrane thickness was measured in an observation image at 20000x with SEM "SU8010" (manufactured by Hitachi High-Technologies Corporation). The cross section of the separation membrane was exposed with a microtome "EM UC7" (manufactured by Leica) after the separation membrane was embedded in an epoxy resin-based adhesive (manufactured by Konishi Co., Ltd., "Epoclear"). In a case where the anion-exchangeable resin layer and the epoxy resin-based adhesive were contacted in embedding of the separation membrane, the cross section was exposed by putting an sulfonic acid membrane "Nafion (trademark) NR211" (manufactured by Chemours Company) on a surface of the anion-exchangeable resin layer of the separation membrane to be measured, stacking the resultant by a pressing machine ("KVHCII" manufactured by Kitagawa Seiki Co., Ltd.) under conditions of room temperature, 2 MPa, and 30 seconds, to provide a membrane, and embedding the membrane in the same manner as described above. The membrane thickness was here the average value of the results observed at five positions.

<Equivalent weight (EW) measurement>

After 0.02 to 0.10 g of a measurement object was immersed in 50 mL of an aqueous saturated NaCl solution (0.26 g/mL) at 25°C and left to still stand under stirring for 10 minutes, the resultant was subjected to neutralization titration by use of an aqueous 0.01 mol/L sodium hydroxide solution (manufactured by FUJIFILM Wako Pure Chemical Corporation, for capacity titration) with phenolphthalein (manufactured by FUJIFILM Wako Pure Chemical Corporation, reagent special grade) as an indicator.

More specifically, the membrane obtained after neutralization titration, in which the acidic group was converted to Na, was rinsed with pure water, and then vacuum-dried with a vacuum constant temperature dryer (manufactured by Tokyo Rikakikai Co., Ltd., VOS-451SD) and weighed. The equivalent of sodium hydroxide necessary for neutralization was designated as M (mmol) and the mass of the measurement object after vacuum drying was designated as W (mg), and the equivalent weight (g/eq) was determined by the following expression.

$$\text{Equivalent weight} = (W/M) - 22$$

In a case where the acidic group of the measurement object was at least partially reacted with a basic substance to form a salt, the above measurement was performed after treatment according to the following procedures (1) to (2).

(1) The measurement object was immersed in 1 mol/L sulfuric acid (manufactured by FUJIFILM Wako Pure Chemical Corporation, for volumetric analysis).
(2) An operation including heating at 60°C for 1 hour and then washing with water was repeated three times.

<Melt flow index (MFI) measurement>

The melt flow index (MFI) was measured according to ASTM: D1238 (measurement conditions: temperature 270°C, load 2160 g). MFI was the weight of a substance extruded, expressed by the number of grams per 10 minutes (g/10 min).

<Melt flow rate (MFR) measurement>

In melt flow rate (MFR) measurement, the melt flow rate (MFR, g/10 min) of the fluororesin G1 precursor was measured with an apparatus having an orifice having an inner diameter of 2.09 mm and a length of 8 mm under conditions of a temperature of 270°C and a load of 2.16 kg, based on JIS K-7210.

<Evaluation of cell for redox flow battery>

A cell constituted from a Viton (trademark) rubber gasket, a polyvinylidene chloride flow channel frame, a

graphite bipolar plate (material: "G347" manufactured by Tokai Carbon Co., Ltd.) provided with a copper electrode terminal, and an acrylic resin endplate was used in evaluation of the cell for a redox flow battery. The separation membrane used here was a separation membrane prepared in each of Examples and Comparative Examples and cut out to 50 × 90 mm. The membrane thickness of the Viton (trademark) rubber gasket was modulated so as to correspond to 50% of the compression rate (ratio in thickness before and after compression) of an electrode. The electrode was cut out to 20 × 25 mm and then used.

The separation membrane, two electrodes, and a cell-constituting member were combined according to the order of the acrylic resin endplate, the graphite bipolar plate provided with a copper electrode terminal, the Viton (trademark) rubber gasket, the polyvinylidene chloride flow channel frame, an electrode, the separation membrane, an electrode, the Viton (trademark) rubber gasket, the graphite bipolar plate provided with a copper electrode terminal, and the acrylic resin endplate, and engaged with a stainless bolt. The Viton (trademark) rubber gasket was also disposed between the polyvinylidene chloride flow channel frame and the separation membrane. To an electrolyte solution tank was added 7 mL of a vanadium sulfate solution having a vanadium ion concentration of 1.6 M, a vanadium ion valency of 3.5, and a sulfuric acid ion concentration of 4.5 M, and circulated at a flow rate of 7 mL/min. A charge and discharge test was performed with a charge/discharge power supply apparatus "PFX2011" (product name, manufactured by Kikusui Electronics Corp.) and a control unit "PFX2121" (product name, manufactured by Kikusui Electronics Corp.), according to a constant-current method. The voltage range was 1.00 to 1.55 V, and the current density was 80 $mA/cm^2$.

<Current efficiency>

The current efficiency was determined by dividing the discharge capacity by the charge capacity in 100 charge/discharge cycles.

<Voltage efficiency>

The voltage efficiency was determined by dividing the average voltage of discharge by the average voltage of charge in 100 charge/discharge cycles.

<Power efficiency>

The power efficiency was determined by dividing the amount of discharge power by the amount of charge power in 100 charge/discharge cycles.

[Production Example 1: production of carbon foam electrode]

A carbon foam electrode was produced by the following method, with reference to Example 9 in International Publication No. WO 2020/045645.

A SUS plate having a thickness of 1.2 mm was placed as a spacer on the periphery of melamine resin foam (dimension: 400 mm × 400 mm × 40 mm), sandwiched between 10-mm thick graphite plates from the top and from the bottom, and introduced into a vacuum heat pressing machine (KVHC-II manufactured by Kitagawa Seiki Co., Ltd.). Next, while the inside of the pressing machine was evacuated and reduced in pressure by a vacuum pump, the temperature in the machine was raised to 360°C at a rate of temperature rise of 5°C/min, and kept for 5 minutes. While the temperature was raised and kept at 360°C, pressing at a pressure of 3.0 MPa was made. Thereafter, the temperature in the machine was dropped to 50°C, and then the vacuum pump was stopped to release the pressing.

The resulting sample after the pressing was loaded into a heat treatment furnace (6-L14 manufactured by ULVAC Inc.), and the temperature in the furnace was raised to 1100°C at a rate of temperature rise of 5°C/min and kept for 1 hour with a nitrogen gas being supplied at a flow rate of 2 L/min into the furnace under evacuation and reduction in pressure. Thereafter, the temperature in the furnace was dropped to room temperature, and then the vacuum pump was stopped.

The resulting sample after heat treatment was loaded into a mesh belt type electric furnace set at a temperature in the furnace of 330°C, to which dry air was supplied at a flow rate of 1 L/min, and the resultant was kept for 1 hour, thereby producing a carbon foam electrode.

[Production Example 2]

A fluororesin G1 precursor being a copolymer of the general formula G8: $CFZ^1=CZ^2Z^3$ [G8] ($Z^1 = Z^2 = Z^3 = F$) and the general formula G9: $CF_2=CF-O-(CF_2CFXO)_n-A$ [G9] ($X = CF_3$, $A = (CF_2)_2-SO_2F$) was produced according to Comparative Example 2 in Japanese Patent Laid-Open No. 2002-231269. A membrane of a fluororesin G1 precursor obtained by using a T die method was formed on a polyethylene terephthalate substrate. The thickness of the resulting

fluororesin G1 precursor membrane on the substrate was measured by Membrane thickness measurement A, and as a result, was 50 μm. The MFI of the fluororesin G1 precursor produced was measured, and as a result, was 20 g/10 min.

[Production Example 3]

The fluororesin G1 precursor membrane obtained in Production Example 2 was released from the substrate, and immersed in an alkali mixed liquid (a solution of dimethylsulfoxide (manufactured by FUJIFILM Wako Pure Chemical Corporation, reagent special grade, dimethylsulfoxide described below and used was manufactured by the same manufacturer and had the same specification), potassium hydroxide (manufactured by FUJIFILM Wako Pure Chemical Corporation, reagent special grade, potassium hydroxide described below and used was manufactured by the same manufacturer and had the same specification), and distilled water (manufactured by Hayashi Pure Chemical Ind., Ltd., distilled water described below and used was manufactured by the same manufacturer) at a mass ratio of 5:30:65), and treated at 95°C for 1 hour. After cooling to room temperature, the membrane treated was taken out and washed with water. The above operation by the alkali mixed liquid is hereinafter also referred to as "hydrolysis".

The resulting membrane was immersed in 1 mol/L sulfuric acid (manufactured by FUJIFILM Wako Pure Chemical Corporation, for volumetric analysis, 1 mol/L sulfuric acid described below and used was manufactured by the same manufacturer and had the same specification), and treated at 60°C for 1 hour. After cooling to room temperature, the membrane treated was taken out and washed with water. An operation including immersing the resulting membrane in 1 mol/L sulfuric acid, treating the membrane at 60°C for 1 hour and washing the membrane with water was repeated twice. The above operation by sulfuric acid is hereinafter also referred to as "H-type conversion". The resulting membrane was dried at 120°C for 20 minutes, thereby producing a fluororesin G1 membrane.

The equivalent weight of the resulting membrane was measured, and thus was 950 g/eq.

[Production Example 4]

A fluororesin G1 precursor being a copolymer of the general formula G8 ($Z^1 = Z^2 = Z^3 = F$) and the general formula G9 ($X = CF_3$, $A = (CF_2)_2\text{-}SO_2F$) was produced according to Example 3 in International Publication No. WO 2007/089017. A membrane of a fluororesin G1 precursor obtained by using a T die method was formed on a polyethylene terephthalate substrate. The thickness of the resulting fluororesin G1 precursor membrane on the substrate was measured by Membrane thickness measurement A, and as a result, was 50 μm. The MFI of the fluororesin G1 precursor produced was measured, and as a result, was 16 g/10 min.

[Production Example 5]

The precursor membrane obtained in Production Example 4 was hydrolyzed, subjected to H-type conversion, and dried at 120°C for 20 minutes, thereby producing a fluororesin G1 membrane.

The equivalent weight of the resulting membrane was measured, and thus was 980 g/eq.

[Production Example 6]

A fluororesin G1 precursor being a copolymer of the general formula G8 ($Z^1 = Z^2 = Z^3 = F$) and the general formula G9 ($X = CF_3$, $A = (CF_2)_2\text{-}SO_2F$) was produced according to Example 3 in International Publication No. WO 2006/028190. A membrane of a fluororesin G1 precursor obtained by using a T die method was formed on a polyethylene terephthalate substrate. The thickness of the resulting fluororesin G1 precursor membrane on the substrate was measured by Membrane thickness measurement A, and as a result, was 90 μm. The MFI of the fluororesin G1 precursor produced was measured, and as a result, was 20 g/10 min.

[Production Example 7]

The precursor membrane obtained in Production Example 6 was hydrolyzed, subjected to H-type conversion, and dried at 120°C for 20 minutes, thereby producing a fluororesin G1 membrane.

The equivalent weight of the resulting membrane was measured, and thus was 901 g/eq.

[Production Example 8: production of side-chain heteroaromatic ring resin]

A 1-L three-necked flask was charged with 1-vinylimidazole (manufactured by Sigma-Aldrich, 150 g, 1.59 mol), N,N-dimethylformamide (manufactured by FUJIFILM Wako Pure Chemical Corporation, reagent special grade, 450 mL, dimethylsulfoxide described below and used was manufactured by the same manufacturer and had the same specification), and a stirring element, and nitrogen bubbling was made under stirring for 20 minutes. Thereafter, 2,2'-azobis(isobutyronitrile) (manufactured by FUJIFILM Wako Pure Chemical Corporation, Wako special grade, 262 mg, 1.60 mmol) was added under a nitrogen stream, and nitrogen bubbling was further made under stirring for 10 minutes. The 1-L three-necked flask was placed in an oil bath set to 65°C, heated under stirring for 21 hours, and then taken out from the oil bath and cooled to room temperature. A 10-L separable flask was charged with ethyl acetate (manufactured by FUJIFILM Wako Pure Chemical Corporation, reagent special grade, 5.00 L), and a stirring element, and the content of the 1-L three-necked flask was added under stirring. A solid precipitated was taken by filtration, and the resulting filtrate was vacuum-dried at 50°C, thereby obtaining a white solid (83.5 g). A 2-L flask was charged with the obtained white solid (83.5 g), methanol (manufactured by FUJIFILM Wako Pure Chemical Corporation, reagent special grade, 1.25 L), and a stirring element, and subjected to stirring, thereby obtaining a solution. A 30-L container was charged with ethyl acetate (manufactured by FUJIFILM Wako Pure Chemical Corporation, reagent special grade, 17.5 L), and the content of the 2-L flask was added thereto under stirring with a stirring blade equipped with a stirring machine (manufactured by Shinto Scientific Co., Ltd.). A solid precipitated was taken by filtration, and the resulting filtrate was vacuum-dried at 50°C, thereby producing a side-chain heteroaromatic ring resin (72.1 g, NMR purity 96.6% by mol) having a structure represented by the following general formula 17.

The NMR purity was calculated by dissolving a sample in methanol-d4 (manufactured by FUJIFILM Wako Pure Chemical Corporation, for NMR, 99.8% (containing 0.05% by volume TMS)), adding 2-propanol (manufactured by FUJIFILM Wako Pure Chemical Corporation, reagent special grade) as an internal standard material, and performing $^1$HNMR measurement under the following conditions. $^1$HNMR measurement in Production Examples described below was also performed in the same manner.

Measurement apparatus: JNM-ECZ400S nuclear magnetic resonance spectrometer (manufactured by JEOL Ltd.)
Reference material: tetramethylsilane (0.00 ppm)
Number of scans: 8

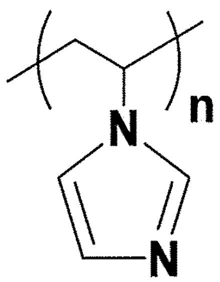

(17)

[Production Example 9: production of side-chain heteroaromatic ring resin]

A 200-mL three-necked flask was charged with polyvinylimidazole (6.70 g, 71.2 mmol) produced in Production Example 8, N,N-dimethylformamide (manufactured by FUJIFILM Wako Pure Chemical Corporation, reagent special grade, 100 mL), and a stirring element, and nitrogen bubbling was made under stirring for 10 minutes. Under a nitrogen stream, 1H,1H,2H,2H-nonafluorohexyl iodide (manufactured by Tokyo Chemical Industry Co., Ltd., 13.3 g, 35.6 mmol) was added to the 200-mL three-necked flask, and nitrogen bubbling was made for 10 minutes. The 200-mL three-necked flask was placed in an oil bath set to 80°C, heated under stirring for 24 hours, and then taken out from the oil bath and cooled to room temperature. A 2-L beaker was charged with ethyl acetate (manufactured by FUJIFILM Wako Pure Chemical Corporation, reagent special grade, 1.20 L), and a stirring element, and the content of the 200-mL three-necked flask was added thereto under stirring. A solid precipitated was taken by filtration, and the resulting filtrate was vacuum-dried at 60°C, thereby obtaining a crude product (15.7 g). A 300-mL flask was charged with the crude product (15.7 g), methanol (manufactured by FUJIFILM Wako Pure Chemical Corporation, reagent special grade, 100 mL), 2,2,2-trifluoro ethanol (manufactured by FUJIFILM Wako Pure Chemical Corporation, Wako special grade, 60 mL), and a stirring element, and the content was stirred, thereby obtaining a solution. A 4-L beaker was charged with ethyl acetate (manufactured by FUJIFILM Wako Pure Chemical Corporation, reagent special grade, 1.76 L), and a stirring element, and the content of the 300-mL flask was added thereto under stirring. A solid precipitated was taken by filtration, and the resulting filtrate was vacuum-dried at 60°C, thereby producing a side-chain heteroaromatic ring resin (14.7 g) having a structural unit represented by the following general formula 18. As a result of $^1$HNMR measurement of the resultant without any internal standard material, m = 0.5 and n = 0.5 were satisfied (m and n each represented the molar ratio in the side-chain heteroaromatic ring resin, and m and n were each calculated from the ratio between 3H of the imidazole structure and 4H of $(CH_2)_2$).

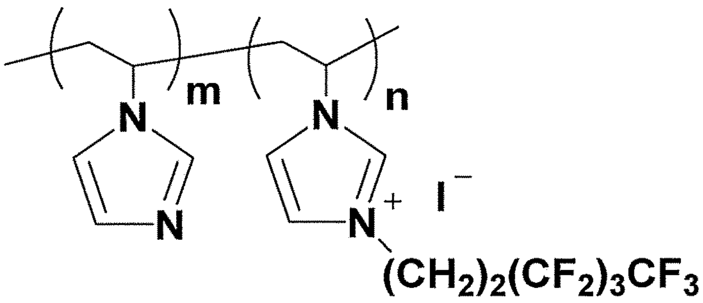

(18)

[Production Example 10: side-chain heteroaromatic ring resin]

A 200-mL three-necked flask was charged with polyvinylimidazole (5.70 g, 60.6 mmol) produced in Production Example 8, N,N-dimethylformamide (manufactured by FUJIFILM Wako Pure Chemical Corporation, reagent special grade, 85.5 mL), and a stirring element, and nitrogen bubbling was made under stirring for 10 minutes. Under a nitrogen stream, 1H,1H,2H,2H-tridecafluoro-n-octyl iodide (manufactured by Tokyo Chemical Industry Co., Ltd., 14.4 g, 30.3 mmol) was added to the 200-mL three-necked flask, and nitrogen bubbling was made for 10 minutes. The 200-mL three-necked flask was placed in an oil bath set to 80°C, heated under stirring for 24 hours, and then taken out from the oil bath and cooled to room temperature. A 2-L beaker was charged with ethyl acetate (manufactured by FUJIFILM Wako Pure Chemical Corporation, reagent special grade, 1.05 L), and a stirring element, and the content of the 200-mL three-necked flask was added thereto under stirring. A solid precipitated was taken by filtration, and the resulting filtrate was vacuum-dried at 60°C, thereby obtaining a crude product (15.2 g). A 300-mL flask was charged with the crude product (15.7 g), methanol (manufactured by FUJIFILM Wako Pure Chemical Corporation, reagent special grade, 100 mL), 2,2,2-trifluoro ethanol (manufactured by FUJIFILM Wako Pure Chemical Corporation, Wako special grade, 50 mL), and a stirring element, and the content was stirred, thereby obtaining a solution. A 4-L beaker was charged with ethyl acetate (manufactured by FUJIFILM Wako Pure Chemical Corporation, reagent special grade, 1.65 L), and a stirring element, and the content of the 300-mL flask was added thereto under stirring. A solid precipitated was taken by filtration, and the resulting filtrate was vacuum-dried at 60°C, thereby producing a side-chain heteroaromatic ring resin (14.4 g) having a structural unit represented by the following general formula 19. As a result of $^{1}$HNMR measurement of the resultant without any internal standard material, m = 0.5 and n = 0.5 were satisfied (m and n each represented the molar ratio in the side-chain heteroaromatic ring resin, and m and n were each calculated from the ratio between 3H of the imidazole structure and 4H of (CH2)2).

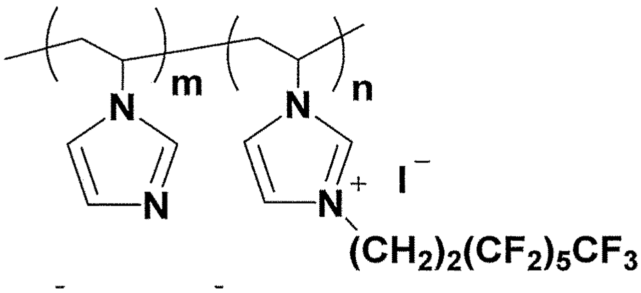

(19)

[Production Example 11: side-chain heteroaromatic ring resin]

A 2-L flask was charged with poly(4-vinylpyridine) (manufactured by Sigma-Aldrich, average Mw about 160,000, 120 g), ethanol (manufactured by FUJIFILM Wako Pure Chemical Corporation, reagent special grade, 1.37 L), and a stirring element, and the content was stirred, thereby providing a solution. A 30-L stainless tank was charged with distilled water (manufactured by Hayashi Pure Chemical Ind., Ltd., 13.5 L), and the content of the 2-L flask was added thereto. A solid precipitated was recovered, and dried by a vacuum drier at 80°C and pulverized, thereby obtaining a side-chain heteroaromatic ring resin (poly(4-vinylpyridine)) having a structural unit represented by the following general formula (20) (104 g, NMR purity 98.9% by mol). The NMR purity was calculated by $^{1}$HNMR measurement.

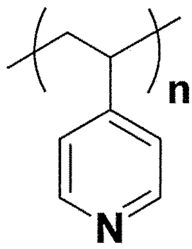

(20)

[Production Example 12]

A 200-mL three-necked flask was charged with poly(4-vinylpyridine) (7.20 g, 68.5 mmol) produced in Production Example 11, N,N-dimethylformamide (manufactured by FUJIFILM Wako Pure Chemical Corporation, reagent special grade, 108 mL), and a stirring element, and nitrogen bubbling was made under stirring for 10 minutes. Under a nitrogen stream, 1H,1H,2H,2H-nonafluorohexyl iodide (manufactured by Tokyo Chemical Industry Co., Ltd., 12.8 g, 34.2 mmol) was added to the 200-mL three-necked flask, and nitrogen bubbling was made for 10 minutes. The 200-mL three-necked flask was placed in an oil bath set to 100°C, heated under stirring for 24 hours, and then taken out from the oil bath and cooled to room temperature. A 2-L beaker was charged with ethyl acetate (manufactured by FUJIFILM Wako Pure Chemical Corporation, reagent special grade, 1.30 L), and a stirring element, and the content of the 200-mL three-necked flask was added thereto under stirring. A solid precipitated was taken by filtration, and the resulting filtrate was vacuum-dried at 80°C, thereby obtaining a crude product (16.8 g). A 300-mL flask was charged with the crude product (16.8 g), N,N-dimethylformamide (manufactured by FUJIFILM Wako Pure Chemical Corporation, reagent special grade, 170 mL), and a stirring element, and the content was stirred, thereby obtaining a solution. A 4-L beaker was charged with diethyl ether (manufactured by FUJIFILM Wako Pure Chemical Corporation, reagent special grade, 2.50 L), and a stirring element, and the content of the 300-mL flask was added thereto under stirring. A solid precipitated was taken by filtration, and the resulting filtrate was vacuum-dried at 80°C, thereby producing a side-chain heteroaromatic ring resin (13.5 g) having a structural unit represented by the following general formula 21. As a result of $^1$HNMR measurement of the resultant without any internal standard material, m = 0.46 and n = 0.54 were satisfied (m and n each represented the molar ratio in the side-chain heteroaromatic ring resin, and m and n were each calculated from the ratio between 4H of the pyridine structure and 4H of $(CH_2)_2$).

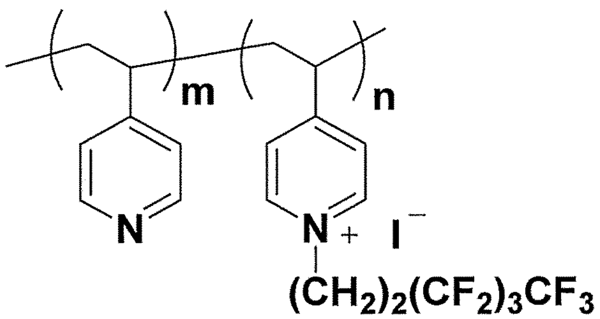

(21)

[Production Example 13]

A 200-mL three-necked flask was charged with poly(4-vinylpyridine) (6.20 g, 59.0 mmol) produced in Production Example 11, N,N-dimethylformamide (manufactured by FUJIFILM Wako Pure Chemical Corporation, reagent special grade, 93.0 mL), and a stirring element, and nitrogen bubbling was made under stirring for 10 minutes. Under a nitrogen stream, 1H,1H,2H,2H-tridecafluoro-n-octyl iodide (manufactured by Tokyo Chemical Industry Co., Ltd., 14.0 g, 29.5 mmol) was added to the 200-mL three-necked flask, and nitrogen bubbling was made for 10 minutes. The 200-mL three-necked flask was placed in an oil bath set to 100°C, heated under stirring for 24 hours, and then taken out from the oil bath and cooled to room temperature. A 2-L beaker was charged with ethyl acetate (manufactured by FUJIFILM Wako Pure Chemical Corporation, reagent special grade, 1.55 L), and a stirring element, and the content of the 200-mL three-necked flask was added thereto under stirring. A solid precipitated was taken by filtration, and the resulting filtrate was vacuum-dried at 80°C, thereby obtaining a crude product (16.8 g). A 300-mL flask was charged with the crude product (17.0 g), N,N-dimethylformamide (manufactured by FUJIFILM Wako Pure Chemical Corporation, reagent special grade, 170 mL), and a stirring element, and the content was stirred, thereby obtaining a solution. A 4-L beaker was charged with diethyl ether (manufactured by FUJIFILM Wako Pure Chemical Corporation, reagent special grade, 2.50 L), and a stirring element, and

the content of the 300-mL flask was added thereto under stirring. A solid precipitated was taken by filtration, and the resulting filtrate was vacuum-dried at 80°C, thereby producing a side-chain heteroaromatic ring resin (15.9 g) having a structural unit represented by the following general formula 22. As a result of $^1$HNMR measurement of the resultant without any internal standard material, m = 0.52 and n = 0.48 were satisfied (m and n each represented the molar ratio in the side-chain heteroaromatic ring resin, and m and n were each calculated from the ratio between 4H of the pyridine structure and 4H of $(CH_2)_2$).

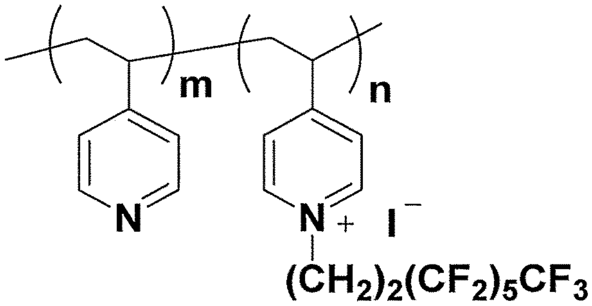

(22)

[Production Example 14]

A fluororesin G1 containing repeating units derived from a fluorinated olefin ($CF_2$=$CF_2$) and a vinyl fluoride compound ($CF_2$=$CFOCF_2CF(CF_3)O(CF_2)_2$-$SO_3H$) and having an EW of 910 g/eq was produced with reference to Japanese Patent Publication No. 5474762. The resulting fluororesin G1 was used to produce a homogeneous solution (water : ethanol = 50:50 (mass ratio)) having a solid content concentration of 5% by mass. Five hundred g of water was added to 500 g of the solution, and concentration under reduced pressure was performed at 80°C until the solid content concentration reached 15% by mass. The above addition of water and concentration under reduced pressure were repeated until the content of ethanol reached 0.1% by mass or less. Five hundred g of water was added to the resulting liquid after concentration under reduced pressure, and concentration under reduced pressure was performed at 80°C, thereby producing polyelectrolyte solution A1 having a solid content concentration of 30% by mass.

[Production Example 15]

Polyelectrolyte solution A1 obtained in Production Example 14 was diluted with water, thereby producing polyelectrolyte solution E having a solid content concentration of 1% by mass.

[Examples: first embodiment]

Hereinafter, the first embodiment is more specifically described with reference to Examples, but is not limited to the following Examples.

[Example 1]

A solution containing 1.0% by weight of the side-chain heteroaromatic ring resin produced in Production Example 9, having the structural unit represented by the general formula 18, in N,N-dimethylformamide (manufactured by FUJIFILM Wako Pure Chemical Corporation, reagent special grade), was prepared as a spray liquid.

A Kapton (registered trademark) film (manufactured by Du Pont-Toray Co., Ltd., thickness 75 μm) and the fluororesin G1 membrane produced in Production Example 3 were located in the listed order on a stainless plate and four sides thereof were held together with a Kapton (registered trademark) tape (manufactured by Nitto Denko Corporation, thickness 69 μm). The stainless plate was placed on a stage warmed to a temperature of 70°C of a spray applicator ("PCS2020" manufactured by Asahi Sunac Corporation), and the stage was subjected to pressure reduction. The spray liquid was spray-atomized to the fluororesin G1 membrane. The pressure reduction in the stage was stopped, and the stainless plate was taken out, placed in an oven ("PHH-202" manufactured by ESPEC Corp.) set to 120°C, and dried for 20 minutes, and then taken out and cooled. A membrane in which the side-chain heteroaromatic resin layer (in the present embodiment, also referred to as "anion-exchangeable resin layer", "layer (L)") and the cation-exchangeable resin layer (also referred to as "layer (M)") were stacked was released from the Kapton (registered trademark) film. The resulting membrane was placed in a polypropylene tray in which 1 mol/L sulfuric acid (manufactured by FUJIFILM Wako Pure Chemical Corporation) was placed, and left to still stand for 12 hours and then taken out. The resulting membrane was washed with distilled water (manufactured by Hayashi Pure Chemical Ind., Ltd.), placed in a polyethylene tray, left to still

stand for 12 hours, and then taken out. The resulting membrane was placed in an oven ("PHH-202" manufactured by ESPEC Corp.) set to 120°C, and dried for 20 minutes, and then taken out and cooled, thereby obtaining a separation membrane as an ion-exchange membrane in which the anion-exchangeable resin layer and the cation-exchangeable resin layer were stacked. The separation membrane obtained was used to perform evaluation of the cell for a redox flow battery. In evaluation of the cell for a redox flow battery, the anion-exchangeable resin layer was located closer to an electrode acting as the negative electrode. The electrode here used was the carbon foam electrode produced in Production Example 1. As a result of evaluation of the cell for a redox flow battery, the current efficiency was 99.1%, the voltage efficiency was 93.2%, and the power efficiency was 92.4%.

The equivalent weight of the separation membrane was measured, and as a result, was 1100 g/eq.

The thickness of the anion-exchangeable resin layer of the separation membrane was measured by Membrane thickness measurement B, and as a result, was 700 nm.

[Example 2]

A separation membrane was produced and evaluation of the cell for a redox flow battery was performed in the same manner as in Example 1 except that a solution containing 1% by weight of the side-chain heteroaromatic ring resin produced in Production Example 10, having the structural unit represented by the general formula 19, in N,N-dimethylformamide (manufactured by FUJIFILM Wako Pure Chemical Corporation, reagent special grade) was prepared as a spray liquid. As a result of evaluation of the cell for a redox flow battery, the current efficiency was 98.5%, the voltage efficiency was 93.7%, and the power efficiency was 92.3%.

The equivalent weight of the separation membrane was measured, and as a result, was 1030 g/eq.

The thickness of the anion-exchangeable resin layer of the separation membrane was measured by Membrane thickness measurement B, and as a result, was 500 nm.

[Example 3]

A separation membrane was produced and evaluation of the cell for a redox flow battery was performed in the same manner as in Example 1 except that a solution containing 1% by weight of the side-chain heteroaromatic ring resin produced in Production Example 12, having the structural unit represented by the general formula 21, in N,N-dimethylformamide (manufactured by FUJIFILM Wako Pure Chemical Corporation, reagent special grade) was prepared as a spray liquid. As a result of evaluation of the cell for a redox flow battery, the current efficiency was 99.0%, the voltage efficiency was 93.3%, and the power efficiency was 92.4%.

The equivalent weight of the separation membrane was measured, and as a result, was 1050 g/eq.

The thickness of the anion-exchangeable resin layer of the separation membrane was measured by Membrane thickness measurement B, and as a result, was 620 nm.

[Example 4]

A separation membrane was produced and evaluation of the cell for a redox flow battery was performed in the same manner as in Example 1 except that a solution containing 1% by weight of the side-chain heteroaromatic ring resin produced in Production Example 13, having the structural unit represented by the general formula 22, in N,N-dimethylformamide (manufactured by FUJIFILM Wako Pure Chemical Corporation, reagent special grade) was prepared as a spray liquid. As a result of evaluation of the cell for a redox flow battery, the current efficiency was 99.0%, the voltage efficiency was 93.5%, and the power efficiency was 92.6%.

The equivalent weight of the separation membrane was measured, and as a result, was 1080 g/eq.

The thickness of the anion-exchangeable resin layer of the separation membrane was measured by Membrane thickness measurement B, and as a result, was 670 nm.

[Example 5]

A separation membrane was produced and evaluation of the cell for a redox flow battery was performed in the same manner as in Example 2 except that the fluororesin G1 membrane produced in Production Example 5 was used. As a result of evaluation of the cell for a redox flow battery, the current efficiency was 99.2%, the voltage efficiency was 93.2%, and the power efficiency was 92.5%.

The equivalent weight of the separation membrane was measured, and as a result, was 1070 g/eq.

The thickness of the anion-exchangeable resin layer of the separation membrane was measured by Membrane thickness measurement B, and as a result, was 480 nm.

[Example 6]

A separation membrane was produced and evaluation of the cell for a redox flow battery was performed in the same manner as in Example 4 except that the fluororesin G1 membrane produced in Production Example 7 was used. As a result of evaluation of the cell for a redox flow battery, the current efficiency was 98.6%, the voltage efficiency was 93.7%, and the power efficiency was 92.4%.

The equivalent weight of the separation membrane was measured, and as a result, was 1010 g/eq.

The thickness of the anion-exchangeable resin layer of the separation membrane was measured by Membrane thickness measurement B, and as a result, was 690 nm.

[Comparative Example 1]

The fluororesin G1 membrane produced in Production Example 3 was used as a separation membrane, and evaluation of the cell for a redox flow battery was performed. As a result of evaluation of the cell for a redox flow battery, the current efficiency was 96.5%, the voltage efficiency was 93.8%, and the power efficiency was 90.6%.

[Comparative Example 2]

A sulfonic acid membrane "Nafion (registered trademark) NR212" (manufactured by Chemours Company) was used as a separation membrane, and evaluation of the cell for a redox flow battery was performed. As a result of evaluation of the cell for a redox flow battery, the current efficiency was 96.3%, the voltage efficiency was 93.0%, and the power efficiency was 89.6%.

As clear from the results in Examples 1 to 6 and Comparative Examples 1 and 2, it was indicated that the cell for a redox flow battery, in which the side-chain heteroaromatic resin was used in the separation membrane, was excellent in current efficiency, voltage efficiency and current efficiency in a well-balanced manner and had a high power efficiency.

[Example 7]

A solution containing 0.50% by weight of the side-chain heteroaromatic ring resin produced in Production Example 9, having the structural unit represented by the general formula 18, in 2,2,2-trifluoro ethanol (manufactured by FUJIFILM Wako Pure Chemical Corporation, Wako special grade), was placed in a polypropylene tray, and the fluororesin G1 membrane produced in Production Example 3 was placed. After the resultant was left to still stand for 30 minutes, a membrane was taken out, and placed and washed in a tray in which distilled water (manufactured by Hayashi Pure Chemical Ind., Ltd.) was placed. After the washing was repeated twice, a Kapton (registered trademark) film (manufactured by Du Pont-Toray Co., Ltd., thickness 75 μm) and the membrane washed were located in the listed order on a stainless plate and four sides thereof were held together with a Kapton (registered trademark) tape (manufactured by Nitto Denko Corporation, thickness 69 μm). The stainless plate was placed in an oven ("PHH-202" manufactured by ESPEC Corp.) set to 150°C, and dried for 20 minutes, and then taken out and cooled. A membrane dried was released from the Kapton (registered trademark) film, thereby obtaining a separation membrane in which the anion-exchangeable resin layer was stacked on each of both surfaces of the cation-exchangeable resin layer. The separation membrane obtained was used to perform evaluation of the cell for a redox flow battery. The electrode here used was the carbon foam electrode produced in Production Example 1. As a result of evaluation of the cell for a redox flow battery, the current efficiency was 99.7%, the voltage efficiency was 91.9%, and the power efficiency was 91.6%.

[Example 8]

A separation membrane was produced and evaluation of the cell for a redox flow battery was performed in the same manner as in Example 7 except that the side-chain heteroaromatic ring resin produced in Production Example 10, having the structural unit represented by the general formula 19, was used. As a result of evaluation of the cell for a redox flow battery, the current efficiency was 99.7%, the voltage efficiency was 91.6%, and the power efficiency was 91.4%.

[Example 9]

A separation membrane was produced and evaluation of the cell for a redox flow battery was performed in the same manner as in Example 7 except that the side-chain heteroaromatic ring resin produced in Production Example 12, having the structural unit represented by the general formula 21, was used. As a result of evaluation of the cell for a redox flow battery, the current efficiency was 99.7%, the voltage efficiency was 91.6%, and the power efficiency was 91.3%.

As clear from the results in Examples 7 to 9, it was indicated that the cell for a redox flow battery, in which the side-chain heteroaromatic resin was located on each of both surfaces of the separation membrane, had a high current efficiency.

As clear from the results in Examples 1 to 6 and Examples 7 to 9, it was indicated that, a case where the layer including the side-chain heteroaromatic resin was located closer to an electrode acting as the negative electrode provided a higher power efficiency.

[Example 10]

A separation membrane was produced and evaluation of the cell for a redox flow battery was performed in the same manner as in Example 1 except that a solution containing 1.0% by weight of the side-chain heteroaromatic ring resin produced in Production Example 9, having the structural unit represented by the general formula 18, in N,N-dimethylformamide (manufactured by FUJIFILM Wako Pure Chemical Corporation, reagent special grade), and polyelectrolyte solution E produced in Production Example 15 were mixed at a weight ratio of 1:1, and prepared as a spray liquid. As a result of evaluation of the cell for a redox flow battery, the current efficiency was 98.7%, the voltage efficiency was 93.2%, and the power efficiency was 92.0%.

The equivalent weight of the separation membrane was measured, and as a result, was 1050 g/eq.

The thickness of the anion-exchangeable resin layer of the separation membrane was measured by Membrane thickness measurement B, and as a result, was 670 nm.

[Example 11]

A separation membrane was produced and evaluation of the cell for a redox flow battery was performed in the same manner as in Example 1 except that a solution containing 1.0% by weight of the side-chain heteroaromatic ring resin produced in Production Example 12, having the structural unit represented by the general formula 21, in N,N-dimethylformamide (manufactured by FUJIFILM Wako Pure Chemical Corporation, reagent special grade), and polyelectrolyte solution E produced in Production Example 12 were mixed at a weight ratio of 2:1, and prepared as a spray liquid. As a result of evaluation of the cell for a redox flow battery, the current efficiency was 98.7%, the voltage efficiency was 93.3%, and the power efficiency was 92.1%.

The equivalent weight of the separation membrane was measured, and as a result, was 1030 g/eq.

The thickness of the anion-exchangeable resin layer of the separation membrane was measured by Membrane thickness measurement B, and as a result, was 610 nm.

[Example 12]

A separation membrane was produced and evaluation of the cell for a redox flow battery was performed in the same manner as in Example 1 except that a solution containing 1.0% by weight of the side-chain heteroaromatic ring resin produced in Production Example 13, having the structural unit represented by the general formula 22, in N,N-dimethylformamide (manufactured by FUJIFILM Wako Pure Chemical Corporation, reagent special grade), and polyelectrolyte solution E produced in Production Example 15 were mixed at a weight ratio of 1:2, and prepared as a spray liquid. As a result of evaluation of the cell for a redox flow battery, the current efficiency was 98.8%, the voltage efficiency was 93.2%, and the power efficiency was 92.1%.

The equivalent weight of the separation membrane was measured, and as a result, was 1050 g/eq.

The thickness of the anion-exchangeable resin layer of the separation membrane was measured by Membrane thickness measurement B, and as a result, was 630 nm.

[Example 13]

A separation membrane was produced and evaluation of the cell for a redox flow battery was performed in the same manner as in Example 1 except that a solution containing 1.0% by weight of the side-chain heteroaromatic ring resin produced in Production Example 8, having the structural unit represented by the general formula 17, in N,N-dimethylformamide (manufactured by FUJIFILM Wako Pure Chemical Corporation, reagent special grade), and polyelectrolyte solution E produced in Production Example 15 were mixed at a weight ratio of 1:2, and prepared as a spray liquid. As a result of evaluation of the cell for a redox flow battery, the current efficiency was 98.8%, the voltage efficiency was 92.6%, and the power efficiency was 91.5%.

The equivalent weight of the separation membrane was measured, and as a result, was 1070 g/eq.

The thickness of the anion-exchangeable resin layer of the separation membrane was measured by Membrane thickness measurement B, and as a result, was 690 nm.

[Example 14]

A separation membrane was produced and evaluation of the cell for a redox flow battery was performed in the same manner as in Example 1 except that a solution containing 1.0% by weight of the side-chain heteroaromatic ring resin produced in Production Example 11, having the structural unit represented by the general formula 20, in N,N-dimethylformamide (manufactured by FUJIFILM Wako Pure Chemical Corporation, reagent special grade), and polyelectrolyte solution E produced in Production Example 15 were mixed at a weight ratio of 2:1, and prepared as a spray liquid. As a result of evaluation of the cell for a redox flow battery, the current efficiency was 99.4%, the voltage efficiency was 92.9%, and the power efficiency was 92.3%.
The equivalent weight of the separation membrane was measured, and as a result, was 1030 g/eq.
The thickness of the anion-exchangeable resin layer of the separation membrane was measured by Membrane thickness measurement B, and as a result, was 640 nm.

[Example 15]

A separation membrane was produced and evaluation of the cell for a redox flow battery was performed in the same manner as in Example 1 except that a solution containing 1.0% by weight of the side-chain heteroaromatic ring resin produced in Production Example 11, having the structural unit represented by the general formula 20, in N,N-dimethylformamide (manufactured by FUJIFILM Wako Pure Chemical Corporation, reagent special grade), and polyelectrolyte solution E produced in Production Example 15 were mixed at a weight ratio of 1:1, and prepared as a spray liquid. As a result of evaluation of the cell for a redox flow battery, the current efficiency was 99.2%, the voltage efficiency was 94.1%, and the power efficiency was 93.3%.
The equivalent weight of the separation membrane was measured, and as a result, was 1060 g/eq.
The thickness of the anion-exchangeable resin layer of the separation membrane was measured by Membrane thickness measurement B, and as a result, was 660 nm.

[Example 16]

A separation membrane was produced and evaluation of the cell for a redox flow battery was performed in the same manner as in Example 1 except that a solution containing 1.0% by weight of the side-chain heteroaromatic ring resin produced in Production Example 11, having the structural unit represented by the general formula 20, in N,N-dimethylformamide (manufactured by FUJIFILM Wako Pure Chemical Corporation, reagent special grade), and polyelectrolyte solution E produced in Production Example 15 were mixed at a weight ratio of 1:1.5, and prepared as a spray liquid. As a result of evaluation of the cell for a redox flow battery, the current efficiency was 99.3%, the voltage efficiency was 94.1%, and the power efficiency was 93.5%.
The equivalent weight of the separation membrane was measured, and as a result, was 1090 g/eq.
The thickness of the anion-exchangeable resin layer of the separation membrane was measured by Membrane thickness measurement B, and as a result, was 640 nm.
As clear from the results in Examples 10 to 16 and Comparative Examples 1 and 2, it was indicated that the cell for a redox flow battery, in which the separation membrane including the side-chain heteroaromatic resin and the fluororesin G1 was used, was excellent in current efficiency, voltage efficiency and current efficiency in a well-balanced manner and had a high power efficiency.

[Examples: second embodiment]

Hereinafter, the second embodiment is more specifically described with reference to Examples, but is not limited to the following Examples.

[Example A1]

In a polypropylene tray was placed a solution in which the mass ratio of 1-(3-aminopropyl)imidazole (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 11.6:4.70:83.7, and the fluororesin G1 precursor membrane produced in Production Example 2 and provided with the substrate, in which four sides thereof were held together with a Kapton (registered trademark) tape (manufactured by Nitto Denko Corporation, thickness 69 μm), was immersed and treated. After a lapse of 4 hours, the membrane immersed and treated was taken out, and placed and washed in a tray in which distilled water (manufactured by Hayashi Pure Chemical Ind., Ltd.) was placed. After the washing was repeated

twice, the fluororesin G1 precursor membrane treated was released from the substrate (hereinafter, a surface of the fluororesin G1 precursor membrane, the surface being contacted with the substrate and the fluororesin G1 precursor membrane, is referred to as "substrate surface", and an opposite surface thereof is referred to as "treated surface"). The fluororesin G1 precursor membrane treated was placed in a polypropylene container fluorination-treated, and a solution was added in which the mass ratio of 8 mol/L potassium hydroxide solution (manufactured by FUJIFILM Wako Pure Chemical Corporation, for volumetric analysis) : methanol (manufactured by FUJIFILM Wako Pure Chemical Corporation, reagent special grade) was 1:1. The container was placed in a water bath set to 80°C, and taken out after a lapse of 8 hours and cooled. The solution in such a bottle was taken out, and distilled water (manufactured by Hayashi Pure Chemical Ind., Ltd.) was added to wash the membrane three times. The resulting membrane was placed in a polypropylene container fluorination-treated, and 1 mol/L sulfuric acid (manufactured by FUJIFILM Wako Pure Chemical Corporation) was added. The container was placed in a water bath set to 60°C, and taken out after a lapse of 1 hour and cooled. The solution in such a bottle was taken out, and distilled water (manufactured by Hayashi Pure Chemical Ind., Ltd.) was added to wash the membrane three times. The same treatment with 1 mol/L sulfuric acid was repeated twice, and the membrane was taken out (a heteroaromatic structure-containing fluororesin having a structure represented by general formula A7-2 was formed on a fluororesin surface). A polyimide film "Kapton (registered trademark)" (manufactured by Du Pont-Toray Co., Ltd., thickness 75 μm) and the membrane (heteroaromatic structure-containing perfluororesin layer) treated with 1 mol/L sulfuric acid were located in the listed order on a stainless plate and four sides thereof were held together with a polyimide tape "Kapton (registered trademark)" (manufactured by Nitto Denko Corporation, thickness 69 μm). The stainless plate was placed in an oven ("PHH-202" manufactured by ESPEC Corp.) set to 120°C, and dried for 20 minutes, and then taken out and cooled. The membrane dried was released from the polyimide film "Kapton (registered trademark)", thereby obtaining a separation membrane for use in the cell for a redox flow battery. The separation membrane obtained was used to perform evaluation of the cell for a redox flow battery. In evaluation of the cell for a redox flow battery, the treated surface of the separation membrane was located closer to an electrode acting as the negative electrode. The electrode here used was the carbon foam electrode produced in Production Example 1. As a result of evaluation of the cell for a redox flow battery, the current efficiency was 98.5%, the voltage efficiency was 93.9%, and the power efficiency was 92.5%.

The equivalent weight of the separation membrane was measured, and as a result, was 980 g/eq.

The thickness of the heteroaromatic structure-containing perfluororesin layer of the separation membrane was measured by the following method. The measurement apparatus used, and conditions were as follows.

<Measurement apparatus>

Time-of-flight secondary ion mass spectrometry apparatus (nano-TOF manufactured by ULVAC-PHI, Incorporated)

<Analysis conditions>

Primary ion source: $Bi_3^{++}$
Acceleration voltage: 30 kV
Ion current: about 0.1 nA (in terms of DC)
Bunching: present
Analysis area: 100 μm × 100 μm
Analysis time: 2 frames/cycle
Detection ion: negative ion
Neutralization: electron gun

<Sputter conditions>

Sputter ion: GCIB ($Ar_{2500}^{+}$)
Acceleration voltage: 10 kV
Ion current: about 1.5 nA
Sputter area: 400 μm × 400 μm
Sputter time: 2 sec/cycle
Neutralization: electron gun

A fluororesin G1 membrane having a thickness of 20 μm was produced in the same manner as in Production Example 3, and pasted on a silicon base plate, and the fluororesin G1 membrane was subjected to measurement with the above measurement apparatus and conditions. The interface between the fluororesin G1 membrane and the silicon base plate was identified from a numerical value at which the maximum signal strength of CF (m/z 31) was halved, with reference to JIS K 0146:2002. The sputter rate ($y = \alpha/\beta$) was calculated by dividing the membrane thickness ($\alpha$) of the fluororesin G1 membrane produced in Production Example 3, by the time ($\beta$) required for attainment to the interface between the fluororesin G1 membrane and the silicon base plate.

The substrate surface of the separation membrane obtained in the present Example was pasted on the silicon base plate, and the separation membrane was subjected to measurement with the above measurement apparatus and conditions. The interface between the fluororesin G1 layer and the heteroaromatic structure-containing perfluororesin layer included in the separation membrane was identified from a numerical value at which the maximum signal strength of $NSO_2$ (m/z 78, two peaks were detected, and the peak located at the smaller mass was used) reached 1/10, with reference to JIS K 0146:2002. The thickness ($\varepsilon = \delta \times \gamma$) of the heteroaromatic structure-containing perfluororesin layer was calculated by multiplying the sputter rate (y) with the sputter time ($\delta$) required for attainment to the interface between the fluororesin G1 layer and the heteroaromatic structure-containing perfluororesin layer. The thickness ($\varepsilon$) calculated of the heteroaromatic structure-containing perfluororesin layer was 440 nm.

It was also indicated by thickness measurement of the heteroaromatic structure-containing perfluororesin layer that the heteroaromatic structure-containing perfluororesin was bound by a sulfonamide bond ($-NSO_2-$).

[Example A2]

A separation membrane was prepared and evaluation of the cell for a redox flow battery was performed in the same manner as in Example A1 (a heteroaromatic structure-containing fluororesin having a structure represented by general formula A7-2 was formed on a surface of the fluororesin layer) except that a solution was used in which the mass ratio of 4-picolylamine (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 10.2:4.78:85.0, and the immersion treatment was made for 6 hours. As a result of evaluation of the cell for a redox flow battery, the current efficiency was 98.2%, the voltage efficiency was 93.2%, and the power efficiency was 91.5%.

The equivalent weight of the separation membrane was measured, and as a result, was 990 g/eq.

The thickness of the heteroaromatic structure-containing perfluororesin layer of the separation membrane was 400 nm.

It was also indicated by thickness measurement of the heteroaromatic structure-containing perfluororesin layer that the heteroaromatic structure-containing perfluororesin was bound by a sulfonamide bond ($-NSO_2-$).

[Example A3]

A separation membrane was prepared and evaluation of the cell for a redox flow battery was performed in the same manner as in Example 1 except that a solution was used in which the mass ratio of 4-(2-aminoethyl)pyridine (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 11.4:4.72:83.9, and the immersion treatment was made for 5 hours. As a result of evaluation of the cell for a redox flow battery, the current efficiency was 98.5%, the voltage efficiency was 93.0%, and the power efficiency was 91.6%.

The equivalent weight of the separation membrane was measured, and as a result, was 1000 (g/eq).

The thickness of the heteroaromatic structure-containing perfluororesin layer of the separation membrane was 420 nm.

It was also indicated by thickness measurement of the heteroaromatic structure-containing perfluororesin layer that the heteroaromatic structure-containing perfluororesin was bound by a sulfonamide bond ($-NSO_2-$).

[Example A5]

A separation membrane was prepared and evaluation of the cell for a redox flow battery was performed in the same manner as in Example A1 except that the fluororesin G1 precursor produced in Production Example 4 was used. As a result of evaluation of the cell for a redox flow battery, the current efficiency was 98.7%, the voltage efficiency was 93.5%, and the power efficiency was 92.3%.

The equivalent weight of the separation membrane was measured, and as a result, was 1030 g/eq.

The thickness of the heteroaromatic structure-containing perfluororesin layer of the separation membrane was

460 nm. When the sputter rate was calculated, a fluororesin G1 having a thickness of 18 μm, produced in the same manner as in Production Example 5, was used.

It was also indicated by thickness measurement of the heteroaromatic structure-containing perfluororesin layer that the heteroaromatic structure-containing perfluororesin was bound by a sulfonamide bond ($-NSO_2-$).

[Example A6]

A separation membrane was prepared and evaluation of the cell for a redox flow battery was performed in the same manner as in Example A1 except that the fluororesin G1 precursor produced in Production Example 6 was used. As a result of evaluation of the cell for a redox flow battery, the current efficiency was 98.3%, the voltage efficiency was 94.0%, and the power efficiency was 92.4%.

The equivalent weight of the separation membrane was measured, and as a result, was 950 g/eq.

The thickness of the heteroaromatic structure-containing perfluororesin layer of the separation membrane was 420 nm. When the sputter rate was calculated, a fluororesin G1 having a thickness of 26 μm, produced in the same manner as in Production Example 7, was used.

It was also indicated by thickness measurement of the heteroaromatic structure-containing perfluororesin layer that the heteroaromatic structure-containing perfluororesin was bound by a sulfonamide bond ($-NSO_2-$).

[Comparative Example A1]

The fluororesin G1 membrane produced in Production Example 3 was used as a separation membrane, and evaluation of the cell for a redox flow battery was performed. As a result of evaluation of the cell for a redox flow battery, the current efficiency was 96.5%, the voltage efficiency was 93.8%, and the power efficiency was 90.6%.

[Comparative Example A2]

A sulfonic acid membrane "Nafion (registered trademark) NR212" (manufactured by Chemours Company) was used as a separation membrane, and evaluation of the cell for a redox flow battery was performed. As a result of evaluation of the cell for a redox flow battery, the current efficiency was 96.3%, the voltage efficiency was 93.0%, and the power efficiency was 89.6%.

[Comparative Example A3]

A separation membrane was prepared and evaluation of the cell for a redox flow battery was performed in the same manner as in Example 1 except that a solution was used in which the mass ratio of 2-aminoimidazole (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 2.84:1.08:96.1. As a result of evaluation of the cell for a redox flow battery, the current efficiency was 96.3%, the voltage efficiency was 93.5%, and the power efficiency was 90.0%.

The equivalent weight of the separation membrane was measured, and as a result, was 960 g/eq.

The thickness of the heteroaromatic structure-containing perfluororesin layer of the separation membrane was measured, but no $NSO_2$ (m/z 78, two peaks were detected, and the peak located at the smaller mass was used) was detected and no sulfonamide bond ($-NSO_2-$) was observed.

[Comparative Example A4]

A separation membrane was prepared and evaluation of the cell for a redox flow battery was performed in the same manner as in Example 1 except that a solution was used in which the mass ratio of 4-aminopyridine (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 2.03:1.09:96.9. As a result of evaluation of the cell for a redox flow battery, the current efficiency was 96.1%, the voltage efficiency was 93.3%, and the power efficiency was 89.7%.

The equivalent weight of the separation membrane was measured, and as a result, was 960 (g/eq).

The thickness of the heteroaromatic structure-containing perfluororesin layer of the separation membrane was measured, but no $NSO_2$ (m/z 78, two peaks were detected, and the peak located at the smaller mass was used) was detected and no sulfonamide bond ($-NSO_2-$) was observed.

As clear from the results in Examples A1 to A6 and Comparative Examples A1 to A4, it was indicated that the cell for a redox flow battery, in which the separation membrane including a layer (L1) and a layer (M1) including the

heteroaromatic structure-containing perfluororesin having the structure of $NR^3$ and Hc linked at $R^4$ in the general formula A1 was utilized, was excellent in current efficiency, voltage efficiency and current efficiency in a well-balanced manner and had a high power efficiency.

[Example A7]

A separation membrane was prepared in the same manner as in Example A1 except that the fluororesin G1 precursor membrane released from the base plate was used and the immersion treatment was made for 2 hours, and thus a separation membrane was obtained in which the heteroaromatic structure-containing perfluororesin layer was present on each of both surfaces of the separation membrane. The separation membrane obtained was used to perform evaluation of the cell for a redox flow battery. As a result of evaluation of the cell for a redox flow battery, the current efficiency was 99.1%, the voltage efficiency was 92.3%, and the power efficiency was 91.5%.

The equivalent weight of the separation membrane was measured, and as a result, was 970 g/eq.

The thickness of the heteroaromatic structure-containing perfluororesin layer on one surface of the separation membrane was 200 nm.

It was also indicated by thickness measurement of the heteroaromatic structure-containing perfluororesin layer that the heteroaromatic structure-containing perfluororesin was bound by a sulfonamide bond ($-NSO_2-$).

As clear from the results in Examples A1 and A7, it was indicated that a case where the layer (L1) including the heteroaromatic structure-containing perfluororesin was located closer to an electrode acting as the negative electrode provided a higher power efficiency.

[Example A8]

A separation membrane was prepared and evaluation of the cell for a redox flow battery was performed in the same manner as in Example A1 except that a solution was used in which the mass ratio of N,N-dimethylethylenediamine (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 1.61:0.922:97.5.

The equivalent weight of the separation membrane was measured, and as a result, was 1020 g/eq.

The thickness of the side-chain nitrogen atom-containing perfluororesin layer in the separation membrane was 1220 nm.

It was also indicated by thickness measurement of the side-chain nitrogen atom-containing perfluororesin that the side-chain nitrogen atom-containing perfluororesin was bound by a sulfonamide bond ($-NSO_2-$).

[Example A9]

A separation membrane was prepared in the same manner as in Example A8 except that the fluororesin G1 precursor membrane released from the base plate was used and the immersion treatment was made for 1 hour, and thus a separation membrane was obtained in which the side-chain nitrogen atom-containing perfluororesin layer was present on each of both surfaces of the separation membrane. The separation membrane obtained was used to perform evaluation of the cell for a redox flow battery. As a result of evaluation of the cell for a redox flow battery, the current efficiency was 99.0%, the voltage efficiency was 92.4%, and the power efficiency was 91.5%.

The equivalent weight of the separation membrane was measured, and as a result, was 1000 g/eq.

The thickness of the side-chain nitrogen atom-containing perfluororesin layer on one surface of the separation membrane was 580 nm.

It was also indicated by thickness measurement of the side-chain nitrogen atom-containing perfluororesin layer that the side-chain nitrogen atom-containing perfluororesin was bound by a sulfonamide bond ($-NSO_2-$).

[Comparative Example A5]

A separation membrane was prepared and evaluation of the cell for a redox flow battery was performed in the same manner as in Example A8 except that a solution was used in which the mass ratio of N,N-dimethylethylenediamine (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 16.0:9.20:74.8, and the immersion treatment was made for 72 hours. As a result of evaluation of the cell for a redox flow battery, no evaluation could be made due to high resistance.

The thickness of the side-chain nitrogen atom-containing perfluororesin layer on one surface of the separation membrane was evaluated, and thus a signal of $NSO_2$ was detected, but the signal strength did not reach 1/10, the side-chain nitrogen atom-containing perfluororesin was present in the entire membrane thickness direction and no two layers of any layer (L3) and any layer (M3) were formed.

[Comparative Example A6]

A separation membrane was prepared and evaluation of the cell for a redox flow battery was performed in the same manner as in Example A8 except that a solution was used in which the mass ratio of ethylenediamine (manufactured by FUJIFILM Wako Pure Chemical Corporation, Wako 1st grade) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 1.09:0.92:98.0. As a result of evaluation of the cell for a redox flow battery, the current efficiency was 95.4%, the voltage efficiency was 91.8%, and the power efficiency was 87.6%.

[Comparative Example A7]

A separation membrane was prepared and evaluation of the cell for a redox flow battery was performed in the same manner as in Example A8 except that a solution was used in which the mass ratio of hexamethylenediamine (manufactured by FUJIFILM Wako Pure Chemical Corporation, Wako 1st grade) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 2.11:0.92:97.0. As a result of evaluation of the cell for a redox flow battery, no evaluation could be made due to high resistance.

[Example A10]

A separation membrane was prepared and evaluation of the cell for a redox flow battery was performed in the same manner as in Example A1 except that a solution was used in which the mass ratio of N,N-dimethyldipropylenetriamine (manufactured by Sigma-Aldrich) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 2.89:0.92:96.2, and the immersion treatment was made for 40 minutes. As a result of evaluation of the cell for a redox flow battery, the current efficiency was 98.2%, the voltage efficiency was 93.0%, and the power efficiency was 91.3%.

The equivalent weight of the separation membrane was measured, and as a result, was 1000 g/eq.

The thickness of the side-chain nitrogen atom-containing perfluororesin layer in the separation membrane was 60 nm.

It was also indicated by thickness measurement of the side-chain nitrogen atom-containing perfluororesin layer that the side-chain nitrogen atom-containing perfluororesin was bound by a sulfonamide bond ($-NSO_2-$).

[Example A11]

A separation membrane was prepared and evaluation of the cell for a redox flow battery was performed in the same manner as in Example A1 except that a solution was used in which the mass ratio of N-methylethylenediamine (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 1.75:1.19:97.1. As a result of evaluation of the cell for a redox flow battery, the current efficiency was 97.7%, the voltage efficiency was 93.2%, and the power efficiency was 91.1%.

The equivalent weight of the separation membrane was measured, and as a result, was 1020 g/eq.

The thickness of the side-chain nitrogen atom-containing perfluororesin layer in the separation membrane was 1100 nm.

It was also indicated by thickness measurement of the side-chain nitrogen atom-containing perfluororesin layer that the side-chain nitrogen atom-containing perfluororesin was bound by a sulfonamide bond ($-NSO_2-$).

[Example A12]

A separation membrane was prepared and evaluation of the cell for a redox flow battery was performed in the same manner as in Example A1 except that a solution was used in which the mass ratio of N,N-dibutylethylenediamine (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was prepared to 3.13:0.92:95.9, and the immersion treatment was made for 60

minutes. As a result of evaluation of the cell for a redox flow battery, the current efficiency was 98.9%, the voltage efficiency was 92.5%, and the power efficiency was 91.4%.

The equivalent weight of the separation membrane was measured, and as a result, was 1010 g/eq.

The thickness of the side-chain nitrogen atom-containing perfluororesin layer in the separation membrane was 60 nm.

It was also indicated by thickness measurement of the side-chain nitrogen atom-containing perfluororesin layer that the side-chain nitrogen atom-containing perfluororesin was bound by a sulfonamide bond ($-NSO_2-$).

As clear from the results in Examples A8 to A12 and Comparative Examples A1, A2 and A5 to A7, it was indicated that the cell for a redox flow battery, in which the separation membrane including a layer (L3) and a layer (M3) including the side-chain nitrogen atom-containing perfluororesin where at least one of R26 and R27 in the general formula A3 was an aliphatic hydrocarbon group was utilized, was excellent in current efficiency, voltage efficiency and current efficiency in a well-balanced manner and had a high power efficiency.

As clear from the results in Examples A8 and A9, it was indicated that a case where the layer (L3) including the side-chain nitrogen atom-containing perfluororesin was located closer to an electrode acting as the negative electrode provided a higher power efficiency.

[Production Example A1]

With reference to the experimental method in ECS Transactions, 80(8)957-966 (2017), a solution was produced which contained a compound represented by the following formula described in Page 959 of the above literature and which had a solid content concentration of 1% by mass.

$$PF_{825}SO_2\overset{\ominus}{N}-(CH_2)_3-\overset{\oplus}{N}HMe_2$$

[Example A13]

The solution produced in Production Example A1 and polyelectrolyte solution E produced in Production Example 15 were mixed at a weight ratio of 1:5 and thus prepared as a spray liquid.

A Kapton (registered trademark) film (manufactured by Du Pont-Toray Co., Ltd., thickness 75 μm) and the fluororesin G1 membrane produced in Production Example 3 were located in the listed order on a stainless plate and four sides thereof were held together with a Kapton (registered trademark) tape (manufactured by Nitto Denko Corporation, thickness 69 μm). The stainless plate was placed on a stage warmed to a temperature of 70°C of a spray applicator ("PCS2020" manufactured by Asahi Sunac Corporation), and the stage was subjected to pressure reduction. The spray liquid was spray-atomized to the fluororesin G1 membrane. The pressure reduction in the stage was stopped, and the stainless plate was taken out, placed in an oven ("PHH-202" manufactured by ESPEC Corp.) set to 120°C, and dried for 20 minutes, and then taken out and cooled. A membrane in which the layer of a mixture of the compound of Production Example A1 and the fluororesin G1 (in the present embodiment, also referred to as "anion-exchangeable resin layer", "layer (L3)") and the cation-exchangeable resin layer (also referred to as "layer (M3)") were stacked was released from the Kapton (registered trademark) film. The resulting membrane was placed in a polypropylene tray in which 1 mol/L sulfuric acid (manufactured by FUJIFILM Wako Pure Chemical Corporation) was placed, and left to still stand for 12 hours and then taken out. The resulting membrane was washed with distilled water (manufactured by Hayashi Pure Chemical Ind., Ltd.), placed in a polyethylene tray, left to still stand for 12 hours, and then taken out. The resulting membrane was placed in an oven ("PHH-202" manufactured by ESPEC Corp.) set to 120°C, and dried for 20 minutes, and then taken out and cooled, thereby obtaining a separation membrane as an ion-exchange membrane in which the anion-exchangeable resin layer and the cation-exchangeable resin layer were stacked. The separation membrane obtained was used to perform evaluation of the cell for a redox flow battery. In evaluation of the cell for a redox flow battery, the anion-exchangeable resin layer was located closer to an electrode acting as the negative electrode. The electrode here used was the carbon foam electrode produced in Production Example 1.

As a result of evaluation of the cell for a redox flow battery, the current efficiency was 97.8%, the voltage efficiency was 93.9%, and the power efficiency was 91.8%.

The equivalent weight of the separation membrane was measured, and as a result, was 970 g/eq.

The thickness of the anion-exchangeable resin layer of the separation membrane was measured by Membrane thickness measurement B, and as a result, was 690 nm.

[Example A14]

A separation membrane was produced and evaluation of the cell for a redox flow battery was performed in the same manner as in Example A13 except that the solution produced in Production Example A1 and polyelectrolyte solution E produced in Production Example 15 were mixed at a weight ratio of 1:1 and thus prepared as a spray liquid. As a result of evaluation of the cell for a redox flow battery, the current efficiency was 98.8%, the voltage efficiency was 93.0%, and the power efficiency was 91.9%.

The equivalent weight of the separation membrane was measured, and as a result, was 1030 (g/eq).

The thickness of the anion-exchangeable resin layer of the separation membrane was measured by Membrane thickness measurement B, and as a result, was 580 nm.

As clear from the results in Examples A13 and A14 and Comparative Examples A1, A2 and A5 to A7, it was indicated that the cell for a redox flow battery, in which the separation membrane including a layer (L3) containing a mixture of the side-chain nitrogen atom-containing perfluororesin and the fluororesin G1 and a layer (M3) containing the fluororesin G1 was used, was excellent in current efficiency, voltage efficiency and current efficiency in a well-balanced manner and had a high power efficiency.

[Examples: third embodiment]

Hereinafter, the third embodiment is more specifically described with reference to Examples, but is not limited to the following Examples.

[Example B1]

A solution containing 1.0% by weight of the side-chain heteroaromatic ring resin produced in Production Example 9, having the structural unit represented by the general formula 18, in N,N-dimethylformamide (manufactured by FUJIFILM Wako Pure Chemical Corporation, reagent special grade) was adjusted as a spray liquid.

A Kapton (registered trademark) film (manufactured by Du Pont-Toray Co., Ltd., thickness 75 μm) and the perfluororesin membrane produced in Production Example 3 were located in the listed order on a stainless plate and four sides thereof were held together with a Kapton (registered trademark) tape (manufactured by Nitto Denko Corporation, thickness 69 μm). The stainless plate was placed on a stage warmed to a temperature of 70°C of a spray applicator ("PCS2020" manufactured by Asahi Sunac Corporation), and the stage was subjected to pressure reduction. The spray liquid was spray-atomized to the fluororesin G1 membrane. The pressure reduction in the stage was stopped, and the stainless plate was taken out, placed in an oven ("PHH-202" manufactured by ESPEC Corp.) set to 120°C, and dried for 20 minutes, and then taken out and cooled. A membrane in which the cation-exchangeable resin layer and the anion-exchangeable resin layer were stacked was released from the Kapton (registered trademark) film. The resulting membrane was placed in a polypropylene tray in which 1 mol/L sulfuric acid (manufactured by FUJIFILM Wako Pure Chemical Corporation) was placed, and left to still stand for 12 hours and then taken out. The resulting membrane was washed with distilled water (manufactured by Hayashi Pure Chemical Ind., Ltd.), placed in a polyethylene tray, left to still stand for 12 hours, and then taken out. The resulting membrane was placed in an oven ("PHH-202" manufactured by ESPEC Corp.) set to 120°C, and dried for 20 minutes, and then taken out and cooled, thereby preparing a separation membrane for use in the cell for a redox flow battery. The separation membrane obtained was used to perform evaluation of the cell for a redox flow battery. In evaluation of the cell for a redox flow battery, the anion-exchangeable resin layer was located closer to an electrode acting as the negative electrode ($D_{neg}/D_{pos}$ = 0) and the first cation-exchangeable resin layer was located closer to an electrode acting as the positive electrode, than the anion-exchangeable resin layer. The electrode here used was the carbon foam electrode produced in Production Example 1. As a result of evaluation of the cell for a redox flow battery, the current efficiency was 99.1%, the voltage efficiency was 93.2%, and the power efficiency was 92.4%.

The equivalent weight of the separation membrane was measured, and as a result, was 1100 g/eq.

The thickness of the anion-exchangeable resin layer of the separation membrane was measured by Membrane thickness measurement B, and as a result, was 700 nm.

[Example B2]

A separation membrane was produced and evaluation of the cell for a redox flow battery was performed in the same manner as in Example B1 except that a solution containing 1% by weight of the side-chain heteroaromatic ring resin produced in Production Example 10, having the structural unit represented by the general formula 19, in N,N-dimethylformamide (manufactured by FUJIFILM Wako Pure Chemical Corporation, reagent special grade) was adjusted as a spray liquid. As a result of evaluation of the cell for a redox flow battery, the current efficiency was 98.5%, the voltage efficiency was 93.7%, and the power efficiency was 92.3%.

The equivalent weight of the separation membrane was measured, and as a result, was 1030 g/eq.
The thickness of the anion-exchangeable resin layer of the separation membrane was measured by Membrane thickness measurement B, and as a result, was 500 nm.

[Example B3]

A separation membrane was produced and evaluation of the cell for a redox flow battery was performed in the same manner as in Example 1 except that a solution containing 1% by weight of the compound produced in Production Example 12 and represented by the general formula 21 in N,N-dimethylformamide (manufactured by FUJIFILM Wako Pure Chemical Corporation, reagent special grade) was adjusted as a spray liquid. As a result of evaluation of the cell for a redox flow battery, the current efficiency was 99.0%, the voltage efficiency was 93.3%, and the power efficiency was 92.4%.
The equivalent weight of the separation membrane was measured, and as a result, was 1050 g/eq.
The thickness of the anion-exchangeable resin layer of the separation membrane was measured by Membrane thickness measurement B, and as a result, was 620 nm.

[Example B4]

A separation membrane was produced and evaluation of the cell for a redox flow battery was performed in the same manner as in Example 1 except that a solution containing 1% by weight of the compound produced in Production Example 13 and represented by the general formula 22 in N,N-dimethylformamide (manufactured by FUJIFILM Wako Pure Chemical Corporation, reagent special grade) was adjusted as a spray liquid. As a result of evaluation of the cell for a redox flow battery, the current efficiency was 99.0%, the voltage efficiency was 93.5%, and the power efficiency was 92.6%.
The equivalent weight of the separation membrane was measured, and as a result, was 1080 g/eq.
The thickness of the anion-exchangeable resin layer of the separation membrane was measured by Membrane thickness measurement B, and as a result, was 670 nm.

[Reference Example B1]

Evaluation of the cell for a redox flow battery was performed in the same manner except that the anion-exchangeable resin layer was located closer to an electrode acting as the positive electrode in Example B1. As a result of evaluation of the cell for a redox flow battery, the current efficiency was 97.5%, the voltage efficiency was 89.9%, and the power efficiency was 87.7%.

[Reference Example B2]

Evaluation of the cell for a redox flow battery was performed in the same manner except that the anion-exchangeable resin layer was located closer to an electrode acting as the positive electrode in Example B2. As a result of evaluation of the cell for a redox flow battery, the current efficiency was 97.3%, the voltage efficiency was 90.1%, and the power efficiency was 87.7%.

[Reference Example B3]

Evaluation of the cell for a redox flow battery was performed in the same manner except that the anion-exchangeable resin layer was located closer to an electrode acting as the positive electrode in Example B3. As a result of evaluation of the cell for a redox flow battery, the current efficiency was 97.4%, the voltage efficiency was 89.8%, and the power efficiency was 87.5%.

[Reference Example B4]

Evaluation of the cell for a redox flow battery was performed in the same manner except that the anion-exchangeable resin layer was located closer to an electrode acting as the positive electrode in Example B4. As a result of evaluation of the cell for a redox flow battery, the current efficiency was 97.2%, the voltage efficiency was 90.0%, and the power efficiency was 87.5%.
As clear from the results in Examples B1 to B4 and Reference Examples B1 to B4, it was indicated that the anion-exchangeable resin layer was located closer to an electrode acting as the negative electrode in the separation membrane including the cation-exchangeable resin layer and the anion-exchangeable resin layer, included in the cell for a redox flow

battery, and thus the cell for a redox flow battery was excellent in power efficiency.

[Example B5]

A separation membrane was produced and evaluation of the cell for a redox flow battery was performed in the same manner as in Example B2 except that the fluororesin G1 membrane produced in Production Example 5 was used. As a result of evaluation of the cell for a redox flow battery, the current efficiency was 99.2%, the voltage efficiency was 93.2%, and the power efficiency was 92.5%.

The equivalent weight of the separation membrane was measured, and as a result, was 1070 g/eq.

The thickness of the anion-exchangeable resin layer of the separation membrane was measured by Membrane thickness measurement B, and as a result, was 480 nm.

[Example B6]

A separation membrane was produced and evaluation of the cell for a redox flow battery was performed in the same manner as in Example B4 except that the fluororesin G1 membrane produced in Production Example 7 was used. As a result of evaluation of the cell for a redox flow battery, the current efficiency was 98.6%, the voltage efficiency was 93.7%, and the power efficiency was 92.4%.

The equivalent weight of the separation membrane was measured, and as a result, was 1010 g/eq.

The thickness of the anion-exchangeable resin layer of the separation membrane was measured by Membrane thickness measurement B, and as a result, was 690 nm.

[Example B7]

A 200-mL eggplant flask was charged with poly(4-vinylpyridine) (1 g) produced in Production Example 11, N,N-dimethylformamide (manufactured by FUJIFILM Wako Pure Chemical Corporation, reagent special grade, 99 g), and a stirring element, and the content was stirred, thereby adjusting an N,N-dimethylformamide solution.

A 500-mL flask was charged with the N,N-dimethylformamide solution (100 g), and a stirring element, and polyelectrolyte solution E was added by about 1 g (50 g in total) under stirring, thereby adjusting a spray coating liquid. The resulting spray coating liquid was used to produce a separation membrane and perform evaluation of the cell for a redox flow battery in the same manner as in Example 1. As a result of evaluation of the cell for a redox flow battery, the current efficiency was 99.4%, the voltage efficiency was 92.9%, and the power efficiency was 92.3%.

The equivalent weight of the separation membrane was measured, and as a result, was 1030 g/eq.

The thickness of the anion-exchangeable resin layer of the separation membrane was measured by Membrane thickness measurement B, and as a result, was 640 nm.

[Example B8]

A separation membrane was produced and evaluation of the cell for a redox flow battery was performed in the same manner as in Example 7 except that polyelectrolyte solution E was added by about 1 g (100 g in total). As a result of evaluation of the cell for a redox flow battery, the current efficiency was 99.2%, the voltage efficiency was 94.1%, and the power efficiency was 93.3%.

The equivalent weight of the separation membrane was measured, and as a result, was 1060 g/eq.

The thickness of the anion-exchangeable resin layer of the separation membrane was measured by Membrane thickness measurement B, and as a result, was 660 nm.

[Example B9]

A separation membrane was produced and evaluation of the cell for a redox flow battery was performed in the same manner as in Example B7 except that polyelectrolyte solution E was added by about 1 g (150 g in total). As a result of evaluation of the cell for a redox flow battery, the current efficiency was 99.3%, the voltage efficiency was 94.1%, and the power efficiency was 93.5%.

The equivalent weight of the separation membrane was measured, and as a result, was 1090 g/eq.

The thickness of the anion-exchangeable resin layer of the separation membrane was measured by Membrane thickness measurement B, and as a result, was 640 nm.

[Example B10]

In a polypropylene tray was placed a solution in which the mass ratio of N,N-dimethylethylenediamine (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was adjusted to 1.61:0.922:97.5, and the fluororesin G1 precursor membrane produced in Production Example 2 and provided with the substrate, in which four sides thereof were held together with a Kapton (registered trademark) tape (manufactured by Nitto Denko Corporation, thickness 69 μm), was immersed and treated. After a lapse of 100 minutes, the membrane immersed and treated was taken out, and placed and washed in a tray in which distilled water (manufactured by Hayashi Pure Chemical Ind., Ltd.) was placed. After the washing was repeated twice, the fluororesin G1 precursor membrane treated was released from the substrate (hereinafter, a surface of the fluororesin G1 precursor membrane, the surface being contacted with the substrate and the fluororesin G1 precursor membrane, is referred to as "substrate surface", and an opposite surface thereof is referred to as "treated surface"). The fluororesin G1 precursor membrane treated was placed in a polypropylene container fluorination-treated, and a solution was added in which the mass ratio of 8 mol/L potassium hydroxide solution (manufactured by FUJIFILM Wako Pure Chemical Corporation, for volumetric analysis) : methanol (manufactured by FUJIFILM Wako Pure Chemical Corporation, reagent special grade) was 1:1. The container was placed in a water bath set to 80°C, and taken out after a lapse of 8 hours and cooled. The solution in such a bottle was taken out, and distilled water (manufactured by Hayashi Pure Chemical Ind., Ltd.) was added to wash the membrane three times. The resulting membrane was placed in a polypropylene container fluorination-treated, and 1 mol/L sulfuric acid (manufactured by FUJIFILM Wako Pure Chemical Corporation) was added. The container was placed in a water bath set to 60°C, and taken out after a lapse of 1 hour and cooled. The solution in such a bottle was taken out, and distilled water (manufactured by Hayashi Pure Chemical Ind., Ltd.) was added to wash the membrane three times. The same treatment with 1 mol/L sulfuric acid was repeated twice, and the membrane was taken out. A Kapton (registered trademark) film (manufactured by Du Pont-Toray Co., Ltd., thickness 75 μm) and the membrane treated with 1 mol/L sulfuric acid were located in the listed order on a stainless plate and four sides thereof were held together with a Kapton (registered trademark) tape (manufactured by Nitto Denko Corporation, thickness 69 μm). The stainless plate was placed in an oven ("PHH-202" manufactured by ESPEC Corp.) set to 120°C, and dried for 20 minutes, and then taken out and cooled. The membrane dried was released from the Kapton (registered trademark) film, thereby obtaining a separation membrane for use in the cell for a redox flow battery. The separation membrane obtained was used to perform evaluation of the cell for a redox flow battery. In evaluation of the cell for a redox flow battery, the treated surface of the separation membrane was located closer to an electrode acting as the negative electrode. The electrode here used was the carbon foam electrode produced in Production Example 1. As a result of evaluation of the cell for a redox flow battery, the current efficiency was 98.2%, the voltage efficiency was 93.9%, and the power efficiency was 92.2%.
The equivalent weight of the separation membrane was measured, and as a result, was 1020 g/eq.
The thickness of the anion-exchangeable resin layer of the separation membrane was measured by the following method. The measurement apparatus used, and conditions were as follows.

<Measurement apparatus>

Time-of-flight secondary ion mass spectrometry apparatus (nano-TOF manufactured by ULVAC-PHI, Incorporated)

<Analysis conditions>

Primary ion source: $Bi_3^{++}$
Acceleration voltage: 30 kV
Ion current: about 0.1 nA (in terms of DC)
Bunching: present
Analysis area: 100 μm × 100 μm
Analysis time: 2 frames/cycle
Detection ion: negative ion
Neutralization: electron gun

<Sputter conditions>

Sputter ion: GCIB ($Ar_{2500}^{+}$)
Acceleration voltage: 10 kV
Ion current: about 1.5 nA
Sputter area: 400 μm × 400 μm
Sputter time: 2 sec/cycle
Neutralization: electron gun

A fluororesin G1 membrane having a thickness of 20 μm was produced in the same manner as in Production Example 3, and pasted on a silicon base plate, and the fluororesin G1 membrane was subjected to measurement with the above measurement apparatus and conditions. The interface between the fluororesin G1 membrane and the silicon base plate was identified from a numerical value at which the maximum signal strength of CF (m/z 31) was halved, with reference to JIS K 0146:2002. The sputter rate ($\gamma = \alpha/\beta$) was calculated by dividing the membrane thickness ($\alpha$) of the perfluororesin membrane produced in Production Example 3, by the time ($\beta$) required for attainment to the interface between the perfluororesin membrane and the silicon base plate.

The substrate surface of the separation membrane obtained in the present Example was pasted on the silicon base plate, and the separation membrane was subjected to measurement with the above measurement apparatus and conditions. The interface between the cation-exchangeable resin layer and the anion-exchangeable resin layer included in the separation membrane was identified from a numerical value at which the maximum signal strength of $NSO_2$ (m/z 78, two peaks were detected, and the peak located at the smaller mass was used) reached 1/10, with reference to JIS K 0146:2002. The thickness ($\varepsilon = \delta \times \gamma$) of the anion-exchangeable resin layer was calculated by multiplying the sputter rate ($\gamma$) with the sputter time ($\delta$) required for attainment to the interface between the cation-exchangeable resin layer and the anion-exchangeable resin layer. The thickness ($\varepsilon$) calculated of the anion-exchange layer was 1220 nm.

It was also indicated by the thickness measurement that the anion-exchangeable compound contained in the anion-exchangeable resin layer was bound with the perfluororesin by a sulfonamide bond ($-NSO_2-$).

[Example B11]

A separation membrane was prepared and evaluation of the cell for a redox flow battery was performed in the same manner as in Example B10 except that a solution was used in which the mass ratio of 1-(3-aminopropyl)imidazole (manufactured by Tokyo Chemical Industry Co., Ltd.) : triethylamine (manufactured by FUJIFILM Wako Pure Chemical Corporation, Wako special grade) : dimethylsulfoxide (manufactured by FUJIFILM Wako Pure Chemical Corporation, super dehydrated, for organic synthesis) was adjusted to 11.6:4.70:83.7, and the time for immersion treatment of the fluororesin G1 precursor membrane provided with the substrate was 4 hours. As a result of evaluation of the cell for a redox flow battery, the current efficiency was 98.5%, the voltage efficiency was 93.9%, and the power efficiency was 92.5%.

The equivalent weight of the separation membrane was measured, and as a result, was 980 g/eq.

The thickness of the anion-exchangeable resin layer of the separation membrane was 440 nm.

It was also indicated by the thickness measurement that the anion-exchangeable compound contained in the anion-exchangeable resin layer was bound with the perfluororesin by a sulfonamide bond ($-NSO_2-$).

[Reference Example B5]

Evaluation of the cell for a redox flow battery was performed in the same manner except that the treated surface of the separation membrane was located closer to an electrode acting as the positive electrode in Example B10. As a result of evaluation of the cell for a redox flow battery, the current efficiency was 97.8%, the voltage efficiency was 92.7%, and the power efficiency was 90.6%.

[Reference Example B6]

Evaluation of the cell for a redox flow battery was performed in the same manner except that the treated surface of the separation membrane was located closer to an electrode acting as the positive electrode in Example B11. As a result of evaluation of the cell for a redox flow battery, the current efficiency was 97.0%, the voltage efficiency was 94.0%, and the power efficiency was 91.3%.

As clear from the results in Examples B10 and B11 and Reference Examples B5 and B6, it was indicated that the anion-exchangeable resin layer was located closer to an electrode acting as the negative electrode in the separation membrane including the cation-exchangeable resin layer and the anion-exchangeable resin layer, included in the cell for a redox flow battery, and thus the cell for a redox flow battery was excellent in power efficiency.

[Example B12]

A separation membrane was produced and evaluation of the cell for a redox flow battery was performed in the same manner as in Example B10 except that the fluororesin G1 precursor produced in Production Example 4 was used. As a result of evaluation of the cell for a redox flow battery, the current efficiency was 98.5%, the voltage efficiency was 93.4%, and the power efficiency was 92.0%.
The thickness of the anion-exchangeable resin layer of the separation membrane was 1260 nm.
The equivalent weight of the separation membrane was measured, and as a result, was 1050 g/eq.
It was also indicated by the thickness measurement that the anion-exchangeable compound contained in the anion-exchangeable resin layer was bound with the perfluororesin by a sulfonamide bond ($-NSO_2-$).

[Example B13]

A separation membrane was produced and evaluation of the cell for a redox flow battery was performed in the same manner as in Example B10 except that the fluororesin G1 precursor produced in Production Example 6 was used. As a result of evaluation of the cell for a redox flow battery, the current efficiency was 98.0%, the voltage efficiency was 94.0%, and the power efficiency was 92.1%.
The thickness of the anion-exchangeable resin layer of the separation membrane was 1180 nm.
The equivalent weight of the separation membrane was measured, and as a result, was 980 g/eq.
It was also indicated by the thickness measurement that the anion-exchangeable compound contained in the anion-exchangeable resin layer was bound with the perfluororesin by a sulfonamide bond ($-NSO_2-$).

[Example 14]

To a 2-L flask were added 500 g of the fluorine-based polyelectrolyte solution produced in Example 7, and 500 g of distilled water (manufactured by Hayashi Pure Chemical Ind., Ltd.), and an evaporator in which the temperature of the water bath was set to 80°C was used to perform concentration under reduced pressure until the concentration of the fluororesin G1 reached 5% by mass. To a 2-L flask was added 500 g of distilled water (manufactured by Hayashi Pure Chemical Ind., Ltd.), and the evaporator in which the temperature of the water bath was set to 80°C was used to perform concentration under reduced pressure until the concentration of perfluororesin reached 30% by mass. A polypropylene container was charged with 100 g of the solution concentrated to 30% by mass under reduced pressure, and a stirring element, acetic acid (manufactured by FUJIFILM Wako Pure Chemical Corporation, reagent special grade, 12 g) was added under stirring and then 1-propanol (manufactured by FUJIFILM Wako Pure Chemical Corporation, reagent special grade, 12 g) was added, and these were stirred at 25°C for 12 hours, thereby adjusting a mixed solution. The mixed solution adjusted was applied (application area: about 200 mm width × length about 400 mm) onto a Kapton (registered trademark) film (manufactured by Du Pont-Toray Co., Ltd., thickness 75 μm) with a bar coater (#30 manufactured by Matsuo Sangyo Co., Ltd.), and then dried at room temperature for 5 minutes, in an oven ("PHH-202" manufactured by ESPEC Corp.) set to 60°C for 5 minutes, and in an oven ("PHH-202" manufactured by ESPEC Corp.) set to 120°C for 10 minutes.
One portion of the membrane dried was used, and the thickness of the fluororesin G1 membrane was measured by Membrane thickness measurement A and as a result, was 30 μm.
The membrane dried was put on a stainless plate, and four sides of the Kapton (registered trademark) film were held together with a Kapton (registered trademark) tape (manufactured by Nitto Denko Corporation, thickness 69 μm). The stainless plate was placed on a stage warmed to a temperature of 70°C of a spray applicator ("PCS2020" manufactured by Asahi Sunac Corporation), and the stage was subjected to pressure reduction. The spray liquid used in Example B1 was spray-atomized to the fluororesin G1 membrane. The pressure reduction in the stage was stopped, and the stainless plate was taken out, placed in an oven ("PHH-202" manufactured by ESPEC Corp.) set to 120°C, dried for 20 minutes, and then taken out and cooled.
The mixed solution adjusted was applied (application area: about 200 mm width × about 400 mm length) onto a membrane where a fluororesin G1 layer and an anion-exchangeable resin layer (layer including the side-chain heteroaromatic ring resin produced in Production Example 9, having the structural unit represented by the general formula 18) were stacked, the membrane being put on the stainless plate cooled, with a bar coater (#30 manufactured by Matsuo Sangyo Co., Ltd.), and then dried at room temperature for 5 minutes, in an oven ("PHH-202" manufactured by ESPEC Corp.) set to 60°C for 5 minutes, and in an oven ("PHH-202" manufactured by ESPEC Corp.) set to 120°C for 10 minutes.
One portion of the membrane dried was used, and the thickness of the resulting membrane was measured by Membrane thickness measurement A and as a result, was 45 μm. The membrane thickness of the anion-exchangeable resin layer was measured by Membrane thickness measurement B and as a result, was 800 nm. From this, the thickness of the first cation-exchangeable resin layer was 30 μm and the thickness of the second cation-exchangeable resin layer was 14 μm.

The membrane dried was released from the Kapton (registered trademark) film, thereby obtaining a separation membrane. The separation membrane obtained was used to perform evaluation of the cell for a redox flow battery. In evaluation of the cell for a redox flow battery, the second cation-exchangeable resin layer was located facing the electrode acting as the negative electrode, and thus the anion-exchangeable resin layer was located closer to the electrode acting as the negative electrode ($D_{neg}/D_{pos}$ = 0.47) and the first cation-exchangeable resin layer was located closer to the electrode acting as the positive electrode, than the anion-exchangeable resin layer. The electrode here used was the carbon foam electrode produced in Production Example 1. As a result of evaluation of the cell for a redox flow battery, the current efficiency was 99.2%, the voltage efficiency was 94.8%, and the power efficiency was 94.0%.
The equivalent weight of the separation membrane was measured, and as a result, was 940 (g/eq).

[Reference Example B7]

Evaluation of the cell for a redox flow battery was performed in the same manner except that the second cation-exchangeable resin layer was located closer to the electrode acting as the positive electrode and thus the anion-exchangeable resin layer was located closer to the electrode acting as the positive electrode in Example B14. As a result of evaluation of the cell for a redox flow battery, the current efficiency was 98.3%, the voltage efficiency was 94.4%, and the power efficiency was 92.8%.
As clear from the results in Example B14 and Reference Example B7, it was indicated that the anion-exchangeable resin layer was located closer to the electrode acting as the negative electrode in the separation membrane including the first cation-exchangeable resin layer, the anion-exchangeable resin layer, and the second cation-exchangeable resin layer, included in the cell for a redox flow battery, and thus the cell for a redox flow battery was excellent in power efficiency.

[Examples: fourth embodiment]

Hereinafter, fourth embodiment is more specifically described with reference to Examples, but is not limited to the following Examples.

(Average membrane thickness of ion-exchange membrane)

The average membrane thickness of the ion-exchange membrane was determined by drawing a straight line passing through the center in a surface of the ion-exchange membrane, and measuring the membrane thickness at 20 points located at even intervals on the straight line, with a high-resolution digital length measuring machine (Mitutoyo Corporation, VL-50A), to provide the average value of the membrane thicknesses at such 20 points.

(Maximum membrane thickness and minimum membrane thickness of ion-exchange membrane)

The maximum value and the minimum value of the membrane thicknesses in measurement of the average membrane thickness were respectively defined as the maximum membrane thickness and the minimum membrane thickness.

(Flatness of ion-exchange membrane)

The flatness of the ion-exchange membrane was evaluated by the degree of the ratio of the length along with the membrane surface relative to the projection dimension of the membrane. The length along with the membrane surface was determined from a membrane surface level-position profile measured with a reading microscope. Specifically, the membrane surface level of the membrane cut out to about 140-mm square was measured at 25 points at an interval of 5 mm in the X-axis direction. The membrane surface level-position profile was approximated by a spline function, the length along with the membrane surface was determined by numerical calculation, and the flatness index was determined by the following expression and evaluated by the following criteria.

Flatness index = Length along with membrane surface/Projection dimension of membrane

A: less than 1.05
B: 1.05 or more and less than 1.1
C: 1.1 or more and less than 1.2
D: 1.2 or more

(Measurement method of solid content weight in polyelectrolyte solution)

A dried weighing cup at room temperature was precisely weighed, and the resulting value was defined as $W_0$. In the weighing cup measured was placed 1.0 g of the polyelectrolyte solution, and precisely weighed, and resulting value was defined as $W_1$. The weighing cup in which the polyelectrolyte solution was placed was placed in a drying machine (manufactured by ESPEC CORP., Model LV-120), dried at a temperature of 200°C for 1 hour or more, and then cooled in a desiccator in which silica gel was placed. The weighing cup at room temperature was precisely weighed, and defined as $W_2$. The following expression was used to calculate SW. The method was performed three times, and the average value of SW calculated was defined as the solid content weight in the polyelectrolyte solution.

$$SW = (W_2 - W_0)/(W_1 - W_0) \times 100$$

(Quantitative determination of contents of alcohol and ester in polyelectrolyte solution)

The contents of alcohol and ester in the polyelectrolyte solution were quantitatively determined by gas chromatography (GC) under the following measurement conditions. In measurement, a solution was used which was obtained by diluting the polyelectrolyte solution with acetone 100-fold.

<Measurement conditions>

GC/MS apparatus: Agilent6890/MSD5975C (manufactured by Agilent Technologies)
Column: DB-5 (inner diameter 0.25 mm, column length 30 m)
Thickness of liquid phase: 1.0 μm
Column temperature: 40°C (5 min), rate temperature rise (20°C/min), 300°C (12 min)
Flow rate in column: 1.0 mL/min
Injection port temperature: 300°C
Injection method: splitting method (splitting ratio 1:10)
Ion source temperature: 230°C
Interface temperature: 300°C
Ionization method: electron ionization (EI) method
Amount of sample: 1 μL

(Quantitative determination of content of aliphatic carboxylic acid in polyelectrolyte solution)

The content of aliphatic carboxylic acid in the polyelectrolyte solution was quantitatively determined by ion chromatography under the following measurement conditions. In measurement, a diluted liquid was used which was obtained by adding 100 mL of an aqueous 1.7 mM $Na_2CO_3$ solution to 100 mg of the polyelectrolyte solution, and stirring the resultant by a magnetic stirrer ("HE-20GA" manufactured by Koike Precision Instruments) for 1 hour.

<Measurement conditions>

Apparatus: IC-2010 (manufactured by Tosoh Corporation)
Separation column: TSKgel Super IC-AZ (manufactured by Tosoh Corporation, inner diameter 4.6 mm, column length 150 mm)
Eluent: 6.3 mM $NaHCO_3$, 1.7 mM $Na_2CO_3$
Flow rate: 0.8 mL/min
Detection: electrical conductivity
Temperature in constant-temperature bath: 40°C
Amount of injection: 30 μL

(Counting of number of crack defects)

Among visible defects, a linear defect having a relative value of length of 10 or more and an absolute value of

length of 1.0 mm or more under the assumption that the relative value of width was 1 was determined as a crack defect in the ion-exchange membrane, and the number of crack defects was counted.

(Crack defect evaluation)

Ten ion-exchange membranes obtained by the same method were used, and the number of ion-exchange membranes each having a number of crack defects per unit area, (B/A), of $10/m^2$ or more, as calculated from the area (A) of such each ion-exchange membrane and the number (B) of crack defects in such each ion-exchange membrane, was determined, and then the crack defects were evaluated according to the following criteria.

○: 0 membranes, △: 1 or 2 membranes, ×: 3 or more membranes

(Quantitative determination of content of aliphatic carboxylic acid in ion-exchange membrane)

The content of aliphatic carboxylic acid in the ion-exchange membrane was quantitatively determined by ion chromatography under the following measurement conditions. In measurement, an extracted liquid was used which was obtained by adding 2.0 mL of an aqueous 1.7 mM $Na_2CO_3$ solution to 100 mg of the ion-exchange membrane left to still stand in an environment at 25°C and 65% RH for 5 days, and subjecting the resultant to ultrasonic treatment for 10 minutes.

<Measurement conditions>

Apparatus: IC-2010 (manufactured by Tosoh Corporation)
Separation column: TSKgel Super IC-AZ (manufactured by Tosoh Corporation, inner diameter 4.6 mm, column length 150 mm)
Eluents: 6.3 mM $NaHCO_3$, 1.7 mM $Na_2CO_3$
Flow rate: 0.8 mL/min
Detection: electrical conductivity
Temperature in constant-temperature bath: 40°C
Amount of injection: 30 μL

(Measurement of viscosity of polyelectrolyte solution)

The viscosity of the polyelectrolyte solution, at a temperature of 25°C and a rate of shear of 3.83 $sec^{-1}$, was measured with an E-type viscometer (manufactured by TOKISANGYO, Model TV-33, cone rotor: 1°34' × R24). The value after a lapse of 2 minutes from the start of measurement was defined as the viscosity of the polyelectrolyte solution.

(Change over time in viscosity of polyelectrolyte solution)

The viscosity of the polyelectrolyte solution, measured within 24 hours after adjustment of the polyelectrolyte solution, was defined as the initial solution viscosity. The solution viscosity measured at 168 hours or more and 192 hours or less from measurement of the initial solution viscosity was defined as the solution viscosity after a lapse of 7 days. The solution viscosity measured at 720 hours or more and 744 hours or less from measurement of the initial solution viscosity was defined as the solution viscosity after a lapse of 30 days.

(Converted puncture strength)

The ion-exchange membrane was immersed in water at 30°C for 1 hour, and the membrane thickness was measured with a contact type membrane thickness meter (Toyo Seiki Seisaku-sho, Ltd.: B-1). The ion-exchange membrane after measurement of the membrane thickness was subjected to a puncture test with a handy compression tester (manufactured by Kato Tech Co., Ltd., KES-G5) in a constant-temperature water bath regulated to 80°C under conditions of a curvature radius of a needle tip, of 0.5 mm, and a puncture rate of 2 mm/sec. The maximum puncture load obtained in the puncture test was defined as the puncture strength (gf). The converted puncture strength (gf/25 μm) was calculated by the following expression.

Converted puncture strength (gf/25 μm) = Puncture strength (gf) × 25 (μm)/Membrane thickness (μm)

(WAXS (wide angle X-ray scattering) measurement of ion-exchange membrane)

WAXS measurement (permeation method) of the ion-exchange membrane was carried out under the following conditions.

<Measurement conditions>

Apparatus: NANOPIX (manufactured by Rigaku Corporation)
Wavelength of X-ray: 0.154 nm
Incident direction of X-ray: normal direction of ion-exchange membrane
Optical system: point collimation (1st: 0.55 mm, 2nd: Open, Guard: 0.35 mm)
Beam stopper: φ2.0 mm
Detector: Hypix-6000 (two-dimensional semiconductor detector)
Camera length: 160 mm (measured for four membranes stacked and jointed)
Exposure time: exposure time 20 min × 4/sample

(Processing of WAXS (wide angle X-ray scattering) measurement data of ion-exchange membrane: fan-shaped average)

In a case where anisotropy is present in any arrangement in a plane of a polyelectrolyte in the ion-exchange membrane, an X-ray scattering pattern is anisotropic. The anisotropy can be determined by analysis of the fan-shaped average ($I_{\phi s < \phi < \phi e}$ (2θ)) with averaging of only scattering of a specified angle of orientation. The fan-shaped average means a fan-shaped average in the range of angle of orientation of $\phi s < \phi < \phi e$, and is calculated by the following expression (1). The angle of orientation ϕ was defined by assuming the 12 o'clock position in a two-dimensional scattering (diffraction) pattern to be 0 degrees and performing measurement clockwise.
[Expression 1]

$$I_{\varphi e<\varphi<\varphi s}(2\theta) = \frac{1}{(\varphi_e-\varphi_s)P}\int_{\varphi s}^{\varphi e}\frac{I(2\theta,\varphi)}{cos^3 2\theta}d\varphi \qquad (1)$$

P: Polarization factor
2θ: Scattering angle
ϕ: Angle of orientation

The fan-shaped average calculated by the expression (1) is determined in consideration of not only scattering derived from the ion-exchange membrane, but also other scattering than that derived from the ion-exchange membrane, such as window material or air scattering. The scattering intensity depends on only the apparatus and the thickness of the ion-exchange membrane. In order to correct scattering derived from any other than the ion-exchange membrane, blank cell scattering and absolute intensity correction were made.
[Expression 2]

$$I(2\theta) = \frac{l^2}{A^2SRt}\left[\frac{I_{obs\,sample}(2\theta)}{I_{0\,sample}} - \frac{I_{obs\,empty}(2\theta)}{I_{0\,empty}}\right] \qquad (2)$$

I(2θ): Blank cell scattering, scattering intensity after absolute intensity correction
$I_{obs}$(2θ): Scattering intensity before correction (fan-shaped average determined by the expression (1))
$I_o$: Transmission X-ray intensity (cps) × Exposure time in measurement of $I_{obs}$(2θ) (measured with the same detector as in I(2θ), attenuation plate placed therein)
t: Thickness of sample
R: Attenuation rate in attenuation plate used in measurement of $I_o$
S: Area of pixel in detector
A: Classical electron radius

(Processing of WAXS (wide angle X-ray scattering) measurement data of ion-exchange membrane: indicator OR)

The peak intensity ratio at 2θ = 17.2 degrees was calculated by the following expression (3), and the indicator OR of structure anisotropy was calculated.

[Expression 3]

$$OR = \frac{\text{Scattering intensity in fan-shaped average profile in TD } (2\theta = 17.2\ \text{deg})}{\text{Scattering intensity in fan-shaped average profile in MD } (2\theta = 17.2\ \text{deg})} \quad (3)$$

[Production Example C1]

A fluororesin G1 containing repeating units derived from a fluorinated olefin ($CF_2$=$CF_2$) and a vinyl fluoride compound ($CF_2$=$CFOCF_2CF(CF_3)O(CF_2)_2$-$SO_3H$) and having an EW of 910 g/eq was produced with reference to Japanese Patent Publication No. 5474762. The resulting fluororesin was used to produce a homogeneous solution (water : ethanol = 50:50 (mass ratio)) having a solid content concentration of 5% by mass. Five hundred g of water was added to 500 g of the solution, and concentration under reduced pressure was performed at 80°C until the solid content concentration reached 15% by mass. The above addition of water and concentration under reduced pressure were repeated until the content of ethanol reached 0.1% by mass or less. Five hundred g of water was added to the resulting liquid after concentration under reduced pressure, and concentration under reduced pressure was performed at 80°C, thereby producing polyelectrolyte solution A1 having a solid content concentration of 30% by mass.

[Example C1]

A polypropylene container was charged with polyelectrolyte solution A1 (100 g) and a stirring element, and charged with acetic acid (12 g, manufactured by FUJIFILM Wako Pure Chemical Corporation, reagent special grade) under stirring by a magnetic stirrer ("HE-20GA" manufactured by Koike Precision Instruments), and the resultant was stirred until a homogeneous system was obtained. Subsequently, 1-propanol (12 g, manufactured by FUJIFILM Wako Pure Chemical Corporation, reagent special grade) was placed, and stirred at 25°C for 12 hours, and then transparent and homogeneous polyelectrolyte solution B1 was obtained.

Polyelectrolyte solution B1 obtained was applied (application area: about 250 mm width × about 400 mm length) onto a Kapton (registered trademark) film (manufactured by Du Pont-Toray Co., Ltd., 300 mm × 600 mm) as a substrate film, with a blade coater (manufactured by MTI Corp., "EQ-Se-KTQ-250", target of membrane thickness after heat treatment: 30 μm), and then dried at room temperature for 5 minutes, in an oven ("PHH-202" manufactured by ESPEC Corp.) at 60°C for 5 minutes, and in an oven ("PHH-202" manufactured by ESPEC Corp.) at 120°C for 10 minutes. The resulting membrane was heat-treated in an oven ("PHH-202" manufactured by ESPEC Corp.) at 150°C for 20 minutes, cooled to room temperature, and then released from the Kapton film, thereby obtaining ion-exchange membrane C1. Ion-exchange membrane C1 obtained was evaluated with respect to the average membrane thickness, the maximum membrane thickness, the minimum membrane thickness, the flatness, and the number of crack defects. The results are shown in Table 1.

[Examples C2 to C4]

Each polyelectrolyte solution and each ion-exchange membrane were produced by the same method as in Example C1 except that each loading ratio shown in Table 1 was adopted, and these were variously evaluated. The results are shown in Table 1.

[Comparative Examples C1 to C3]

Polyelectrolyte solution A1 (100 g) in a plastic container and a stirring element were loaded, 1-propanol (35 g, manufactured by FUJIFILM Wako Pure Chemical Corporation, reagent special grade) was loaded under stirring by a magnetic stirrer ("HE-20GA" manufactured by Koike Precision Instruments), and these were stirred at 25°C for 24 hours and then transparent and homogeneous polyelectrolyte solution B5 was obtained.

An ion-exchange membrane was obtained in the same manner as in Example C1 except that polyelectrolyte solution B5 obtained was used. Ion-exchange membrane C5 obtained was variously evaluated. The results are shown in Table 1.

[Comparative Examples C2 and C3]

Each polyelectrolyte solution and each ion-exchange membrane were prepared by the same method as in Comparative Example C1 except that each loading ratio shown in Table 1 was adopted, and these were variously evaluated. The results are shown in Table 1.

[Table 1]

| Example/Comparative Example | | | Example C1 | Example C2 | Example C3 | Example C4 | Comparative Example C1 | Comparative Example C2 | Comparative Example C3 |
|---|---|---|---|---|---|---|---|---|---|
| Polyelectrolyte solution B | | | B1 | B2 | B3 | B4 | B5 | B6 | B7 |
| Loading ratio | Polyelectrolyte solution A | - | A1 | A1 | A1 | A1 | A1 | A1 | A1 |
| | Polyelectrolyte solution | (g) | 100 | 100 | 100 | 100 | 100 | 100 | 100 |
| | Acetic acid | (g) | 12 | 23 | 23 | 12 | 0 | 0 | 0 |
| | 1-Propanol | (g) | 12 | 12 | 23 | 0 | 35 | 17.5 | 0 |
| | Ethanol | (g) | 0 | 0 | 0 | 12 | 0 | 0 | 17.5 |
| Mass ratio | Polyelectrolyte | Equivalent weight (g/eq) | 910 | 910 | 910 | 910 | 910 | 910 | 910 |
| | | (wt%) | 24.2 | 22.2 | 20.5 | 24.2 | 22.2 | 25.5 | 25.5 |
| | Acetic acid | (wt%) | 9.7 | 17 | 15.8 | 9.7 | 0 | 0 | 0 |
| | 1-Propanol | (wt%) | 9.7 | 8.9 | 15.8 | 0 | 25.9 | 14.9 | 0 |
| | Water | (wt%) | 56.4 | 51.9 | 47.9 | 56.4 | 51.9 | 59.6 | 59.6 |
| | Ethanol | (wt%) | 0 | 0 | 0 | 9.7 | 0 | 0 | 14.9 |
| Polyelectrolyte membrane C | | | C1 | C2 | C3 | C4 | C5 | C6 | C7 |
| Membrane thickness | Average membrane thickness | (μm) | 30 | 30 | 29 | 30 | 29 | 30 | 30 |
| | Maximum value of membrane thickness | (μm) | 31 | 31 | 30 | 31 | 30 | 31 | 31 |
| | Minimum value of membrane thickness | (μm) | 29 | 29 | 28 | 29 | 28 | 29 | 29 |
| Evaluation | Flatness | - | A | A | A | A | A | A | A |
| | Crack defect rating | - | ○ | ○ | ○ | ○ | × | × | × |
| | OR | - | 1.00 | 1.00 | 1.00 | 1.00 | 1.00 | 1.00 | 1.00 |

[Production Example C2]

A fluororesin G1 precursor (MFR = 3.2 g/10 min) containing repeating units derived from fluorinated olefin ($CF_2=CF_2$) and a vinyl fluoride compound ($CF_2=CF-O-(CF_2)_2-SO_2F$) was obtained by a method described in Example 1 in International Publication No. WO 2011/034179. The fluororesin obtained was allowed to undergo a hydrolysis step and an ultrafiltration step, thereby obtaining a Na-type emulsion (solid content weight 30.0% by mass, water content concentration 70.0% by mass) including a fluororesin G1 (average particle size: 11.1 nm, aspect ratio: 1.0, EW: 710 g/eq) containing repeating units derived from fluorinated olefin ($CF_2=CF_2$) and a vinyl fluoride compound ($CF_2=CF-O-(CF_2)_2-SO_3Na$).

The Na-type emulsion obtained was supplied by a supply pump, to a tube (Ni: 57% by mass, Mo: 17% by mass, Cr: 16% by mass, Fe: 4 to 7% by mass, W: 3 to 4.5% by mass, Co: ≤ 2.5% by mass, inner diameter: 2.17 mm, inner wall surface roughness: 1 μm) made of Hastelloy (registered trademark) C276, allowed to pass through a tube in a constant-temperature bath set to 290°C, and discharged by a back pressure valve set to 9 MPa, thereby obtaining homogeneous, clear and transparent polyelectrolyte solution AS1. The retention time of the emulsion in the tube in a constant-temperature bath set to 290°C was 7.5 minutes. The scattering intensity ratio (A/B) of polyelectrolyte solution AS1 obtained was calculated with a particle size measurement system ("ELS-Z2plus" manufactured by Otsuka Electronics Co., Ltd.), and as a result, was 1.8 (defined were the scattering intensity (A) of a peak assigned to at least one particle size in a range of 0.1 μm or more and less than 5.0 μm, and the scattering intensity (B) of a peak assigned to at least one particle size in a range

of 5.0 μm or more and 50.0 μm or less). Polyelectrolyte solution AS1 obtained was allowed to pass to a positive ion-exchange resin packed in a column, thereby converting a Na ion in the polyelectrolyte to a H ion and obtaining polyelectrolyte solution A2 having a solid content of 30% by mass.

After polyelectrolyte solution AS1 was diluted with distilled water (manufactured by Hayashi Pure Chemical Ind., Ltd.) to a solid content of 30% by mass, the rate of permeation at a wavelength of 800 nm, of the resulting diluted liquid, was measured with an ultraviolet-visible spectrophotometer ("UV-1800" manufactured by Shimadzu Corporation) and as a result, was 99.1% T. No laser scattering peak of polyelectrolyte solution AS1 was observed. The amount of polyelectrolyte end $-CF_2H$ (based on the total number of ends) was 51%. The fluorine ion concentration (based on the mass of polyelectrolyte) and the Fe concentration (based on the mass of polyelectrolyte) in polyelectrolyte solution AS1 were respectively 51 ppm and 81 ppm.

[Example C5]

A polypropylene container was charged with polyelectrolyte solution A2 (100 g) and a stirring element, and charged with acetic acid (23 g, manufactured by FUJIFILM Wako Pure Chemical Corporation, reagent special grade) under stirring by a magnetic stirrer ("HE-20GA" manufactured by Koike Precision Instruments), and the resultant was stirred until a homogeneous system was obtained. Subsequently, 1-propanol (23 g, manufactured by FUJIFILM Wako Pure Chemical Corporation, reagent special grade) was placed, and stirred at 25°C for 12 hours, and then left to still stand at 25°C for 30 days, thereby obtaining transparent and homogeneous polyelectrolyte solution B8.

Ion-exchange membrane C8 was produced in the same manner as in Example 1 except that polyelectrolyte solution B8 obtained was used. Ion-exchange membrane C8 obtained was evaluated with respect to the average membrane thickness, the maximum membrane thickness, the minimum membrane thickness, the flatness, and the number of crack defects. The results are shown in Table 2.

[Example C6]

A polyelectrolyte solution and an ion-exchange membrane were prepared by the same method as in Example C5 except that the loading ratio shown in Table 2 was adopted, and these were variously evaluated. The results are shown in Table 2.

[Comparative Example C4]

A polypropylene container was charged with polyelectrolyte solution A2 (100 g) and a stirring element, and charged with 1-propanol (23 g, manufactured by FUJIFILM Wako Pure Chemical Corporation, reagent special grade) under stirring by a magnetic stirrer ("HE-20GA" manufactured by Koike Precision Instruments), and the resultant was stirred until a homogeneous system was obtained. Thereafter, the resultant was stirred at 25°C for 12 hours, and thus transparent and homogeneous polyelectrolyte solution B10 was obtained. Polyelectrolyte solution B10 obtained was left to still stand at 25°C for 30 days, thus the solution viscosity exceeded 2,000 cP and therefore application was difficult, and no ion-exchange membrane could be obtained.

[Comparative Example C5]

A polypropylene container was charged with polyelectrolyte solution A2 (100 g) and a stirring element, and charged with ethanol (23 g, manufactured by FUJIFILM Wako Pure Chemical Corporation, reagent special grade) under stirring by a magnetic stirrer ("HE-20GA" manufactured by Koike Precision Instruments), and the resultant was stirred until a homogeneous system was obtained. Thereafter, the resultant was stirred at 25°C for 12 hours, and left to still stand at 25°C for 30 days, thereby obtaining transparent and homogeneous polyelectrolyte solution B11.

Ion-exchange membrane C11 was produced in the same manner as in Example C1 except that polyelectrolyte solution B11 obtained was used. Ion-exchange membrane C11 obtained was evaluated with respect to the average membrane thickness, the maximum membrane thickness, the minimum membrane thickness, the flatness, and the number of crack defects. The results are shown in Table 2.

[Table 2]

<table>
<tr><td colspan="3">Example/Comparative Example</td><td>Example C5</td><td>Example C6</td><td>Comparative Example C4</td><td>Comparative Example C5</td></tr>
<tr><td colspan="3">Polyelectrolyte solution B</td><td>B8</td><td>B9</td><td>B10</td><td>B11</td></tr>
<tr><td rowspan="5">Loading ratio</td><td>Polyelectrolyte solution A</td><td>-</td><td>A2</td><td>A2</td><td>A2</td><td>A2</td></tr>
<tr><td>Polyelectrolyte solution</td><td>(g)</td><td>100</td><td>100</td><td>100</td><td>100</td></tr>
<tr><td>Acetic acid</td><td>(g)</td><td>23</td><td>23</td><td>0</td><td>0</td></tr>
<tr><td>1-Propanol</td><td>(g)</td><td>23</td><td>0</td><td>23</td><td>0</td></tr>
<tr><td>Ethanol</td><td>(g)</td><td>0</td><td>23</td><td>0</td><td>23</td></tr>
<tr><td rowspan="6">Mass ratio</td><td rowspan="2">Polyelectrolyte</td><td>Equivalent weight (g/eq)</td><td>710</td><td>710</td><td>710</td><td>710</td></tr>
<tr><td>(wt%)</td><td>20.5</td><td>20.5</td><td>24.4</td><td>24.4</td></tr>
<tr><td>Acetic acid</td><td>(wt%)</td><td>15.8</td><td>15.8</td><td>0</td><td>0</td></tr>
<tr><td>1-Propanol</td><td>(wt%)</td><td>15.8</td><td>0</td><td>18.7</td><td>0</td></tr>
<tr><td>Water</td><td>(wt%)</td><td>47.9</td><td>47.9</td><td>56.9</td><td>56.9</td></tr>
<tr><td>Ethanol</td><td>(g)</td><td>0</td><td>15.8</td><td>0</td><td>18.7</td></tr>
<tr><td rowspan="4">Solution viscosity</td><td>Initial solution viscosity</td><td>(cP)</td><td>438</td><td>310</td><td>508</td><td>198</td></tr>
<tr><td>Solution viscosity after lapse of 7 days</td><td>(cP)</td><td>457</td><td>337</td><td>1122</td><td>382</td></tr>
<tr><td>Solution viscosity after lapse of 30 days</td><td>(cP)</td><td>479</td><td>358</td><td>>2000</td><td>441</td></tr>
<tr><td>Pot life</td><td>(days)</td><td>>30</td><td>>30</td><td>5</td><td>10</td></tr>
<tr><td colspan="3">Polyelectrolyte membrane C</td><td>C8</td><td>C9</td><td>C10</td><td>C11</td></tr>
<tr><td rowspan="3">Membrane thickness</td><td>Average membrane thickness</td><td>(μm)</td><td>29</td><td>30</td><td>-</td><td>29</td></tr>
<tr><td>Maximum value of membrane thickness</td><td>(μm)</td><td>30</td><td>31</td><td>-</td><td>30</td></tr>
<tr><td>Minimum value of membrane thickness</td><td>(μm)</td><td>28</td><td>29</td><td>-</td><td>28</td></tr>
<tr><td rowspan="3">Evaluation</td><td>Uniformity</td><td>-</td><td>A</td><td>A</td><td>-</td><td>A</td></tr>
<tr><td>Crack defect rating</td><td>-</td><td>○</td><td>○</td><td>-</td><td>Δ</td></tr>
<tr><td>OR</td><td>-</td><td>1.00</td><td>1.00</td><td>-</td><td>1.00</td></tr>
</table>

[Comparative Example C6]

The fluororesin G1 precursor (EW after washing with acid, following hydrolysis, was 910 g/eq) containing repeating units derived from a fluorinated olefin ($CF_2$=$CF_2$) and a vinyl fluoride compound ($CF_2$=$CFOCF_2CF(CF_3)O(CF_2)_2$-$SO_3H$), obtained in Production Example C1, was used for extrusion film formation under the following conditions, thereby obtaining fluororesin G1 precursor membrane E1.

T-die extrusion molding machine: manufactured by Labtech Engineering Co., Ltd.
T die: die width 350 mm (coat hanger die), lip width 0.4 mm
Extruder: mixing screw (φ25 mm, L/D = 30), breaker plate pore size 2.5 mm

Fluororesin G1 precursor membrane E1 obtained was cut out to a width of 200 mm and a length of 400 mm, and subjected to hydrolysis treatment and subsequent treatment for immersion in an aqueous hydrochloric acid solution, with reference to Production Example C1, thereby producing ion-exchange membrane C12. The average membrane thickness was 45 μm, the maximum membrane thickness was 52 μm, the minimum membrane thickness was 39 μm, the flatness was rated as D, the crack defect rating was ○, and OR was 1.11 with respect to ion-exchange membrane C12 obtained.

[Example C7]

Polyelectrolyte solution B1 was used for film formation by applying and drying on a Kapton film roll (average membrane thickness 50 μm, 200 m length × 300 mm width), with a slot-die system, and the resultant was wound, thereby obtaining a wound body of ion-exchange membrane C13.

Width of application: 250 mm
Length of application: 100 m
Drying zone (1): 60°C, 5 min
Drying zone (2): 120°C, 5 min
Rate of conveyance of substrate: 0.5 m/s

The average membrane thickness was 40 μm, the maximum membrane thickness was 41 μm, the minimum membrane thickness was 39 μmm, the flatness was rated as A, the crack defect rating was ○, and OR was 1.00 with respect to ion-exchange membrane C13 obtained.

[Example C8]

Ion-exchange membrane C1 produced in Example C1 and the carbon foam electrode produced in Production Example C1 were used for evaluation of a cell for a redox flow battery. As a result, the current efficiency was 95.0%, the voltage efficiency was 93.9%, and the power efficiency was 89.2%.

## Claims

**1.** An ion-exchange membrane comprising
a resin composition comprising

a side-chain heteroaromatic resin having a structural unit represented by the following general formula 1:

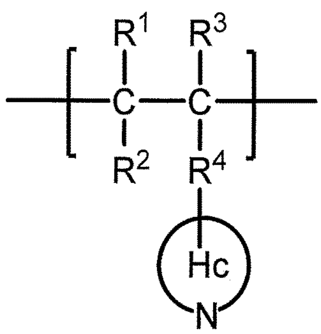

[1]

wherein,

$R^1$, $R^2$, and $R^3$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms,

$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms, and

Hc is a substituted or unsubstituted heteroaromatic group having 4 to 30 carbon atoms, the group having at least one nitrogen atom in a heteroaromatic ring structure and containing a five-membered ring and/or six-membered ring structure, and

a cation-exchangeable resin.

2. The ion-exchange membrane according to claim 1, wherein a weight ratio between the side-chain heteroaromatic resin and the cation-exchangeable resin is 1:100 to 100:1.

3. The ion-exchange membrane according to claim 1, wherein the cation-exchangeable resin is a fluororesin.

4. The ion-exchange membrane according to claim 3, wherein the fluororesin has a structural unit represented by the following general formula G1:

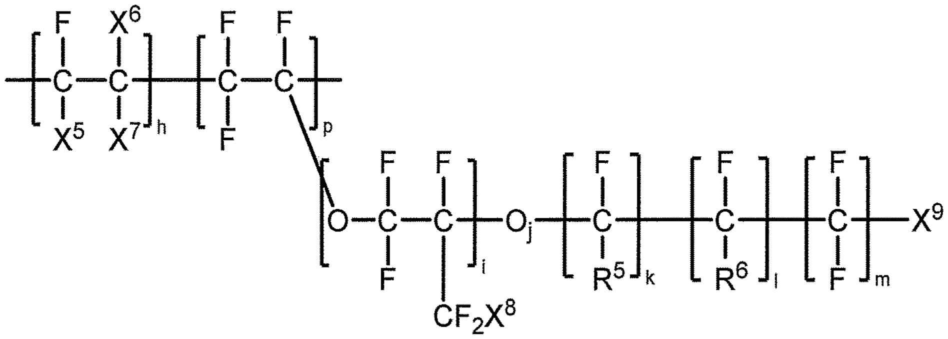

[G 1]

wherein,

$X^5$, $X^6$, $X^7$, and $X^8$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^5$ and $X^6$ or $X^5$ and $X^7$ are optionally bound to each other to form a cyclic structure,

$R^5$ and $R^6$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom,

$X^9$ is a group represented by $-COOZ$, $-SO_3Z$, $-PO_3Z_2$, or $-PO_3HZ$, Z is at least one selected from the group consisting of a hydrogen atom, an alkali metal atom, an alkaline earth metal atom, and an amine, and the fluororesin is optionally crosslinked to each other by ion crosslinking via $X^9$,

h and p each represent a molar ratio in the total constituent unit contained in the resin, and are numbers satisfying $0 \leq h < 1$, $0 < p \leq 1$, and $h + p = 1$,

i is an integer of 0 to 8,

j is 0 or 1, and

k, l, and m are each optionally the same or different, and are each an integer of 0 to 6, provided that, when k, l, and m are 0 at the same time, $X^9$ is $CF(CF_2X^{10})_2$, $X^{10}$ is a group represented by $-COOZ$, $-SO_3Z$, $- PO_3Z_2$, or $-PO_3HZ$, and Z is the same as described above.

5. The ion-exchange membrane according to claim 1, alternately comprising

at least one layer (L) comprising the resin composition, and

at least one layer (M) comprising a fluororesin having a structural unit represented by the following general formula G1:

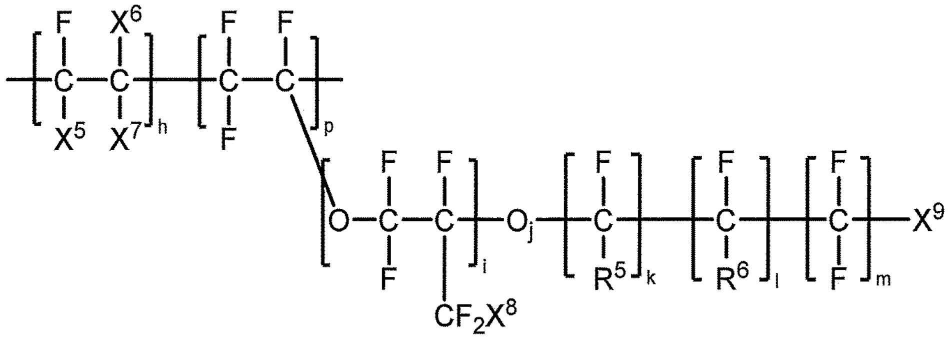

[G 1]

wherein the definition of each substituent has the same meaning as in the general formula G1 described above.

**6.** The ion-exchange membrane according to claim 5, comprising one layer (L) and one layer (M).

**7.** The ion-exchange membrane according to claim 5, comprising the layer (L), the layer (M), and the layer (L) in the listed order.

**8.** An ion-exchange membrane comprising a side-chain heteroaromatic resin having a structural unit represented by the following general formula 2:

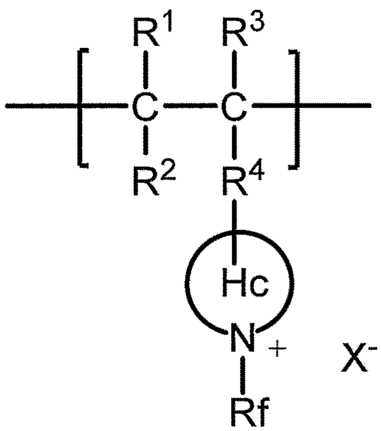

[2]

wherein,

$R^1$, $R^2$, and $R^3$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms,
$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms,
Hc is a substituted or unsubstituted heteroaromatic group having 4 to 30 carbon atoms, the group having at least one nitrogen atom in a heteroaromatic ring structure and containing a five-membered ring and/or six-membered ring structure,
Rf is an aliphatic hydrocarbon group substituted with at least one fluorine atom, and
$X^-$ is a counter anion.

**9.** The ion-exchange membrane according to claim 8, alternately comprising

at least one layer (L) comprising the side-chain heteroaromatic resin, and
at least one layer (M) comprising a fluororesin having a structural unit represented by the following general formula G1:

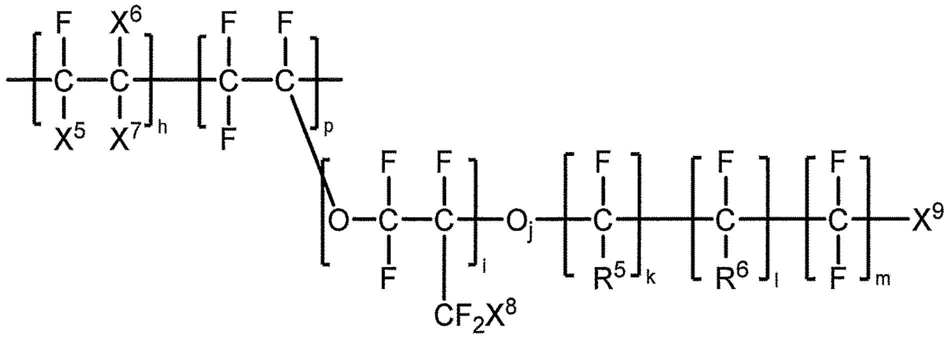

[G 1]

wherein the definition of each substituent has the same meaning as in the general formula G1 described above.

**10.** The ion-exchange membrane according to claim 9, comprising one layer (L) and one layer (M).

**11.** The ion-exchange membrane according to claim 9, comprising the layer (L), the layer (M), and the layer (L) in the listed order.

**12.** The ion-exchange membrane according to claim 9, wherein the layer (L) further comprises a cation-exchangeable resin.

**13.** The ion-exchange membrane according to claim 12, wherein a weight ratio between the side-chain heteroaromatic resin and the cation-exchangeable resin is 1:100 to 100:1.

**14.** The ion-exchange membrane according to claim 12, wherein the cation-exchangeable resin is a fluororesin.

**15.** The ion-exchange membrane according to claim 14,

wherein the fluororesin has a structural unit represented by the following general formula G1:

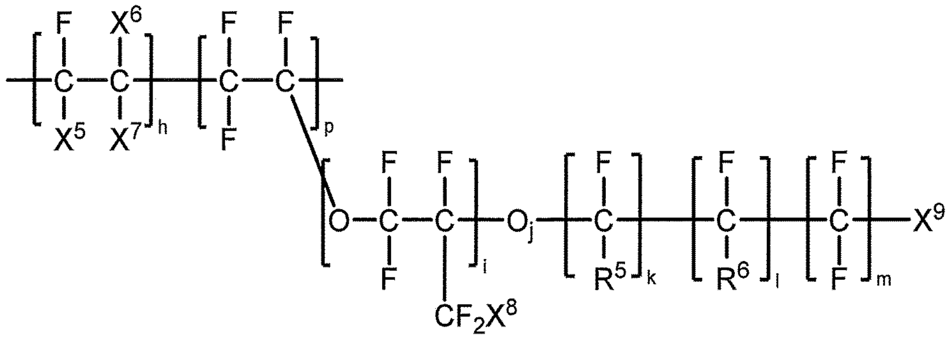

[G 1]

wherein the definition of each substituent has the same meaning as in the general formula G1 described above.

**16.** The ion-exchange membrane according to claim 1, wherein the side-chain heteroaromatic resin further has a structural unit represented by the following general formula 2:

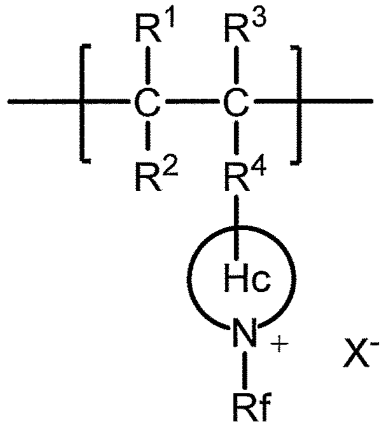

[2]

wherein,

$R^1$, $R^2$, and $R^3$ are each optionally the same or different, and are each a hydrogen atom, a substituted or unsubstituted aliphatic hydrocarbon group having 1 to 10 carbon atoms, or a substituted or unsubstituted aromatic hydrocarbon group having 6 to 10 carbon atoms,
$R^4$ is a direct bond, a substituted or unsubstituted divalent aliphatic hydrocarbon group having 1 to 10 carbon atoms, or a substituted or unsubstituted divalent aromatic hydrocarbon group having 6 to 10 carbon atoms,
Hc is a substituted or unsubstituted heteroaromatic group having 4 to 30 carbon atoms, the group having at least one nitrogen atom in a heteroaromatic ring structure and containing a five-membered ring and/or six-membered ring structure,
Rf is an aliphatic hydrocarbon group substituted with at least one fluorine atom, and
$X^-$ is a counter anion.

**17.** The ion-exchange membrane according to claim 16,
wherein a molar ratio between the structural unit represented by the general formula 1 and the structural unit represented by the general formula 2 is 1:100 to 100:1.

**18.** The ion-exchange membrane according to claim 16,
wherein a weight ratio between the side-chain heteroaromatic resin and the cation-exchangeable resin is 1:100 to 100:1.

**19.** The ion-exchange membrane according to claim 16,
wherein the cation-exchangeable resin is a fluororesin.

**20.** The ion-exchange membrane according to claim 16,

wherein the fluororesin has a structural unit represented by the following general formula G1:

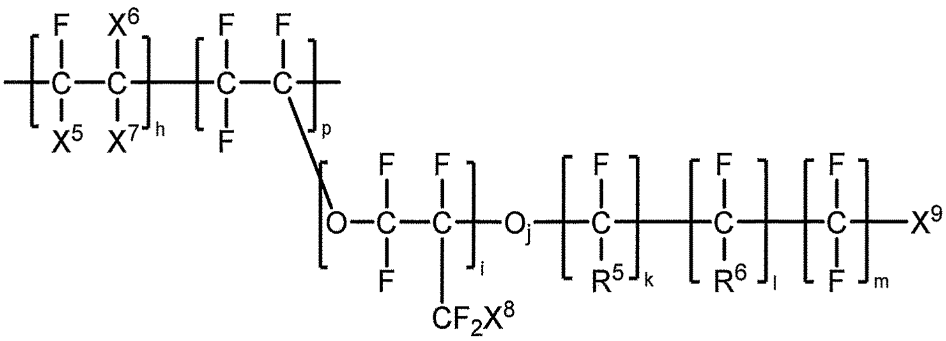

[G1]

wherein the definition of each substituent has the same meaning as in the general formula G1 described above.

**21.** The ion-exchange membrane according to claim 20, alternately comprising

at least one layer (L) comprising the resin composition, and

at least one layer (M) comprising a fluororesin having a structural unit represented by the following general formula G1:

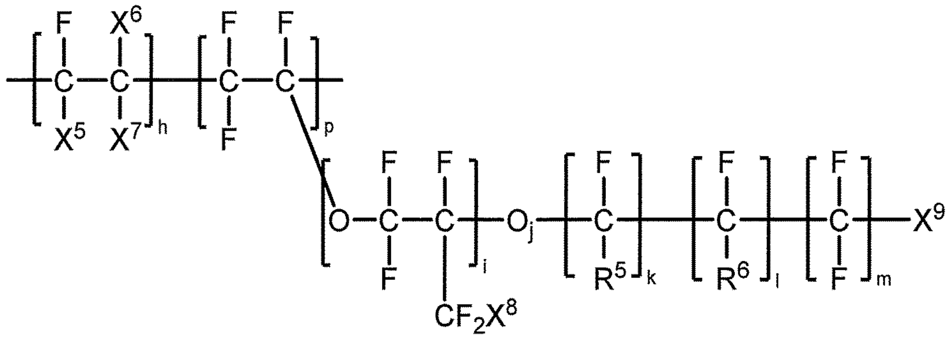

[G 1]

wherein the definition of each substituent has the same meaning as in the general formula G1 described above.

**22.** The ion-exchange membrane according to claim 21, comprising one layer (L) and one layer (M).

**23.** The ion-exchange membrane according to claim 21, comprising the layer (L), the layer (M), and the layer (L) in the listed order.

**24.** An ion-exchange membrane comprising

a layer (L1) comprising a heteroaromatic structurecontaining fluororesin having a structural unit represented by the following general formula A1, a saponified product thereof or a salt thereof:

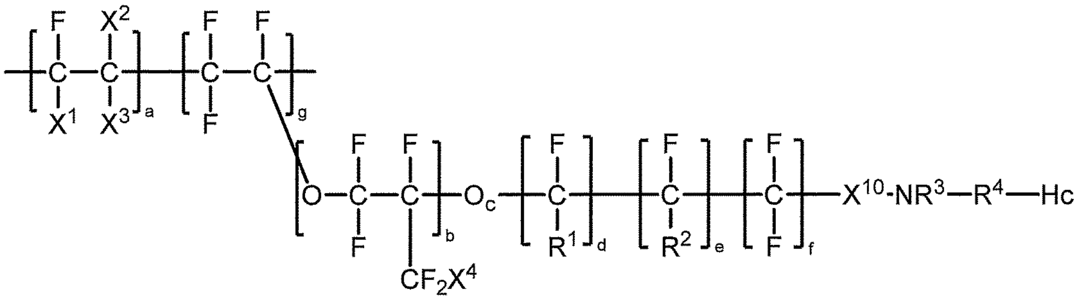

[A 1]

wherein,

$X^1$, $X^2$, $X^3$, and $X^4$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^1$ and $X^2$ or $X^1$ and $X^3$ are optionally bound to each other to form a cyclic structure,

$R^1$ and $R^2$ are each optionally the same or different, and are each a hydrogen atom, a halogen atom, a substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom,

$R^3$ is a hydrogen atom, a substituted or unsubstituted aliphatic hydrocarbon group having 1 to 10 carbon atoms, or a substituted or unsubstituted aromatic hydrocarbon group having 6 to 10 carbon atoms,

$R^4$ is a linking group that links $NR^3$ and Hc, and is a substituted or unsubstituted divalent aliphatic hydrocarbon group having 1 to 10 carbon atoms, or a substituted or unsubstituted divalent aromatic hydrocarbon group having 6 to 10 carbon atoms,

$X^{10}$ is a divalent group represented by formula $-CO_2-$or $-SO_2-$,

Hc is a substituted or unsubstituted heteroaromatic group having 4 to 30 carbon atoms, the group containing at

least one nitrogen atom and containing a five-membered ring and/or six-membered ring structure,
a and g each represent a molar ratio in the total constituent unit contained in the resin, and are numbers satisfying $0 \leq a < 1$, $0 < g \leq 1$, and $a + g = 1$,
b is an integer of 0 to 8,
c is 0 or 1, and
d, e, and f are each optionally the same or different, and are each an integer of 0 to 6, provided that d, e, and f are not 0 at the same time, and
a layer (M1) comprising a fluororesin (G1) having a structural unit represented by the following general formula G1:

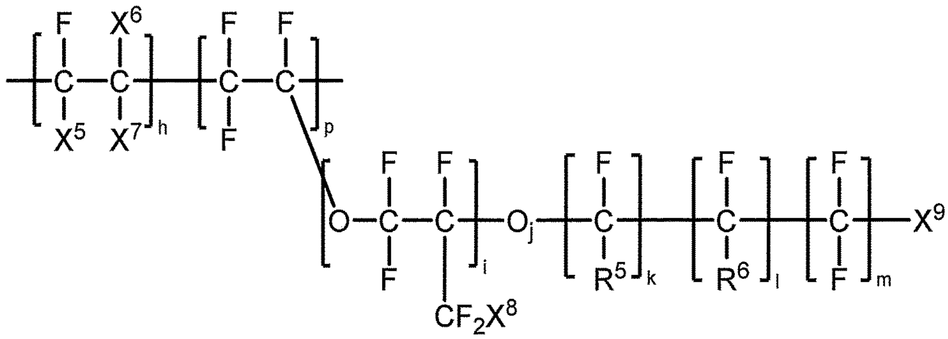

[G 1]

wherein the definition of each substituent has the same meaning as in the general formula G1 described above.

**25.** The ion-exchange membrane according to claim 24, comprising three or more layers, the three or more layers alternately comprising

the layer (L1), and
the layer (M1).

**26.** The ion-exchange membrane according to claim 24, wherein a thickness of the layer (L1) is 10 μm or less.

**27.** The ion-exchange membrane according to claim 24, wherein a thickness of the ion-exchange membrane is 200 μm or less.

**28.** An ion-exchange membrane comprising
a layer (L3) comprising a side-chain nitrogen atom-containing fluororesin having a structural unit represented by the following general formula A3, a saponified product thereof or a salt thereof:

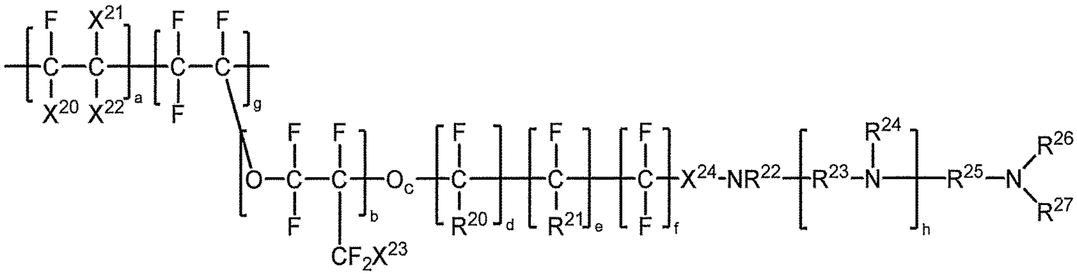

[A 3]

wherein,

$X^{20}$, $X^{21}$, $X^{22}$, and $X^{23}$ are each optionally the same or different, and are each a halogen atom, a substituted or unsubstituted perfluoroalkyl group having 1 to 10 carbon atoms, or a substituted or unsubstituted cyclic perfluoroalkyl group having 5 to 10 carbon atoms, the halogen atom is a fluorine atom, a chlorine atom, a bromine atom, or an iodine atom, and $X^{20}$ and $X^{21}$ or $X^{20}$ and $X^{22}$ optionally form a cyclic structure,
$R^{20}$ and $R^{21}$ are each optionally the same or different, and are each a hydrogen atom, a halogen atom, a

substituted or unsubstituted perfluoroalkyl group having 1 to 10 carbon atoms, or a substituted or unsubstituted fluorochloroalkyl group having 1 to 10 carbon atoms, and the halogen atom is a fluorine atom, a chlorine atom, a bromine atom, or an iodine atom,

$R^{22}$ and $R^{24}$ are each a hydrogen atom, a substituted or unsubstituted aliphatic hydrocarbon group having 1 to 10 carbon atoms, or a substituted or unsubstituted aromatic hydrocarbon group having 6 to 10 carbon atoms,

$R^{26}$ and $R^{27}$ are each a hydrogen atom, or a substituted or unsubstituted aliphatic hydrocarbon group having 1 to 10 carbon atoms, and at least one of $R^{26}$ and $R^{27}$ is a substituted or unsubstituted aliphatic hydrocarbon group having 1 to 10 carbon atoms,

$R^{23}$ and $R^{25}$ are each optionally the same or different, and are each a substituted or unsubstituted divalent aliphatic hydrocarbon group having 1 to 10 carbon atoms, or a substituted or unsubstituted divalent aromatic hydrocarbon group having 6 to 10 carbon atoms, wherein, when h is 2 or more, $R^{23}$s repeated are each optionally the same or different,

$X^{24}$ is a divalent group represented by $-CO_2-$ or $-SO_2^-$,

a and g each represent a molar ratio in the total constituent unit contained in the resin, and are numbers satisfying $0 \leq a < 1$, $0 < g \leq 1$, and $a + g = 1$,

b is an integer of 0 to 8,

c is 0 or 1, and

d, e, f, and h are each optionally the same or different, and are each an integer of 0 to 6, provided that d, e, and f are not 0 at the same time, and

a layer (M3) comprising a fluororesin (G1) having a structural unit represented by the following general formula G1:

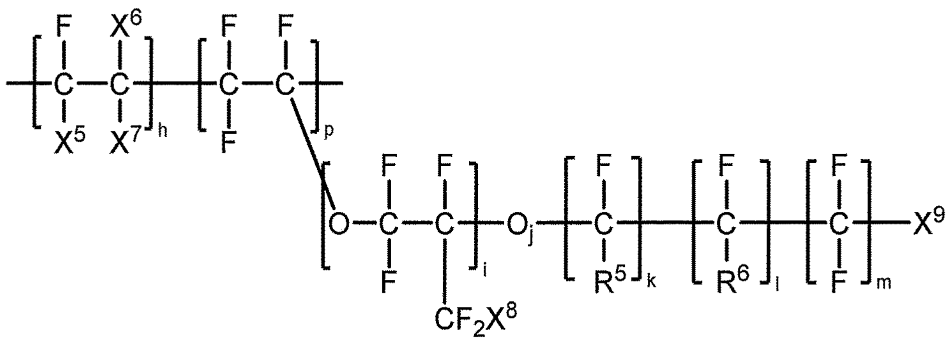

[G 1]

wherein the definition of each substituent has the same meaning as in the general formula G1 described above.

**29.** The ion-exchange membrane according to claim 28, comprising three or more layers, the three or more layers alternately comprising

the layer (L3), and
the layer (M3).

**30.** The ion-exchange membrane according to claim 28, wherein a thickness of the layer (L3) is 10 μm or less.

**31.** The ion-exchange membrane according to claim 28, wherein a thickness of the ion-exchange membrane is 200 μm or less.

**32.** The ion-exchange membrane according to any one of claims 1 to 31, for a redox flow battery.

**33.** A membrane electrode assembly, wherein the ion-exchange membrane according to any one of claims 1 to 31 and at least one electrode are bonded.

**34.** The membrane electrode assembly according to claim 33, for a redox flow battery.

**35.** A cell for a redox flow battery, the cell comprising

a first electrolyte solution comprising a first redox active material,
a second electrolyte solution comprising a second redox active material,

a first electrode in contact with the first electrolyte solution,
a second electrode in contact with the second electrolyte solution, and
a separation membrane located between the first electrolyte solution and the second electrolyte solution, wherein the separation membrane is the ion-exchange membrane according to any one of claims 1 to 31.

**36.** The cell for a redox flow battery according to claim 35, wherein the cell is a membrane electrode assembly in which the separation membrane and at least one electrode are bonded.

**37.** The cell for a redox flow battery according to claim 35, wherein at least one of the first electrode and the second electrode is a carbon electrode.

**38.** The cell for a redox flow battery according to claim 35, wherein at least one of the first redox active material and the second redox active material is at least one selected from the group consisting of a metallic redox active material, a non-metallic redox active material, and an organic redox active material.

**39.** A redox flow battery, wherein the cell for a redox flow battery according to claim 35 is stacked.

**40.** A cell for a redox flow battery, the cell comprising

a first electrolyte solution comprising a first redox active material,
a second electrolyte solution comprising a second redox active material,
a first electrode in contact with the first electrolyte solution,
a second electrode in contact with the second electrolyte solution, and
a separation membrane located between the first electrolyte solution and the second electrolyte solution, wherein the separation membrane comprises at least

a first cation-exchangeable resin layer, and
an anion-exchangeable resin layer,

an equivalent weight of the separation membrane is 1150 g/eq or less,
a thickness of the anion-exchangeable resin layer is 0.001 μm or more and less than 5 μm, and
the anion-exchangeable resin layer of the separation membrane is located facing an electrode acting as a negative electrode.

**41.** The cell for a redox flow battery according to claim 40, wherein the first cation-exchangeable resin layer is located closer to an electrode acting as a positive electrode than the anion-exchangeable resin layer.

**42.** The cell for a redox flow battery according to claim 40, wherein a distance $D_{neg}$ between the anion-exchangeable resin layer of the separation membrane and the electrode acting as a negative electrode, and a distance $D_{pos}$ between the anion-exchangeable resin layer of the separation membrane and an electrode acting as a positive electrode exhibit the following relationship:

$$D_{neg}/D_{pos} < 1.$$

**43.** The cell for a redox flow battery according to claim 40, wherein a thickness of the first cation-exchangeable resin layer is 1 μm or more and 150 μm or less.

**44.** The cell for a redox flow battery according to claim 40, wherein the first cation-exchangeable resin layer comprises a fluororesin.

**45.** The cell for a redox flow battery according to claim 40, wherein the first cation-exchangeable resin layer has at least one functional group selected from the group consisting of a sulfo group, a carboxyl group, and a phosphoric acid group.

**46.** The cell for a redox flow battery according to claim 40, wherein the first cation-exchangeable resin layer comprises a fluororesin having a structural unit represented by the following general formula G1:

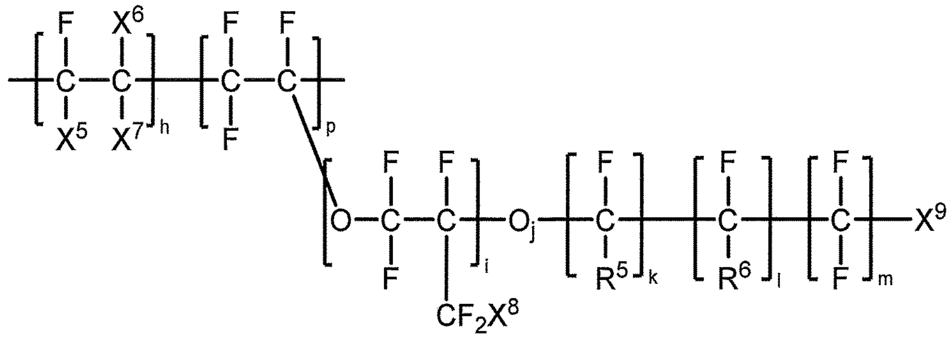

[G 1]

wherein the definition of each substituent has the same meaning as in the general formula G1 described above.

**47.** The cell for a redox flow battery according to claim 40, wherein the anion-exchangeable resin layer comprises at least one selected from the group consisting of

a primary amino group,
a secondary amino group,
a tertiary amino group,
an amino salt structure as a reaction product of at least one amino group selected from the group consisting of a primary amino group, a secondary amino group, and a tertiary amino group, and at least one selected from the group consisting of an acidic substance and a halogen atom-containing aliphatic hydrocarbon compound,
a nitrogen atom-containing heterocyclic ring structure,
a salt structure of a nitrogen-containing heterocyclic ring as a reaction product of a nitrogen-containing heterocyclic ring structure and at least one selected from the group consisting of an acidic substance and a halogen atom-containing aliphatic hydrocarbon compound, and
a quaternary ammonium group.

**48.** The cell for a redox flow battery according to claim 40, wherein the separation membrane comprises

the first cation-exchangeable resin layer,
the anion-exchangeable resin layer, and
a second cation-exchangeable resin layer,

in the listed order, and a thickness of the first cation-exchangeable resin layer is larger than a thickness of the second cation-exchangeable resin layer.

**49.** The cell for a redox flow battery according to claim 48, wherein the first cation-exchangeable resin layer is located closer to an electrode acting as a positive electrode than the anion-exchangeable resin layer.

**50.** The cell for a redox flow battery according to claim 48, wherein a distance $D_{neg}$ between the anion-exchangeable resin layer of the separation membrane and the electrode acting as a negative electrode, and a distance $D_{pos}$ between the anion-exchangeable resin layer of the separation membrane and an electrode acting as a positive electrode exhibit the following relationship:

$$D_{neg}/D_{pos} < 1.$$

**51.** The cell for a redox flow battery according to claim 48, wherein the second cation-exchangeable resin layer comprises a fluororesin.

**52.** The cell for a redox flow battery according to claim 48, wherein a thickness of the second cation-exchangeable resin layer is 0.01 μm or more and less than 150 μm.

**53.** The cell for a redox flow battery according to claim 48, wherein a value obtained by dividing the thickness of the second ion-exchangeable resin layer by the thickness of the first cation-exchangeable resin layer is less than 0.7.

**54.** The cell for a redox flow battery according to claim 40, wherein at least one of the first electrode and the second electrode is a carbon electrode.

**55.** The cell for a redox flow battery according to claim 40, wherein at least one of the first redox active material and the second redox active material is at least one selected from the group consisting of a metallic redox active material, a non-metallic redox active material, and an organic redox active material.

**56.** The cell for a redox flow battery according to claim 40, wherein at least one of the first electrode and the second electrode is a separation membrane electrode assembly bonded with the separation membrane.

**57.** A redox flow battery, wherein the cell for a redox flow battery according to any one of claims 40 to 56 is stacked.

**58.** A method for producing a separation membrane, the separation membrane comprising at least

a first cation-exchangeable resin layer, and
an anion-exchangeable resin layer, in which

an equivalent weight of the separation membrane is 1150 g/eq or less, and
a thickness of the anion-exchangeable resin layer is 0.001 $\mu$m or more and less than 5 $\mu$m, wherein

the method comprises

a step of forming the first cation-exchangeable resin layer, and
a step of forming the anion-exchangeable resin layer.

**59.** The method for producing a separation membrane according to claim 58, wherein the method comprises

a step of reacting

a fluororesin precursor layer serving as a precursor of the first cation-exchangeable resin layer, and containing at least one selected from the group consisting of a sulfonyl halide group, an acyl halide group, and a halogenated phosphoric acid group, with
a modification compound having at least two nitrogen atom-containing groups, in which the nitrogen atom-containing groups comprise at least one selected from the group consisting of

a primary amino group,
a secondary amino group,
a tertiary amino group,
an amino salt structure as a reaction product of at least one amino group selected from the group consisting of a primary amino group, a secondary amino group, and a tertiary amino group, and at least one selected from the group consisting of an acidic substance and a halogen atom-containing aliphatic hydrocarbon compound,
a nitrogen atom-containing heterocyclic ring structure,
a salt structure of a nitrogen-containing heterocyclic ring as a reaction product of a nitrogen-containing heterocyclic ring structure and at least one selected from the group consisting of an acidic substance and a halogen atom-containing aliphatic hydrocarbon compound, and
a quaternary ammonium group, and

a step of converting at least one selected from the group consisting of the sulfonyl halide group, the acyl halide group, and the halogenated phosphoric acid group contained in the fluororesin precursor layer, into at least one selected from the group consisting of a sulfo group, a carboxyl group, and a phosphoric acid group, after the above step.

**60.** The method for producing a separation membrane according to claim 58, the separation membrane comprising

the first cation-exchangeable resin layer,
the anion-exchangeable resin layer, and
a second cation-exchangeable resin layer,

in the listed order, in which a thickness of the first cation-exchangeable resin layer is larger than a thickness of the second cation-exchangeable resin layer, wherein
the method comprises

a step of forming the first cation-exchangeable resin layer,
a step of forming the anion-exchangeable resin layer, and
a step of forming the second cation-exchangeable resin layer.

**61.** The method for producing a separation membrane according to claim 60, comprising a step of overlapping the anion-exchangeable resin layers of membranes each having the first cation-exchangeable resin layer and the anion-exchangeable resin layer.

**62.** A polyelectrolyte solution comprising

a fluororesin having an equivalent weight of 500 g/eq or more and less than 1,000 g/eq and having a structural unit represented by the following general formula G1, and
a solvent containing water, an aliphatic alcohol, and an aliphatic carboxylic acid, wherein
a ratio of a total mass of the aliphatic carboxylic acid and a reaction product thereof to a total mass of the solvent is 100:1 to 100:50:

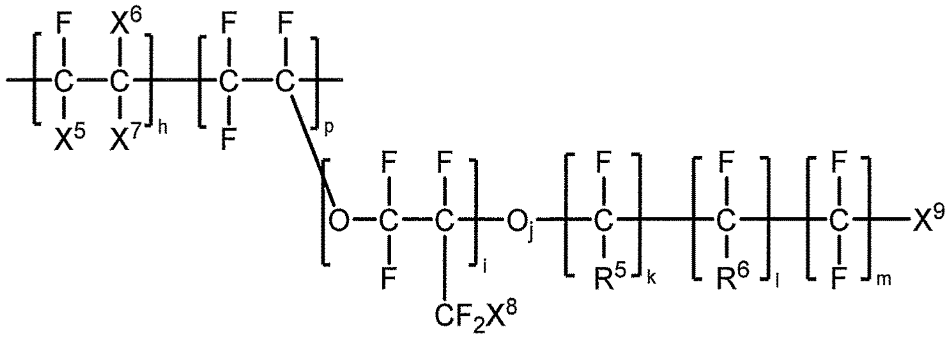

[G 1]

wherein the definition of each substituent has the same meaning as in the general formula G1 described above.

**63.** The polyelectrolyte solution according to claim 62, wherein a mass ratio between the aliphatic carboxylic acid and the aliphatic alcohol is 100:1 to 1:100.

**64.** An ion-exchange membrane comprising a fluororesin having an equivalent weight of 500 g/eq or more and less than 1,000 g/eq and having a structural unit represented by the following general formula G1, wherein
the number of crack defects per unit area of the ion-exchange membrane is less than 10/$m^2$:

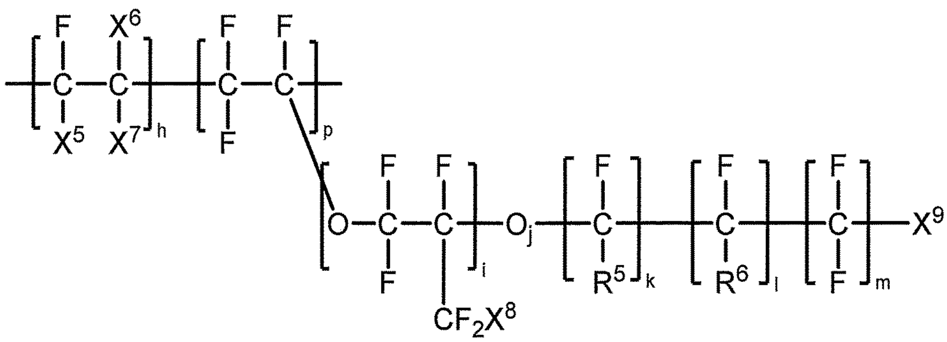

[G 1]

wherein the definition of each substituent has the same meaning as in the general formula G1 described above.

**65.** The ion-exchange membrane according to claim 64, wherein an orientation ratio OR in a membrane surface direction, as determined by X-ray scattering measurement, is 1.0 or more and less than 1.1.

**66.** The ion-exchange membrane according to claim 64, wherein an average membrane thickness is 75 μm or less.

**67.** The ion-exchange membrane according to claim 66, wherein an average membrane thickness is 25 μm or more.

**68.** The ion-exchange membrane according to claim 64, wherein a minimum membrane thickness is 90% or more of an average membrane thickness, and a maximum membrane thickness is 110% or less of an average membrane thickness.

**69.** A wound body configured by winding the ion-exchange membrane according to claim 64.

**70.** The wound body according to claim 69, wherein a width of the ion-exchange membrane is 50 mm or more and 5,000 mm or less.

**71.** The wound body according to claim 69, wherein a length of the ion-exchange membrane is 100 mm or more.

**72.** A membrane electrode assembly, wherein the ion-exchange membrane according to any one of claims 64 to 68 and at least one electrode are bonded.

**73.** The ion-exchange membrane according to any one of claims 64 to 68, for a redox flow battery.

**74.** The membrane electrode assembly according to claim 72, for a redox flow battery.

**75.** A cell for a redox flow battery, the cell comprising

a first electrolyte solution comprising a first redox active material,
a second electrolyte solution comprising a second redox active material,
a first electrode in contact with the first electrolyte solution,
a second electrode in contact with the second electrolyte solution, and
a separation membrane located between the first electrolyte solution and the second electrolyte solution, wherein the separation membrane is the ion-exchange membrane according to any one of claims 64 to 68.

**76.** The cell for a redox flow battery according to claim 75, wherein the separation membrane and at least one electrode are bonded.

**77.** The cell for a redox flow battery according to claim 75, wherein at least one of the first electrode and the second electrode is a carbon electrode.

**78.** The cell for a redox flow battery according to claim 75, wherein at least one of the first redox active material and the second redox active material is at least one selected from the group consisting of a metallic redox active material, a non-metallic redox active material, and an organic redox active material.

**79.** A redox flow battery, wherein the cell for a redox flow battery according to claim 75 is stacked.

**80.** A method for producing an ion-exchange membrane, the method comprising

a step of applying and drying the polyelectrolyte solution according to claim 62 or 63, wherein
the ion-exchange membrane comprises a fluororesin having an equivalent weight of 500 g/eq or more and less than 1,000 g/eq and having a structural unit represented by the following general formula G1, and the number of crack defects per unit area of the ion-exchange membrane is less than $10/m^2$:

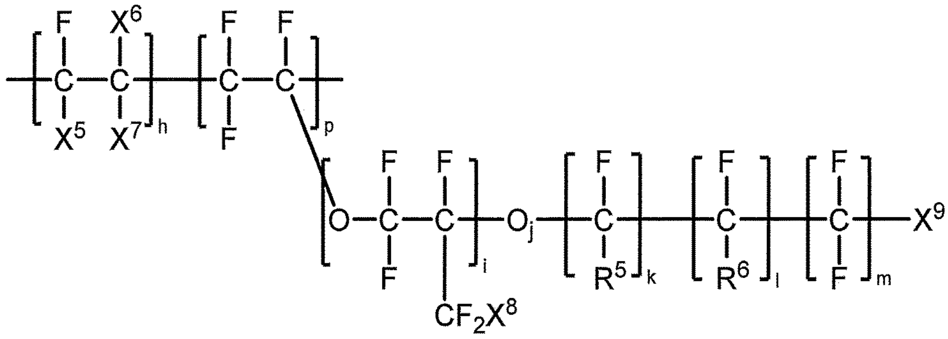

[G 1]

wherein the definition of each substituent has the same meaning as in the general formula G1 described above.

[Figure 1]

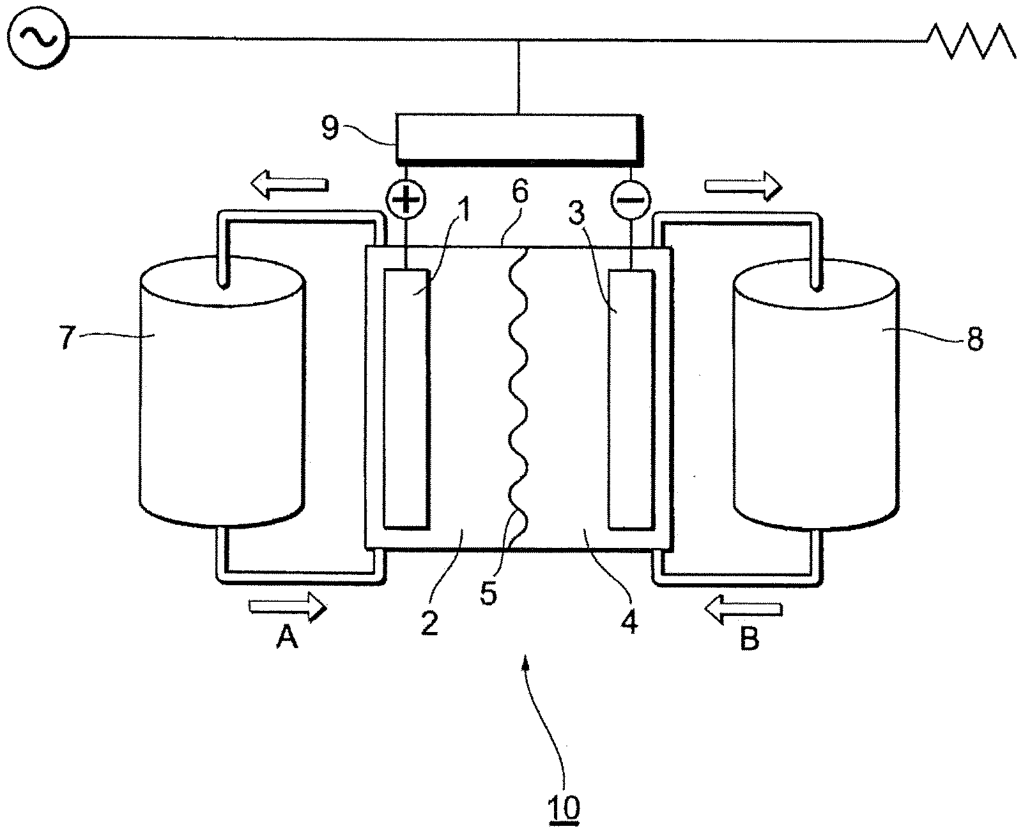

## INTERNATIONAL SEARCH REPORT

International application No. **PCT/JP2023/016759**

**A. CLASSIFICATION OF SUBJECT MATTER**

***C08J 5/22***(2006.01)i; ***C08F 8/12***(2006.01)i; ***C08F 14/26***(2006.01)i; ***C08F 16/24***(2006.01)i; ***C08L 27/14***(2006.01)i; ***H01B 1/06***(2006.01)i; ***H01M 4/96***(2006.01)i; ***H01M 8/18***(2006.01)i
FI: C08J5/22 CEW; H01M8/18; H01M4/96 B; H01B1/06 A; C08F14/26; C08F16/24; C08F8/12; C08L27/14

According to International Patent Classification (IPC) or to both national classification and IPC

**B. FIELDS SEARCHED**

Minimum documentation searched (classification system followed by classification symbols)

C08J5/22; C08F8/12; C08F14/26; C08F16/24; C08L27/14; H01B1/06; H01M4/96; H01M8/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/215126 A1 (ASAHI KASEI KABUSHIKI KAISHA) 28 October 2021 (2021-10-28) claims, examples [0028]-[0041], [0060]-[0068], examples | 40-80 |
| Y | | 1-23, 32-80 |
| X | JP 2013-507742 A (DALIAN INSTITUTE OF CHEMICAL PHYSICS, CHINESE ACADEMY OF SCIENCES) 04 March 2013 (2013-03-04) claims, paragraphs [0031], [0032], examples | 1-4, 32-34 |
| Y | | 1-23, 32-80 |
| X | US 2007/0265174 A1 (FLORIDA STATE UNIVERSITY RESEARCH FOUNDATION, INC.) 15 November 2007 (2007-11-15) claims, paragraphs [0043], [0048]-[0090], examples | 8-10 |
| Y | | 8-23, 32-80 |
| X | JP 64-14248 A (TOSOH CORP) 18 January 1989 (1989-01-18) claims, p. 3, upper right column, line 6 to p. 4, upper right column, bottom line, examples | 24-31 |
| Y | | 32-80 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/016759**

| Patent document cited in search report | Publication date (day/month/year) | Patent family member(s) | Publication date (day/month/year) |
|---|---|---|---|
| WO 2021/215126 A1 | 28 October 2021 | US 2023/0078901 A1<br>claims, paragraphs [0070]-[0090], [0119]-[0130], examples | |
| JP 2013-507742 A | 04 March 2013 | US 2012/0196188 A1<br>claims, paragraph [0027], examples | |
| US 2007/0265174 A1 | 15 November 2007 | (Family: none) | |
| JP 64-14248 A | 18 January 1989 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11260390 A
- WO 2017155648 A
- WO 2016163773 A
- WO 2021215126 A
- JP H07296634 A
- JP 2004164854 A
- WO 2008090990 A
- WO 2013091073 A
- WO 2018096895 A
- WO 2018168741 A
- WO 2020045645 A
- JP 2002231269 A
- WO 2007089017 A
- WO 2006028190 A
- JP 5474762 B
- WO 2011034179 A


### Non-patent literature cited in the description


- **W. VIELSTICH** ; **H.A. GASTEIGER** ; **A. LAMM**. Handbook of Fuel Cells. John Wiley & Sons, Ltd., 2003, vol. 3, 351-352